(19) **Europäisches Patentamt**

**European Patent Office**

**Office européen des brevets**

(11) **EP 1 347 584 A2**

(12) # EUROPEAN PATENT APPLICATION

(43) Date of publication:
**24.09.2003 Bulletin 2003/39**

(51) Int Cl.⁷: **H04B 7/26**, H04Q 7/22

(21) Application number: **03014444.8**

(22) Date of filing: **20.03.1995**

(84) Designated Contracting States:
**AT BE CH DE DK ES FR GB GR IE IT LI LU MC NL PT SE**

(30) Priority: **21.03.1994 US 215306**
**01.08.1994 US 284053**

(62) Document number(s) of the earlier application(s) in accordance with Art. 76 EPC:
**95914135.9 / 0 763 300**

(71) Applicant: **XIRCOM WIRELESS, Inc.**
**Colorado Springs, Colorado 80907 (US)**

(72) Inventors:
• **Anderson, Gary B.**
**Carnelian Bay, CA 95711 (US)**
• **Jensen, Ryan N.**
**Colorado Springs, CO 80917 (US)**
• **Petch, Bryan K.**
**Colorado Springs, CO 80918 (US)**
• **Peterson, Peter O.**
**Colorado Springs, CO 80919 (US)**

(74) Representative: **Leeming, John Gerard**
**J.A. Kemp & Co.,**
**14 South Square,**
**Gray's Inn**
**London WC1R 5JJ (GB)**

Remarks:
This application was filed on 30 - 06 - 2003 as a divisional application to the application mentioned under INID code 62.

(54) **PCS pocket phone/microcell communication over-air protocol**

(57) A simple and flexible over-air protocol for use with a mobile telephone system, having hand-held telephones in a microcell or other type of cellular communication system. A method in which user stations communicate with one or more base stations to place and receive telephone calls, in which the user stations are provided a secure voice or data link and have the ability to handoff calls between base stations while such calls are in progress. Each base station has a set of "air channels" to which it transmits in sequence.

The air channels supported by each base station are called that base station's "polling loop". A user station receives general polling information on an unoccupied air channel, transmits responsive information to the base station, and awaits acknowledgment from the base station. Each base station may therefore simultaneously maintain communication with as many user stations as there are air channels in its polling loop. The ability of a user station to communicate on any unoccupied air channel makes the protocol air-channel agile, while the stability of user station and base station clocks may define air channels, gaps, and minor frames.

FIG. 1-1

**EP 1 347 584 A2**

**Description**

BACKGROUND OF THE INVENTION

Related Application Data

This application claims priority from U.S. Application No. 08/215,306 filed on March 21, 1994 and U.S. Application No. 08/284,053 filed on August 1, 1994, both entitled "P C S POCKET PHONE/MICROCELL COMMUNICATION OVER-AIR PROTOCOL," both of which are continuation-in-part applications of U.S. Application Serial No. 08/146,496 filed on November 1, 1993, bearing the same title, and now abandoned.

Field of the Invention

This invention relates to the field of communications, and particularly to communication systems using spread spectrum techniques and to over-the-air protocols for mobile telephones.

Description of Related Art

A mobile telephone system may generally comprise a set of "user stations", typically mobile and the endpoints of a communication path, and a set of "base stations", typically stationary and the intermediaries by which a communication path may be established or maintained. In a mobile telephone system, one important concern is the ability of mobile stations to communicate with base stations in a simple, flexible and rapid manner. The communication protocol between user stations and base stations should be rapid, so that user stations are not required to wait to establish a communication path. The protocol should be simple, so that user stations need not incorporate expensive equipment to implement it. The protocol should be flexible, so that user stations may establish communication paths in as many communication environments as reasonably possible.

Accordingly, it would be advantageous to provide a simple and flexible over-air protocol for use with a mobile telephone system. One class of systems in which this would be particularly advantageous is that of personal communication systems, particularly those with hand-held telephones in a microcell or other type of cellular communication system.

SUMMARY OF THE INVENTION

The invention provides in one aspect a simple and flexible over-air protocol for use with a mobile telephone system, such as a Personal Communication System (PCS) with hand-held telephones in a cellular communication system. A preferred embodiment is adapted to "pocket phones", i.e., small hand-held telephones which may use a cellular communication technique, but the invention may be used with any cellular or mobile telephone system. The protocol defines a method in which user stations, such as cellular or mobile telephone handsets, communicate with one or more base stations to place and receive telephone calls. The protocol provides air-channel agility between base stations and user stations, while providing a secure voice or data link and the ability to handoff calls between base stations while they are in progress.

In a preferred embodiment, each base station may have a set of "air channels" which it polls, e.g. by transmitting to each one in sequence. The air channels supported by each base station are referred to as a "polling loop" for a particular base station. A user station may receive information on an unoccupied air channel, receive the base station's transmission, and transmit information to the base station. Each base station may therefore simultaneously maintain communication with as many user stations as there are air channels in its polling loop. The ability of a user station to communicate on any unoccupied air channel makes the protocol air-channel agile. Each base station continually transmits on each one of its air channels in a predetermined sequence. Each base station transmission may be followed by a first gap, a user station transmission (if some user station attempts to communicate), and a second gap, before the base station transmits on the next air channel. A base station transmission, first gap, user station transmission, and second gap are collectively called a "minor frame". A polling loop in which each air channel is polled is called a "major frame".

In a preferred embodiment, stability of user station and base station clocks may define the air channels, gaps, and minor frames. The user station may synchronize itself to the base station's clock by detecting a minor frame and by adjusting its clock to be in synchrony with the base station when the first bit sequence of the minor frame is detected. The stability of the user station and base station clocks may then hold the user station and base station in synchronization, as long as the user station is periodically able to receive transmissions from the base station. Should reception in either direction be interrupted for too long, the base station and user station clocks may drift apart and the user station may need to reacquire the transmission from the base station.

Handoffs are preferably initiated from the user station which continually monitors available air channels from the same and competing base stations during dead time. A user station may handoff within the same polling loop to establish communication in a new minor frame, or may handoff in such a manner to establish communication in a new minor frame within a polling loop of a different base station. In the latter case, a base station controller may assist in transferring the call from one base station to another.

The invention provides in yet another aspect for closed loop power control in the user stations by monitoring and adjusting the user station power at regular intervals, such as once in each major frame. The control of user station power serves to reduce intercell interference and prolong battery life in mobile handsets.

Variable data rates provided in another aspect of the present invention. A user station may increase its data rate by transmitting and/or receiving in multiple minor frames during a major frame, or may reduce its data rate by transmitting and/or receiving in fewer than every major frame.

BRIEF DESCRIPTION OF THE DRAWINGS

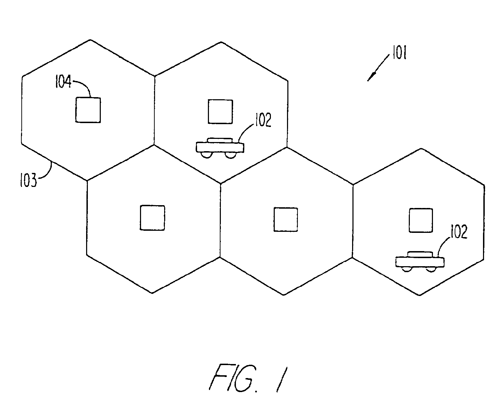

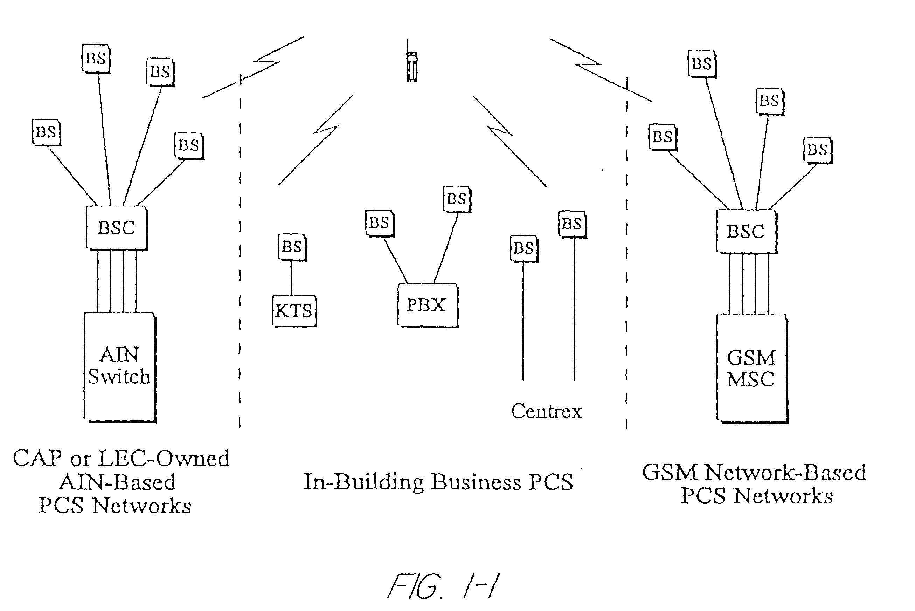

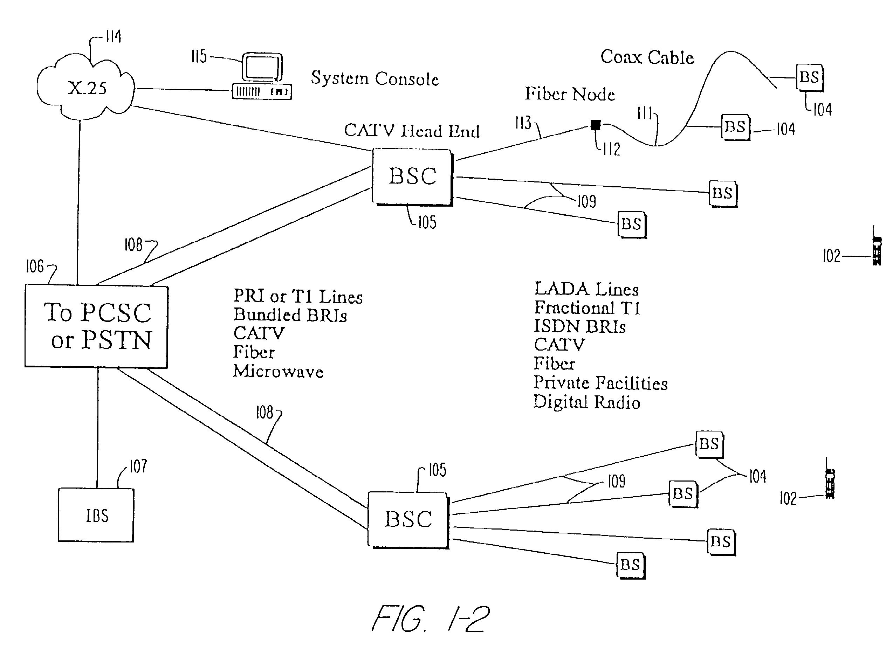

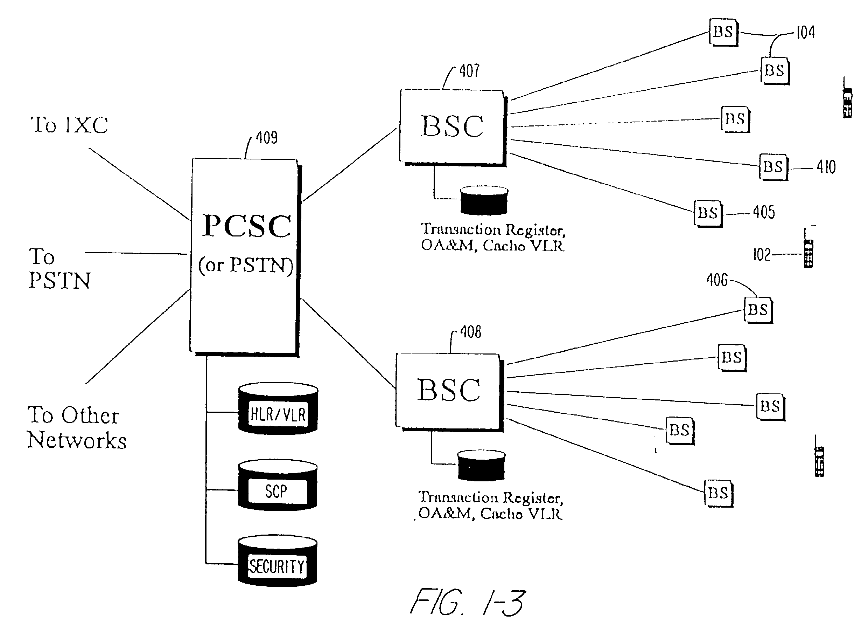

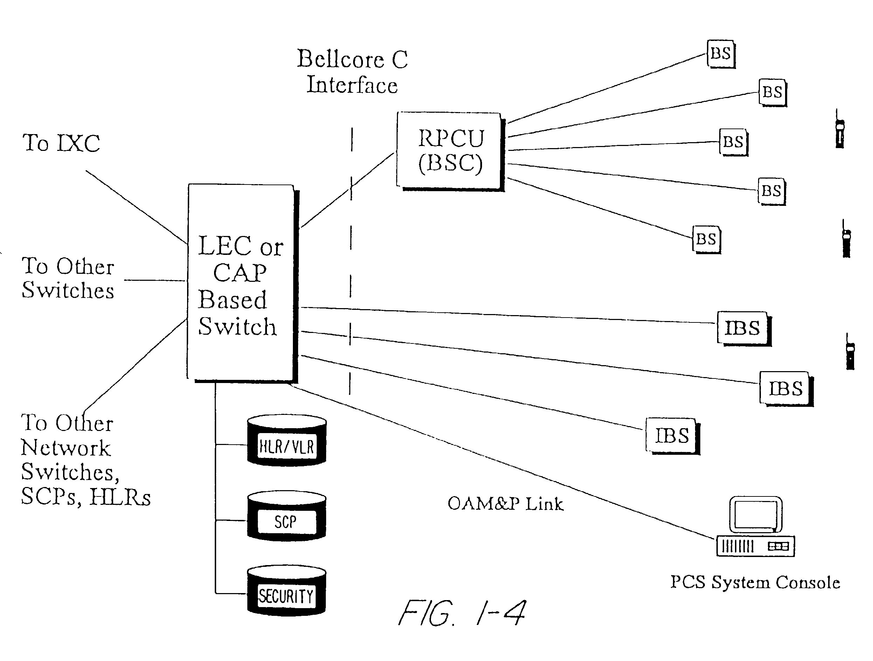

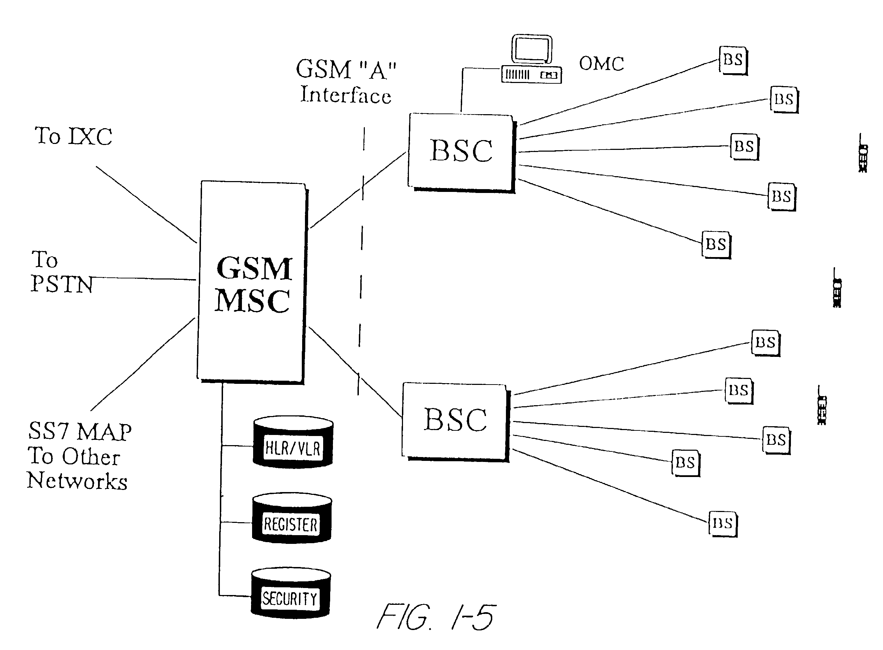

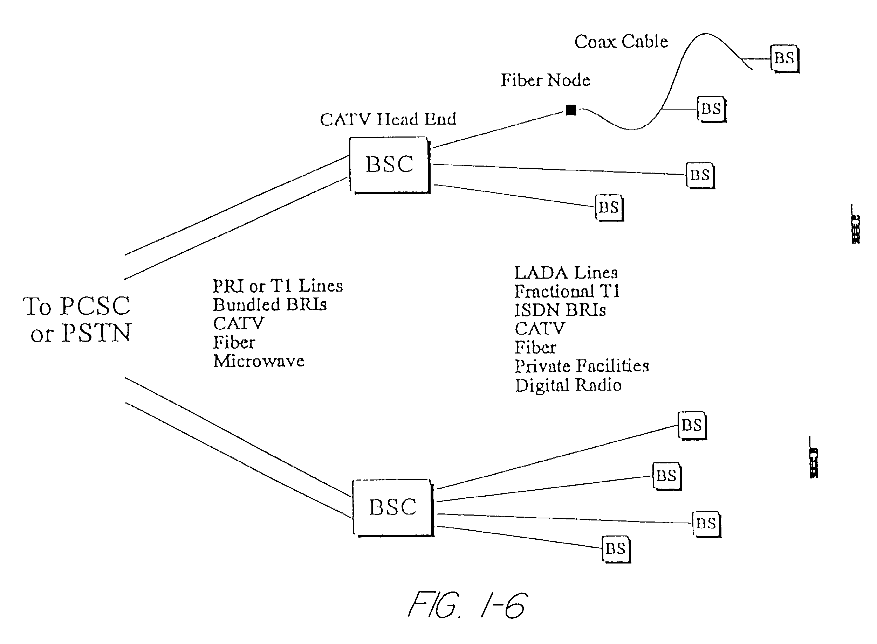

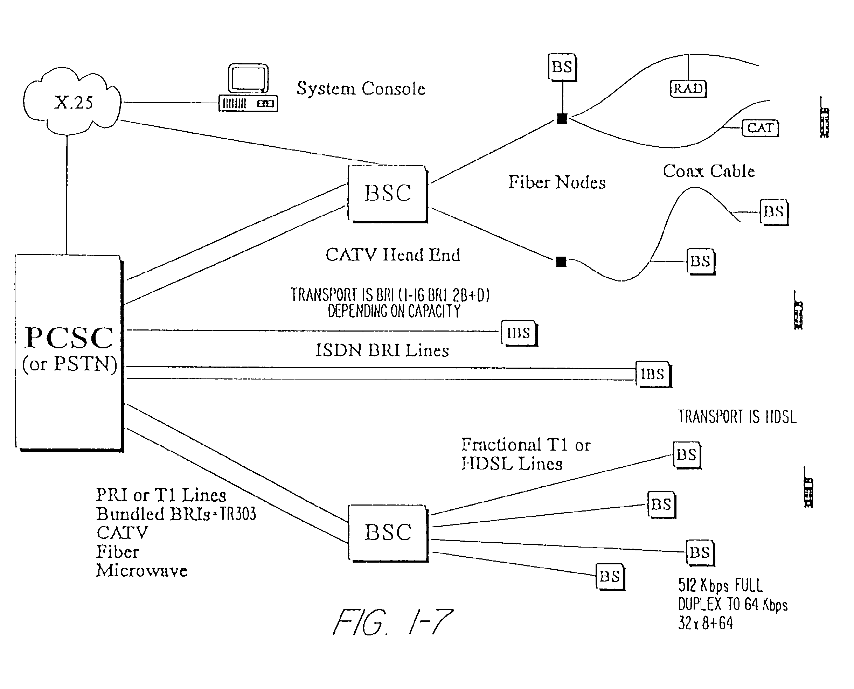

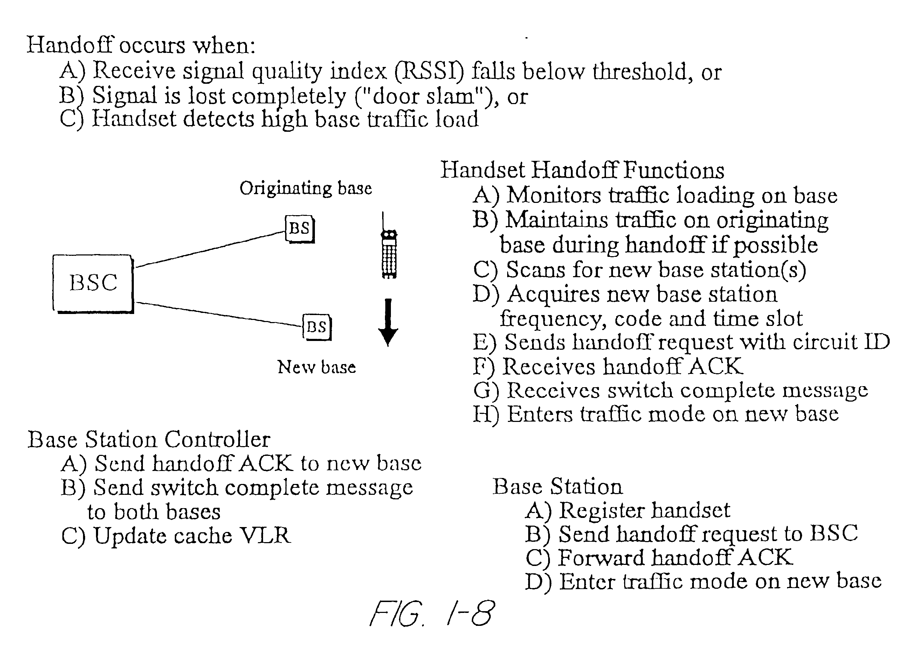

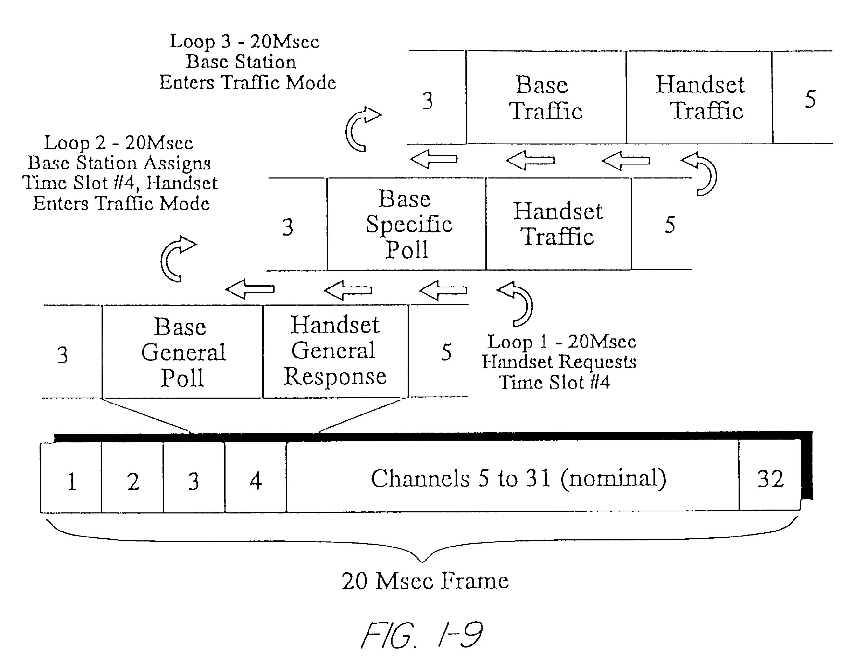

Figure 1A is a diagram of a communication system having base stations and user stations.
Figure 1-1 is a diagram of a communication system with alternate network interconnections.
Figure 1-2 is a diagram of a network architecture showing various system components.
Figure 1-3 is a diagram of a network architecture showing connections between base stations and a network.
Figures 1-4, 1-5, 1-6, and 1-7 are diagrams of network architectures showing various system components.
Figures 1-8 and 1-9 are diagrams of a handset air channel acquisition procedure for an embodiment of the invention.

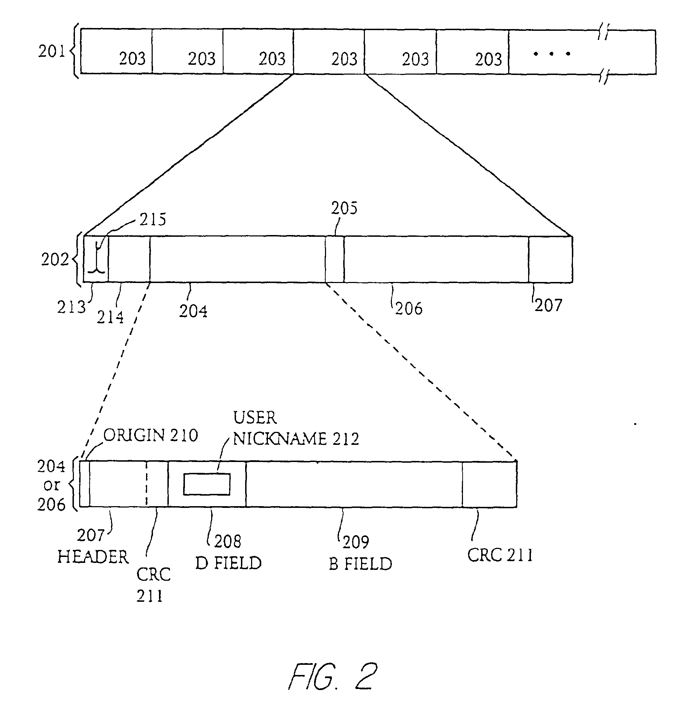

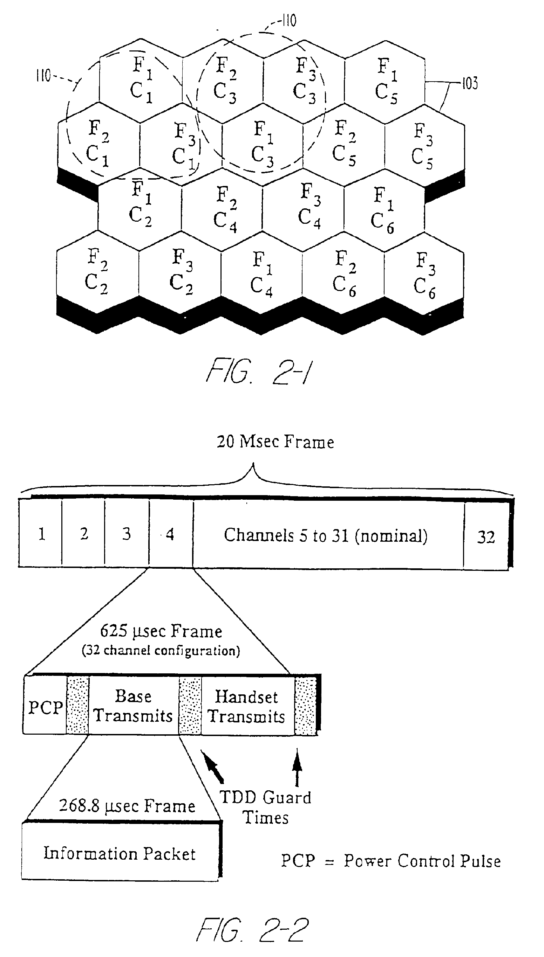

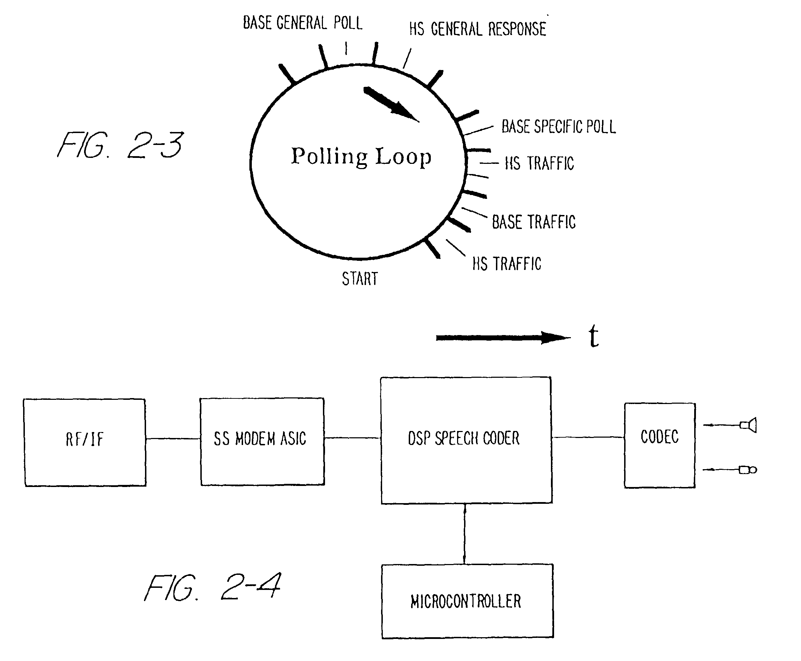

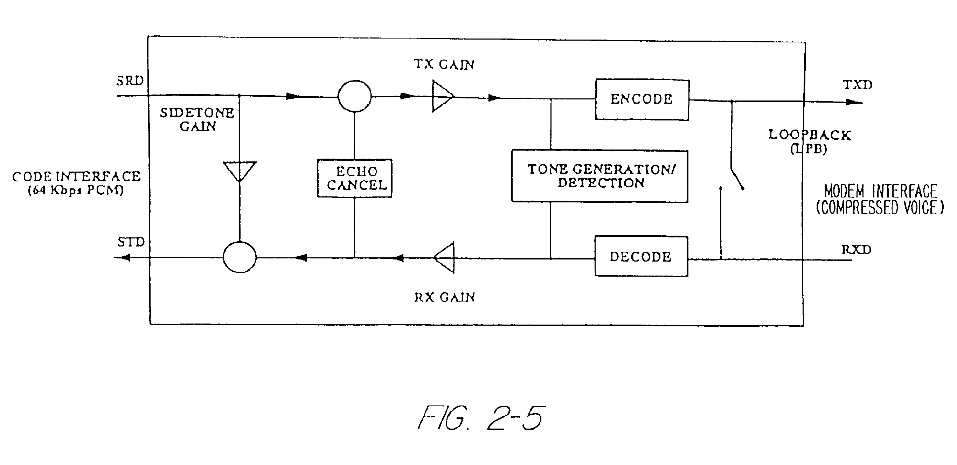

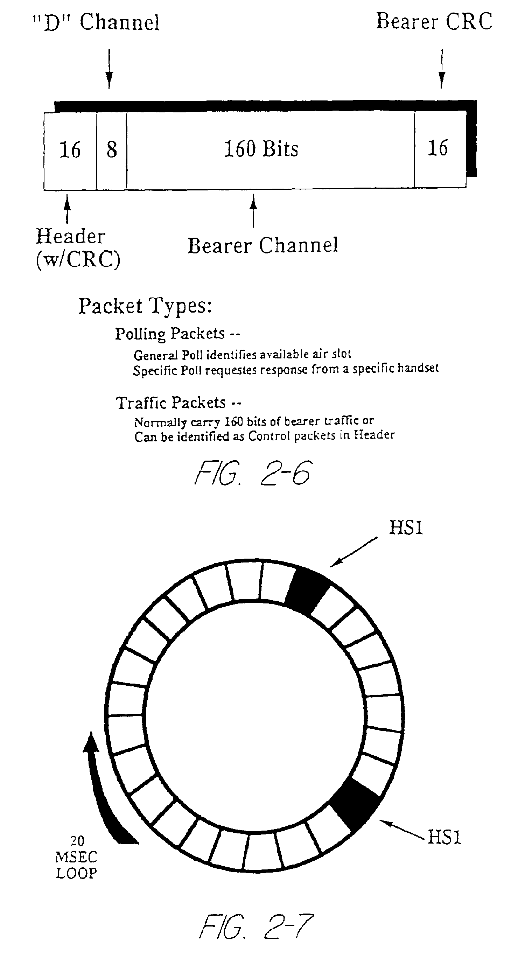

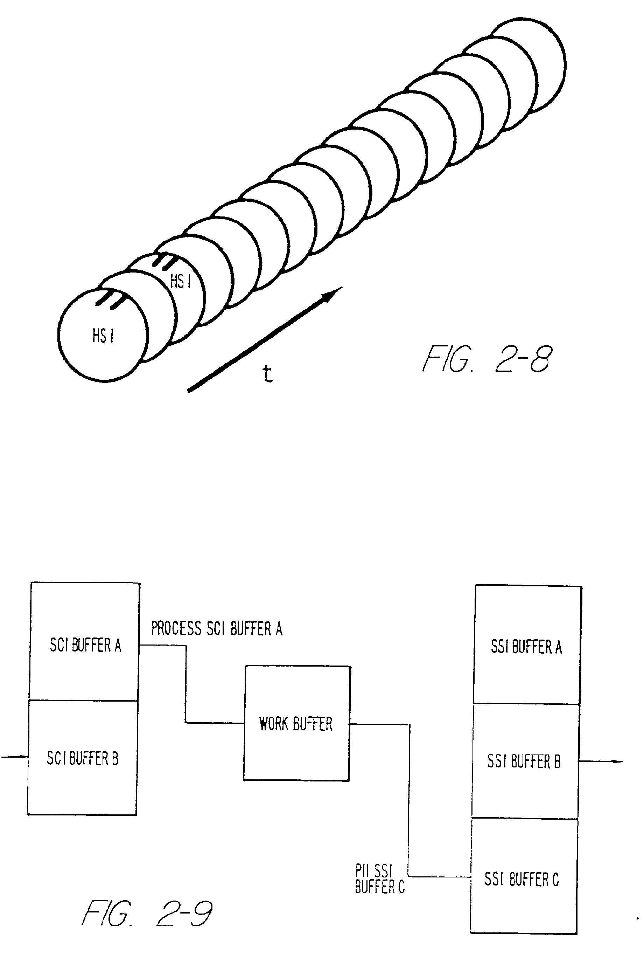

Figure 2 is a diagram of frame and message formats in a polling loop.
Figure 2-1 is a diagram of a preferred cellular environment in which the invention may operate.
Figure 2-2 is a diagram of a TDMA/TDD frame structure for an embodiment of the invention.
Figure 2-3 is a diagram of a polling loop for an embodiment of the invention.
Figure 2-4 is a block diagram of a speech coder for an embodiment of the invention.
Figure 2-5 is a functional block diagram of a speech coder control path for an embodiment of the invention.
Figure 2-6 is a diagram of a packet structure for an embodiment of the invention.
Figure 2-7 and 2-8 are diagrams showing time slot assignments for an embodiment of the invention.
Figure 2-9 is a diagram of a speech coder buffer structure for an embodiment of the invention.

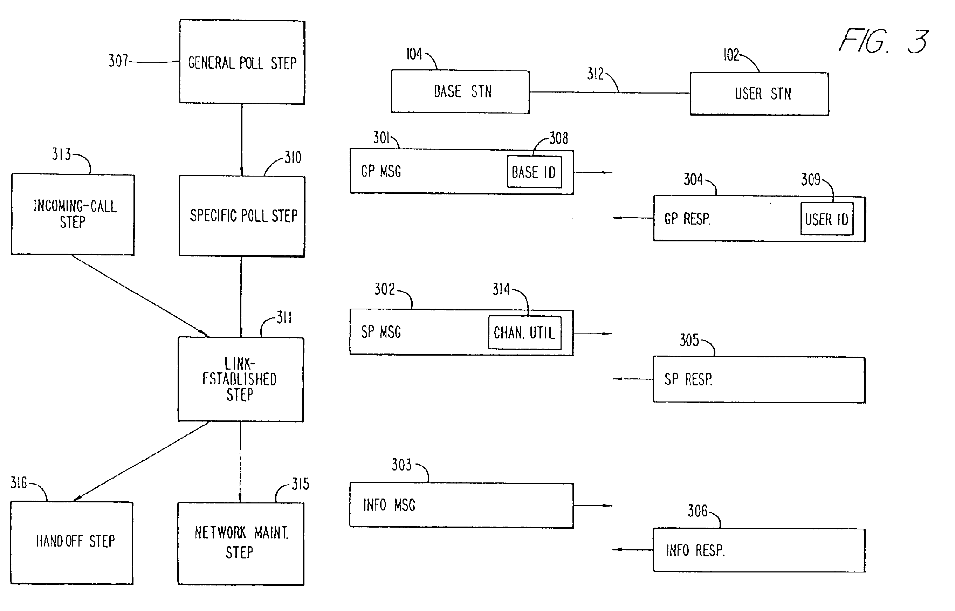

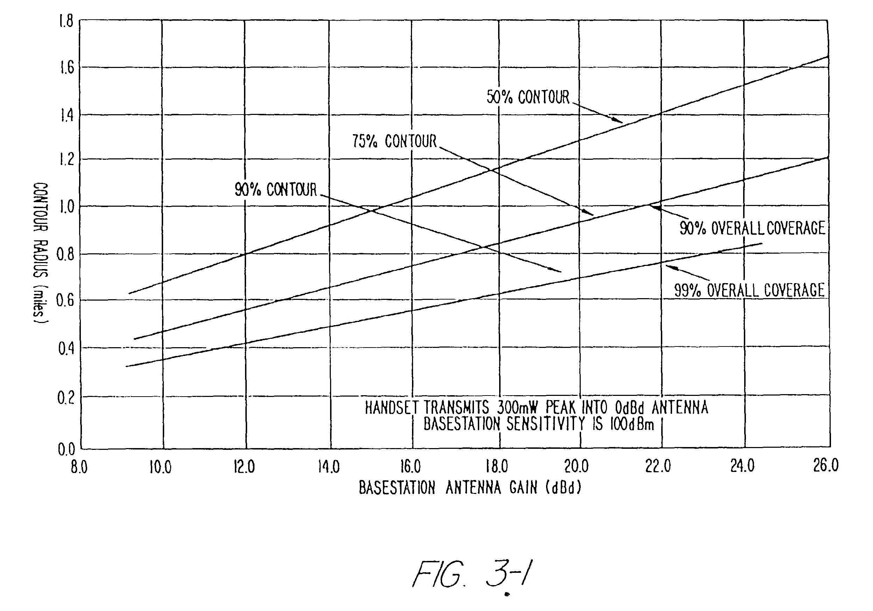

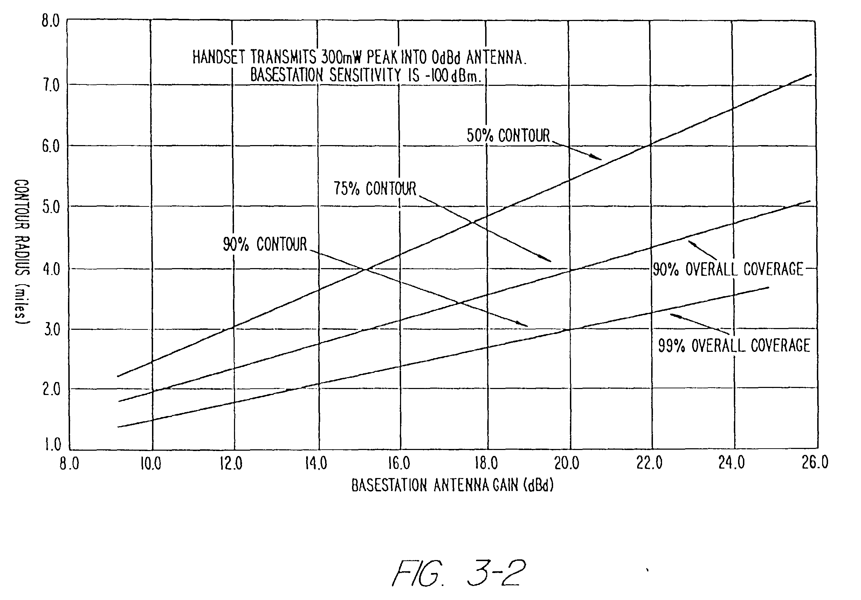

Figure 3 is a diagram showing formats for message types.
Figures 3-1 and 3-2 are estimated cell radii coverage charts for an embodiment of the invention.

DESCRIPTION OF THE PREFERRED EMBODIMENT

In a preferred embodiment, it is contemplated that communication between base stations and user stations will be conducted using a spread-spectrum technique. There are at least three methods for establishing synchronization and communication, each preferably using an M-ary technique in which multiple bits of data are transmitted for each spread-spectrum symbol, e.g., by transmitting and receiving multiple different spreading codes, and interpreting the received one of those multiple different spreading codes at the receiver to indicate multiple data bits. Synchronization may be accomplished either by (1) automatic synchronization disclosed in U.S. Application Serial No. 08/146/491, entitled "DESPREADING/DEMODULATING DIRECT SEQUENCE SPREAD SPECTRUM SIGNALS", Lyon & Lyon Docket No. 200/154, filed on November 1, 1993 in the name of inventors Robert Gold and Robert C. Dixon, hereby incorporated by reference, by (2) synchronizing with matched filters, by (3) demodulation and despreading using sliding correlators, or by (4) a combination of these techniques, e.g., matched filters for synchronization plus sliding correlators for demodulation and despreading, or matched filters for synchronization plus autosynchronization for demodulation and despreading.

Figure 1A is a diagram of a communication system having base stations and user stations.

A communication system 101 for communication among a plurality of user stations 102 may include a plurality of cells 103, each with a base station 104, typically located at the center of the cell 103. Each station (both the base stations 104 and the user stations 102) may generally comprise a receiver and a transmitter. The user stations 102 and base stations 104 preferably communicate using time division multiple access (TDMA) or time division duplex (TDD) techniques as further described herein, in which specified time segments or major frames are divided into assigned time slots or minor frames for individual communication.

Figure 2-1 is a diagram of a preferred cellular environment in which the invention may operate. A geographical region is divided into a plurality of cells 103. Associated with each cell 103 is an assigned frequency and an assigned spread spectrum code. Preferably, three different frequencies F1, F2 and F3 are assigned in such a manner that no two adjacent cells have the same assigned frequency F1, F2 or F3. The effect of such a frequency reuse pattern is to minimize interference between adjacent cells.

To further reduce the possibility of intercell interference, different orthogonal spread spectrum codes C1 through C6 are assigned as shown in adjacent clusters 110. Although six spread spectrum codes C1 through C6 are shown in Fig. 2-1, it is contemplated that fewer or more spread spectrum codes may be suitable depending upon the particular information. Further information regarding a preferred cellular environment may be found in U.S. Application Serial No. 07/682,050 entitled "Three Cell Wireless Communication System" filed on April 8, 1991 in the name of Robert C. Dixon, and hereby incorporated by reference as if fully set forth herein.

The use of spread spectrum for carrier modulation permits a very efficient frequency reuse factor of N = 3 for allocating different carrier frequencies F1, F2 and F3 to adjacent cells 103. Interference between cells 103 using the same carrier frequency F1, F2 or F3 is reduced by the propagation loss due to the distance separating the cells 103 (no two cells 103 using the same frequency F1, F2 or F3 are less than two cells 103 in distance away from one another), and also by the spread spectrum processing gain of cells 103 using the same carrier frequencies F1, F2 or F3.

The preferred spread spectrum bandwidth may differ according to the frequency band of operation. When operating in the PCS A, B, or C frequency bands, each of which is 15 Mhz wide, the center frequencies F1, F2 and F3 are preferably located at 2.5 Mhz, 7.5 Mhz, and 12.5 Mhz, respectively, from the lowest band edge of the A, B or C frequency band.

The PCS D, E, or F bands, on the other hand, are each 5 Mhz wide, which is the same bandwidth as a preferred spreading bandwidth for a spread spectrum signal used in the particular cellular environment. Consequently, a single carrier frequency is placed in the center of the D, E or F band, and a frequency reuse factor of N = 1 is used because the spread spectrum signal covers the entire available bandwidth. Because an N = 1 frequency reuse pattern is used, the required intercell interference rejection must be obtained by spread spectrum code orthogonality and/or the use of sectorized antenna patterns. The exchange of interfering air channels or time slots, as described elsewhere herein, may also be used to mitigate intercell interference.

When operating in the PCS unlicensed band, which has a bandwidth of 20 Mhz divided into individual channel only 1.25 Mhz wide, the spread spectrum chipping rate may be reduced to approximately 1.25 Mcps. The TDMA burst rate, or number of TDMA time slots (or minor frames) in each polling loop, may also be reduced to maintain the required spread spectrum processing gain for rejecting intercell interference. A non-spread spectrum TDMA/TDD signal modulation format for operation in the unlicensed band may also be provided.

Figure 1-2 is a diagram of a network architecture showing various system components.

A preferred communication system is designed around an object-based software architecture which allows for flexibility in interconnection to various networks including public switched telephone networks, AIN, GSM and IS-41 network infrastructures. It is also contemplated that the communication system may interface with a cable television distribution network; however, such an interface may require the addition to the cable television network of a switch architecture, two-way amplifiers, redundancy, and, in order to use the coaxial portion of the cable TV network, a remote antenna subsystem to extend coverage from a base station 104.

The overall system thus provides flexibility to interface with a variety of different networks depending upon the desired application. To allow interconnection to diverse networks, the system uses internal communications based on ISDN messages, called "notes", for passing necessary information among components within the system. These "notes" are so named as not to confuse them with the ISDN specific protocol itself. Network messages (based on, e.g., Q.921, Q.931 protocols, or others) are converted by the system into "notes" for efficient operation within the hardware platform.

In Fig. 1-2 is shown various components of a preferred system architecture including a plurality of base stations 104 for communicating with user stations 102. Each base station 104 may be coupled to a base station controller 105 by any of a variety of linking means 109 including, for example, local area data access (LADA) lines, T1 or fractional T1 lines, ISDN BRI's, cable TV lines, fiber optic cable, digital radio, microwave links, or private lines. As an illustration shown in Fig. 1-2, a plurality of base stations 104 may be coupled to base station controller 105 by first connecting to a coaxial cable 111 which is thereafter coupled to a fiber optic cable 113 at a fiber node 112. The fiber optic cable 113 is coupled to the base station controller 105 as shown.

Each base station controller 105 may be connected to a network 106 such as a public switched telephone network (PSTN) or a personal communications system switching center (PCSC) by a variety of network links 108, which include the same basic categories of transport means as the linking means 109. Base station controllers 105 may also connect to the network 106 via an X.25 link 114.

The system of Fig. 1-2 also incorporates the use of "intelligent" base station (IBS) 107 compatible with LEC-based AIN architecture that may be connected directly to a network 106 without the interface of a base station controller 105. The intelligent base stations 107 may therefore bypass the base station controllers 105 for local handoffs and switching, and instead perform these functions via the network 106. In AIN based architectures, signaling between network elements may be carried out using standard signaling protocols including, for example, SS7 and IS-41.

In operation, the base stations 104 format and send digital information to the base station controller 105 (or directly to the network 106 in the case of an intelligent base station 107). The base station controllers 105 concentrate inputs from multiple base stations 104, assist handoffs between base stations 104, and convert and format channel information and signaling information for delivery to the network 106. The base station controllers 105 may also manage a local cache VLR database, and may support basic operations, administration and management functions such as billing, monitoring and testing. Each base station controller 105, under control of the network 106, may manage local registration and verification of its associated base stations 104 and may provide updates to the network 106 regarding the status of the base stations 104.

The network 106 connects to the base station controllers 105 for call delivery and outgoing calls. The connection between the network 106 and a base station controller 105 may utilize the Bellcore "Generic C" interface which includes Q.921, Q.931 and modifications to Q.931.

Intelligent base stations 107 may use ISDN messaging for registration, call delivery and handoff over a public telephone switch. The intelligent base station 107 may have all the general capabilities of a base station 104 but further incorporate a BRI card, additional intelligence and local vocoding. The connection between the network 106 and an intelligent base station 107 may utilize the Bellcore "Generic C" interface which includes Q.921, Q.931 and modifications to Q.931.

If the network 106 is a GSM network, then base stations 104 may connect to the network 106 through a defined "A" interface. Features and functionality of GSM are passed to and from the base stations 104 over the "A" interface in a manner that is transparent to the end user.

As noted, the system may also interconnect to cable television distribution networks. The base stations 104 may be miniaturized to the point where they can be installed inside standard cable TV amplifier boxes. Interfacing may be carried out using analog remote antenna systems and digital transport mechanisms. For example, T1 and FT1 digital multiplexer outputs from the cable TV network may be used for interfacing, and basic rate (BRI) ISDN links to transport digital channels.

Cell site diagnostics may be performed remotely through either the control channel on the digital link resident in the base station 104 or a dial up modem for some implementations. Such diagnostics may be performed on each component board of the base station 104. In addition, the base stations 104 and base station controllers 105 may be remotely monitored and downloaded with updated software as required. Similarly, user stations 102 can also be downloaded with software over air channels as required for maintenance purposes or for system upgrades.

The user stations 102 comprise in one embodiment mobile handsets capable of multi-band and/or multi-mode operation. The user stations 102 may be multi-mode in that they may be capable of either spread spectrum communication or conventional narrowband communication. The user stations 102 may be multi-band in the sense that they may be set to operate on a plurality of different frequencies, such as frequencies in either the licensed or unlicensed frequency bands.

For example, a user station 102 may be set to operate on any frequency between 1850 and 1990 MHz in 625 kHz steps. Thus, each user station 102 may have a frequency synthesizers which can be programmed to receive and transmit on any one of 223 frequencies. If the user station 102 operates solely in the licensed PCS band, however, the programmable frequency steps may be in 5 MHz increments, in which case the first channel may be centered at 1852.5 MHz, the next at 1857.5 MHz, and so on. If operating in the isochronous band between 1920 and 1930 MHz, the first channel may be centered at 1920.625 MHz, and the channel spacing may be 1.25 MHz across the remainder of the isochronous band. The user stations 102 need not operate in the 1910 to 1920 MHz band, which is reserved for asynchronous unlicensed devices.

Further detail regarding the multi-band and multi-mode aspects of user stations 102 may be found in U.S. Application Serial No. 08/146,492 filed on November 1, 1993 in the name of inventors Robert C. Dixon and Jeffrey S. Vanderpool, entitled "DUAL-MODE WIRELESS UNIT WITH TWO SPREAD-SPECTRUM FREQUENCY BANDS," U. S. Application Serial No. 08/059,021 filed May 4, 1993 in the name of inventors Douglas G. Smith, Robert C. Dixon and Jeffrey S. Vanderpool, entitled "DUAL-BAND SPREAD-SPECTRUM COMMUNICATION," and U.S. Application Serial No. 08/206,045 filed on March 1, 1994 in the name of inventors Robert C. Dixon and Jeffrey S. Vanderpool, entitled "DUAL-MODE TRANSMITTER AND RECEIVER," each of which is hereby incorporated by reference as if fully set forth herein. The multi-band, multi-mode capability enables the user stations 102 take advantage of variety of diverse system architectures as described herein, and to interface with various different networks with a minimum of hardware or software adjustments.

Base stations 104, like user stations 102, may also be provided with multi-band and multi-mode capabilities as described above.

FRAME AND MESSAGE FORMATS

Figure 2 shows frame and message formats in a polling loop.

In a single cell 103, a base station 104 may poll user stations 102 in the cell 103. The base station 104 may repeatedly transmit a major frame 201, comprising a sequence of minor frames 202. As noted herein, each minor frame 202 may comprise a polling exchange for a single user station 102, while each major frame 201 may comprise a complete polling sweep of user stations 102 in the cell 103.

In a preferred embodiment, the base station 104 may conduct its polling exchanges using a set of air channels 203. Each of the air channels 203 may comprise a separate transmission channel, such as a separate frequency band for FM or AM encoding, a separate spreading code for spread-spectrum encoding, a separate spatial location, or other division of communication slots between base stations 104 and user stations 102. In a preferred embodiment, the base station 104 may poll every one of its air channels 203 in a predetermined sequence in a single major frame 201.

While in a preferred embodiment, the base station 104 may poll every one of its air channels 203 in a single major frame 201, but it will be clear to those of ordinary skill in the art, after perusal of this application, that the base station 104 may restrict its poll to only a portion of its air channels 203 in each major frame 201, so long as all air channels 203 are eventually polled, and in an order so that each user station 102 may determine in which minor frame 202 it should respond.

Each minor frame 202 may comprise a base transmission 204 by the base station 104, a first gap 205, a user transmission 206 by a user station 102 (if any user station 102 responds), and a second gap 207. During the base transmission 204, a user station 102 desiring to establish a communication path may receive the base transmission 204 and determine if the air channel 203 is occupied or not. If not occupied, the user station 102 may respond with its user transmission 206.

In one embodiment, in order to provide efficient service in low density rural areas, cell radii can be extended to large distances (e.g., beyond 8 miles) by providing the increased guard times as would be required for the longer round trip propagation delays encountered in the larger cells. Cells with large radii can be supported by reducing the number of minor frames 202 per major frame 201 to a lesser number (e.g., from 32 to 25). Since such large cell radii will ordinarily be deployed in low population density areas, reduced cell capacity caused by the smaller number of minor frames 202 per major frame 201 is not a severe drawback.

In a preferred embodiment, a base transmission 204 may comprise a header field 207, which may be a fixed length of sixteen bits, a D field 208, which may be a fixed length of eight bits, and a B field 209, which may be a fixed length of 160 bits, or may be a variable length. In an embodiment using a variable-length B field 209, the variable length may be determined in response to the polling loop time and the data rate which must be supported. For example, in a preferred embodiment of a 30-channel system, the B field 209 may be 160 bits long.

In a preferred embodiment, the user transmission 206 may comprise like fields as the base transmission 204.

The header field 207 may comprise an origin bit 210, which may be a "1" bit for base transmissions 204 and may be a "0" bit for user transmissions 206. Other parts of the header field 207 may indicate information about the base transmission 204 or user transmission 206 itself, e.g., what type of message the base transmission 204 or user transmission 206 comprises. The header field 207 may also comprise a CSC or CRC code 211 (a cyclic redundancy check) having four bits.

The D field 208 may comprise control information to be communicated between base stations 104 and user stations 102 once a communication link is established. This control information may generally be used for ISDN communication between base stations 104 and user stations 102, such as control information generally communicated using the ISDN "D channel". Because the D field 208 is separate from but simultaneous with the B field 209 which normally handles the bulk of information transfer due to its higher data rate, the D field 208 may be used for paging applications, notifications (e.g., voice mail), short message service (similar to GSM), or other user applications. Thus, the simultaneous nature of the D field 208 and the B field 209 allows messaging functions even when the user station 102 is "in use".

During link expansion, described with regard to figure 3 herein, the D field 208 may also comprise a user nickname 212 for communication from the base station 104 and a designated user station 102. The user nickname 212 may comprise a temporary identifier for the user station 102 selected by the base station 104.

The B field 209 may comprise data, voice (encoded digitally or otherwise), or other information. In a preferred embodiment, the B field 209 may also comprise specified information for establishing communication links between base stations 104 and user stations 102. The B field 209 may also comprise its own FCW or CRC code 211 having sixteen bits (with 160 bits of information, a total of 176 bits).

In a preferred embodiment, there may be 32 air channels 203; the major frame 201 may therefore comprise 32 minor frames 202 in sequence. Thus, each minor frame 202 may be about 307 microseconds long, each air channel 203 (in a TDD or TDMA system) may be about 667 microseconds long, and each major frame 201 may be about 20 milliseconds long. In a preferred embodiment, there may be 160 bits transmitted per air channel 203; thus the 32-channel system would have about a 256 kilobits/second total two-way data rate. Other time values are shown in the figure.

In a preferred embodiment, information may be transmitted at a rate of five bits each 6.4 microseconds, using a 32-ary code-shift keying technique. Thus, each 6.4 microseconds, one of 32 different codes may be transmitted, with 32 different possibilities equalling five bits of information. In an alternative preferred embodiment, one of 16 different codes may be transmitted, with an additional phase bit on the carrier (or, in a second alternative, more than one phase bit on the carrier), again with 32 different possibilities equalling five bits of information.

In one embodiment, a minor frame 203 may operate in an asymmetric mode in the sense that the greater portion of a minor frame 202 is devoted to either the base transmission 204 or the user transmission 206. High speed data transport in either direction (i.e., from the base station 104 to the user station 102, or vice versa) can be provided in the asymmetric mode, with or without acknowledgment and/or ARQ.

A particular sub-mode of the above described asymmetric mode may be referred to as broadcast mode in which essentially the entire minor frame is devoted to one-way communication. In the broadcast mode, one or more broadcast sub-channels may be identified by a special broadcast identifier. Up to 255 broadcast channels may be so identified. For these point-to-multipoint applications, broadcast frames are not acknowledged.

Control Pulse

A user station 102 in a cellular environment preferably has means for controlling transmission power to avoid interference with adjacent cells. Unlike a fixed station environment, in which antenna locations, patterns and fixed station transmission power may be adjusted for minimal interference with other fixed stations, the nature of a cellular environment with mobile user stations 102 is such that there can arise conflict between user stations 102 at intersecting cell boundaries. This creates the need for some power control in the user stations 102. For example, a user station 102 operating at the boundary of coverage of a base station 104 may need to transmit at full power to stay in contact. On the other hand, a user station 102 operating relatively close to its own base station 104 may not need to transmit full power to have good contact. By proper power control, user stations 102 may maintain adequate contact with base stations 104 without unduly interfering with neighboring cell transmissions, allowing RF channel reuse in nearby cells. Power control may also reduce interference with fixed microwave users and conserve battery power in user stations 102 such as handheld units.

The present invention achieves power control in one embodiment by use of a power control pulse transmitted periodically from each user station 102. After establishment of a communication link, described with regard to Fig. 3 herein, a control pulse time 213 and a third gap 214 may be reserved just prior to the start of the minor frame 202, in which the user station 102 transmits a control pulse 215. The control pulse 215 provides to the base station 104 a power measurement of the air channel 203 indicative of the path transmission loss and link quality. Each user station 102 generally transmits its control pulse 215 in the minor frame 202 allocated to it (e.g., seized by the user station 102).

The control pulse 215 may be received by the base station 104 and used by the base station 104 to determine information about the communication link it has with the user station 102. For example, the base station 104 may determine, in response to the power, envelope, or phase of the control pulse 215, the direction or distance of the user station 104, and the degree of noise or multipath error to which the communication link with the user station 102 may be prone.

In response to receiving the control pulse 215, the base station 104 determines the quality of the received signal including, for example, the received power from the power control pulse 215 and the signal-to-noise or interference ratio. The base station 104 then sends a message to inform the user station 102 to adjust its power if needed. Based on the quality of the received signal, the base station 104 may command the user station 102 to change (increase or decrease) its transmit power by some discrete amount (e.g, in minimum steps of 3 dB) relative to its current setting, until the quality of the control pulse 215 received by the base station 104 is above an acceptable threshold.

Similarly, if the base station 104 knows the power setting of the user station 102, then the base station 104 can adjust its own power as well. The base station 104 may adjust its power separately for each minor frame 202.

A preferred power control command pulse from the base station 104 to the user station 102 may be encoded according to Table 5-1 below:

Table 5-1

| Power Control Command | Adjustment |
|---|---|
| 000 | No change |
| 001 | -3 dB |
| 010 | -6 dB |
| 011 | -9 dB |

Table 5-1   (continued)

| Power Control Command | Adjustment |
|---|---|
| 100 | +3 dB |
| 101 | +6 dB |
| 110 | +12 dB |
| 111 | +21 dB |

Although preferred values are provided in Table 5-1, the number of power control command steps and the differential in power adjustment between steps may vary depending upon the particular application and the system specifications.

While power control is thus desirable, a problem in some conventional TDMA systems is that the length of the polling loop (e.g, the major frame 201) is too long to allow the latest user transmission to be very useful for estimating the channel losses and impairments. In other words, the latency of the polling loop signals may prevent the use of closed loop power control. However, the described embodiment allows for a power control sequence that may be effectively carried out in a relatively short span of time, thereby allowing closed loop power control. Preferably, the elapsed time encompassing transmission of the control pulse 215, the base transmission 204, and the start of the user transmission 206 is kept relatively short (e.g., less than 500 $\mu$sec or roughly 2.5% of the duration of the major frame 201), allowing system response to be fast enough to counteract small scale multipath fading effects and propagation shadow effects.

The base station 104 may also use the control pulse 215 to measure the time delay from a user station 102 and thereby estimate the distance of the user station 102 from the base station 104. For 911 support, a user station 102 can provide control pulses 215 to multiple base stations 104 for rough location estimation in emergency situations.

In a preferred embodiment, the base station 104 may have a plurality of antennas for reception and transmission on the communication link with the user station 102, and may select one of that plurality of antennas for reception and/or transmission, in response to the determination the base station 104 may make in response to the control pulse 215. The base station 104 may make the determination of which antenna to use based on the quality of the signal received from the control pulse 215 transmitted by the user station 102. Because the base station can both receive and transmit on the antenna having the best received signal quality from the control pulse 215, the user stations 102 benefit from antenna selection diversity even though they might not have explicit antenna diversity capabilities at the user station 102. The control pulse 215 permits spatial diversity control to be updated during each minor frame 202. Preferably, the base station 104 employs a high speed TDD technique such that the RF channel characteristics do not change within the time of the minor frame 202.

Information relating to the control pulse 215 for a particular user station 102 may be transferred as information in control traffic from one base station 104 to another base station 104 in the case of a base station assisted handoff.

It should be noted that, in the preferred TDMA system described herein, the requirement of strict RF transmitter output power control is not necessary to resolve the "near-far" problem commonly experienced in CDMA systems. The purpose of the control pulse 215 is primarily to reduce battery consumption in user stations 102, to minimize interference of transmissions among neighboring cells 103 which may be operating on the same or adjacent RF channels, and to minimize interference with nearby fixed microwave users.

The control pulse 215 may also serve as a synchronization preamble for determining the beginning of M-ary data symbols within the minor frame 202. A power control command pulse, similar in length to the control pulse 215, transmitted by the base station 104 during the base transmission 204 or otherwise may likewise be used as a synchronization preamble at the user station 102, in addition to providing a power control command to adjust the power output level at the user station 102.

Base Station Output Power

Because a single base station 104 may communicate with a large number of user stations 102 (e.g., as many as 64 user stations 102) at a given time, each of whose distance from the base station 104 may vary from near zero up to the radius of the cell 103, it may not be practical to control the transmitter power of the base station 104 in order to maintain a near-constant received power level at each user station 102 during each minor frame 202. Output power control of the transmitter at the base station 104 could require a large change (e.g., more than 40 dB) in transmit power during each minor frame 202 (e.g., every 625 $\mu$s) of the major frame 201. As an alternative to providing power control on a minor frame 202 by minor frame 202 basis, output power control at the base station 104 can be averaged over a longer time interval than each minor frame 202.

Antenna Characteristics

In one aspect of the invention, the reciprocal nature of time division duplex (TDD) permits common antennas to be used for transmit and receive functions at both the base station 104 and the user stations 102, without the need for antenna diplexers. Common antennas can be used to transmit and receive because these functions are separated in time at each of the terminals. Further, because TDD utilizes the same RF frequency for the transmit and receive functions, the channel characteristics are essentially the same for both the base station 104 and a particular user station 102.

The use of common antennas results in simplicity of the base station 104 and user station 102 terminal designs. Further, use of the same RF frequency and antenna for both transmit and receive functions at the base station 104 and the user station 102 provides reciprocal propagation paths between the base station 104 and user station 102 terminals. This reciprocal nature allows the base station 104 to use the channel sounding of the control pulse 215 transmitted by the user station 102 to determine the two-way path loss between the base station 104 and the user station 102, and also to determine which of the spatial diversity antennas at the base station 104 to use, both to receive from the user station 102 and to transmit to the user station 102.

Different types of antennas may be used by the base station 104, depending on the type of application. For low density suburban or rural applications an omnidirectional antenna may be used to provide maximum coverage with the fewest base stations 104. For example, an omnidirectional antenna may be employed having a vertical gain of approximately 9 dB. The 9 dB of gain permits a relatively large radius cell even with an omnidirectional horizontal pattern.

In suburban and low density urban areas, directional antennas with 120 degree azimuth beamwidths and 9 dB vertical gain may be used at the base station 104 so that a cell 103 can be sectorized into three parts, with each sector accommodating a full load of user stations 102 (e.g., 32 full duplex user stations 102).

The use of TDD also permits utilization of a single steered phased array antenna at the base station 104 for applications requiring a high gain, highly directional antenna. Similar deployment in CDMA or FDMA systems would, in contrast, be more complex and costly, as they may require simultaneous steered beams for each user station 102 within the cell 103.

For example, to permit a single base station 104 to cover large, sparsely populated area, a steered array antenna with up to 20 dB of horizontal directivity can be used. Such an antenna is sequentially steered to each user station 102 within a cell 103 at each minor frame 202. The same antenna may be used for both transmission and reception, as noted, providing reciprocal forward and reverse link propagation characteristics. The steered array antenna may utilize circular polarization so that high level delayed clutter signals reflected from buildings or other obstructions within the beam path do not interfere with the received signals from the user stations 102. As reflected signals are typically reversed in polarization, they will be rejected by the circularly polarized antenna. It should be noted that such high gain, directional antennas also reduce the delay spread in severe multipath environments by rejecting multipath components arriving from outside the main beam of the antenna.

In one embodiment, the user station 102 employs a halfwave dipole antenna which is linearly polarized and provides a gain of 2 dB with an omnidirectional pattern perpendicular to the antenna axis. At a nominal frequency of 1900 MHz, a half wavelength is approximately 3 inches, which fits well within a handset envelope.

MESSAGE TYPES AND PROTOCOL

Figure 3 shows message types and a protocol which uses those message types.

In a preferred embodiment, messages (base transmissions 204 and user transmissions 206) may be one of three types: a general poll message 301, a specific poll message 302, and an information message 303. When a message is transmitted by a user station 102, it is called a "response", e.g., a general poll response 304, a specific poll response 305, and an information response 306.

User Station Initiation of a Link

A user station 102 may "acquire" a base station 104 by a sequence of handshaking steps. At a general poll step 307, the base station 104 may transmit its general poll message 301 on an air channel 203 as part of a minor frame 202. The user station 102 receives the general poll message 301 and, if and only if it was received without error, transmits its general poll response 304 on the same air channel 203. The general poll message 301 comprises a base ID 308, which may be 32 bits long, which may be recorded by the user station 102. In like manner, the general poll response 304 comprises a user ID 309, which may be 32 bits long, which may be recorded by the base station 104. The base ID 308 may be used during handoff, as noted herein.

Upon receiving a general poll response 304, at a specific poll step 310, the base station 104 may transmit a specific poll message 302, comprising the user ID 309 received by the base station 104 as part of the general poll response 304. The specific poll message 302 may be transmitted on the same air channel 203 as the general poll message 301, or may be transmitted on another air channel 203, so long as the user station 102 is able to find it.

The user station 102 may monitor all air channels 203 for its specific user ID 309. The user station 102 receives the specific poll message 302 and, if and only if it was received without error and with the same user ID 309, transmits its specific poll response 305 on the same air channel 203. The specific poll response 305 comprises the same user ID 309 as the general poll response 304.

In a preferred embodiment, however, the specific poll message 302 may be eliminated as redundant. The user station 102 may therefore follow the general poll response 304 with a specific poll response 305 on a selected air channel 203. This air channel 203 may be designated by the base station 104 in a part of the information field 209 of the general poll message 301, it may be designated by the user station 102 in a part of the information field 209 of the general poll response 304, or it may be selected by the user station 102 in response to an unoccupied air channel 203 (e.g., the user station 102 may seize an unoccupied air channel 203). The latter of these three alternatives is presently preferred by the inventors.

Upon receiving a specific poll response 305 comprising a user ID 309 which matches that of the general poll response 304, at a link-established step 311, the base station 104 may transmit an information message 303. At this point, the base station 104 and user station 102 have established a communication link 312 on a designated air channel 203, typically the air channel 203 originally polled by the base station 104, but possibly a different air channel 203. The base station 104 may couple a telephone line to that air channel 203, and the user station 102 may begin normal operation on a telephone network (e.g., the user station 102 may receive a dial tone, dial a number, make a telephone connection, and perform other telephone operations). The base station 104 and user station 102 may exchange information messages 303 and information responses 306, until the communication link 312 is voluntarily terminated, until faulty communication prompts the user station 102 to re-acquire the base station 104, or until handoff of the user station 102 to another base station 104.

Should more than one user station 102 respond to a general poll message 301 in the same minor frame 202, the base station 104 may advertently fail to respond. The lack of response from the base station 104 signals the involved user stations 102 to back off for a calculated time interval before attempting to acquire the same base station 104 using the general poll message 301 and general poll response 304 protocol. The back-off time may be based upon the user ID 309, and therefore each user station 102 will back off for a different length of time to prevent future collisions.

In one embodiment, the general poll message is sent by a base station 104 on one or more currently unoccupied air channels 203. Originally, at power-up of the base station 104, the base transmission 204 for all of the air channels 203 may therefore contain the general poll message 301.

Base Station Initiation of a Link

When an incoming telephone call is received at a base station 104, at an incoming-call step 313, the base station 104 transmits a specific poll message 302 with the user ID 309 of the indicated recipient user station 102 (skipping the general poll message 301 and the general poll response 304) on an available air channel 203.

Each user station 102 listens for the specific poll message 302 repeatedly on each air channel 203 so as to receive the specific poll message 302 within a predetermined time after it is transmitted. Thus each user station 102 may periodically receive each air channel 203 in sequence so as to listen for the specific poll message 302.

When the specific poll message 302 is received, the user station 102 compares the user ID 309 in the message with its own user ID, and if they match, continues with the link-established step 311. The base station 104 may thus establish a communication link 312 with any user station 102 within communication range.

Link Expansion and Reduction

The data transmission rate between a base station 104 and a user station 102 may be expanded or contracted over the duration of the communication link.

In one embodiment, the base station 104 increases the data transmission rate by transmitting multiple information messages 303 to the user station 102 during a major frame 201, essentially allocating multiple minor frames 202 to a single user station 102. These higher data rates, also known as "super rates", are implemented by means of a targeted information message 303. In a targeted information message 303, the base station 104 may transmit the user nickname 212 in the D field 208, along with information to be transmitted to the designated user station 102 in the B field 209. When the user station 102 detects the user nickname 212 assigned to it, it receives the targeted information message 303.

In a preferred embodiment, the user nickname 212 may be transmitted by the base station 104 to the user station 102 in the specific poll message 302. In an embodiment where the specific poll message 302 has been eliminated as redundant, the user nickname 212 may be transmitted by the base station 104 to the user station 102 bit-serially in a designated bit of the header field 207.

Because the data transmission rate is related to the number of minor frames 202 allocated to a specific user station 102, the data transmission rate increases in steps of, for example, 8 Kbps. It is contemplated that up to the full bandwidth of the base station 104 -- that is, up to all 32 full duplex slots or 256 Kbps (full duplex) -- may be assigned to a single user station 102.

The invention also provides in another aspect data rates lower than the basic rate (i.e., less than one minor frame 202 per major frame 201 or less than 8 Kbps). The lower data rate is accomplished by skipping major frames 201 on a periodic basis. Thus, data rates such as 4 Kbps, 2 Kbps, and so on can be provided. In one embodiment, up to 24 consecutive major frames 201 may be skipped, providing a minimum data rate of 320 bps efficiently (i.e., without using rate adaptation). Intermediate rates or even lower rates may be obtained by using rate adaptation.

The capability of providing variable data rates on demand, including availability of an asymmetric mode in a given minor frame 202 described earlier, provides an efficient and flexible data conduit for a wide array of data, video, multi-media and broadcast applications. For example, each minor frame 202 can be configured with the majority of the minor frame 202 duration allocated to either the base transmission 204 or the user transmission 206, or can be configured with a symmetric distribution in which half of the minor frame 202 duration is allocated to both the base transmission 204 and the user transmission 206. Typically, voice traffic utilizes a symmetric distribution as either end of the link may send voice traffic. In a data exchange, however, more data is typically sent in one direction and less in the other. For instance, if fax data is being sent to a user station 102, then a higher data rate for the base transmission 204 would be advantageous and is supportable with the described configuration. For even higher data rate applications, a particular base station 104 or user station 102 may be assigned multiple minor frames 202 within a single major frame 201. These high data rate modes can support, for example, enhanced voice quality, video data or broadcast data applications.

Handoff and Network Maintenance

Once a base station 104 and user station 102 have established a communication link 312, during the link-established step 311 the user station 102 may receive all information messages 303 and transmit all information responses 306 on the same air channel 203 or on specified multiple air channels 203. This arrangement leaves the remainder of the major frame 201 free for other activities. In a preferred embodiment, one such activity is to interrogate other base stations 104 and maintain network information such as link quality and channel availability at nearby base stations 104 in order to facilitate handoffs from one base station 104 to another base station 104.

In a preferred embodiment, base stations 104 transmit network information as part of the general poll message 301 and the specific poll message 302, in a channel utilization field 314 or otherwise. The network information may include, for example, the identity of nearby base stations, the identity or relative amount of free channels at a particular nearby base stations and/or at the current base station, link quality for nearby base stations and/or the current base station, and frequencies and spread spectrum code sets used by the nearby base stations.

At a network-maintenance step 315, the user station 102 may listen on one or more different air channels 203, other than the one(s) currently being used by the user station 102, for the general poll message 301 and the specific poll message 302 from nearby base stations 104. The user station 102 continues to communicate on its designated air channel(s) 203 with its current base station 104 and responds as necessary to information messages 303 from that base station 104. However, unless a handoff procedure is initiated as described below, the user station 102 does not transmit in response to other nearby base stations 104 and therefore does not occupy air channels 203 of those base stations 104.

It is contemplated that the system may perform either a "make before break" handoff for seamless, undetectable handoffs, or a "break before make" handoff in emergency situations where all communications with a base station 104 are lost prior to a new connection being established.

In a "make before break" handoff, if the communication link 312 between the base station 104 and the user station 102 is too faulty, then the user station 102 may acquire one of the nearby base stations 104 in like manner as it acquired its current base station 104. Such a handoff procedure may be further explained with reference to Fig. 1-3.

In Fig. 1-3, it is assumed that a user station 102 presently in communication with a current or original base station 405 has determined it to be desirable to transfer communication to a different base station 104, such as a first terminal base station 410 coupled to a common base station controller 407, or a second terminal base station 406 coupled to a different base station controller 408. A handoff to the first terminal base station 410 will be termed an "intra-cluster" handoff, while a handoff to the second terminal base station 406 will be termed an "inter-cluster" handoff. The following explanation will focus on an intra-cluster handoff to the first terminal base station 410, but many of the steps are the same as with an inter-cluster handoff, and the salient differences between an intra-cluster and inter-cluster handoff will be noted as necessary.

In general, when the user station 102 determines that a handoff is appropriate, the user station 102 acquires an air channel on the new or terminal base station 410 and notifies the base station controller 407 coupled to the current base station 405 to switch the incoming phone line from the current base station 405 to the new base station 410.

More specifically, a handoff procedure may be initiated when the received signal level at a user station 102 falls below an acceptable level. While the user station 102 receives bearer traffic from its originating base station 405, the user station 102 measures the received signal quality (e.g., RSSI) of its communication link 312. The received signal quality value, together with measurements of the current frame error rate and type of errors, determines the overall link quality. If the overall link quality drops below a first threshold (the measurement threshold), the user station 102 begins searching for available air channels 203 (i.e., time slots), first from the originating base station 104, and then (using appropriate frequencies and spread spectrum codes) from neighboring base stations 104 of adjacent or nearby cells 103. The user station 102, as mentioned, preferably has obtained information regarding the identities of neighboring base stations 104 (including spread spectrum code set and frequency information) from the originating base station 405 by downloading the information to the user station 102 during traffic mode or otherwise.

As the user station 102 scans potential new air channels 203 using the appropriate frequency and/or spread spectrum code set, the user station 102 measures and records the received signal quality. The user station 102 reads a field carried in all base transmissions 204 which describes the current time slot utilization of the base station 104. The user station 102 uses these two pieces of information to form a figure of merit for the new base station signals, including the originating base station 405, and then sorts the base stations 104 by figure of merit. This procedure allows the user station 102 to evaluate the quality of available air channels 203 for both the originating base station 405 and other nearby base stations 104.

If an air channel 203 (or air channels 203, as the case may be) for the originating base station 405 has better quality than that of any base station 104 in adjacent or nearby cells 103, a time slot interchange (TSI) handoff is considered, which maintains the link to the originating base station 405 on a different air channel 203 than was previously being used by the user station 102.

If the link quality drops below a second threshold level, then the user station 102 (during a no-bearer time slot) requests a handoff from the base station 104 with the highest figure of merit (which could be a TSI handoff with the originating base station 405). The handoff is requested by seizing an air channel 203, sending a handoff message request, and waiting for an acknowledgment from the new base station 410. The handoff signaling message contains a description of the circuit connecting the originating base station 405 to the network, which description was passed to the user station 102 at call establishment time. If the new base station 104 accepts the handoff request (by acknowledging), then the new base station 104 becomes the terminal base station 410. Note that the user station 102 maintains its original air channel 203 connection with the originating base station 405 during this handoff procedure, at least until a new air channel 203 is acquired.

To complete an intra-cluster handoff, at a handoff step 316 the user station 102 transmits to the new base station 410 the base ID 308 of the old base station 405. The old base station 405 and new base station 410 may then transfer the handling of any telephone call in progress.

More specifically, the terminal base station 410 sends a message in the form of a "note" (as previously described) to its base station controller 407, requesting that the original circuit be switched from the originating base station 405 to the terminal base station 410. If the base station controller 407 is common to both the originating base station 405 and terminal base station 410, the handoff is termed an intra-cluster event, and the base station controller 407 bridges the circuit from the originating base station 405 to the terminal base station 410. The base station controller 407 then sends a circuit-switch-complete note to the originating base station 405 and also to the terminating base station 410, commanding the latter to continue the handoff process.

In the case of an inter-cluster handoff, the base station controller 408 is not common to both the originating base stations 104 and the terminal base station 406. For these types of handoffs, as with intra-cluster handoffs, the terminal base station 406 sends a message in the form of a note to its base station controller 408, requesting that the original circuit be switched from the originating base station 405 to the terminal base station 406. The base station controller 408 translates the handoff note into the signaling language of the network host 409 (e.g, a PCSC) and requests an inter-cluster handoff at the network level.

In some network architectures, the host network 409 cannot accept a handoff request from a terminating base station controller 408, in which case an intermediate step is taken. The handoff request may be sent via an X.25 link to the base station controller 407 connected to the originating base station 405. The originating base station controller 407 then translates the handoff request and relays it to the network host 409. The network host 409 acknowledges the circuit switch to the originating base station controller 407, which then sends a circuit-switch-complete note to the terminal base station 406.

When the terminal base station 406 receives the circuit-switch-complete note, the terminal base station 406 begins paging the user station 102 with a specific poll, and the originating base station 405 signals the user station 102 to transfer to the terminal base station 406. When the user station 102 receives the signal to transfer to the terminal base station 406, or if the link is lost during the handoff process, the user station 102 switches to the terminal base station 406 and searches for a specific poll message 302. When the user station 102 receives the specific poll message 302, the user station 102 completes the connection to the terminal base station 406, and the handoff procedure is finished.

Should the link between the user station 102 and the originating base station 405 or terminating base station 406 (or 410) be completely broken at any time, the user station 102 will search for the highest quality base station 104 on its list of potential handoffs, and attempt a handoff without communication with its previous base station 405. This capability allows the user station 102 to recover from situations in which the original link was broken before the normal handoff procedure could be completed.

An intra-cluster handoff, including re-establishment of bearer channel traffic, may ordinarily take from less than 10 milliseconds to as much as 40 milliseconds. Since under normal circumstances the handoff time is less than one polling loop interval, bearer packets will continue to the user station 102 with no interruption. Inter-cluster handoff times are partially dependent upon the delays inherent in the host network 409 and are not always easily predictable.

A unique aspect of the above described "mobile directed" or "mobile centric" handoff technique is that the user station 102 makes the decision to handoff between cells and directs the base station controller or network to make a line switch once an alternative base station 104 is acquired. This approach is quite different from a "network directed" or "network centric" approach such as used in systems such as AMPS, IS-54 cellular, and GSM. The mobile centric approach also differs significantly from so-called "Mobile Assisted Handoff" (MAHO) in which the network collects information and directs all or most of the handoff functions, thereby utilizing the user station 102 primarily as an additional listening post with the network still directing the handoff. The MAHO technique therefore ordinarily requires significant signaling and messaging between base stations, base station controllers, and switches, causing handoffs to take much longer than with the mobile centric techniques described herein.

A major benefit of the mobile centric approach is that it may allow for mobile speed handoffs (e.g., 65 MPH) even in very small or very large cells, such as cells ranging from as small as under 1000 feet to as large as 20 miles in diameter.

The system is also capable of performing a "break before make" type of handoff as well. A "break before make" handoff is typified in a situation where sudden shadowing occurs, such as when a connection with the current base station 405 is lost due to a severe signal blockage (e.g. worse than 40 dB) near the limit of the cell range such as can occur when turning a corner quickly in a dense urban high rise area. In such a situation, the user station 102 checks its previously created "priority list" of available base stations in the vicinity and attempts to establish contact with a new base station 104, perhaps on a new frequency and/or a new time slot. The user station 102 may include as part of its control logic a "persistence" parameter which will preclude call tear down from occurring before a duplex connection is fully reestablished.

The true "hard handoff" problem (i.e., a lost air channel) may in many instances be handled very quickly through the ability of the user station 102 to re-acquire the original base station 405 or to acquire a different base station 104 very rapidly even when no information is available to the user station 102 when the link was lost. Even in such an emergency "break before make" handoff situation, the handoff may ordinarily be accomplished in as little as 16 to 250 milliseconds. In contrast, complete loss of a link in traditional cellular architectures becomes a "dropped call."

One problem that may occur during handoff is a situation in which there are repeated attempts to switch between two or more base stations 104 during times, for example, when the measured quality of the received signals from two competing base stations 104 is very close, or when environmental effects cause rapidly changing deviations in the relative measured signal quality of the signals from competing base stations 104. The repeated switching between competing base stations 104 may be referred to as "thrashing" and may have the undesirable effect of consuming excess capacity from the network. In order to reduce the effect of thrashing, hysteresis measurements from multiple base stations 104 may be maintained by the user station 102 so that a handoff does not occur until the quality of the signal from a new base station 104 exceeds the quality of the signal of the original base station 405 by a predetermined margin. In such a manner, important air channel resources in the network may be preserved.

In rare instances, two user stations 102 on the same minor frame 202 in different cells 103 but on the same frequency may encounter propagation characteristics in which the spatial and code separation are insufficient to prevent bit errors, thus causing the user stations 102 to begin experiencing degradation of their RF links. In such cases, a time slot interchange (TSI) may be performed wherein one or both of the conflicting user stations 102 are assigned different minor frames 202 within their respective major frames 201 to eliminate further collisions. Such a procedure may be viewed as the time domain equivalent of dynamic channel allocation as the system either assigns an unoccupied air channel 203 to the user station 102 or switches the user station's 102 minor frame 202 with that of another user station 102 in the same cell 103 which is geographically removed from the interference.

Security and Error Handling

The protocol of the invention protects communications against errors in several ways: protocol handshaking, user ID verification and reverification, and synchronization by reacquiring the base station. Handshaking, verification and synchronization protect both the base station 104 and the user station 102 from receiving telephone calls in progress on any other air channels 203.

Handshaking provided by the general poll step 307 and the specific poll step 310 requires that the proper message having the proper header be transmitted and received, and in the proper sequence. In each message, the header field 207 (sixteen bits) is protected by a CRC code 211 (four bits); an error in the header field 207 or in the CRC code 211 indicates an error and will cause the protocol to restart handshaking with the general poll step 307.

The user ID is verified twice, once by the base station 104 and once by the user station 102. In the general poll message 301 and specific poll message 302, the user ID 309 is protected by a CRC code 211 (sixteen bits), in like manner as the CRC code 211 for the header field 207. An error in the user ID 309 or in the CRC code 211 will cause the protocol to restart handshaking with the general poll step 307.

At the link-established step 311, the base station 104 and the user station 102 are protected against drift and/or desynchronization, even when transmission or reception are interrupted. When a threshold for an error rate is exceeded, the base station 104 and user station 102 each independently stop sending data in information messages 303 and information responses 306, and return to the specific poll step 310 for resynchronization. In an embodiment where the specific poll message has been eliminated as redundant, the base station 104 and the user station 102 may determine resynchronization by means of a designated bit in the header field 207.

At the specific poll step 310, the base station 104 transmits the specific poll message 302 and the user station 102 searches the major frame 201 for a specific poll message 302 having a user ID 309 which matches its own user ID 309. After this handshaking succeeds, the base station 104 and user station 102 return to the link-established step 311 and continue transmitting and receiving information messages 303 and information responses 306.

This technique for recovery from desynchronization, also called "reacquiring the base station," has the advantage that both the base station 104 and the user station 102 independently reverify the user ID 309 before communication is resumed. This assures that the base station 104 and the user station 102 stay in synchrony and communicate only on the agreed air channel 203. Should the base station 104 and the user station 102 be unable to reestablish the communication link 312, the telephone call will be terminated by the base station 104.

At the link-established step 311, the base station 104 also repeatedly and periodically transmits the user ID 309 in the D field 208 of the information message 303. The user station 102 checks the user ID 309 to assure that the base station 104 and the user station 102 are each communicating on the proper air channel 203. If this user ID 309 does not match, it returns to the specific poll step 310 to reacquire the base station 104, as noted above.

Protocol Flexibility

The protocol described above provides flexibility with a small number of unique messages. The protocol is immune to changes in polling loop length and in the number of air channels allowed. The number of simultaneous users is therefore responsive to voice compression and data rate constraints and not by the protocol. The protocol also provides for an unlimited number of user stations in a given area, with the provision that the number of simultaneous calls cannot exceed the number of air channels. An unlimited number of base stations are also supported, making base station geography a function of available frequencies and range, not of protocol. The ability to interrogate and acquire alternate base stations in the presence of faulty communication provides for the expansion of a microcell network which may use base station handoff to route calls to base stations within range.

System Synchronization

In order to maximize system throughput capacity, the TDMA frame times for all base stations 104 within a geographical region are preferably synchronized to within a specified tolerance. For example, in one embodiment, all base stations 104 begin transmissions for the same frame within 6 microseconds.

The primary data timing standard in a digital network backhaul system, such as T1, ISDN BRI, or PRI, is the public switched telephone network (PSTN) timing standard. To prevent data precession into over run or under run, all base station controllers 105 and base stations 104 in such systems are synchronized to the PSTN timing standard.

At the system level, a GPS receiver is used at each base station controller 105 (and optionally at each base station 104) to generate the primary reference timing marker for the TDMA frame timing. This marker is captured at the base station controller 105 every second and transmitted to the attached base stations 104. A base station controller may temporarily turn off any major frame 201 or minor frame 202 of a given cell 103 which may be interfering with a neighboring cell 103.

Each base station 104 provides the basic TDMA loop timing structure for its cell or sector. As previously noted, a synchronization preamble in the form a control pulse 215 or power control command is transmitted at the beginning of each minor frame 202 by the user station 102 and the base station 104, respectively. When the appropriate preamble, consisting of a code sequence 48 chips in length, is received, a digital correlator (i.e., a matched filter) attuned to the specific preamble generates an internal synchronization pulse which may be very brief (e.g., two chips in duration, or 400 nanoseconds) . The internal synchronization pulse may then be used to synchronize the start of M-ary symbol detection process.

**Candidate Air Interface Solution Presentation**

## 1. Introduction

### 1.1 Preface

Omnipoint has developed an innovative spread spectrum RF access technology, communications protocol, and architecture for controlling Base Station resources and high speed handoff. Omnipoint's PCS System can be integrated into networks using AIN, GSM, IS-41 and ATM based architectures.

Omnipoint's PCS System provides full functionality PCS - i.e. full coverage, full mobility, and high speed data up to 256 Kbps full duplex or 512 Kbps half duplex. Moreover, a single handset and Common Air Interface can be used in all three wireless markets: public, business and residential in either licensed or unlicensed frequency bands. **Perhaps most importantly, Omnipoint's approach offers significant, sustainable infrastructure cost reductions and thus provides the PCS operator with long term economic advantages over alternative approaches.**

The Omnipoint system uses a proprietary combination of CDMA, TDMA, and FDMA for separation of users and cells. In general, users are separated within a cell by a proprietary spread spectrum TDMA technology and cells are separated by FDMA as well as CDMA. The spreading codes are also used to achieve significantly higher data rates and thus more TDMA users per RF channel than generally thought possible with traditional TDMA systems without requiring the use of expensive and power consumptive equalizers. These technologies coupled with the use of Time Slot Interchange (TSI), directional antennas, and a unique mobile-centric approach to managing RF resources and handoff provide for extremely low cost and efficient provisioning of PCS.

Omnipoint has implemented experimental prototypes of this technology into pocket phones and palm-sized data devices, as well as in miniaturized Base Stations.

Omnipoint systems can be configured to provide outdoor cell radii of 0.3 to 2.2 miles in urban areas, 1 to 5 miles in suburban areas, and over 8 miles in more open areas (with proper antennae configurations and some reduction in the number of time slots). [1] To date Omnipoint Base Stations have been tested in low density urban areas with up to 3 mile diameter cells with handsets operating at mobile speeds. Hand-off has been performed at 65 miles per hour in both large cells and small cells (for example, 1000 feet). When used indoors, Omnipoint's private systems can offer the features, data rates, and voice quality required to serve both business and residential users and thus differentiate PCS from cellular and other services which can only offer compressed voice and very low speed data.

Omnipoint has developed its system specifically to serve both outside and indoor environments and has conducted successful experiments testing its indoor PCS systems in more than 100 buildings of virtually every size and type of construction imaginable. Further, to understand the needs of indoor users, Omnipoint has interviewed 180 of the Fortune 1000 telecommunications managers who purchase equipment and found that 1) none of them were willing to pay for air time charges while wireless on their own premises and 2) they all insisted on owning their own Base Station equipment and having it functionally integrated with their PBXs. This virtually requires the use of unlicensed frequencies in many locations if large market penetrations are to be achieved. Omnipoint's system is unique in using the same CAI to meet this private premises need in either unlicensed or licensed frequencies while allowing customers to use the same handsets in the outdoor, public, mobile environment.

### 1.3.4 Wireline quality is an essential option for PCS subscribers.

This goal is a differentiating attribute of PCS over existing cellular and is important particularly for in-building applications. Omnipoint provides the ability for a subscriber to use 32-24 Kbps ADPCM if desired for wireline quality voice or 8 Kbps (and later 4 Kbps) for outdoor mobile environments.

---

[1]The CAI can be adjusted to accommodate different cell sizes as required by the TDD guard time. The specific implementation defined in this submission uses the basic 32 slot, 8kbps full duplex information rate which has guard time for operation out to 1.5 miles (3 mile diameters). To operate at 3 mile radii (6 mile diameters) for example requires a reduction to 30 slots. Ten miles radii (20 mile diameters) can be supported by reducing the number of 8 kbps full duplex slots to 25. Since, by definition large cell radii will only be used where capacity is not an issue, this small reduction in capacity will have minimal impact. For example, going from 1.5 miles to 10 miles increases the area served by 4300% with only a 22% reduction in capacity per RF channel.

**1.3.5 Variable Bandwidth on Demand**

By 1996, multimedia and digitized video applications (especially video phones) will create significant market opportunities for differentiated PCS services. Omnipoint's system can provide 64 Kbps as well as underlined multiples of 64 Kbps (up to 256 Kbps full duplex and 512 Kbps simplex) for data, video, multimedia, and broadcast applications. Additionally, the user can vary the data rate, requesting only the minimal rate necessary for the application. Omnipoint's system supports extremely fast circuit seizing and release (50ms, and typically less than 10ms) allowing for efficient provision of bursty packet data as well as slow speed data.

Note: The overall architecture, techniques, and specific implementations described in this submission are the subject of multiple pending (and in some cases awarded) patents. Certain questions in the JTC template would involve disclosing particularly sensitive proprietary information and thus are not answered and specifically noted as "proprietary". This does not, however, imply that the remaining portions of this document are not proprietary.

**Control traffic**

The control traffic provides for link specific data messaging or call control information. Control traffic can be provided through a number of logical methods as detailed below, including a customer "D" channel associated with each time slot.

**Notes**

Omnipoint implements network interfaces based on Q.931 ISDN and SS7 to the necessary network components. In general, the Omnipoint system is designed around an object-based software architecture which allows for flexibility in interconnection to a number of network infrastructures. The system uses messages based on ISDN messages which are called "Notes" (so as not to confuse them with the ISDN specific protocol itself) for passing necessary information among components within the system. Messages from the network are converted by the system into Omnipoint "Notes" for efficient operation within the Omnipoint subsystems. This approach provides the PCS operator with flexibility to deploy whatever network infrastructure meets the appropriate business goals and service descriptions desired.

**2. Minimum Service Capabilities**

This section contains the list of minimum service capabilities required of a PCS system. For each item, the Omnipoint system indicates which of these features will be supported.

- immediately (I)
- in the course of system evolution (E)
- not planned (N)

**2.1 Minimum Features - JTC(AIR)/93.05.13-133R1**

Omnipoint's access system is being integrated into various types of Network Architectures such as AIN, Americanized GSM, IS-41, and ATM-based systems. The availability of a specific feature/service is thus determined by when the PCSC network architecture supports it. Below is a list of feature/service availability for two of the PCSC architectures as proposed by the vendors of those networks:

| Feature/Service (133R1) | GSM-Type Network | AIN-Type Network |
|---|---|---|
| 2.1.1 Advice of charging | E*- F | E*- F |
| 2.1.2 Alphanumeric display messages | I | I |
| 2.1.3 Automatic charge reversing | E*- .2 | E*- F |
| 2.1.4. Authorization code | I | E*- .2 |

* Items marked "E" require PCSC network support which does not yet exist. For example, in the case of AIN, "I" means AIN 0.0, and "E*-2" reflects the specification for AIN 0.2. The signaling path across the Omnipoint air interface for provision of these services is currently supported.

(continued)

| Feature/Service (133R1) | GSM-Type Network | AIN-Type Network |
|---|---|---|
| 2.1.5. Automatic callback | I | E*- .2 |
| 2.1.5. Automatic recall | E*- .2 | E*- .2 |
| 2.1.7. Basic call control | | |
| Feature/Service (133R1) | GSM-Type Network | AIN-Type Network |
| 2.1.7.1. Call origination | I | I |
| 2.1.7.2. Call termination | I | I |
| 2.1.7.3. Call tear-down | I | I |
| 2.1.8. Call distribution | E*- .2 | N |
| 2.1.9. Call forwarding | | |
| 2.1.9.1. Unconditional | I | E*- .2 |
| 2.1.9.2. Busy | I | E*- .2 |
| 2.1.9.3. No answer | I | E*- .2 |
| 2.1.10. Call hold | I | I |
| 2.1.11. Call trace | I | I |
| 2.1.12. Call pick-up | E*- .2 | E*- .2 |
| 2.1.13. Call progress tones | I | I |
| 2.1.14. Call waiting | I | I |
| 2.1.15. Call waiting tones | I | I |
| 2.1.16. Calling name/number identification presentation | I | I |
| 2.1.17. Calling name/number identification restriction | I | I |
| 2.1.18. Charge notification | E*- F | E*- .2 |
| 2.1.19. Closed user group | I | I |
| 2.1.20. Conference calling | I | I |
| 2.1.21. Do not disturb | I | I |
| 2.1.22. Data Number | E*- F | E*- F |
| 2.1.23. Distinctive alerting/call waiting | I | I |
| 2.1.24. Distinctive ringing | I | I |
| 2.1.25. Extension phone service | N | N |
| 2.1.26. Message delivery | I | E*- .2 |
| 2.1.27. Message waiting notification | I | N |
| 2.1.28. Multi-level Precedence and Preemption(MLPP) | E*- F | E*- F |
| 2.1.29. Priority Access and Code/Channel Assignment | I | E*- .2 |

* Items marked "E" require PCSC network support which does not yet exist. For example, in the case of AIN, "I" means AIN 0.0, and "E*-2" reflects the specification for AIN 0.2. The signaling path across the Omnipoint air interface for provision of these services is currently supported.

(continued)

| Feature/Service (133R1) | GSM-Type Network | AIN-Type Network |
|---|---|---|
| 2.1.30. Remote feature control | E*- .2 | E*- .2 |
| 2.1.31. Reverse charging | E*- .2 | E*- 2 . |
| 2.1.32. Selective call acceptance | E*- .2 | E*- .2 |
| 2.1.33. Selective call rejection | E*- .2 | E*- .2 |
| 2.1.34. Selective call forwarding | E*- .2 | E*- .2 |
| | | |
| 2.1.35. Smart card | I | E*- .2 |
| 2.1.36. Three-way calling | I | I |
| 2.1.37. User profile editing | E*- .2 | E*- .2 |
| 2.1.38. Emergency Access ("911") | I | I |

**2.1 Minimum Features - JTC(AIR)/93.09.22-365**

| Feature/Service (3JT-365) | GSM-Type Network | AIN-Type Network |
|---|---|---|
| Voice Bearer Service - Full Duplex Speech | I | I |
| Data Bearer Services | | |
| Connection Oriented Digital Data of at Least 64 Kbps | I | I |
| Connection Oriented Voice band Data of at Least 9.6 Kbps | I | I |
| Connection Oriented Voice band Data w/bit count integrity for STU-III | I | I |
| Group-3 Facsimile of at Least 9.6 Kbps | | I |
| Multi-rate Circuit-mode Unrestricted Connection | I | I |
| Short Message Service | I | E*- .2 |
| Supplementary Services | | |
| Automatic Recall | E*- .2 | E*- .2 |
| Automatic Reverse Charging | E*- .2 | E*- F |
| Call Forwarding | I | E*- .2 |
| Call Hold and Retrieve | I | I |
| Call Transfer | E*- .2 | E*- .2 |
| Call Waiting | I | I |
| Calling Number Identification Restriction | I | I |

\* Items marked "E" require PCSC network support which does not yet exist. For example, in the case of AIN, "I" means AIN 0.0, and "E*-2" reflects the specification for AIN 0.2. The signaling path across the Omnipoint air interface for provision of these services is currently supported.

(continued)

| Feature/Service (3JT-365) | GSM-Type Network | AIN-Type Network |
|---|---|---|
| Charge Notification | E*- F | E*- .2 |
| Conference Calling | I | I |
| Flexible Alerting | E*- F | E* - F |
| Message Waiting Notification | I | N |
| Emergency Access (911) | I | I |
| Multi-level Precedence and Preemption | E*- F | E*- F |
| Number Identification Presentation | I | I |
| Priority Access and Channel Assignment | I | E* |
| Reverse Charging | E*- .2 | E*- .2 |
| Three-way Calling | I | I |
| Voice Privacy | I | I |

**2.2 Minimum Voice Services**

| Feature/Service | GSM-Type Network | AIN-Type Network |
|---|---|---|
| 2.2.1 Wireline quality | I | I |
| 2.2.1.1 Less than wireline quality (where required by service provider) for different operating environments | I | I |
| 2.2.2 Able to hear in a noisy environment | I | I |
| 2.2.3 Background noise like traditional land line telephony | I | I |
| 2.2.4 Minimum background noise | I | I |
| 2.2.5 Able to recognize the speaker's voice | I | I |
| 2.2.6 Able to carry recognizable music | I | I |
| * Items marked "E" require PCSC network support which does not yet exist. For example, in the case of AIN, "I" means AIN 0.0, and "E*-2" reflects the specification for AIN 0.2. The signaling path across the Omnipoint air interface for provision of these services is currently supported. | | |

**2.2 Minimum Voice Services - Text**

The Omnipoint system provides land line quality voice services to the end user for wireless access to the network. The system is designed to provide transparent operation for the user to network functionality including DTMF tones for interactive services, music on hold, and the provision of active call features to remain intact even after a handoff between cell sites. Higher levels of voice quality can be provided by the system in increments of 8 Kbps (and in the future, at even lower vocoder rates) without any change to the Base Stations or the CAI. Thus, if the user desires 32 Kbps, for instance, this class of service is made known to the system at call set-up time and CCITT G.726 standard ADPCM is executed. CCITT G.726 is fully supported. CCITT G.726 64 Kbps PCM is also supported as well as a proprietary 8 Kbps CELP algorithm. Lower channel rates, such as 4 Kbps, are also supported to allow for future upgrades without any changes to the CAI or the Base Station hardware. Under some conditions Voice Activity Detection (VAD) "half duplex" can be supported, allowing up to twice the number of voice users in a particular RF channel. Voice services provided by Omnipoint will be available to end users in both mobile and non-mobile environments. See Section 4.3.1

### 2.3 Minimum Data Services

| Feature/Service | GSM-Type Network | AIN-Type Network |
|---|---|---|
| 2.3.1 Inter working with the PSTN Data Services | I | I |
| 2.3.2 Inter working with Circuit Switched Digital Data Services | I | I |
| 2.3.3 Inter working with Packet Switched Data Services | I | I |
| 2.3.4 Contention-based shared access mechanism | I | I |
| 2.3.5 Specialized Data Applications | E* - .2 | E* - .2 |
| 2.3.6 Data Quality. | I | I |
| 2.3.7 Data service integrity through handover. | I | I |
| 2.3.8 Paging. | I | I |

\* Items marked "E" require network support which does not yet exist. The signaling path across the air interface for provision of these services is currently supported.

### 2.3 Minimum Data Services - Text

### 2.3.1 Inter working with the PSTN Data Services

A provision is made for user accessible, inband signaling by utilizing 'flash' and DTMF signaling conventions. Additionally, data transmission over the Omnipoint CAI is supported by both dedicated data channel methods, at up to 256 Kbps full duplex described elsewhere and conventional inband support for data modems as follows:

(1) Voice band data performance up to 2400 bit/s using (for example) modems conforming to recommendation V. 21, V.22 bis, V.23, and V.26 ter, will not be subject to significant degradation over 32 Kbps ADPCM links provided the numbers of those links do not exceed the limits of recommendation G.113.

(2) Voice band data performance at 4800 bit/s using (for example) modems conforming to recommendation V.27 bis, can be accommodated with 32 Kbps ADPCM but will be subject to additional degradation above that expected from standard 64 Kbps PCM links.

(3) Voice band data at speeds up to 12,000 bit/s can be accommodated by 40 Kbps ADPCM. The performance of V.33 modems operating at 14,400 bit/s over 40 Kbps is under study.

(4) No degradation is expected when using 40 Kbps ADPCM with Group II or Group III facsimile apparatus according to Recommendations T.3 or T.4 rates up to 12,000 bit/s. Performance of group III facsimile when using 40 Kbps ADPCM at 14,400 bit/s is under study. No serious degradation is expected when using 32 Kbps ADPCM with Group II facsimile apparatus according to Recommendations T.3 or T.4 at rates up to 12,000 bit/s.

(5) Multiples of 8 Kbps, 56/64 Kbps, ISDN, etc., up to 256 Kbps full duplex and 512 Kbps can be supported.

### 2.3.2 Inter working with Circuit Switched Digital Data Services

Circuit mode digital data is supported across the air interface.
As noted above, all ISDN data services from 8 Kbps up to and including 256 Kbps full duplex are supported in increments of 8 Kbps. Sub 8 Kbps rates to 320 bits/s are supported in 160 bits/s increments. Lower rates or rates which are not multiples of the given increments are supported by rate adaptation.

All half duplex ISDN services from 8 Kbps up to and including 512 Kbps in increments of 8 Kbps are supported. Sub 8 Kbps rates to 320 bits/s are supported in 160 bits/s increments. Lower rates or rates which are not multiples of the given increments are supported by rate adaptation.

The specific Inter working Function (IWF) used is dependent upon the network or circuit switch service chosen in a particular network.

### 2.3.3 Inter working with Packet Switched Data Services

The system provides full duplex synchronous data transfer over-the-air in dynamically variable data rates, see above "Inter working with Circuit Switched Digital Services". The terminal application may use a data channel to communicate with a Packet Assembler/Disassembler (PAD) and/or IWF using these facilities. X.25 packet data is supported. During times of low data rates the terminal will reduce its over-the-air bandwidth requirement accordingly.

### 2.3.4 Contention-Based Shared Access Mechanism

The system provides a very fast circuit seizing protocol. Since contention for a channel can occur at this point it is resolved with an IEEE 802.3-like backoff procedure. Since the overhead for channel seizing and release is very low (sub 50 ms and typically, sub 10 ms), a transaction based application will acquire a channel, build a circuit to the appropriate IWF module, send its data, and release the channel very quickly. Very low data rate applications will have a very low channel access duty cycle.

### 2.3.5 Specialized Data Applications

Since the Omnipoint System is designed as an "access and transport mechanism," it will be able to support many different specialized data applications as noted above.

### 2.3.6 Data Quality

Error correction in bearer data is optional in the system. The end user has the option of activating Automatic Re-transmission Query (ARQ) error correction or leaving error correction disabled, for example, for use with digitized compressed video.

The ARQ mechanism uses a data window of two frames. When a frame is determined to be corrupted, via the standard ISDN 16 bit Frame Check Word (FCW) , the receiving unit signals the transmitter for a re-transmission. The number of re-transmission attempts is a service provider or subscriber parameter.

The maximum uncorrected frame error rate of the system is $10^{-2}$ at threshold receiver sensitivity (See Section 4.6.1). After applying ARQ correction the frame error rate at threshold is:

$$10^{-2} /(2^{16} -1) \text{ which is } 1.53 \times 10^{-7}$$

undetected frame errors.

If it takes two retries to receive the data correctly, the latency of 8 Kbps data corrected by an n=2 ARQ is 80 ms.

### 2.3.7 Data service integrity through handover

Data rate and integrity are maintained before and after handover. Since data may be lost during the handover, the system uses higher level protocols, i.e. not the CAI, to correct the loss of frames.

A typical handover delay, including switch time, for an intra Base Station Controller handover is less than 10 ms. The maximum handover time, assuming that communication with the Terminal Base is error free, is approximately 40 ms.

### 2.3.8 Paging

The system supports an out-of-band logical D channel in conjunction with speech or data. This channel supports acknowledged ISDN D channel services at a rate of 400 bit/s with no interference to the bearer channel.

In addition, inband signaling, either half or full duplex, can be used for larger messages. Inband signaling will temporarily displace the user level bearer channel traffic.

Very high speed paging may be sent via the unacknowledged data broadcast facility. Using this facility, data at up to 512 Kbps can be sent over the air interface. This mode does not address specific units. It is assumed that an MS resident application will interpret the format of data in the broadcast format.

## 2.4 Privacy and Authentication

The Omnipoint system will support authentication (the process of verifying the identity of a user, terminal and service provider) and validation (the process of verifying that a user and/or terminal is authorized to access services). The authentication and validation process will permit the system operator to separate fraudulent wireless devices, unauthorized users, and authorized users before service is granted. This prevention can extend to both speech as well as data services.

The Omnipoint system will support privacy of signaling and user information (e.g., speech and data) and will maintain the privacy of the user identity and location. The Omnipoint system can allow protection against unauthorized use by requiring the user to enter a PIN. The portable will default to requesting the user for the PIN upon powering up the device. This default can be disabled through an appropriate control function. Omnipoint's system can support the use of SIMs.

The final methodology for supporting privacy and authentication in the Omnipoint system will be determined by industry efforts, specifically from the Joint Experts Meeting on Privacy and Authentication or as otherwise determined by the PCS operators.

## 2.5 Feature Invocation (User Interface)

The air interface facilitates invocation of user functions in a consistent fashion. The MS provides for feature invocation by keypad digit entry, function key and dynamic menu. Omnipoint supports future user feature activation standardization at the keyboard/display level.

The Air Interface Signaling method used by the system for feature invocation is based upon ISDN Q.931/ANSI T1.607 signaling. In order to reduce the bandwidth required for this signaling and to allow compatibility with the properties of an RF link, an abbreviated format is used in the over-the-air messaging. These messages are converted to the appropriate ISDN messages at a higher level in the system architecture.

## 2.6 Simultaneous Voice And Data

Simultaneous voice and data are supported by the air interface. Data and voice may be mixed to a total full duplex rate of 256 Kbps or 512 Kbps simplex in steps of 8 Kbps. This allows, for example, toll quality voice, 32 Kbps ADPCM, and simultaneously up to 224 Kbps of full duplex data. Or, for example, the simultaneous provision of a 128 Kbps video link, a 64 Kbps ISDN B channel transporting multimedia images to computers, and eight full duplex 8 Kbps voice conversations. In addition, low rate data can be sent simultaneously over the D channel without requiring additional time slots.

## 2.7 Automatic Speech Codec Identification

Selection of the vocoder algorithm is made by the call originating party at call setup time. This is done either by automatically accessing the user's HLR data base for the default selection and selecting the vocoders at each end of the link or alternatively, the subscriber can select vocoder options at call origination.

## 2.8 Portable Terminal Requirements

### 2.8.1 Dialing

The Omnipoint Terminal can transmit dialed digits using logic recognizing the North American Dialing Plan, eliminating the requirement for a traditional "Send" button to dial digits in basic operations. Alternatively, the Send button can be used.

### 2.8.2 DTMF

DTMF signaling out-of-band across the air interface is supported. The DTMF tones will be sent by network conversion of the messages into tones by a higher order architectural element. DTMF tones will not be carried by the audio bearer channel. DTMF tone will be transported back to the MS.

### 2.8.3 Switchhook flash

The Omnipoint terminal has a "flash" button which transmits signaling across the air interface out-of-band to indicate to the network that a switchhook flash has occurred. The actual hook flash is generated by a higher order architectural element.

### 2.8.4 Home/Roam indication

The Omnipoint terminal will have an indicator displaying either a "home" registration or a visitor "roam" registration. This indicator will be activated by service provider identification that is associated with the general poll frame from the Base Station.

### 2.9 Possible Future Services

| Feature/Service | GSM-Type Network | AIN-Type Network |
|---|---|---|
| 2.9.1 Low and medium speed video | I | I |
| 2.9.2 Digital data up to 144 Kbps | I | I |
| 2.9.3 Invocation of Intelligent Network features | I | I |
| 2.9.4 Selection of wireless service providers on a per-call basis. (This capability may be desirable for users, but not necessarily desirable for providers.) | I* | I* |

### 2.9 Possible Future Services - Text

### 2.9.1 Low and medium speed video

Full duplex video up to 256 Kbps in steps of 8 Kbps, half duplex video of up to 512 Kbps in steps of 8 Kbps and 8 Kbps audio with simultaneous video up to 248 Kbps are supported. JPEG and MPEG standards are supported.

### 2.9.2 Digital data up to 144 Kbps

All ISDN data services from 8 Kbps up to and including 256 Kbps full duplex are supported in increments of 8 Kbps. Sub 8 Kbps rates to 320 bits/s are supported in 160 bits/s increments. Lower rates or rates which are not multiples of the given increments are supported by rate adaptation.
All half duplex ISDN data services from 8 Kbps up to and including 512 Kbps in 8 Kbps increments are supported. Sub 8 Kbps rates to 320 bits/s are supported in 160 bits/s increments. Lower rates or rates which are not multiples of the given increments are supported by rate adaptation.
Digital rates of 144 Kbps in the form of an ISDN BRI channel, that is 2 * 64 Kbps + 1 * 16 Kbps, are supported.

### 2.9.3 Invocation of Intelligent Network Features

The air interface can carry the Q.931/T1.607-like messaging necessary to invoke AIN functions.

### 2.9.4 Selection of wireless service providers on a per-call basis.

Selection of specific wireless service provider or private network on a per call basis is supported by the CAI. Each service provider is identified by the Base Stations during the acquisition phase of a call. Actual access to the provider is controlled by the subscribers profile and by SIM information at the terminal.

### 3. System Description Template

### 3.1 Description of Template Items - Class I

| | |
|---|---|
| Frequency Band (MHz): | 1850 - 1990 MHz<br>Optionally: 2.4 - 2.483 GHz |
| Frequency stability: | 0.2 ppm/°C |
| Duplex Method: | Time Division Duplex (TDD) |
| RF Channel Spacing (KHz): | 5 MHz |
| Bandwidth per full duplex RF Channel (MHz) | 5 MHz |
| Baseband Modulation | CPM |
| Portable Terminal Transmit Power: | |
| Max.: | 100mW to 1 W EIRP (up to 2W EIRP per FCC) |
| Time Avg. Power in "talk" state: | 1.56% of max. at 8 Kbps |
| Out-of-band Emissions, due to: | |
| modulation/switching splatter | -43 + 10logP dB |
| sideband noise | -43 + 10logP dB |
| multiple co-sited transmitter I.M. | -43 + 10logP dB |
| Base Station Receiver Threshold: | |
| Required $C/N_0$ | 64.4 dB-Hz (-104 dBm) AWGN, no fading<br>68.9 dB-Hz (-100 dBm) at required C/I, L=4 |
| Required C/I | 6 dB, L=4 |
| Power Control Characteristics | |
| Forward link (Y or N): | Under Study |
| Reverse link (Y or N): | Y |
| Diversity Capabilities | Space, Polarization, Time, Rake-like |
| Handover / Automatic Radio Link Transfer (ALT) - Y or N | Y |
| Access Technology: | CDMA, TDMA, FDMA |
| CDMA System Characteristics: | |
| Type of CDMA: | Direct Sequence |
| Chip Rate (Mchip/s): Rate at C2 reference point. | 5 Mcps |
| Processing Gain: 10 log (Bandwidth / Information Rate). | 8 dB |
| Code length: (in bits) for both transmit and receive directions. | Variable |
| Timing Jitter : For base and portable, give (in "unit intervals"): | |
| Maximum jitter generated by the transmitter | Not applicable[2] |
| Maximum jitter tolerated in the receiver | |
| Delay: | |

[2]Not applicable to Omnipoint system because clock stability (transmit and receive) leads to 12.5 nsec maximum drift over 625 μsec frame time corresponding to 0.06 chip drift.

(continued)

| | |
|---|---|
| Portable speech coder delay (μsec) : delay between A1 and A2 with D1 and D2 connected. (Signal applied at A1.) | Not to exceed 20 msec. (40 msec for VAD sub loop) |
| Inbound delay (μsec) : speech plus radio for "inbound" path (wireless to wireline) - delay between A1 and H1. (Signal applied at A1. | 20.02 msec. |
| Outbound delay (μsec) : speech plus radio for "outbound" path (wireline to wireless) - delay between H2 and A2. (Signal applied at H2.) | 20.02 msec. |
| Echo return loss (ERL) (dB): ratio of H2 to H1, with signal injected at H2. | 30 dB min. |
| Synchronization requirements: | |
| Is Base Station to Base Station synchronization required? (Y/N) | Y[3] |
| Is Base Station-to-network synchronization required? (Y/N) | Y[4] |
| State short-term stability of internal base (or base controller) system reference clock (ppm). | .001 ppm/sec |
| State source of external system reference and the accuracy required of it, if used (for example: derived from wireline network, or GPS receiver). | Air Synch = GPS (1μs) Data Synch = Network (T1) |
| State free run accuracy of portable clock (ppm). | 10 ppm |
| Echo Treatment: Y or N | Y[5] |

[3]The Omnipoint data transmission system is organized utilizing TDD and TDMA. The base provides the basic loop timing structure and, to maximize capacity, must be synchronized such that all base stations within the same geographic vicinity begin transmission at the same time with 6 μsec. tolerance. Omnipoint utilizes GPS at the base station controller (and optionally at the base station) for the generation of the primary timing marker. This marker is captured at the base station controller every second on the second UTC and transmitted down the back haul lines to the attached bases. This capability also allows the OA&M system to temporally turn off absolute CAI time slots which may have been interfering with a neighboring base air slot.

[4]The primary data timing standard in a digital backhaul system ,such as ,T1 or ISDN BRI or PRI is the PSTN. In order to prevent data precession into overrun or under run, the base station controller and base station must be data locked to the PSTN.

[5]**Near End Acoustic :**
The Omnipoint mobile station successfully uses mechanical isolation rather than electronic echo cancellation techniques to prevent acoustic feedback.
**Near End Electric :**
The Omnipoint system utilizes DSP based digital echo cancellation techniques in the transcoder on the base station controller. This algorithm has a short term length of up to 5.5 msec.
**Far End Electric :**

| | |
|---|---|
| Voice Encoding Method: (unencrypted) | |
| Algorithm: What speech coding algorithm is employed? | CCITT G.726 - ADPCM ; PCS CELP and PCM |
| Voice Bit Rate (Kbps): | 64 Kbps, 40 Kbps, 32 Kbps, 24 Kbps, 16 Kbps, 8 Kbps, and sub-rates (1/2 duplex VAD under some conditions) |
| Voice Channels per RF Channel: | Up to 64 per above |
| Channel Bit Rate (Kbps) | 781.25 Kbps |
| Channel Coding / Error Handling: | See section 4.2.5 |
| Special Requirements from Land line Facilities (Y/N): | N |

**3.2 Description of Template Items - Class II**

| Base Transmit Power per RF Carrier: | |
|---|---|
| Max.: Peak ERP (effective radiated power) transmitted per RF carrier | 300 mW to 100W EIRP per FCC |
| Avg.: Average ERP transmitted per RF carrier | 150 mW to 50W EIRP per FCC |
| Omni Cell Max. Range (meters): | 2.4 km/58.5 km (Long Slot) (See Introduction) |
| The Omnipoint system utilizes DSP based digital echo cancellation techniques in the transcoder on the base station controller. This algorithm has an adaptive long term length of up to 5.5 msec. | |

| | |
|---|---|
| Maximum Tolerable Delay Spread (in μsec) to maintain an uncorrected FER _ $10^{-2}$. | up to 3 μsec[6] |
| Do you employ equalization? (Y/N) | N |
| Maximum Tolerable Doppler Frequency (Hz) to maintain an uncorrected BER _ $10^{-3}$ | +/- 10 KHz[7] |
| Maximum User Bit Rate: | 512 Kbps |
| Operating Temperature Range: | -40° to +70° C |

[6]Directional gain antennas are used to mitigate delay spread as well as other multipath effects in larger cell configurations.

[7] System frequency error tolerance is much greater than Doppler shift produced by system dynamics.

**4 System Description Questionnaire**

**4.1 General System Issues**

**4.1.1 Architecture**

The Omnipoint system is composed of the following four network hierarchical elements; Mobile Station (MS), Base Station (BS), Base Station Controller (BSC), and a Personal Communications Switching Center (PCSC).

**_Mobile Station (MS)_**

The Mobile Station (MS) is the subscriber terminal. It communicates with one Base Station (more during handover) and is responsible for the following:

Mobility Management. Unlike most full mobility systems, the Omnipoint MS controls the handover actions of the system. It is responsible for monitoring the quality of the ongoing bearer connection with its current Base Station as well as the quality of signals received from other nearby Base Stations/Cells. If the quality of the bearer channel drops below an acceptable level the MS will initiate a handover to a better BS. The MS is also responsible for maintaining registration with its current BS as well as directing the BSC to make a switch of BS's as part of the handover.

**Call Control**. The MS is responsible for initiating outgoing call requests and periodically monitoring for incoming call pages. Page monitoring is scheduled on duty cycle basis to reduce power consumption.

**Transmission.** The MS maintains the over-the-air channel from the mobile perspective. It performs all necessary timing, slot aggregation and error recovery.

**Authentication**. The MS maintains the subscriber secret key and performs the required calculations necessary to authenticate the device.

**Applications**. The MS executes the appropriate downloadable user applications. The applications implement the short messaging service, broadcast messaging and data services. Additional user specific applications using the system data services may also be downloaded and executed.

**Subscriber Interface.** The MS implements the feature activating subscriber interface as well as the interface to specific downloaded applications in the MS.

**_Base Station (BS)_**

The Base Station (BS) is an intelligent device which controls the over the air signal and serves as Cell controller. It communicates with multiple MSs and a Base Station Controller. It provides the following functionality:

**Radio Resource Management.** The BS controls the over-the-air slots of the TDMA spread spectrum transceiver. The BS allocates these slots based upon MS initial service requests, handover bandwidth demands, special service needs and OA&M test and operational restrictions. In addition, the BS is the component which is charged with allocation of specific slots, super-slots, and sub-slots to maintain the requested bandwidth.

**Mobility Management.** The BS responds to MS handover requests if resources are available. The BS assigns network and radio resources to the MS and sends a request to the Base Station Controller to execute a handover switch. The BS also maintains registrations with MSs within its Cell. This registration information is maintained in a stub or cache Visitor Location Register (VLR).

**Time Slot Interchange (TSI)**. This function allows a Mobile or a Base Station to change the operational time slot if interference is detected, taking advantage of statistical placement of Mobile Stations in both the original and re-used cells. The system supports very quick TSI, within a single polling loop (i.e., less than 20 msec), as required and available.

**Call Control.** The BS interprets the over-the-air signaling traffic and translates this traffic from its concise form to an appropriate network independent format called Notes. These Notes have been designed to reduce network latency and bandwidth while communicating succinct information to the higher elements in the network.

**Transmission**. The BS is responsible for the allocation of network channels to their corresponding air slots. The BS controls these resources for both incoming and outgoing calls. Audio connections over network channels are maintained in their compressed form. In order to support a wide variety of bandwidths to the MSs, multiple network time slots may be assigned to a specific MS. The BS is also responsible for monitoring the interference on the radio and adjusting its slot utilization to minimize this interference. In addition, the BS measures signal quality from its MSs and selects antennas for space diversity and polarization when appropriate, as well as controls the MS power.

**Authentication**. The Base Station responds to Notes from the Base Station Controller to authenticate a given MS. The BS sends the appropriate over-the-air signals to the MS and compares the authentication response against the proper value.

**Operations, Administration and Maintenance.** The Base station maintains accounting information for each connection in an accounting log. This information along with maintenance statistics are transferred to the Base Station Controller and higher level entities via Notes. Notes are also used to block, unblock, and loopback-test network channels for maintenance purposes. The PCSC also provides OA&M.

### *Base Station Controller (BSC)*

The Base Station Controller (BSC) is an intelligent switch which controls and performs switching functions for a group of Base Stations called a cluster. It communicates with multiple Base Stations, and a PCSC. The Base Station Controller functionality is:

**Mobility Management**. The BSC interprets handover requests from its Base Stations. If the handover request represents an intra cluster handover, i.e. between two Base Stations on the same BSC, the BSC switches all of the circuits associated with the MS from the originating BS to the terminating BS. If the handover request indicates that the originating BS is located on some other BSC then the handover Note is translated into a form appropriate for the host PCSC and this form is forwarded to the host PCSC.

**Call Control**. The BSC is responsible for cluster location of the MSs. Registration information forwarded from a BS is recorded in a local stub Visitor Location Register (VLR) located in the

**BSC**. This is used to locate the MS during alerting operations. Line resource requirements forwarded from the BS are also held in this stub VLR. Furthermore, the BSC translates the commands and data contained in Notes passed to it by the BS into signaling suitable for the host PCSC system. In this sense the BSC acts as a translator between the Omnipoint system and the host system.

**Transmission**. The BSC is responsible for allocation and termination of the trunking circuits between the BSC and the host PCSC. The BSC is also responsible for the transcoding of compressed audio to the trunking format. The BSC further serves as an Inter-Working-Function between the Omnipoint data channelization format and other network formats.

**Operation, Administration and Maintenance**. The BSC stores accounting information delivered to it by the BSs. This information is translated into a form suitable for the host system and forwarded to the PCSC. In addition the BSC is responsible for blocking, unblocking and loop testing circuits upon request from the PCSC.

### *Personal Communications Switching Center (PCSC)*

The PCSC is the primary switch and the interconnect to the PSTN. The Omnipoint system has been designed to connect to a variety of existing and proposed switch systems, including the AIN network, the Americanized version of GSM, IS-41, and ATM-based networks. The operation of these systems is outside the scope of this response.

**Mobility Management**. The PCSC provides inter cluster and inter PCSC handover capability. In addition the PCSC provides Home Location Register (HLR) and Visitor Location Register (VLR) services. In this capacity the PCSC responds to its normal signaling messaging as provided by the BSC translation function.

**Call Control.** The fundamental operations necessary for call control, routing, and call features are supported by the PCSC.

**Transmission**. All PSTN transmission facilities are managed by the PCSC.

**Authentication**. Authentication requests and data are initiated by or stored in the PCSC.

**Operations, Administration and Maintenance**. All OA&M functions are initiated by the PCSC.

### 4.1.3 Real Estate

Depending on the applications, Omnipoint Base Stations are designed to be small enough to install with minimal real estate requirements. For example, Omnipoint's Micro Base Station at 9"x 4"x"12" allows for Base Stations to be hung from a telephone or CATV strand, mounted to a telephone or light pole, or installed in a weather-proof NEMA style enclosure. Omnipoint Base Stations have been installed inside of "live" cable TV amplifier enclosures. Indoor models may be mounted above ceiling tiles in a typical office building with the antennas mounted on either the exterior of the building or inside.

Standard Base Station Controllers (BSC) handling up to 1600 Voice Ports are likewise comparatively small, and generally require no more real estate than a phone closet where standard 19" equipment may be placed.

### 4.1.4 Operations

The Omnipoint system provides for comprehensive operational support for PCS which will include central monitoring of the system, software upgrades, simple repair procedures, easy installation and test, and the ability to interconnect with a variety of different platforms such as AIN, the Americanized version of GSM, IS-41 and ATM based networks. In general, the following are provided by Omnipoint:

**Remote Monitoring**. The Omnipoint system provides for remote monitoring of the Base Stations and Base Station controllers via a digital facility. Information provided includes loading, diagnostic processes, and other support mechanisms. With this capability, the system can be monitored from a central site (perhaps by a third party) in conjunction with other network component monitoring (e.g., network control center for the PSTN).

**Software Upgrades**. Omnipoint provides for remote downloading of software as required for upgrades to Base Stations and Base Station controllers. This approach allows the PCS operator the ability to upgrade the system without hardware changes, maintenance visits to the Base Station sites or Mobile Station recall. Mobile Station software can be downloaded over-the-air as required for maintenance purposes or for some system upgrades.

**Repair**. Omnipoint Base Stations are extremely small and can be easily replaced in the case of a major failure. On specific board failures, the system allows for easy removal and installation of replacement boards in the field. RF channel cards can be added or removed independently of one another without disruption of existing service. Base Station controllers are fully redundant and can similarly be repaired with a simple hot board replacement approach. Field trained technicians that are either employees of the PCS operator or a third party company will service the network components. Omnipoint will arrange for training of the appropriate personnel.

**Network Interconnections**. Omnipoint's system will support AIN, American GSM, IS-41, and ATM-based architectures for full feature PCS under several different deployment scenarios. At the present time, Omnipoint is working with various equipment manufacturers and potential service providers to bring each of these systems to fruition.

Network features and services like billing, database (HLR/SCP) access and provisioning, and routing will be provided by Omnipoint's network partners through switching platforms connected to either the Omnipoint intelligent Base Station or to the Base Station controller, depending on the architecture chosen by the PCS operator. Since these capabilities will be provided under well documented and understood architectures (i.e., AIN, American GSM, IS-41, and ATM), the details are not included here. Any modifications to these architectures adopted by the standards bodies will be incorporated into Omnipoint interface or system specifications.

### 4.2 Modulation and Multiple-Access:

### 4.2.1 Multiplexing Plan

The Omnipoint system utilizes a unique combination of Frequency, Time, and Code Division Multiplexing. Within a cell, Time Division Duplexing (TDD) and Time Division Multiple Access (TDMA) are employed, allowing up to 32 simultaneous, 8 Kbps full duplex users or 64 full duplex 4 Kbps users, while adjacent cells are set to different frequency channels (FDMA) under a minimal N=3 architecture. Cells beyond adjacent cells use a variety of multiplexing tools and capabilities including code (CDMA) and time slot (TDMA) separation and Time Slot Interchange (TSI) for further inter-cell multiplexing isolation,. Under certain circumstances, Voice Activity Detection (VAD) can be used to increase the number of voice users (theoretically, up to twice the half-duplex number). Going to 4 Kbps also allows up to twice the number of voice users without any changes to the CAI or the Base Station hardware.

The TDD/TDMA structure is based on a 20 ms polling loop which supports thirty-two, 8 Kbps full duplex time slots of 625 μsec duration and provides that each Mobile Station be able to aggregate multiple slots to afford a user more or less data bandwidth as required. Asymmetric data rates can be supported on a frame by frame basis, thus enabling VAD, high speed data transport, and data broadcasting. Thus, for broadcast applications, for instance, all the data can be set up to emanate from the base to the Mobile Station allowing 16 Kbps data transfer rate in one slot, and with slot aggregation up to 512 Kbps.

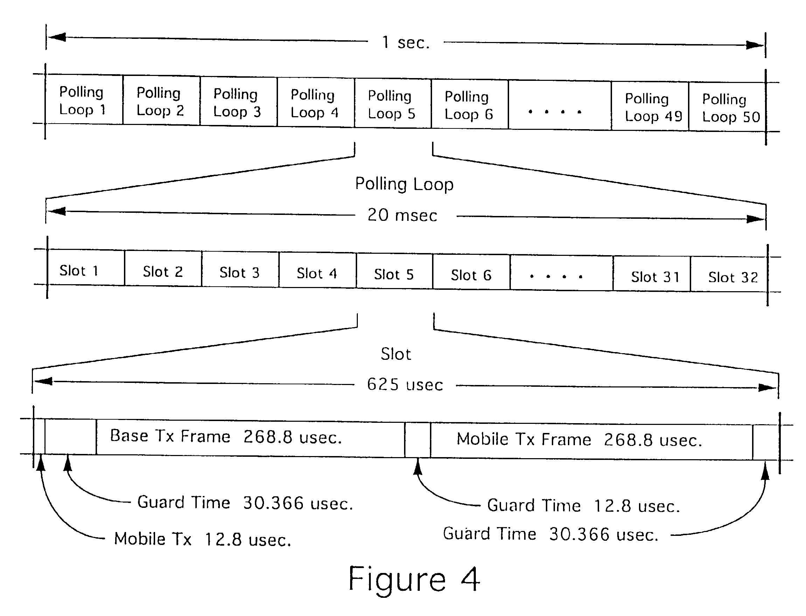

All full duplex transmissions from BS to MS, and from MS to BS are synchronous (See Section 4.17), such that from cell to cell, Base Stations transmit during the allotted portion of the slot, and Mobile Stations transmit during their allotted time within the slot (See Figure 4). Within each cell, only the BS or one of many Mobile Stations transmits at any instant in time.

**Intra-Cell Multiplexing**. Since each Mobile Station within a cell is Time Division Duplexed, and Time Division Multiplexed with all other Mobile Stations in the same cell through a synchronous slot structure controlled by the Base Station, they are not hindered by positional (near/far) restrictions within the cell, providing "perfect" time isolation between mobiles.

**Inter-Cell Isolation & Re-Use**. On an Inter cell basis, a series of multiplexing tools and capabilities, including TSI, power control, code orthogonality, antenna diversity and beam directivity, supply significant isolation from cell to cell.

Under most "real world" scenarios, propagation characteristics and significant shadowing (especially at 1.8 GHz) alone will most often provide sufficient cell isolation. Additionally, the system takes advantage of mechanisms that provide significantly higher degrees of isolation between re-used cells, including:

**Time Slot Interchange (TSI)**. This function allows a Mobile or a Base Stations to change the operational time slot if interference is detected, taking advantage of statistical placement of Mobile Stations in both the original and re-used cells. The system supports very quick TSI, within a single polling loop (i.e., less than 20 msec), as required and available.

**Transmitter Power Control**. By controlling the Mobile Transmit Power in discrete steps (minimum 3 dB each), the minimal emitted RF power reduces interference into all cells. The Time Slot structure allows for power adjustment in less than 500 μsec, which will mitigate both interference and fading events.

**Antenna Diversity and Directivity**. The system supports both antenna diversity and directional antennas, whether they are steered phased array or sectorized architectures. With the system supporting phased array antennas, highly directional RF beams may be utilized that dramatically decrease interference to other cells and reduce delay spread.

Time Slot Interchange, Power Control, Antenna Diversity and Directivity capabilities, coupled with shadowing, propagation, and statistical location effects, will provide dramatic isolation gains between Base Station and Mobile Stations sharing the same frequency channel under the reuse plans. Additionally, the Omnipoint system obtains further gains when utilized in an environment that provides more than three discrete frequency channels.

### 4.2.2 TDMA Access Structure

### 4.2.2.1 Polling Loop Description

The Omnipoint polling loop is composed of 32 full duplex 8 Kbps time slots. Each slot is formed of one of three frame types;

A) a symmetric base to MS frame and a MS to base frame,

B) an asymmetric base to MS frame and the MS to base frame with acknowledgment, or

C) a single simplex broadcast frame without acknowledgment. Non-broadcast frames can be in either poll or traffic mode.

Additionally, in the Omnipoint system, an ISDN-like "D" channel format is provided in every packet for application-specific information. This information can be used for signaling, short message service (such as in GSM), voice mail notifications, paging during communications, or other data messaging applications. At the present time, the D channel is available in its entirety to the user and is not used for any call processing or Omnipoint system information. LAPD or Q.921-like error correction algorithms are used with data transmission via the D channel to ensure delivery and acknowledgment of the information.

### 4.2.1.3 Packet Contents

The following is an illustration of an Omnipoint packet that could either contain either normal or control traffic.

| 16 Head Bits | | 8 Control Bits | 160 Bearer Bits | 16 Bit FCW |
|---|---|---|---|---|
| Head | | D Channel | Bearer Channel | |

Figure B

The header in the packet identifies the Base Station or MS, packet type, link quality, and other information required by the system for efficient operation. The packet also contains signaling and/or messaging information in the D channel and the bearer information.

### 4.2.2 End-to-End Delay

The routine transfer of voice and data is normally delayed by the basic loop duration (20 msec) divided by the number of slots reserved and utilized by the particular user. 32 Kbps ADPCM voice, for instance, uses 4 slots. Assuming equal time distribution this would have 20/4=5 msec delay not counting vocoding delays. Vocoding delays add linearly.

### 4.2.3 Modulation:

| Modulation format: | Proprietary CPM |
|---|---|
| Bits per symbol: | _5_ |
| Chips per bit: | _6.4_ |
| Symbol-to-bit translation: | _1 of 32/5 Bits_ |
| Detection process: | _Quasi-coherent_ |

| Chip sync: | _Base Station synchronized to_ |
|---|---|
| Bit sync: | _GPS, MS synchronized to Base_ |
| Word sync: | _Station_ |

### 4.2.4 Equalization:

Channel equalization is not required in Omnipoint's system architecture. _Instead, a Rake-like receiver architecture is used to collect energy over a 2 to 3 μsec range (max.) of delay spread. Dominant correlation taps are added together non-coherently to achieve multipath diversity gains and improve resistance to fading._

### 4.2.5 Channel Coding And Error-Control:

The Omnipoint CAI design is set up as a fundamental data transport mechanism and as such does not inherently presuppose any particular channel coding (other than the spread spectrum coding itself), error handling of channel data, interleaving, etc. The particular consumer of the data bandwidth can provide for any special handling the data transfer requires at the application level. For example, the proprietary 8 Kbps vocoder provides its own error correction mechanisms within the bearer channel.

The only exception to this general operating assumption is in the transfer of control information and in the transfer of user data which is assisted by ARQ error sense and recovery services provided by the CAI control structures. Each frame transmission includes a 16 bit CRC of the form: $x^{16}+x^{12}+x^5+1$ which is used, along with structural characteristics, to qualify a received frame for further processing.

### 4.3 Speech Service:

### 4.3.1 Flexibility:

As described in 4.2., the Omnipoint CAI allows the discrete aggregation of 8 Kbps time slots into larger blocks of voice bandwidth in each basic 20 msec loop. Thus the Omnipoint CAI supports its own proprietary 8 Kbps CELP algorithms as well as other algorithms of any type and from any source. The aggregation of 2 slots allows the utilization of 16 Kbps algorithms such as 16 Kbps ADPCM, 4 slots allows the use of 32 Kbps ADPCM, 5 slots allows the use of 40 Kbps ADPCM (which is particularly useful for in-band transmission of analog modem signals as well as Group II and III fax transmissions.)

Although we have shown the ability to accommodate a wide variety of voice algorithms it is important to note that data can be transmitted in incremental bandwidths as well. The current system can also allow the entire base bandwidth to be utilized by one Mobile Station.

In addition to the aggregation of slots to achieve higher data rates, Omnipoint's CAI also supports lower rates by allowing the Mobile Station to skip a specified number of loops. Thus if every other loop is skipped the CAI supports 4 Kbps voice or data; if every fourth loop is utilized, 2 Kbps voice or data is transmitted, and so on. This powerful technique allows future voice and data algorithms to be developed without changing the Omnipoint CAI or requiring any hardware changes in the Base Station.

The Omnipoint vocoder is comprised of a high speed digital processor, a 64 Kbps pulse code modulated μ-law companding codec and a methodology for supporting many algorithms which can be selected at call set up time depending on the requested grade of service. Other services are provided by the vocoder, such as echo cancellation, gain control, flow control, data pathing, DTMF generation and facilitation of music on hold.

The complexity and power requirement of the vocoder is dependent on the particular algorithm selected. The Omnipoint proprietary 8 Kbps algorithm consumes approximately 50 mA of power. The other low rate voice algorithms currently supported are under characterization.

### 4.3.2 Multiple Voice Coder Support

Selection of the vocoder algorithm is made by the call originating party at call setup time. This is either done by automatically accessing the user's HLR data base for the default selection of the vocoders at each end of the link or this can be user selectable. The answering party's vocoders are default selected in a similar way. Rate adaptation is accomplished by the normalizing of the data rate at 64 Kbps PCM in the Base Station Controller. Should either of the users require either higher or lower quality this may be requested after call set up by interaction with the other party and control interaction with the Mobile Station.

### 4.3.3 Basic Properties Of Speech Coding:

The Omnipoint CAI supports a wide variety of existing speech coding algorithms, while at the same time providing architectural mechanisms for supporting the natural evolution in vocoding technology as it advances in the future. Currently, the CCITT G.726 ADPCM standard is supported and available in Omnipoint Mobile Stations as well as a proprietary 8 Kbps CELP. Virtually any other vocoders can be supported, like the CCITT IS-54 digital cellular VCELP.

The Omnipoint proprietary 8 Kbps CELP combines high voice quality, low complexity, low coding delay, and robustness in high noise conditions. The algorithm has been subjected to intense testing by Omnipoint personnel as well as select industry peers.

**4.4 Data Service**

**4.4.1 General Description**

The Omnipoint system has been designed to serve as an efficient and flexible data conduit for a myriad of data, video, multi-media and broadcast applications. The design allows rates greater than or less than the basic 8 Kbps rate to be provided to the end user.

The over-the-air protocol provides 160 bearer bits per slot per 20 milliseconds to an MS. These 160 bearer bits are protected by a 16 bit FCW. At the subscribers option ARQ error correction may be applied to the bearer data. A window size of two is used for the ARQ process. The number of retry attempts are setable by the service provider or subscriber.

**4.4.2 Maximum Probability of Error After ARQ**

The maximum probability of error after ARQ as seen by the user is:

$$10^{-2} / (2^{16}-1) \text{ which is } 1.53 \times 10^{-7}$$

undetected frame error probability

**4.4.3 Mean Delay Caused By ARQ As A Function Of Mean C/I**

The mean delay per second caused by ARQ at threshold sensitivity / C/I is:

$$\text{Delay} = 2 * 10^3 * M * BLER \text{ milliseconds}$$

Where:
M= next highest integer value of n = the mean number of retry transmissions to achieve the desired corrected error rate.

$$n = \frac{(\text{Log BLERD})}{\text{Log(BLER)}} \quad (-1)$$

Subscriber Bandwidth = The bandwidth of the Subscriber data service to the nearest 8 Kbps

$$BLERD = \text{desired block error rate}$$

BLER is the block error rate of the over-the-air link at desired C/I.

**4.4.4 Throughput As A Function Of Mean C/I**

The throughput of the system is defined by:

$$\text{Throughput} = \frac{\text{Subscriber Bandwidth}}{1 + 2FER} \text{ bits/sec}$$

Where:
FER = $10^{-2}$

**4.4.5 Circuit-Switched And Packet-Switched Access To Network**

Both circuit-switched and packet switched data access to network facilities can be provided within the Omnipoint framework.

Circuit mode digital data is supported across the air interface.

All ISDN data services from 8 Kbps up to and including 256 Kbps full duplex are supported in increments of 8 Kbps. Sub 8 Kbps rates to 320 Bit/s are supported in 160 Bit/s increments. Lower rates, or rates which are not multiples of the given increments are supported by rate adaptation.

All half duplex ISDN data services from 8 Kbps up to and including 512 Kbps in 8 Kbps increments are supported. Sub 8 Kbps rates to 320 bit/s are supported in 320 Bit/s increments. Lower rates or rates which are not multiples of the given increments are supported by rate adaptation.

The specific IWF used is dependent upon the network or circuit switch service chosen in a particular network.

Packet switched data services may be provided either by PAD and IWF access or by contention based packet access.

The system provides full duplex synchronous data transfer over-the-air in dynamically variable data rates (see above description of ISDN data services). A terminal application may use a data channel to communicate with a PAD and/or IWF using these facilities. During times of low data rates the terminal will reduce its over-the-air bandwidth requirement accordingly.

The system provides a fast circuit seizing protocol. Since contention for a channel can occur at this point, it is resolved with an IEEE 802.3-like backoff procedure. Because the overhead for channel seizing and release is very low (sub 50 ms and typically, sub 10 ms), a transaction based application will acquire a channel, build a circuit to the appropriate IWF module, send its data, and release the channel extremely fast.

Very low packet rate applications will have a very low channel access duty cycle and hence a very low overall overhead. High packet rate systems may send multiple packets before channel release.

### 4.4.6 Synchronous Data Clocking

Synchronous clocking is handled on the network by the IWF. Normal blocking techniques are used to buffer data on appropriate error recovery and clocking boundaries. At the terminal end an additional IWF function is required to buffer, clock and recover data between the terminal and the SNA device.

### 4.5 Reuse Planning:

### 4.5.1 Frequency Reuse

Omnipoint uses a nominal frequency reuse pattern of 3 to meet C/I requirements. Omnipoint's use of TDMA to separate users within a cell makes C/I highly variable from time slot to time slot, particularly on the reverse link. Omnipoint's dynamic Time Slot Interchange (TSI) algorithms combined with rapid reverse link power control significantly improve coverage probability in a manner homologous with the Dynamic Channel Allocation (DCA) strategy proposed by other systems. Coupled with directional antennas these techniques provide significant isolation between individual users.

### 4.5.2 Dynamic Channel Allocation And/Or Antenna Sectorization

Handsets in the Omnipoint system are frequency agile for operating with any of 28 RF channel center frequencies between 1850-1990 MHz at any Base Station (though only a maximum of 6 RF channels are probable under the maximum FCC allocation of 30 MHz per operator). The handset can scan to any center frequency within the 1850-1990 MHz band in under 1 ms. Base Stations for use in public networks are fixed in frequency during operation, but can be changed to any channel in the 1850-1990 MHz band. Remote selection of Base Station frequencies can be performed at the PCSC.

In unlicensed bands, the Base Station will scan for unused frequencies at the time of initiation, and will dynamically change frequencies to avoid interference. Both Base Stations and Handsets can also operate in the 2.4GHz unlicensed band across more than 80 MHz in 5MHz increments.

Omnipoint protocols are designed to exploit high-gain steerable array antenna designs to increase range, promote sharing with OFS, improve C/I, and lower delay spread while enhancing system capacity. Unlike most other air interfaces, Omnipoint's TDD/TDMA approach can be used with a single manifold array antenna; thus only one beam is needed at a given time. With phased array antenna types, the antenna beam can be dynamically optimized for each individual user in terms of pointing direction, null direction(s), and C/I.

By way of contrast, FDD/CDMA or FDD/FDMA air interfaces need two simultaneous beams for each user, one for the uplink and one for the downlink. If for example, thirty two users are to be supported at a site using high gain antennas, FDD/CDMA or FDD/FDMA approaches require as many as 64 manifolds while Omnipoint's air interface needs only one. Since array manifolding is the most costly element in a phased array antenna system, Omnipoint's air interface provides for much more economical use of high gain steerable antennas.

### 4.5.3 Base Station Pairing With Carrier Frequencies

Frequency/codeset planning is currently used to set Base Station parameters. MS parameters are established by those of the Base Station(s) with which it is communicating. Although nor required, in future releases, a simulated annealing approach is planned to adaptively select Base Station parameters; particularly in small cell and unlicensed configurations.

### 4.6 Coverage:

### 4.6.1 Average RF power level (ERP)

Maximum EIRP rules recently established by the FCC limiting peak base power to 100 W EIRP will affect forward link design by favoring a more balanced link design when using high gain antennas. Any asymmetries in MS receiver sensitivity are normally compensated for by higher transmit power at the BS. Consequently, we are not willing to specify MS sensitivity until such time as FCC rules are finalized after reconsideration. Nominal Base Station sensitivity is -100 dBm to produce a Frame Error Rate (FER) of $10^{-2}$ given a C/I of 6 dB, and L=4 diversity.

Figure 3-1 describes expected cell radius based on the COST 231 model of median propagation path loss assuming a Base Station antenna height of 10 meters. Large scale shadowing effects are assumed log normal with a standard deviation of 8 dB. Hata-Okumura models are, strictly speaking, not as accurate at the prescribed Base Station height of 10 meters since these models were developed for Base Station antenna heights in the 30-200 meter range. Comparing COST 231 predictions with Hata, COST 231 range predictions fall somewhere between Hata large city urban and Hata large city suburban cases. Omnipoint's air interface architecture provides for extremely rapid handoff between Base Stations allowing for less overlap between cells. This is reflected in Figure 3-1 where 75% contours lead to 90% overall coverage and 90% contours lead to 99% overall coverage.

There is significant evidence that at lower Base Station antenna heights, neither higher receiver sensitivity nor high gain antennas play as critical a role for increasing cell size because of physical obstructions and associated rapid signal strength roll-off. At shorter ranges, signals tend to fall of with a $1/R^2$ characteristic while at longer ranges, signals fall off more rapidly, as high as $R^7$ or $R^9$ at low Base Station antenna heights. This has been confirmed by a number of researchers[8] [9] [10] [11]. In a sense, there is a breakpoint in propagation coefficient. Depending on the magnitude of the higher coefficient, improving link margin may do little to increase range. The number of radiating centers becomes the important parameter. (Note: This does not mean that directional antennas have no benefit in smaller cells; their directivity can be used for purposes other than increasing cell radii.)

In Figure 3-2, we plot expected performance, again using the COST 231 propagation model but with 50 meter Base Station antenna height. Clearly, once the base antenna is elevated above the RF clutter range increases significantly.

### 4.6.2 Maximum Outdoor Base Station Spacing

Because Omnipoint uses a number of different Base Station antennas, maximum path loss will vary depending on site configuration. Figure E shows maximum path loss for configurations using 300 mW MS peak power and - 100 dBm Base Station sensitivity with the previous noted assumptions. Cell Radii predictions are based on a COST 231 propagation model with 8 dB log normal standard deviation.

| Figure E | | | |
|---|---|---|---|
| Cell Radii for 90/99% Urban Coverage Probability (log normal std of 8 dB, 300 mW MS) | | | |
| Base Station Antenna Gain (dBd) | Maximum Path Loss (dB) | Cell Radius with 10 meter Base Station Antenna Height (miles) | Cell Radius with 50 meter Base Station Antenna Height (miles) |
| 3 | 132.1 | 0.305/0.227 | 1.289/0.960 |
| 9 | 138.1 | 0.438/0.326 | 1.854/1.381 |
| 13 | 142.1 | 0.558/0.416 | 2.362/1.760 |

[8] Telesis Technologies Laboratory, "Experimental License Progress Report", August, 1991
[9] Henrik Borjeson, "Outdoor Microcell Measurements at 1700 MHz", IEEE VT-92 Proceedings pp. 927-931
[10] Bell Atlantic Mobile Systems, "Experimental Report", 1 Feb., 1993
[11] Vinko Erceg et al. "Urban/Suburban Out-of-Sight Propagation Modeling", IEEE Communications Magazine, June 1992

(continued)

| Figure E | | | |
|---|---|---|---|
| Cell Radii for 90/99% Urban Coverage Probability (log normal std of 8 dB, 300 mW MS) | | | |
| Base Station Antenna Gain (dBd) | Maximum Path Loss (dB) | Cell Radius with 10 meter Base Station Antenna Height (miles) | Cell Radius with 50 meter Base Station Antenna Height (miles) |
| 19 | 148.1 | 0.803/0.599 | 3.398/2.531 |
| 26 | 155.1 | 1.228/0.915 | 5.193/3.869 |

Figure F shows the maximum path loss for configurations using the same assumptions except that the MS peak power is 1 Watt.

| Figure F | | | |
|---|---|---|---|
| Cell Radii for 90/99% Urban Coverage Probability (log normal std of 8 dB, 1W MS) | | | |
| Base Station Antenna Gain (dBd) | Maximum Path Loss (dB) | Cell Radius with 10 meter Base Station Antenna Height (miles) | Cell Radius with 50 meter Base Station Antenna Height (miles) |
| 3 | 137.3 | 0.418/0.312 | 1.768/1.318 |
| 9 | 143.3 | 0.602/0.448 | 2.545/1.896 |
| 13 | 147.3 | 0.767/0.571 | 3.243/2.416 |
| 19 | 153.3 | 1.103/0.822 | 4.664/3.475 |
| 26 | 160.3 | 1.685/1.256 | 7.129/5.312 |

### 4.6.3 Adaptive Power Control

*The Power Control Pulse is transmitted by the MS just before the time that the BS is expected to transmit to the MS. The PCP thus provides a power measurement of the mobile channel to the BS and is the basis for the power control command to be sent to the MS. A multi-receiver BS can also make an antenna selection for transmit based on the quality of the PCP signal arriving at the BS. In some TDMA systems the latency of the signals around the polling loop inhibit the use of power control. That is, the length of time around the polling loop is too long to allow the last transmission to be very useful to estimate the channel losses and impairments. In most fixed station applications, the antenna locations, patterns, and power transmitted by the fixed station may be adjusted for minimal interference to other fixed stations. However, the nature of cellular-like mobile stations is such that they can conflict with other mobile stations at intersecting cell boundaries. This creates the need for some power control in the mobile stations. For example, a handset operating at the boundary of its BS coverage needs to transmit its full power to stay in contact. However, a handset operating in the same time slot, relatively close to its own BS, does not need to transmit full power to have good contact. The BS can measure the channel with the PCP and tell the MS to adjust its power if needed. The BS can also use the PCP to measure the time delay from a MS and estimate its distance from the BS. Further, if the BS knows the power setting of the MS, it can also adjust its own power as well.*

Omnipoint's power control algorithm exploits a proprietary Power Control Pulse (PCP™) technique through which the MS provides information to the Base Station for controlling the transmit power of the MS. The PCP™ serves several functions including:

Provision of both forward and reverse link antenna diversity information. Since the Base Station both receives and transmits on the antenna having the best Received Signal Quality Indication (RSQI) from the PCP transmitted by the MSs, the MSs benefit from antenna selection diversity even though they do not have explicit antenna diversity capabilities at the MS. This can be accomplished because Omnipoint's system uses a high speed TDD technique such that the RF channel characteristics do not change within the slot time.

Provision of a channel probing function for MS transmit power setting. Based on PC™ RSQI, the Base Station commands the MS to change transmit power by some discrete amount relative to its current setting. Because the elapsed time encompassing the PCP™, the BS transmission, and the MSs bearer transmission burst is less than 500 μsec, Omnipoint's power control algorithm counteracts small scale multipath fading effects as well as shadow effects.

Provision of a basis for Base Station Assisted Handoff (BAHO) information in control traffic.

At this time, forward link power control algorithms are under examination.

### 4.6.4 Antenna Diversity.

As noted, on the reverse link, the Base Station uses antenna diversity to combat the effects of fading while receiving and also establishes which antenna should be used for forward link transmission. Because of Omnipoint's TDD channel symmetry, this has the effect of providing antenna selection diversity gain with respect to multipath effects in both directions.

### 4.7 Privacy and Authentication Issues:

The Omnipoint system will support authentication (the process of verifying the identity of a user, terminal and service provider) and validation (the process of verifying that a user and/or terminal is authorized to access services). The authentication and validation process should permit the system operator to detect fraudulent wireless devices and/or unauthorized users and/or users before service is granted. This prevention can extend to both speech as well as data.

The Omnipoint system will support privacy of signaling and user information (e.g., speech and data) and will maintain the privacy of the user identity and location. The Omnipoint system can allow unauthorized use protection by requiring the user to enter a PIN. The portable will default to requesting the user for the PIN upon powering up the device. This default can be disabled through an appropriate control function.

The final methodology for supporting privacy and authentication in the Omnipoint system will be determined by industry efforts, specifically from the Joint Experts Meeting on Privacy and Authentication unless otherwise determined by the PCS operators.

### 4.7.2 Loss Of Encryption Frame Sync

The Omnipoint system will employ self-synchronizing mode encryption so that calls will not be lost.

### 4.8 Handover

### 4.8.1 General Description

The Omnipoint handover is MS controlled and divided into 16 steps.

Step 1. While the MS is in bearer traffic with its Originating Base Station it measures the received signal quality indication (RSQI) of the link. This value together with the current frame error rate determines the link quality. If the link quality drops below threshold 1, the measurement threshold, the MS proceeds to step 2.

Step 2. When the link drops below the measurement threshold the MS searches during the time slots not required to pass bearer traffic to search for other frequency/codes set alternatives. This search is performed on a list of frequency/codeset channels of both the Originating Base Station as well as adjacent Base Stations. (This information is downloaded from the Originating BS.) As the MS finds each frequency/codeset it measures the frequency/code set's RSQI. In addition the MS reads a field carried in all BS frames which describes the current time slot utilization of the BS. The MS uses these two pieces of information to form a figure of merit for the various BS including the Originating BS. The MS sorts the BSs detected by figure of merit. Note that this allows the MS to measure the quality of other time slots in the Originating BS. If these slots are better than those of surrounding BSs a Time Slot Interchange handover may be considered which maintains the link to the Originating Base Station.

### 4.8.1.1 Make Before Break Handover

Step 3. When the link quality drops below threshold 2, the handover threshold, the MS (during a non bearer slot) will request a handover from the Base Station with the highest figure of merit (which may be a TSI on the Originating BS). The handover is requested from the Base Station by seizing a slot, sending a handover request signaling message and waiting for an acknowledge from the Base Station. The handover signaling message contains a description of the circuit connecting the Originating BS to the PSTN. This information was passed to the MS at call establishment time. If the Base Station accepts the handover (by acknowledging) then the new Base Station becomes the Terminal BS. Note that the MS maintains the bearer channel with the Originating BS during this time.

Step 4. The Terminal BS sends the Base Station Controller a Note requesting that the original circuit be switched from the Originating BS to the Terminal BS.

Step 5. If the BSC is common to both Base Stations, the normal event called an intra-cluster handover occurs. If the BSC is not common to both Base Stations, then the process continues with an Inter Cluster Handover.

**Intra Cluster Handover:**

Step 6. The BSC bridges and switches the circuit from the Originating BS to the Terminal BS.

Step 7. The BSC sends a circuit switch complete Note to the Originating BS.

Step 8. The BSC sends a circuit switch complete Note to the Terminal BS. Go to "Continue" (Step 13).

**Inter Cluster Handover:**

Step 9. If the BSC is not common to both Base Stations then the BSC translates the handover Note into the signaling language of the PCSC host and requests an inter cluster handover at the PCSC level. In some network architectures the host PCSC cannot accept a handover request from a terminating BSC. In this case an intermediate step can occur in which the request is sent to the PCSC via an X.25 link to the BSC connected to the Originating BS. The Originating BSC then translates and relays the request to the PCSC.

Step 10. The switch is acknowledged by the PCSC. If the PCSC does not directly acknowledge the switch to the Terminating BSC then that message is relayed to the Terminating BSC via X.25 from the Originating BSC.

Step 11. The Originating BSC sends a circuit switch complete Note to the Originating BS.

Step 12. The Terminal BSC sends a circuit switch complete Note to the Terminal BS.

Continue:

Step 13. When the Terminal BS receives the circuit switch complete Note it begins paging the MS with a specific poll.

Step 14. When the Originating BS receives the circuit switch complete Note it signals the MS to transfer to the Terminal BS.

Step 15. When the MS receives the signal to transfer to the Terminal BS or if the link is lost to the Originating BS the MS switches frequency to the Terminal BS and searches for a page.

Step 16. When the page appears, the MS completes connection to the Terminal BS, bearer channel connection is resumed and the handover is completed.

**4.8.1.2 Break Before Make Handover**

Should the link between the MS and Originating or Terminating BS be completely broken at any time, the MS will search for the highest quality BS and attempt a handover without communication with its previous BS. This allows the MS to recover from situations in which the original link has degenerated.

**4.8.2 Initiation Delay**

For an intra-cluster handover the total delay between the time that a handover is required and the completion of the handover, including the re-establishment of the bearer channel, is typically less than 10 ms. The maximum intra-cluster handover time, assuming that communications with the terminal is error free, is approximately 40 ms. Inter-cluster handover delay is partially dependent upon the delays inherent in the host PCSC and are beyond the scope of this discussion. Delays induced by the over-the-air portion of the system remain minimal, i.e., in the 10 to 40 ms range.

Intra-BS handover, or Time Slot Interchange handover, has an over-the-air total delay which is the same as for an intra-cluster handover. Under normal circumstances the delay is less than one polling loop, 20 ms, and typically less than 10ms. Since there is no switching delay, bearer packets will continue to the MS with no interruption.

Break before make handovers will typically take less than 250 msec. assuming adequate RF coverage from at least one base, regardless of whether intra or inter cluster.

**4.8.3 Switch Execution Time**

Much of the time related to switch execution is actually due to transporting Notes between the BS and the BSC. For purposes of handover approximately 200 bits of signaling are required. Over a 64 Kbps bearer channel less than 4 ms is required for transport. Thus on the order of 4 ms of open interval will occur. The intra-cluster BSC switch time is a few ten's-of-microseconds in the BSC switch matrix. Coupled with any additional transport time to and from the BSC's application processor, the entire BSC switch execution time including transport is typically less than 20 msec. Since the system is designed to use make before break handover, this should be the maximum loss.

The inter-cluster switching time is partially dependent upon delays inherent in the host PCSC and varies from network architecture to network architecture and are beyond the scope of this discussion.

### 4.9 Land transmission:

The Omnipoint backhaul plan has been devised to take advantage of multiple transport infrastructures. A number of options exist today for the final switching function. Bellcore is defining what it calls the "generic C" interface. Omnipoint has also demonstrated the capability to provide handoff directly from the CO utilizing ISDN provisioning. A modification to the GSM European standard called the "A" interface (or sometimes the "A-") is likely to be proposed for the US market. Omnipoint has participated with major switch manufacturers and major local exchange companies in the planning and experimentation of backhaul into the PSTN. The design of the fixed portion of the Omnipoint wireless link places the PSTN-side vocoder, which contains the electric based echo cancellation logic, at the Base Station controller. This allows mitigation of all timing at a uniform place in the system rendering the system, impervious to variation in backhaul strategy, such as Cable TV, ISDN, HDSL or T1. It should be noted that in the case of Cable TV backhaul, the Base Station itself is a concise version of the normal Base Station and includes a proprietary modem interface to the cable. Backhaul is accomplished in the digital data domain. RF and timing concerns are mitigated by the design of the Base Station to Base Station controller interface structure.

**Cable TV compatibility -** The system supports many existing CATV infrastructures, as well as those most commonly proposed for future installation, including extensive use of fiber. With BSC's placed at the head-end and Base Stations mounted at the CATV nodes, the system can support the types of coax/fiber installations that will likely be installed to support PCS, as well as the wide variety of other services expected to be offered by the CATV industry. Remote Antenna Drivers (RADs) and Cable Antenna Transceivers (CATs) have been extensively tested by Omnipoint as a means of coaxial CATV cable transport to extend coverage from individual Base Stations. Omnipoint (in conjunction with Cox Enterprises) has demonstrated that vehicular speed handoff can be achieved across CATs and Base Stations. Further, one BS coupled with four CATs has been shown to provide coverage to 153 homes in a typical hilly, residential neighborhood.

### 4.10 Base Station Powering:

The power transmission method Omnipoint has chosen is of the low voltage DC type which includes a battery backup and a primary power supply remote from the Base Station itself. The Omnipoint system has been designed with special concern for maintenance, deployment convenience, robustness in extreme environmental conditions, etc. and is redundant in all critical areas. Remote sensing by the OA&M layer can ascertain the condition of an individual resource in the system and dispatch a service unit while the ailing resource operates on backup capability.

### 4.11 Call Handling

The Air Interface Signaling method used by the system for network layer signaling is based upon ISDN Q. 931/ANSI T1.607. In order to reduce the bandwidth required for this signaling and to allow compatibility with the properties of an RF link an abbreviated format is used in the over-the-air messaging. These messages are converted to the appropriate ISDN or other messages at the BSC. Additional signaling has been added to describe the rich variations in bandwidth supported, to support handover, to support radio resource allocation and to support authentication.

### 4.11.1 Terminal Initialization

At power-up the MS searches for a Base Station. The MS then seizes any available slot and registers with the BS. If the BS already has the MS registered it simply acknowledges the registration request. If not, the BS registers the MS in its stub VLR and sends a registration request Note to the BSC. Once the MS receives an acknowledgment to its registration request it releases the slot and waits for either an alert message from the BS or for an outgoing call request from the subscriber. Thus, there is no specific setup channel. All of the important subscriber parameters are contained in the MS or SIM module attached to the MS. The MS uses any available slot for registration purposes. While broadcast channels exist for other purposes there is no need for a system broadcast channel because available and unused time slots can be used to send the common signaling channel a general poll message. General poll messages contain system information and are an invitation for an MS to seize a slot.

A BSC receiving a registration request Note updates its stub VLR and if the MS is new to the BSC will send a registration request to the PCSC. All VLR entries in the BS are associated with a timer. If no registration has been heard from a MS within the timer period the VLR entry for the associated MS will be deleted and notice will be sent to the BSC. MSs are responsible for requesting registration on a regular basis. Since the registration operation requires few resources this does not pose a great system load, even when a very large number of MSs wish to register at the same time.

### 4.11.2 Call Setup Delay

No inband signaling is used for CAI control purposes. Frames between the BS and MS units can be used for either of two purposes, user bearer traffic or signaling information, on a frame by frame basis. Once a channel is seized an originate-signaling message is sent to the BS. The BS assigns resources to the call and translates the originate message into a setup Note. This process, including seizure and the appropriate acknowledgment, takes a total of three transactions between the BS and MS, each of which takes a slot. Since the system will make use of any available slots for these transactions the operation can take as little as 2 ms and as long as 60 ms. The typical sequence will take less than 10 ms. Compared to the network call setup time this delay is insignificant.

### 4.11.3 Call Termination Alerting Plan

Alerting starts with the host PCSC. The specific operation of the host is beyond the scope of this discussion, but all PCSCs keep track of which BSC a given MS is currently registered. If an MS is not in this registration list, it is not available to the system. Host VLR's are kept updated by registration messages passed up the hierarchy by the BSC's.
When a BSC receives a setup message from the host PCSC it looks up the location of the addressed MS in its stub VLR. If the MS is not found then the BSC returns an error to the PCSC and aborts the call. Otherwise the BSC sends a setup Note to the BS to which the MS last reported. If a new registration request is received by the BSC while the setup is in progress the BSC resends the setup Note to the new BS.
When the BS receives the setup Note from the BSC it sends an alerting message over one of the available slots.
When the MS is not part of a call connection, it duty cycles on a predetermined basis. Each duty cycle it wakes up and checks the polling loop of its BS for alerting messages destined for it. It sees no alerting traffic or if a timer expires it reenters the dormant mode. If there is an alerting message present for the MS, the MS responds with an alert response. The MS then audibly alerts the subscriber.
Since the MS is active for only a small portion of the time the alerting mechanism is power economical.

## 4.12 Terminal Mobility Management

### 4.12.1 Mobility Management Plan

Most of the mobility management plan has been previously described in the sections on handover (4.8) and call handling (4.11). The basic location mechanism relies on MS registration. Essentially every time a MS moves its allegiance to a new BS, whether during a connected call (handover) or while the MS is waiting for an event (registration), the MS registers with the new BS. The BS updates its VLR and if the MS was not previously registered with the BS then the BS sends notification of registration to the BSC. The BSC updates its VLR to reflect the new location of the MS and sends notification to the host PCSC. Incoming calls are routed to the appropriate BS by using the BSC stub VLR. A handover automatically invokes the same sequence as registration.
The action of the PCSC and its relationship to other systems is beyond the scope of this discussion.

### 4.12.2 System Interworking.

The system is designed to be coupled to a number of different host PCSC's. In this capacity the system relies upon the interworking functionality of the host system. The prime exception is the case of host systems which do not provide the capability of terminal BSC initiated handovers. In this case a link must be built from the terminal BS to the originating BS in order to effect handover. An X.25 link or Q.931 user information messages are examples of how this might be done. Any further discussion of interworking must fall on the host system and is beyond the scope of this document.

### 4.13 Spectrum Sharing

#### 4.13.1 PCS-to-OFS

Omnipoint's air interface is designed to promote spectrum sharing with OFS users; particularly in the early stages of PCS deployment where capacity is less of a concern. Although many OFS links will still have to be moved for most of the PCS allocations, with Omnipoint's system far fewer OFS links will require relocation. Key sharing features include:

Direct Sequence Spread Spectrum to lower spectral density and avoid concentrating energy in relatively few OFS narrowband voice channels. 83% of all OFS users employ multiple very narrowband analog SSB-SC-FM signaling formats that are interference spectrum preserving. Consequently, narrowband interference sources can couple into a relatively few voice channels and violate the TSB 10E or cause major corruption at low power levels. In some cases, the entire OFS link can collapse due to spectral concentration from narrowband PCS transmitters hitting particularly sensitive frequencies such as the pilot frequencies or control channels. These sensitive frequencies vary with every OFS link.

TDMA/TDD such that only one transmitter is active at a given time within a cell's specific RF frequency. Power does not aggregate within a cell, thus effective power coupling into potential victim OFS receivers is not a function of the number of users active. This is completely different from FDMA-only and CDMA-only systems.

TDD so the Omnipoint system only needs to find one unused frequency at any given cell location. Systems employing FDD approaches will need to find two frequencies in order to operate at a given location. In high OFS density regions, only about 50% of the links follow standard 80 MHz spacing. Statistically, the use of TDD for PCS can more than triple the probability of finding a non-interfering RF channel as compared to FDD.

MSs listen before talk. MSs transmit using the same frequency as the corresponding Base Station. Given that Base Stations have been coordinated with OFS users, there is little likelihood of a MS mistakenly turning on at a damaging frequency.

Directional Antenna Systems reduce required EIRP out of MSs and provide spatial avoidance of Base Station transmissions. In problematic sharing environments, Base Stations coupled to highly directional Base Station antennas will operate at low EIRP and avoid pointing at the potential victim OFS receiver. Omnidirectional MSs will operate at very low EIRP since the Base Station's antenna gain makes up for excessive path loss.

#### 4.13.2. PCS-to-PCS

Interference from one PCS system to a another PCS system is highly dependent on the nature of the systems that are to be coordinated. Given that the FCC has very recently issued rules on out-of-band emissions requirements, Omnipoint declines comment on this subject at this time.

### 4.14 User-Provided Home Base Units:

The Omnipoint plan provides for full support of user provided home base units, with MSs that are fully compatible in the public, private and business (PBX, Centrex, etc.) domains. Omnipoint's unique ability to use one handset and CAI for either licensed or unlicensed frequencies fulfills the requirements of the PCS vision. Omnipoint's handsets and Base Stations operate in either the new unlicensed PCS band at 1890-1930MHz or at the 2.4-2.4835GHz unlicensed band, thus providing over 120MHz for unlicensed applications. PSTN interface capabilities are supplied via a typical RJ-11 interface, with ISDN and other interfaces to be supported as required.

### 4.15 Example Model Area Deployment:

#### 4.15.1 System Capacity

#### 4.15.1.1 Traffic Capacity

Each RF Channel Unit supports up to 32 full duplex voice channels using an 8 Kbps vocoder and up to 64 full duplex voice channels using a 4 Kbps vocoder. Also up to twice as many voice channels per RF channel can be supported using voice activity detection (VAD)[12].  After allowing for various overheads, each 32 user RF Channel Unit can deliver approximately 20.7 Erlangs and each 64 user RF channel can deliver 45.9 Erlangs. Thus, the maximum delivered Erlangs per cell in a system with three cell sectors and only one RF channel per sector is approximately

---

[12] To be conservative we do not assume VAD is used in the following cell site modeling. Further, and also to maintain a conservative view, we assume a maximum of one RF channel per sector and a maximum of three sectors per cell.

137.7 for purposes of these models. Traffic capacity is reduced if necessary to support higher cell radii as indicated in Scenarios IA and IB.

### 4.15.1.2 Information Capacity

Each RF channel can deliver up to 256 Kbps full duplex or 512 Kbps half duplex. Although using a six sector cell the maximum data capacity per cell is 1.536 Mbps full duplex or 3.072 Mbps half duplex, for all attached modeling, we assume a maximum of three sectors per cell and thus a maximum data capacity of 768 Kbps full duplex and 1.536 Mbps half duplex.

### 4.15.2 Assumptions for Model Area Deployment

Without agreement on key assumptions, allowing each PCS system vendor to present their own Model Area Development Scenarios will not facilitate valid comparisons of different PCS systems. Differences in assumptions regarding reasonable antennae heights, propagation and attenuation models, Erlangs per subscriber, and the population density of the areas to be covered will dramatically affect deployment models. More importantly, without cost information it is nearly impossible to characterize a PCS system.

Perhaps the most significant assumption contained in the JTC specifications is the requirement to assume that a single operator achieves subscriber penetration rates equal to 10% of the population and later 20% of the population. Considering that cellular operators have achieved penetration rates of only 2-3% of the population after more than 10 years and that 6-10 wireless service operators could be competing in each market, it is highly optimistic to assume that any one PCS operator achieves 20% penetration. Further, by choosing 10% penetration as the starting point for model comparisons, the JTC has ignored the costs and infrastructure implications of both building out initial coverage as well as achieving only 2-7% penetrations.

Given the extremely competitive environment created by so many licenses, the greatest risk facing a new PCS entrant is the initial capital costs just to provide basic coverage before any subscribers come on line. However, per the JTC's request, we present several possible scenarios below for the defined 10% and 20% penetration cases.

For all cases, we assume a medium size city consisting of a core urban area of 22.5 square miles with a population of 500,000 and a suburban area with 1,500,000 people for a total population of 2,000,000 occupying a total area of 1367.5 square miles. We have used Hata Large City Urban and Suburban propagation models, respectively, since the antennae heights are above 40 feet in all cases and these Hata models are easier to implement for this introductory phase of the JTCs modeling requirement. All scenarios assume 1 watt peak handset power.

Assumptions generic to all models

| Number of users: | Period 1 (10% Penetration) | Period 2 (20% Penetration) |
| --- | --- | --- |
| Urban | 50,000 | 100,000 |
| Suburbs | 150,000 | 300,000 |
| Total | 200,000 | 400,000 |
| Channel Model | | |
| Shadow fading: | 10dB in Downtown/Urban, 7dB in Suburbs | |
| Doppler shift: | not applicable | |
| Dynamic behavior of channel: | Small scale Rayleigh fading, 2-3 $\mu$sec delay spread | |
| Noise: | Gaussian thermal noise | |
| Interference: | From own cells only | |
| Portable antenna height: | 6 ft. | |
| Coverage | 99% Outdoor, 85% Indoor Urban, 70% Indoor Suburban | |

Traffic mix: The system configurations in all scenarios offer full, vehicular speed mobility to all subscribers. The needs of any stationary or pedestrian subscribers are a subset of the services offered by this full mobility system.

**Indoor Coverage**

*Occasional Indoor Usage*

The system configurations shown in the following scenarios provide 99% outdoor coverage. Assuming a 10dB attenuation loss from penetrating buildings, the same system configuration yields indoor coverage of 85% in the Downtown and Urban areas and 70% in the Suburbs. This level of coverage should suffice for the situations where the subscriber occasionally wants to use the MS inside a lobby, a parking garage, or a friend's house. This type of usage is assumed in the following Model Area Deployment scenarios.

*Indoor office Usage*

The Omnipoint system architecture allows a single MS to operate on both a public, licensed PCS system as well as a private, unlicensed system (such as an adjunct to a wireless PBX, Centrex or key system). Omnipoint's system, as noted, can access over 120MHz of unlicensed frequencies (1890-1930MHz, 2.4-2.4835GHz). Omnipoint's market research shows that subscribers will want to own and operate their own Base Stations when they are using their MS in their offices. This virtually requires the use of unlicensed frequencies. Moreover, businesses do not want to pay additional per minute charges for wireless service inside the office and they require wireline quality services while at the office. Businesses will therefore require wireless adjuncts that will provide higher quality (e.g. ADPCM) wireless service throughout the office area for use with the same handsets that can be used in the public licensed PCS frequencies. Omnipoint's wireless PBX adjuncts and indoor CAI provides this dual mode access today.

*Indoor Residential Usage*

Many PCS service operators will look to provide services for the residential market. Omnipoint will provide PCS service operators with three ways of deploying such services. One way will be to provide low cost home Base Stations such that the same handsets used with the outdoor public PCS network can operate as a cordless phone within the residence on unlicensed frequencies. A second way is to configure the PCS system to provide in-building penetration and very high coverage/capacity targets. The third is to provide normal outdoor coverage and install a "wireless loop access box" on the outside of each residence (or cluster of residences). This box would allow a subscriber to use all the existing phones and wiring inside the house, but still use the PCS network.

**Scenario IA -- Cellular-type Traffic at 10% penetration.**

One possible PCS service goal is to reduce the number of cell sites for initial deployment and to avoid cell splitting or other cell site upgrades out to large percentage penetration rates. In Scenario IA we show one possible configuration which would provide primarily voice traffic for cellular type usage requirements but with 99% coverage, yet would not require cell changes out to 10% penetration.
Per the assumptions shown below, this scenario would require only 9 cells for the Urban traffic and 24 cells for the Suburban traffic. Note that because the Suburban cell radii are 4.23 miles, we reduce the available number of time slots from 32 at 8 Kbps to 29, and from 64 at 4 Kbps to 58. Thus the cells are configured to provide a maximum of 123.7 Erlangs per cell each, using three sector cells.

| Scenario IA | Urban | Suburban |
| --- | --- | --- |
| Base Station antenna height: | 100 ft. -- Class 5 Base Stations | 100 ft. -- Class 6 Base Stations |
| Probability of blocking: | 2% | 2% |
| Traffic per user: | .02 Erlangs/subscriber | .02 Erlangs/subscriber |
| Number of Cells | 9 | 24 |
| Number of RF Channels | 24 | 73 |
| Number of BSCs | 3 | 10 |

**Scenario IB -- Cellular-type Traffic at 20% penetration.**

Assuming similar cellular-like traffic requirements and a conservative maximum of three RF Channels per cell as in Scenario IA, the traffic at 20% penetration can be provided by 18 cells in the Urban area and 46 cells in the Suburban area. Note that because the Suburban cell radii are 3.07 miles, we change the available number of time slots from 32 at 8 Kbps to 30, and from 64 at 4 Kbps to 60. Thus the cells are configured to provide a maximum of 129.3 Erlangs per cell each, using three sector cells.

| Scenario IB | Urban | Suburban |
| --- | --- | --- |
| Base Station antenna height: | 100 ft. -- Class 4 Base Stations | 130 ft. -- Class 5 Base Stations |
| Probability of blocking: | 2% | 2% |
| Traffic per user: | .02 Erlangs/subscriber | .02 Erlangs/subscriber |
| Number of Cells | 18 | 47 |
| Number of RF Channels | 46 | 139 |
| Number of BSCs | 3 | 10 |

**For both Scenario IA and IB, Omnipoint's system costs can be provided for under $50 per subscriber.** This does not include cell site acquisition or preparation costs.

**Scenario II -- Zoning Board Constrained Deployment.**

The relatively small number of cells shown in the above Scenarios presumes that local zoning boards will permit the construction of many 100-130 foot towers. With the potential for 6-10 wireless operators per city, this could mean up to 650 100-130 foot towers in Scenario IB above. Just the threat of this proliferation is likely to cause zoning boards to severely constrain the construction of new towers for any new PCS entrant.
In this Scenario II we assume that the PCS operator is constrained to maximum antenna heights of 40 feet. We further assume that lower gain antennas are used to reduce installation "real estate" and facilitate obtaining cell sites. This results in cell radii of only 1.2 miles in Suburban areas and only .36 miles in Urban areas.
In this Scenario II the PCS network is purely coverage limited, not capacity limited, since 57 cells are needed to cover the Urban area and 297 cells to cover the Suburban area. Even with only one RF channel per cell there is ample capacity to support 10% penetration of the population at cellular-like usage levels.
At 20% penetration the Suburban area traffic can still be supported with only one RF channel per cell while the Urban area would require slightly less than two RF channels per cell.
Because Omnipoint's lower capacity/shorter range Class 3 and 4 Base Stations are considerably less expensive than Class 5 and 6 Base Stations, the costs per subscriber remain very similar to those in Scenario I. In fact, the cost of Omnipoint's system per subscriber at 20% penetration is actually lower in Scenario II.
Obviously, however, many more sites must be obtained and interconnected for Scenario II. But Omnipoint's micro Base Stations can be as small as 4" x 6" x 9", which substantially reduces the problem of obtaining and constructing cell sites. Omnipoint's Base Stations have been strand mounted on telephone and cable TV lines and installed inside standard CATV line amplifier boxes. Thus, for PCS operators which can obtain low cost backhaul from such networks as cable TV providers, LECs, CAPS, etc. Omnipoint's micro Base Station approach can be very cost effective.
If the average cost of obtaining sites and building 100-130 foot towers, etc. is $100K-$120K in Scenario I, then the total site costs in Scenario II will be less, as long as the cost of obtaining sites on existing 40 foot structures (for a 4"x6"x9" micro Base Station) is less than an average per site cost of roughly $20,000.
Note that because the Suburban cell radii are 1.2 miles, we reset the number of time slots to 32 at 8 Kbps, and to 64 at 4 Kbps. Thus the cells are configured to provide a maximum of 137.7 Erlangs per cell each, using three sector cells.

| Scenario II | Urban | Suburban |
| --- | --- | --- |
| Base Station antenna height: | 40 ft. -- Class 3 Base Stations | 40 ft. -- Class 4 Base Stations |
| Probability of blocking: | 2% | 2% |
| Traffic per user: | .02 Erlangs/subscriber | .02 Erlangs/subscriber |

(continued)

| Scenario II | Urban | Suburban |
| --- | --- | --- |
| Base Station antenna height: | 40 ft. -- Class 3 Base Stations | 40 ft. -- Class 4 Base Stations |
| Number of Cells | 57 | 297 |
| Number of RF Channels @ 10% | 57 | 297 |
| Number of RF Channels @ 20% | 96 | 297 |
| Number of BSCs | 3 | 10 |

**Scenario III -- The "Fixed" Cost PCS RF Network.**

If due to either zoning requirements or simply the ability for a PCS operator to obtain 40 foot cell sites at low enough costs (and interconnect large numbers of cell sites inexpensively) results in a network deployment as shown in Scenario II, then this network can support very high per subscriber Erlang requirements.

For example, even at .07 Erlangs per subscriber, no additional cells are needed in either the Urban or Suburban areas out to even the 20% penetration levels. More importantly, the marginal cost of adding additional subscribers is extremely low. Because A) the capacity at the RF level of the initial deployment is so high and B) the cost of adding subscribers is only a fraction of the cost of adding vocoder transversion cards and line cards at the Base Station Controllers, this deployment of Omnipoint's PCS System represents a largely "fixed" cost approach to providing PCS.

If used in conjunction with low cost interconnection facilities, this Scenario represents the optimal method of dramatically lowering the true per minute costs of providing PCS.

Recall that any PCS technology will have to have hundreds of cells if the zoning boards constrain PCS operators to antenna height limitations of 40 feet. Thus, a unique attribute of Omnipoint's architecture is the choice of very low cost and small size, high capacity, micro Base Stations.

**Costs per subscriber remain well under $50 per subscriber for Omnipoint's portion of this high capacity network, and the marginal costs per subscriber remain extremely low.**

| Scenario III | Urban | Suburban |
| --- | --- | --- |
| Base Station antenna height: | 40 ft. -- Class 3 Base Stations | 40 ft. -- Class 4 Base Stations |
| Probability of blocking: | 2% | 2% |
| Traffic per user: | .07 Erlangs/subscriber | .07 Erlangs/subscriber |
| Number of Cells | 57 | 297 |
| Number of RF Channels @ 10% | 76 | 297 |
| Number of RF Channels @ 20% | 153 | 458 |
| Number of BSCs | 3 | 10 |

In real world deployments, there will almost certainly be a mix of antennae heights and types. Omnipoint provides six classes of Base Stations for this purpose. The ability to use sites on high buildings as well as micro Base Stations on inconspicuous mountings to fill in coverage or capacity holes is key to Omnipoint's approach.

**4.15.5 CDMA Capacity Reduction Factor:**

Since Omnipoint's PCS System does not use the codes to multiplex users within a cell, and does not use N=1, this question is only relevant to the co-channel reuse factor. Further, because of time slot interchange, power control, and directional antennas, this analysis is very different than for other CDMA systems. The above capacity calculations already factor in a C/I = 6dB at N=3.

## 4.16 Bandwidth Expansion Method

| Spreading Code | 1023 to 8191 |
|---|---|
| Number of Codes | 48 |
| Code Re-use | 3 cell code/frequency pattern |

## 4.17 Synchronization requirements

### 4.17.1 System Synchronization

#### 4.17.1.1 Base Station Controller to PCSC

The PCSC is somewhat generic in nature as this function can be filled by a variety of offerings available today or soon to be available. In this document PCSC can be taken to mean any digital switch based structure which provides the PCS to PSTN interface services such as backhaul of voice and data, HLR, VLR, OAM&P, etc.
The Base Station controller can be connected to the PCSC by various means including conventional digital interfaces available today such as ISDN BRI or PRI, T1, or HDSL. The only synchronization required at this interface is the usual alignment required by these transport systems.

#### 4.17.1.2 Base Station To Base Station Controller - Data Synchronization

The Base Station to Base Station controller interface can be an Omnipoint proprietary interface based on HDSL transport, or an ISDN BRI interface, T1 or other digital means. In any case a digital interface is involved which requires clock/data alignment inherent to the transport method. Additionally, a GPS receiver is used to extract accurate Coordinated Universal Time (UTC) one second clock ticks and these are sent up the line to the Base Stations for frame alignment.

#### 4.17.1.3 Base Station To Base Station - Frame Synchronization

In order to minimize the interference potential, the Base Stations transmissions are synchronized. The timing fid generated at the Base Station controller is used by the Base Station for this purpose. Additionally, since the Omnipoint system is a TDMA/TDD system the OA&M infrastructure can gather statistics on the quality of individual time slots within bases and can take the action of retiring slots which have some chronic interference problem to minimize the inefficiencies associated with chronic interference avoidance hand-offs. To enable this powerful maintenance capability, absolute frame alignment is required and provided by the one second UTC timing fid.

#### 4.17.1.4 Mobile Station To Base Station

The Base Station provides the basic loop timing by frequency locking to the Base Station controller interface clocks and combining the UTC one second fid to uniformly begin each basic loop and each transmit frame within that loop. The Mobile Station frequency locks to the Base Station symbol transmissions and frame locks to the Base Station frame transmissions.

#### 4.17.1.5 Handover

Handover is accomplished, by the Mobile Station, by synchronization with and interrogation of adjacent bases in order to ascertain suitability of those bases. Parameters such as signal strength, channel integrity (error rate), base traffic loading, etc. are incorporated, by the Mobile Station, in the handover decision. The Mobile Station to Base Station synchronization mechanism is discussed elsewhere in this document.

### 4.17.2 Re-sync method

Items 1-4 above are data synchronization processes only and are not impacted by re-synchronization issues. By nature of it's design, the Omnipoint CAI allows tremendous flexibility in the Mobile Station to affect it's communicating environment. The Mobile Station synchronizes with a Base Station by listening for an invitation to communicate in the form of a general poll for registration and call initiation purposes, and specific polls for final synchronization and incoming call receipt purposes. Far more detail on this process is provided else where in this document but suffice it to say that the Mobile Station only drops a call when no available Base Station can be heard or the Mobile Station user terminates the call.

### 4.17.3 Clock Skew Tolerance

Clock skew is not a problem anywhere in the Omnipoint system as all subsystems are frequency locked to all adjacent subsystems.

### 4.18 Impact of distributed antenna system

Omnipoint has had extensive experience using Remote Antenna Drivers (RADs), especially for use with the cable TV network. In addition to the analog RAD approach, Omnipoint has developed a proprietary experimental CAT (Coaxial Antenna Transceiver) technology to allow for the extension of coverage from a Base Station in cable TV deployment scenarios. **This experimental CAT technology has been shown to provide cost effective deployment of PCS to cable subscribers, while providing full functionality including handoff and vehicular mobility. For example, one Omnipoint Base Station and four CATs covered 153 homes in an experiment conducted in a typical residential suburb.** The CAT architecture can also eliminate the delay limitations otherwise found in TDD systems by decoupling the over-the-air protocol from the backhaul protocol. Additionally, Omnipoint's Base Stations and/or BSCs can be mounted at fiber nodes.

Note that because Omnipoint's Base Stations can be so small (4"x6"x9") and low cost, they can be used instead of "repeater" technologies. Repeater techniques do not provide any capacity but are simply extensions of a Base Station. In contrast, each Omnipoint micro Base Station can provide up to 64 channels. Omnipoint's Base Stations are the only PCS Base Stations miniaturized to the point where they can be installed inside standard cable TV amplifier boxes.

### 4.19 Other information

Because Omnipoint's system is designed to take advantage of the properties of wider bandwidth signal formats (for example, 5 MHz to 10 MHz as discussed here and in Omnipoint's experimental reports), Omnipoint's system specification for operation at 1.9 GHz are very dependent on the FCC's final technical specifications for PCS. Because the FCC's technical recommendations for 1.9 GHz PCS were not available until five business days before this JTC submission was due, Omnipoint may change various parameters defined in this document.

Additionally, because Omnipoint's approach lends itself to such flexibility by the PCS service operator, Omnipoint may propose more than one alternative implementation of this system. For example, some potential PCS service operators have requested that Omnipoint explore variations to the basic architecture including using lower data rates and fewer time slots per RF channel to increase range, etc. Omnipoint already has two versions of the system under development which implement tradeoffs in these parameters as well as offering a further significant reduction in costs with some reduction in capacity.

As befits any true standards effort that allows participation by the service providers, Omnipoint encourages potential PCS license holders to present their priorities with respect to the service trade-offs discussed above.

### PCS2000 System Design Specification and JTC PCS Standard

### 1. Introduction

### 1.1 Scope and Purpose

This American National Standards Institute (ANSI) Interim Standard (IS) has been produced by the Hybrid CDMA / TDMA Technical Advisory Group (TAG) of the Joint Technical Committee (JTC). This ANSI Interim Standard describes the PCS2000 system design which was pioneered by the Omnipoint Corporation for use in the United States Personal Communications Services (PCS) frequency bands. This Interim Standard covers PCS2000 system implementation and operation in the 1850 to 1990 MHz licensed and unlicensed frequency bands, within the American National Standard public telecommunications network.

This IS document includes both introductory material suitable for informational purposes and technical specifications which are suitable for use as an ANSI standard.

Reference is made in this IS to various other National and International standards as summarized in the Appendix.

### 1.2 Key Features of the PCS2000 Design Approach

Omnipoint employs Direct Sequence Spread Spectrum (DSSS) with Time Division Multiple Access (TDMA) for PCS digital communications RF links. PCS2000 provides solutions to the problems that confront PCS system developers. First, it mitigates the problem of interference with OFS users within or near the PCS operating area, allowing rapid, undelayed PCS system deployment. Second, the use of Omnipoint DSSS helps mitigate the PCS link performance degradation caused by multipath propagation conditions experienced in typical mobile PCS environments. Third, PCS2000 accommodates the full range of mobile hand-off conditions including those at freeway speed. Fourth, it permits use of a bandwidth efficient frequency reuse factor of N = 3. Finally, PCS2000 with Time Division Duplex (TDD) provides the lowest cost, least complex implementation of multiuser PCS systems. Up to 32 simultaneous users per RF channel are accommodated, and a variable data rate up to 256 kbps (full duplex) is available to any user.

### 1.3 Overview of PCS Services, Features, and Functions Provided

This section provides service, feature, and function details for the PCS2000 System(s). However, as noted previously, Omnipoint cannot yet release details about switch platforms that will be provided through Omnipoint's infrastructure partners. As these relationships are finalized, this information will be made available.

The PCS2000 System(s) provides a full array of voice and data services through its radio access and transport system. The following provides specific information regarding services supported by the PCS2000 system(s).

### 1.3.1 Voice Services

The PCS2000 System(s) can provide landline quality voice services to the end user for wireless access to the network. Design objectives for the system(s) require transparent operation for user-to-network functionality including DTMF tones for interactive services, music on hold, and the provision of active call features which remain intact even after a hand-off between cell sites. Different levels of voice quality can be provided by the system(s) by allowing a user to choose his vocoder rate in increments of 8 kbps. In the future, even lower vocoder rates without any change to the Base Stations or the CAI.

Users of the PCS2000 System in a network configuration can place calls in the same way as to the way calls are placed from wireline or cellular telephones. Omnipoint today provides handset interfaces that allow for either cellular-like calling (entering the number then pressing a call button to commence call set-up) or PSTN-like calling (off-hook dial tone and DTMF tones for each digit). The exact implementation of the user interface is programmable and can be readily customized for the service operator.

### 1.3.2 PCS2000 PCS-Supported Scenarios

**PCS to PCS Calls:** For PCS calls, the called party number will be identified by the PCS Base Station Controller and PCSC as requiring a termination within the PCS network, eliminating the need to go through the PSTN. Upon receipt of the caller ID and the destination address, the PCS network registration database (SCP/HLR) is queried to find the current location of the desired party. If found, the call is routed to the appropriate PCS Base Station and completed. Optionally, a voice mail can be left or network routing to an alternative termination can be provided.

**PCS to Local PSTN:** If a call is made to a local land line phone number, the PCS Base Station Controller formats and routes the voice traffic to the PCSC or directly to the local CO Switch, usually via a T1 trunk.

**Long Distance Calls:** Long distance calls made by PCS subscribers will be routed directly by the PCS Base Station Controller or via the PCSC to the inter-exchange carrier of choice, bypassing the LEC.

**Service Activation:** The PCS2000 System(s) will provide for service activation via a PC interface to the appropriate network or system database. This interface will be available to sales people for direct activation of new subscribers in real time. Subscriber interfaces to the network for changing service status or for initial activation could be supported by Omnipoint at a future time.

Voice services provided by Omnipoint will be available to end users in both mobile and non-mobile environments. The PCS2000 System(s) is capable of supporting a mix of Base Station types that will enable the use of both microcells and macrocells for contiguous wireless coverage and this is significant since PCS is often mistakenly considered to consist of <u>only</u> non-mobile applications or "islands of coverage". Omnipoint technology allows highway speed vehicular hand-offs even in cells that are substantially smaller than traditional cellular cells.

System(s) features are inherently flexible because of Omnipoint's transparency to the network switching platform. In the case of LEC applications, The PCS2000 System(s) allows for most business telephone network features to be available to the end user on a wireless basis. These include features such as Custom Calling, Caller ID and other CLASS/AIN features, Private Virtual Networks (PVN), conference calling, do not disturb, custom billing, and many other current and future AIN-based services. In addition the Omnipoint PCS System(s) has been designed to support the advanced features proposed by the various industry (PCIA) and standards development (Joint Technical Committee on Wireless Access (JTC)) organizations.

### 1.3.3 Data Services

Omnipoint views data services as a significant differentiating capability of PCS over conventional cellular services. As such, a PCS provider must be able to provide a form of "data on demand" service that allows for both variable data rates and higher data rates than those within the capability of cellular. Cellular systems will be able to deliver a maximum raw rate of 19.2 kbps (using CDPD) which delivers only a 9.6 - 13 kbps maximum bearer rate for an entire cell or cell sector. Such systems also typically use a Collision Sense Multiple Access (CSMA) scheme shared by all users which further reduces the data rate which is actually available per user. CDPD is designed only for bursty, low speed, packet data type applications.

Omnipoint, in contrast, provides the ability for the user to request any bandwidth (up to the maximum of the RF channel at the time of call origination) that is consistent with the application being used (and for which a PCS operator can charge a premium). For example, the mobile voice subscriber might require only an 8 kbps voice channel for a vehicular telephone call, whereas an office user might request 32 kbps voice for enhanced voice quality or transparent data modem or fax support. The PCS2000 System(s) supports multiple vocoder include 8 and 32 kbps. In addition, a data user would have the ability to request either a small number of time slots for bursty packet data or <u>multiple</u> 8 kbps channels to provide higher data traffic. Up to 256 kbps full duplex, or 512 kbps simplex rates can be supported. Additionally, a slow speed "D" channel accompanies every 8 kbps time slot.

The system(s) secures the necessary bandwidth on call origination for the application desired. Under the current PCS2000 PCS design, Omnipoint can provide data services from continuous short message services at only 500 bps up to 256 kbps full duplex to hand held devices. Bulk transport of data is also possible through this capability at up to 512 kbps per RF channel including data acknowledgments on every packet. This data rate far exceeds the current maximum 19.2 kbps (which as noted is really roughly 10 kbps after overhead) limitations of cellular applications. Further, cellular will be limited to these low data rates for the foreseeable future.

In addition to the user voice/data channel, the Omnipoint design provides for a D channel that allows for continuous 500 bits/sec of data traffic to every user. This is separate from (but simultaneous with) the bearer channel. This information can be used for paging applications, notifications (e.g., voice mail), Short Message Service (similar to GSM) or other user applications. The simultaneous nature of the D channel will allow messaging even when the handset is in use.

Omnipoint provides bearer rates to the handset that will allow for full fax support through The PCS2000 System. Interconnection to a fax device could be a stand alone module or consist of a data port on the handset. Data rates for voice circuit fax service can also be provided through a 32 or 40 kbps ADPCM algorithm which allows the existing installed base of faxes and modems direct, transparent access to the network. Higher speed fax transmission (such as 56/64 kbps) can be provided through direct data support of The PCS2000 System(s).

Broadcast data services such as software downloads, information database services, and other high speed applications can also be provided by The PCS2000 System(s).

For example, a 3.5 MB "electronic" newspaper such as that demonstrated at the PCS Demonstration at the White House in the summer of 1993 could be down loaded by the PCS2000 PCS system(s) wirelessly in 55 seconds. Omnipoint's capability will provide PCS service providers with the potential to provide many unique broadcast services to differentiate their networks.

The PCS2000 System(s) will support full 911 emergency services. It is also compatible with such ancillary services as voice mail and fax store and forward, The ability to provide these services is largely a function of the network platform, but messaging such as notification of voice mail messages or fax waiting can be supported under Omnipoint's D channel capability.

Other devices that can utilize Omnipoint technology include laptop computers, personal digital assistant (PDA's) devices, video phones, and multimedia devices. Omnipoint has developed palm-sized wireless modems for use with laptop computers and is also the provider of wireless technology for the largest manufacturer of handheld computers using RF today. Omnipoint can use transparent error detection/correction for certain data through use of a CRC, on both the control information as well as on the entire packet. The protocol also provides for ARQ at the application level for data, since this is vastly more efficient than FEC within the packet.

### 1.3.4 Network Features Supported

The PCS2000 System(s) provides radio access and transport facilities for PCS services. When coupled with a full featured switching platform The PCS2000 System(s) will enable most or all of the features listed on the following page:

- Basic POTS
- Residential
- Business
- CLASS
- Data
- Emergency or safety
- Attendant
- Line restriction
- Hunting
- Abbreviated dialing
- Call waiting / forward / transfer
- Conference calling
- IDDD
- Centrex
- VN or Virtual Private Network
- Access
- Paging
- Private facility
- Automatic or flexible routing
- Authorization or account code
- Message detail recording
- Traffic data
- Voice messaging
- Call screening / routing

Many of these features, however, require support from the network infrastructure connected to The PCS2000 System(s). In some cases, ancillary equipment will be deployed with The PCS2000 System(s) and switching systems to allow services like billing, teleconferencing, voice messaging etc. These may be provided by the PCS operator or a third party.

### 1.4 PCS2000 System Overview

This section is an overview description of the components of a PCS2000 system and their interconnection to a telecommunications network. The purpose of this section, is to provide a basic description of Omnipoint's PCS2000 technology from the standpoint of a number of potential of network connection possibilities. These network connections include LEC based PSTN, AIN, GSM, IS-41 and an intelligent Base Station approach. In addition, a Cable TV distribution network connection is presented.

### System Flexibility

The various methods of interconnection described require a level of flexibility that Omnipoint has engineered from the inception of The PCS2000 system. The PCS2000 system does not necessarily require the modification of existing PSTN network equipment. Omnipoint, however is working with potential PCS providers, equipment suppliers and Bellcore to further refine the specifications for the "C" Generic Interface operating in AIN 0.2 and NISDN3, as well as with those planning to implement a US version of the GSM "A" interface. No changes per se are required to the CATV networks specifically for an Omnipoint system. Obviously, to incorporate any PCS system a CATV network operator must introduce a switch architecture, two way amplifiers, redundancy, etc. Additionally, some form of a Remote Antenna subsystem must be deployed if one is to use the coax portion of the CATV network to extend coverage from a Base Station.

The PCS2000 system is designed around an object-based software architecture which allows for flexibility in interconnection to the PSTN, AIN and GSM network infrastructures and IS-41 network interconnection. This approach provides the PCS operator with flexibility to deploy whatever network infrastructure meets the appropriate business goals and service descriptions desired. The system uses internal communications based on ISDN messages, called "Notes", for passing necessary information among Omnipoint components within the system. These "Notes" are so named as not to confuse them with the ISDN specific protocol itself. Network messages (e.g., Q.931 or others) are converted by the system into Omnipoint "Notes" for efficient operation within the Omnipoint hardware platform.

### 1.4.1 Network Architecture

As shown in the diagram below, The PCS2000 system can interconnect to a variety of network infrastructures including AIN and GSM-based networks, private networks and provide IS-41 network interconnection. See Figure 1-1.

The PCS2000 system can support AIN and GSM-based architectures for full feature PCS under several different deployment scenarios. At the present time, Omnipoint is working with Northern Telecom and other switch equipment manufacturers, and potential service providers to bring each of these systems to market.

PCS2000 can support various service implementations through interconnection with LEC network, CATV network, new build (PCS operator PCSC architecture) or as an extension to a cellular system (different RF access, but some co-located equipment). PCS2000 provides full featured PCS, including high speed data applications and full, high speed mobility. Pedestrian speed or Telepoint-type implementations of PCS that are envisioned by some potential operators can also be provided by limiting the functionality of the system.

### 1.4.1.1 PCS2000 System Components

The following components are included in the various implementations of Omnipoint's PCS2000 System in PCS networks:

### Base Station

Omnipoint Base Station radio equipment provides for multiple users in a PCS environment. Up to sixty four 8 Kbps time slots of bearer information per 5 MHz RF channel is available. Using voice activity detection (VAD), however, a conservative maximum of 32 full duplex voice channels per 5 MHz RF channel is assumed for economic analysis and cell site planning. Using 4 Kbps vocoders, up to 64 non-VAD full duplex voice channels may also be provided per 5 MHz channel.

The Base Station formats and sends digital information either to The PCS2000 System Base Station Controller, the PCSC or directly to the PSTN, depending on the PCS operators choice of networks. Base stations are connected to the Base Station Controller by a variety of transport means including ISDN, standard lines, leased T1 and Fractional T1 lines, cable TV, microwave, etc.

### Base Station Controller (BSC)

The Base Station Controller concentrates inputs from multiple Base Stations, performs inter-Base Station hand-offs, converts and formats both channel and signaling information for presentation to the network, manages the local cache VLR database, provides multiple network interfaces and supports basic OA&M functions. The Base Station Controller, under control of the PTSO or PSTN, will manage local registration/verification for its associated Base Stations and provide updates to the PCS network or centralized SCP/HLR.

### CAT

Cable Antenna Transceiver, developed by Omnipoint to economically extend coverage from a Base Station; can also be used in cable TV infrastructure deployments.

### CO Switch

Central Office Switch, owned by the local telephone company.

### Wire Center

Houses one or more CO Switches and serves a geographic area, usually with typical maximum coverage radius of 13,000 to 15,000 feet (larger in suburban and rural areas).
Provides lines within the CO Wire Center service area.

**PCS Cell**

PCS Network antenna sites supporting one or more Base Station RF transceivers depending on coverage and subscriber capacity requirements.

**PCS Node**

Collection of Base Stations into one Base Station Controller in the PCS Network, where traffic from PCS System Cells are routed for concentration, processing, hand-off and presentation to or from the PCSC or PSTN.

**PCSC**

PCS Switching System. This is the primary switching and control point used by the PCS Network to perform network control, manage the SCP/HLR data bases and control access to the PSTN. The PCSC functionality could also be provided by the PSTN in cases where the LEC provides direct PCS support. The PCSC provides connection and advanced switching of traffic to and from PCS Nodes (Base Station Controllers) and interconnection to the PSTN and interchange carrier networks.

**T1 or Fractional T1 Leased Trunks**

High speed (up to 1.544 Mbps) digital facilities for hauling inter-CO traffic. These are provided within the same LATA by the local exchange carrier and by the inter exchange carrier for inter-LATA connections.

**Transversion Cards**

Converts the packet stream to and from the Base Stations to vocoded format and converts the vocoder rate used in the CAI to the standard rate used by the PTSO or the CO (e.g., 32 or 64 Kbps). These cards are only needed at the point where the call leaves the PCS system and interfaces with the PSTN. They are shown in this model as implemented in the Base Station Controller, although they could be implemented only at the PTSO.

**1.4.1.2 Base Station Controller Cluster (Nodes)**

Omnipoint has developed its Digital Trunk Link System and Base Station Controller which will form the basis for most of Omnipoint's commercial PCS System deployment. As shown in Figure 1-2, the Omnipoint PCS System Node will accommodate a variety of interfaces and network connections for optimal performance at minimal cost.

See Figure 1-2

Interconnections from Base Stations to switching platforms (BSCs, PCSC, and/or the PSTN) will support direct T1, FT1, ISDN, microwave links, fiber, and coax cable. Backhaul from the BSCs to the PTSO or PSTN will also be provided through a variety of methods, including T1, ISDN, microwave, etc.

1.4.1.3 Network Architecture (LEC-PSTN)

**Network Interconnection**

Figure 1-3 illustrates the basic Omnipoint architecture for interconnection to the PSTN or another switch platform (Base Station Controller or stand-alone PCS switch). The system supports analog lines, as well as digital interfaces (including ISDN).
PCS2000 Base Stations connect to either the PSTN directly (for LEC-based AIN intelligent Base Station deployments) or to a Base Station Controller (for other network implementations, including AIN, GSM, and IS-41 based networks). Base Station Controllers (BSCs) provide for local switching and fast handoff. In the Base Station Controller case, the PSTN or a PCS switch connects to the BSC for call delivery and outgoing calls.
BSC connection to PSTN utilizes the Bellcore "Generic C" interface which includes Q.921, Q.931 and modifications to Q.931. Reference CCITT, Digital Subscriber Signalling System No. 1 (DSS 1), Data Link Layer.

Omnipoint PCS Systems can be interconnected to PCSC switches to provide inter-node switching, SCP/HLR database support and centralized network OA&M capabilities. While the PCS System can use existing switch and network architectures, including LEC and CAP networks, Omnipoint is working with Northern Telecom and other major switching vendors to develop specific PCS solutions for even greater future efficiency and lower network deployment costs. In particular AIN and GSM-based platforms will be offered, as well as IS-41 interconnections.

**Intelligent Base Station Characteristics**

PCS2000 is unique in that it may be deployed using either a Base Station Controller (BSC) to manage handoffs and local switching or it may employ an Intelligent Base Station (IBS) architecture that utilizes the PSTN for this functionality in AIN type infrastructures.
Omnipoint's IBS uses ISDN messaging for registration, call delivery and handoff via a direct CO connection. The hardware platform used for the IBS is a modified Base Station (incorporating a BRI card, additional intelligence and local vocoding) IBS Connection to PSTN utilizes the Bellcore "Generic C" interface which includes Q.921, Q.931 and modifications to Q.931

**1.4.1.4 Network Architecture (AIN)**

**AIN Networks**

Omnipoint will support a variety of AIN network infrastructures including AIN 0.0 (initially) through AIN 0.2 (or higher as AIN evolves) for full ISDN interconnectivity, including network database support and handoffs via LEC or CAP central offices. Signaling between network elements will consist primarily of standard signaling protocols including SS7 and IS-41.
PCS2000 is unique in being able to be deployed using either a Base Station Controller (BSC) to manage handoffs and local switching or to use an intelligent Base Station (IBS) architecture that utilizes the PSTN for this functionality for AIN type infrastructures.
The Omnipoint IBS uses ISDN messaging for registration, call delivery and handoff via a direct CO connection. The hardware platform used for the IBS is a modified Base Station (to incorporate a BRI card, additional intelligence and local vocoding).
*See Figure 1-4*
Omnipoint has tested National ISDN-1 Base Station interfaces including direct interconnection to an AIN based CO switch. In this configuration the system has demonstrated handoff, two way calling, and registration. Support for ISDN upgrades will be provided by Omnipoint as supported by NISDN-3 for interconnection to the PSTN (as this becomes available from the switch vendors).
Omnipoint is also working with several vendors to provide SS7 interconnectivity to ensure SCP involvement in the network architecture for PCS, while also allowing for enhanced network services (i.e., CLASS, other AIN features) to be provided to end users.

**1.4.1.5 Network Architecture (GSM Networks)**

**GSM Networks**

A similar architecture is used for interconnection to GSM networks via the "A" interface, except that the features and functionality are provided instead by a GSM network infrastructure owned by the PCS operator (as shown below).

*See Figure 1-5*

Note that in this particular implementation of PCS2000, the GSM architecture interconnects through the defined "A" interface. Features and functionality of GSM are passed to and from PCS2000 over this network interface in a manner that is transparent to the end user.

### 1.4.1.6 Network Architecture (Alternative Networks - Cable)

*See Figure 1-6*

**Cable TV Networks**

Omnipoint's Base Stations are the only PCS Base Stations miniaturized to the point where they can be installed inside standard cable TV amplifier boxes. Further, we are already testing several different approaches, including interfacing to analog Remote Antenna systems and the use of digital transport mechanisms. One of the tests uses T1 and FT1 digital multiplexer outputs from the CATV network, and basic rate (BRI) ISDN links to transport digital channels as shown below. This ISDN-transport capability is in prototype testing now.

In addition to the analog Remote approach noted above, Omnipoint has developed the CAT (Coaxial Antenna Transceiver) to allow for the extension of coverage from a Base Station in cable TV deployment scenarios. This device was successfully tested and shown to provide cost effective deployment of PCS to cable subscribers, while providing full functionality including handoff and vehicular mobility. Specifically, one Omnipoint Base Station and four CATs covered 153 homes in a residential suburb of San Diego in testing with Cox Enterprises. Additionally, Omnipoint's Base Stations and/or BSCs can be mounted at fiber nodes.

### 1.4.1.7 Network Interconnection (Transport Options)

*See Figure 1-7*

**Transport Options**

As noted throughout this document, Omnipoint supports a variety of network infrastructures using many different physical interfaces. Fractional T1, T1, and/or ISDN BRIs will be used for most PCS deployments. These rates will be carried by either HDSL, dedicated digital LEC facilities, or private transport (e.g., microwave, CATV, fiber).

As noted above, each standard RF channel can provide a maximum of sixty four 8 Kbps bearer channel links net of all overheads and guard times. Thus, these links can be carried by a FT1 link (total bearer data rate of 512 Kbps). However, under normal usage a standard three sector cell with three RF channels will require less than a full rate T1 (1.544 Mbps) for the Erlang traffic actually delivered to the BSC.

Microwave links can be used with PCS2000, particularly in areas where long distance backhaul is required and the associated higher costs can be justified.

X.25 and SS7 are the links of choice for network data base access from PCS switching equipment although virtually any data service will suffice. In general, Omnipoint supports ISDN and X.25 from the Base Station or BSC to the PSTN or PCSC. SS7 is used from the switching platforms to the network. IS-41 signaling is also supported. Omnipoint will provide database access capabilities that are based on US standards should they differ from these already standard interfaces.

**NETWORK INTERCONNECTION (SOFTWARE)**

**Software Development**

PCS2000 is designed around an object-based software architecture which allows for flexibility in interconnection to a number of network infrastructures and equipment manufacturers' equipment. The system uses internal messaging based on ISDN messages called "Notes" (so as not to confuse them with ISDN or other network-specific "messages") which are based on the Q.931 and Q.921 protocols for passing necessary information among Omnipoint components within the system.

Messages from the network (e.g., Q.931) are thus converted by the PCS2000 System into Omnipoint "Notes" for efficient operation within the Omnipoint hardware platform. This approach provides the PCS operator with flexibility to deploy whatever network infrastructure meets the appropriate business goals and service descriptions desired.

### 1.4.1.8 Network Interconnection (Operation Support Systems)

**Operational Support Systems**

Cell site diagnostics are performed remotely through either the control channel on the digital link resident in the Base Station or a dial up modem for some implementations. These diagnostics can be performed on each component board of the Base Station. In addition, PCS2000 provides for remote monitoring and downloading of software as required to Base Stations and Base Station Controllers.

Some handset software can also be downloaded over-the-air as required for maintenance purposes or for some system upgrades.

For small Base Stations, very little preventative maintenance is anticipated other than monitoring for environmental degradation when mounted outdoors. In larger cell configurations, traditional preventative maintenance on the Base Stations and/or antenna arrays is prescribed. In general, PCS2000 is very different from existing cellular in size of the equipment (a standard sized, 32 voice channel Base Station is only 4"x4"x10") and in maintenance requirements for most Base Station locations in urban areas. As noted, Omnipoint has the only PCS Base Stations small enough to fit inside many existing enclosures including standard CATV amplifier boxes.

Base stations are designed to allow for easy circuit board replacement or for very rapid wholesale swap out of the entire Base Station. This will be very easy due to the small size profile of the Omnipoint Base Station.

The RF equipment consists of the radio board in the Base Station which can be alarmed to a central site via the internal Base Station modem. Additional alarms for power and other components are also incorporated into the design. Functionality to provide alarm services to other network components (BSC, PCSC, etc.) are integrated into a total network solution through the switching platform used.

Billing will be provided by industry standard network OA&M platforms used in conjunction with Omnipoint networks. The information required for traffic reporting and detailed billing processes will be made available to the network by the Omnipoint Base Stations and BSC for all calls. A separate adjunct processor for billing is also supported by the system if this is desired for service by a third party provider. Omnipoint Base Stations will provide the necessary information to the network for billing purposes as required by the switching platforms utilized.

Functions to be supported by the billing system include information collection (from both IECs and LECs), bill preparation, and report generation. The PCS operator (or a designated third party) could also set up collections/customer services and funds management processes.

### 1.4.1.9 Mobility Management Overview

### Mobility Management

Omnipoint utilizes a handoff (terminal mobility) scheme that is different from that used by any other fully mobile wireless system. PCS2000 uses a unique "mobile directed" and "mobile centric" handoff technique. In this approach, the mobile terminal makes the decision to handoff between cells and directs the Base Station Controller or network to make a line switch once an alternative Base Station is acquired.

This approach contrasts with "network directed" or "network centric" approaches such as AMPS and IS-54 cellular or GSM. Even with "Mobile Assisted Handoff" (MAHO) in which the network collects information and directs all or most of the handoff functions, the mobile is used mainly as an additional listening post with the network still directing the handoff, which therefore requires significant signaling and messaging between base stations, BSCs and switches and handoffs thus will take much longer.

Also of note in the Omnipoint handoff procedure is the fact that the system can perform either a "make before break" handoff for seamless handoffs or a "break before make" in emergency situations where all communications with a Base Station are lost prior to a new connection being established. "Make before break" handoffs do provide for seamless coverage and undetectable handoffs. In the Omnipoint approach the terminal can listen for other Base Stations during idle time slots and determine which Base Stations are within range and are candidates for handoff.

The case of "break before make" is typified in the sudden shadowing scenario. This example occurs when a connection with the current base is lost due to a severe signal blockage (e.g. worse than 40 dB) near the limit of the cell range such as can occur when turning a corner quickly in a dense urban high rise area. In this situation, the terminal previously had created a "priority list" of available Base Stations in the vicinity and will reestablish contact with a new Base Station, probably on a new frequency and a new time slot. The terminal includes a "persistence" parameter which will preclude call tear down from occurring before a duplex connection is fully reestablished.

The true "hard handoff" problem (i.e., a lost air channel) is handled very quickly by PCS2000 through the terminal's ability to re-acquire the normal Base Station or an alternative Base Station in 16-250 ms even when no information is available to the handset when the link was lost. In contrast, complete loss of a link in traditional cellular architectures becomes a "dropped call."

When the handset determines that a handoff is appropriate, the terminal acquires an air channel on the new Base Station and notifies the BSC to switch the incoming phone line from the old base to the new base as shown below.

**See Fig. 1-8.**

This process takes from 4 ms to 32 ms and can be achieved in most circumstances without missing a single packet given proper RF coverage. Even in the emergency "break before make" handoff, the handoff can be accomplished in 16-250 msec as shown below.

**See Fig. 1-9.**

As previously mentioned, one of the major benefits of Omnipoint's approach is that it allows for mobile speed handoffs (65 MPH) even in very small cells (as already demonstrated by Omnipoint in cells of less than 1000 feet, as well as in cells of up to 20 miles in diameter).

Hysteresis measurements from multiple bases can be maintained by the handset in PCS2000 to reduce the terminal "thrashing" between Base Stations and thus consuming capacity. This is an important design parameter to minimize air channel resources that must be allocated for handoff by the system.

PCS2000 uses both RSSI for channel quality measurements, as well as measurements on both frame errors and the type of errors as an indication of link quality. When the scanning threshold is reached, the handset scans for an alternative time slot in the same RF channel first. This is used for time slot interchange (TSI) which provides a dramatic improvement in the cell's average C/I ratio and the reuse planning.

If TSI cannot improve the channel, the handset scans for the frequencies in the adjacent Base Stations during the time slots in which it is not communicating. From the common signaling information being transmitted by the Base Stations, the handset can determine both the link quality, as well as the capacity available on that Base Station. When the handoff threshold is reached, the handset will change frequencies and direct the new Base Station to notify the BSC to bridge the call to the new Base Station channel. When appropriate, the handset further directs the BSC to shut down the bridge which completes the switch of the call.

Intercluster handoffs are managed in The PCS2000 System via the network platform chosen by the PCS operator (i.e., the PSTN in the Intelligent Base Station approach) or through the PCS operator's switching infrastructure (PCSC approach).

**2. PCS2000 System Description**

**Protocol Architecture**

The Omnipoint system provides a unique protocol architecture that is optimized for PCS, utilizing specific benefits of FDMA, TDMA, and CDMA technologies. Care is taken with this approach to provide for features and services well beyond those that are available from other air interfaces, while ensuring that costs remain significantly lower than other approaches. Omnipoint's approach also allows for effective in-building operation in the unlicensed bands as well as in the licensed PCS frequencies.

**Multiplexing and Cell Separation**

The Omnipoint system uses a patented combination of CDMA, TDMA, and FDMA for separation of users and cells. Within a cell, a high speed direct sequence spread spectrum TDMA protocol is used for separating users.

***SEE FIGURE 2-1***

As shown in figure 2-1, adjacent cells are separated by frequency (FDMA) with CDMA being used to improve the re-use pattern to an N=3 in the standard configuration when frequencies are repeated. Additionally, Time Slot Interchange (TSI) and directional antennas are employed to create further isolation of users across cells.

Note that each user within a cell can use the same set of direct sequence codesets. This is contrary to CDMA-only systems that use codes for user separation within a cell. Omnipoint's system uses a different codeset each time the same frequency is reused (noted as C1, C2, and C3 in the preceding picture). The spreading codes are also used within a cell to achieve significantly higher data rates and thus more TDMA users per RF channel than generally thought possible with traditional TDMA systems for fully mobile applications. This direct sequence spread spectrum approach is not a traditional use of CDMA, but is a unique way of using code technology for a wireless system. In the Omnipoint system, code separation is used in combination with spatial and temporal separation to ensure that users on the same frequency in different cells do not interfere with each other.

The most significant benefit of Omnipoint's system architecture is that the cost per user channel declines as the number of users increases per base station, unlike any other system. Generally, in traditional cellular approaches the cost per voice channel remains linear with each additional, simultaneous user. As a consequence, Omnipoint's system offers a five to twenty fold reduction in the cost of providing the voice channels throughout the cell sites.

The Omnipoint approach is also very different from CDMA-only systems that rely on precision power control algorithms and require soft hand-off to achieve high capacity claims and to mitigate near/far problems, resulting in the associated cost and complexity in handsets, base stations and base station controllers. Omnipoint's system could use soft hand-off if cost were unimportant, but does not require it to meet PCS performance and capacity demands. Additionally, with the Omnipoint system the interference generated by an entire cell is never more than a single user, since no more than one transmitter in a cell is on at any instant in time. This is particularly important for frequency planning and OFS coordination in early PCS deployments.

## 2.1 PCS RF Frequency/PN Code Reuse Plan

DSSS carrier modulation permits Omnipoint to use a very efficient Frequency Reuse factor of N = 3 allocating different carrier frequencies to adjacent PCS cells. Interference between adjacent cells is also mitigated by assigning different orthogonal PN codes to cells in adjacent clusters, as shown in Figure 2.1. Interference between cells using the same carrier frequency is reduced by the propagation loss due to the distance separating the cells (no two same frequency cells are less than two cells away from one another) and also by the Processing Gain of systems using the same carrier frequencies.

## 2.2 Frequency Parameters

### 2.2.1 RF Channel Center Frequencies/Bandwidths

When operating in the PCS A, B, or C PCS frequency bands, each of which is 15 MHz wide, PCS2000 RF center frequencies are placed at 2.5 MHz, 7.5 MHz, and 12.5 MHz from the lowest band edge of the three bands. For the D, E, and F bands, which are each 5 MHz wide, the single RF carrier frequency is placed in the center of the band, and a frequency reuse factor of N = 1 must be used because the DSSS signal has a 5 MHz bandwidth. Therefore, the required intercell interference rejection must be obtained by PN code orthogonality, and the use of sectorized antenna patterns. Time Slot Interchange (TSI) may also be employed to mitigate intercell interference.

### 2.2.2.1 Unlicensed RF Center Frequencies/Bandwidths

When deploying of The PCS2000 system in the PCS Unlicensed band, which is allocated 20 MHz of bandwidth, but for which individual channel bandwidths are only 1.25 MHz wide, DSSS chip rate will be reduced to approximately 1.25 Mcps. TDMA burst rate, or number of TDMA time slots per frame will also be reduced to maintain the required DSSS Processing Gain for intercell interference rejection. A non-spread TDMA/TDD signal modulation format for operation in the unlicensed band may also be provided.

## 2.3 Antenna Characteristics

### 2.3.1 Mobile Station

The Mobile Station (MS) handset employs a halfwave dipole antenna which is linearly polarized and provides a gain of 2 dB with an omnidirectional pattern perpendicular to the antenna axis. At a nominal PCS frequency of 1900 MHz, a half wavelength is approximately 3 inches, which fits well within a handset envelope.

### 2.3.2 Base Station

### 2.3.2.1 Omnidirectional Pattern

Different types of antennas are available for the Base Station (BS), depending on the PCS application. For low density suburban or rural applications an Omnidirectional antenna is used to provide maximum of coverage with the lowest number of Base Stations. For this application, an omnidirectional antenna may be employed for the BS with a vertical gain of approximately 9 dB. The 9 dB of gain permits a relatively large radius cell even with an omnidirectional horizontal pattern.

### 2.3.2.2 Directional/High Gain Configurations

Suburban and low density urban areas, directional antennas with 120 degree azimuth beamwidths and 9 dB vertical gain are used so that a cell can be sectorized into 3 parts, with each sector accommodating 32 full duplex 8 kbps users. To permit a single BS to cover large sparsely populated area, a steered array antenna with up to 20 dB of horizontal directivity can be used. This antenna is sequentially steered to each MS within its cell during that mobile's assigned TDMA time slot. Because Omnipoint utilizes Time Division Duplexing (TDD) the same antenna is used for both transmission and reception, providing reciprocal forward and reverse link propagation characteristics. This antenna utilizes circular polarization, so that high level delayed clutter signals reflected from buildings, etc., within the beam, do not interfere with the received signals from the mobile units (reflected signals are reversed in polarization, and are rejected by the BS antenna). Note that high gain, directional antennas also reduce the delay spread in severe multipath environments by rejecting multipath components arriving from outside the main beam of the antenna.

### 2.3.2.3 Classes of Base Stations

The PCS2000 System cell uses one of several antenna configurations in combination with one or more Omnipoint Base Station(s) to best meet location coverage and subscriber density requirements. These configurations are arranged by capability based on range and capacity. There are a total of six classes of Base Stations within the PCS system offering. Class 1 to 3 Base Stations use 3 dB, 9 dB, or 13 dB gain antennas. Range can be extended with the following configurations:

**Base Station Type Antenna Characteristics**

Class 4 — Size: 9 inches by 30 inches by 3 inches, Weight: approximately 5.5 lbs. -- used to extend coverage and/or cell capacity with up to 15dBi gain.

Class 5 — Size: 18 inches by 36 inches by 5 inches, Weight: approximately 20 lbs. -- used to extend coverage and/or cell capacity with up to 21dBi gain. Tightly integrated with Omnipoint's CAI and configurable with additional Base Stations per cell to further expand cell capacity.

Class 6 — Size: 3 ft. by 6 ft. by 6 inches, Weight: approximately 30 lbs. -- used to extend coverage and/or cell capacity with up to 28dBi gain. Tightly integrated with Omnipoint's CAI and configurable with multiple base stations. Used primarily in urban and suburban areas along with 100 foot or higher antennas to maximize coverage areas.

Omnipoint has included several antenna options for deploying small to large cell configurations. In addition, Omnipoint is working with several antenna vendors toward integration of "smart" antenna configurations allowing high gain with directional tracking at the cell site. This approach differs from standard sectorizing of cell sites to increase capacity. Antennas with a large number of array elements per high gain antenna are under development. In general, these high gain antennas are designed for three cell sectors, and employ using active antenna arrays with multiple beams and manifolds within each sector.

### 2.3.2.4 Multiple Antennas for Spatial Diversity

Multiple antennas of the types described above, spaced several wavelengths apart, are used at the Base Station to provide spatial diversity, which helps to mitigate the effects of multipath-induced Rayleigh fading encountered in typical mobile PCS environments. Since received signals from antennas spaced a few wavelengths apart fade independently, a spatial diversity performance improvement is obtained. This is done by selecting the best signal received from multiple separated antennas in a flat fading multipath environment. Antenna spatial diversity also mitigates the effects of Frequency Selective fading, which degrades link performance by distorting PN chip waveforms causing intersymbol interference.

**2.4 Transmitter Power Output Characteristics**

**2.4.1 Mobile Hand Set**

Although the FCC permits up to 2 Watts Effective Isotropic Radiated Power (EIRP) for the MS, Omnipoint's peak power input to the dipole antenna is 600 milliwatts, so the EIRP of the MS is a nominal 1 Watt, within the FCC requirement. Because of the TDMA/TDD design of PCS2000, the average power delivered to the antenna is only 9.36 milliwatts, permitting long duration between hand set battery recharging. The constant envelope characteristic of Omnipoint modulation technique permits use of an efficient non-linear output amplifier which can further reduce battery drain.

**2.4.2 Base Station**

The recent FCC Order permits up to 1500 Watts peak EIRP per RF channel for PCS Base Stations. Since Omnipoint's BS peak power input to its antenna is 2 Watts, the maximum permissible BS antenna gain (vertical plus horizontal) is limited by the FCC to approximately 28 dB. Because TDD is used, the average BS power input to its antenna for a fully loaded TDMA frame is 1 Watt.

**2.5 Modulation Characteristics**

**2.5.1 Spread Spectrum Modulation of RF Carrier**

To produce the direct sequence spread spectrum (DSSS) characteristic of the PCS2000 RF signal, Omnipoint uses a form of continuous phase shift quadrature modulation *(CPSQM),* which provides a constant amplitude for the envelope of the modulated carrier. The constant envelope of *CPSQM* permits efficient non-linear RF power amplification (especially desirable for long Hand Set battery life), without re growth of modulation spectral sidelobes. By shaping the PN chip waveforms before quadrature modulation; all modulation sidelobes at frequencies more than on-half the chip rate away from the center frequency of the DSSS RF signal are attenuated by at least 42 dB relative to the center frequency power level. Since the PN chip rate is 5 MHz, the resulting DSSS signal spectral bandwidth is approximately 5 MHz (outside this bandwidth, all modulation spectral components are attenuated by >42 dB).

**2.5.2 M-ary Encoding of Base Band Data**

DSSS conveyance of information is accomplished by using multiple DSSS chip sequences of M-ary encode the TDMA base band data. *32-Ary modulation is provided by encoding each 5 bits of data as one of 32 orthogonal PN sequences, each of which is 32 chips in length. The use of 32-Ary encoding of base band data with orthogonal PN sequences provides both spread spectrum processing gain against in-band interferes, and very power efficient, low threshold (Eb/No) reception.*

**2.6 TDMA/TDD System Characteristics**

**2.6.1 Multiple Access Method**

Omnipoint uses a unique combination of TDMA, FDMA, and CDMA for multiple user access to the PCS network. Within a PCS cell Time Division Multiple Access (TDMA) is used. Although either Frequency Division Duplexing (FDD) or Time Division Duplexing (TDD) can be used for establishing 2-way links with a PCS system, Omnipoint has chosen to use TDD, because it provides several operational and performance advantages relative to FDD, and it permits a less complex, lower cost implementation of both Hand Set and Base Station terminals. To provide greater area of coverage, or to provide greater capacity for densely populated regions, multiple cells or sectorized cells are deployed using Frequency Division Multiple Access (FDMA) with a frequency reuse factor of N = 3. Also, to permit multi-cell deployments in a given region, Code Division Multiple Access (CDMA) is used for each RF link to reduce co-channel interference between cells reusing the same RF carrier frequency.

**2.6.2 TDMA Frame and Time Slot Structure**

Omnipoint's TDMA/TDD frame and time slot structure is based on a 20 millisecond polling loop for user access to the RF link, as shown in Figure 2.2. The 20 ms frame is equally divided between 32 potential full duplex users within the cell, and each resulting 625 us time slot is capable of supporting an 8 kbps full duplex user. At the Base Station, the first half of the TDMA/TDD time slot (312.5 us) is allocated for the BS transmit function. During the second half, the BS receives from the Mobile Station assigned to that particular time slot. At the Mobile Station, the MS receives during the first half of the time slot, and transmits during the last half. After each TDMA transmission from either the Base or Mobile unit a small portion of each time slot (designated TDD Guard Time) is allocated to allow the transmitted signal to propagate to a mobile receiver at the maximum specified distance from the Base Station (maximum cell radius), and back again (approximately 10 us per mile, round-trip). This is necessary to prevent received and transmitted TDD signals from overlapping at the Base and Mobile terminals. Also, a short time interval (~9.6 us) at the beginning of each time slot is used to transmit a Power Control Pulse (PCP) from the Mobile Station, which is used for several purposes. *First, it serves as a synchronization preamble for determining the beginning of M-ary data symbols within the time slot.* Second, it serves as a channel sounding pulse to determine link propagation loss, and to serve as a measurement of link quality for Omnipoint's Power Control subsystem. Third, the PCP is also used to determine which of the multiple antennas to use for the Omnipoint spatial diversity scheme. The PCP permits spatial diversity control to be updated during each TDMA time slot period. The Base Station transmits a Power Control Command (PCC) pulse, similar in length to the PCP, at the beginning of its TDD transmit period. *The PCC pulse serves as a synchronization preamble for the MS receiver M-ary symbols,* it also provides a power control signal to adjust the MS power output level to a value just large enough to provide the required signal-to-noise/interference ratio at the BS, as determined by the quality of the received PCP from the MS.

TDMA Packet Structure

The Omnipoint system can be used in either a Time Division Duplex (TDD) operation or in a Frequency Division Duplex (FDD) operation. The TDD format is shown below and described in detail in the Version 2T.X documentation.

The Omnipoint Version 2T.X system uses a combination of TDMA and TDD in which an air slot is reserved for handset to base transmission and another paired air slot for base to handset transmission. Guard times are built into the system to allow for delays in processing, propagation over the air and transmission through the electronics/cabling of the system. The following is an illustration of an air slot showing the guard times between transmit and receive as shown in Figure 2-2:

Omnipoint's TDMA frame structure is shown in Figure 2-6:

The header in the packet identifies the base station or handset, packet type, link quality, and other information required by the system for efficient operation.

An ISDN-like "D" channel format is provided in every packet for application-specific information. This information can be used for signaling, short message service (such as in GSM), voice mail notifications, or other data messaging applications. At the present time, the D channel is available in its entirety to the user and is not used for any call processing or Omnipoint system information. Error correction algorithms are used with data transmission via the D channel to ensure delivery (and acknowledgment) of the information.

Although Omnipoint technology can use either TDD or Frequency Division Duplex (FDD) within a cell, the TDD design capability is generally required for use in unlicensed bands. FDD systems cannot operate in the unlicensed PCS bands because of the inability to separate transmit and receive bands adequately.

### 3.2.4. Data Rates

Omnipoint views high speed data as a significant differentiating capability of PCS over conventional cellular services. As such, the PCS provider must be able to provide a form of "data on demand" service that allow higher data rates than conventional cellular technologies are capable of.

To that end, Omnipoint provides the ability for the user to request bandwidth on call origination that is consistent with the application being used. For example, a mobile voice subscriber might require only an 8 Kbps voice channel for a vehicular telephone call. On the other hand, a data user would have the ability to request multiple 8 kbps channels to provide 14.4 kbps or higher data traffic (with error correction providing an objective of $10^{-6}$ error free transmission). Further, an office user (using an unlicensed system with Omnipoint's CAI) might request 32 kbps voice for enhanced voice quality.

The system secures the necessary bandwidth on call origination for the application desired. Omnipoint's system can provide up to 256 kbps full duplex (128 kbps full duplex per single handset due to the current processing limitations in the handset CPU, though this limitation will be removed in future handset CPUs). Bulk transport of data is possible through this capability at up to 512 kbps in broadcast mode. This data rate far exceeds the current 9.6 to 19.2 kbps limitations of other wireless solutions.

Omnipoint has designed the system around a nominal data rate of 8 Kbps per user. However, higher or lower rates are possible through the following acquisition schemes:

Lower data rates (< 8 Kbps) - the base station assigns the user a time slot in non-sequential frames allowing for rates of 4 kbps (every other frame) or lower. The picture below illustrates the use of time slots in non-sequential frames.

SEE FIGURE 2-8

Higher data rates (> 8 Kbps) - the base station simply assigns multiple time slots within a frame, allowing the user to secure multiples of 8 Kbps up to the system maximum. The picture below illustrates the use of multiple time slots in a single frame.

SEE FIGURE 2-7

2.6.3 TDMA Burst Symbol/ Data Rates

The TDMA/TDD data burst rate during transmission is determined by the requirement to provide an 8 kbps digital voice capability for 32 full duplex users per frame during the 20 ms frame period. This requires a TDMA/TDD burst data rate of 512 kbps. Because of the Guard time requirement of the TDD mode of operation, and because of additional overhead bits required for link protocols and control functions, the actual Omnipoint TDMA burst rate *is 781.25 kbps. However, with the 32-ary encoding method used, the TDMA burst symbol rate is only 156.25 ksps.* At *a 5 Mcps DSSS chip rate there are 32 chips per burst symbol and 6.4 chips per* burst *bit. This provides a DSSS Processing Gain of approximately at ~8 dB.*

**2.6.4 Variable Number of Time Slots/User**

By assigning more time slots to one of the users within a cell, that user can communicate at a higher data rate; e.g., by employing 4 time slots, the user terminal could operate at a 32 kbps data rate, versus 8 kbps for one time slot. The Base Station, in a broadcast mode to all mobiles within its cell, can transmit at a data rate of 512 kbps.

**2.6.5 TDD Features**

The use of Time Division Duplex (TDD) permits common antennas to be used for transmit and receive functions at both the Base and Mobile stations, without the need for antenna diplexers. This is because TDD utilizes the same RF frequency for the transmit and receive functions, and because these functions are separated in time at each of the terminals. In addition to the resulting simplicity of the BS and MS terminal designs, use of the same RF frequency and antenna for both transmit and receive functions at the Base Station and Hand Set provides reciprocal propagation paths between the BS and MS terminals. This permits Omnipoint to use the channel sounding PCP transmitted by the MS to determine the two-way path loss between the BS and MS, and also to determine which of the spatial diversity antennas at the BS to use; both to receive from the MS, and to transmit to the Hand Set.
TDD also permits Omnipoint to utilize a single Steered Phased Array antenna at the Base Station for those deployment applications requiring a high gain, highly directional antenna. Therefore TDD provides a much simpler and very much more cost effective design implementation than a simple CDMA or FDMA PCS system, which would require simultaneous steered beams for each mobile user within the cell.

**2.6.6 System Time and Frequency Synchronization Characteristics**

**2.6.6.1 Base Station and Base Station-to-Base Station Synchronization**

The Base Station provides the basic TDMA loop timing structure for its cell or sector. To maximize PCS system throughput capacity, the TDMA frame times for all Base Stations within the same geographical area must be synchronized to begin transmissions within 6 microseconds. Omnipoint utilizes a GPS receiver at the Base Station Controller (and optionally at the BS) to generate the primary reference timing marker for the TDMA frame timing. This marker is captured at the Base Station Controller every second and transmitted down the back haul lines to the attached Base Stations. This synchronization of Base Stations within a given multicell PCS deployment allows a Base Station Controller to temporarily turn off any TDMA time slot of a given cell which may be interfering with a neighboring cell, and it also facilitates Time Slot Interchange (TSI); i.e., switching an MS to a different time slot if a current time slot is being interfered with by an adjacent cell using the same time slot.

### 2.6.6.2 Base Station-to-Network Synchronization

The primary data timing standard in a digital network backhaul system, such as T1 or ISDN BRI or PRI is the PSTN timing standard. To prevent data precession into over run or under run, the Base Station Controller and its Base Stations are synchronized to the PSTN timing standard.

### 2.6.6.3 Base Station-to-Mobile Station Synchronization

*A synchronization preamble is transmitted at the beginning of each TDMA time slot by both the Base Station and Mobile Station. The preamble is contained with the PCP at the MS, and it consists of a 48 PN chip sequence. When this preamble is received at the MS by a digital correlator (matched filter), the digital correlator outputs a triangular sync pulse which is only 2 chips in duration (400 nanoseconds), which is then used to synchronize the start of 32-Ary symbol detection process.* At the Base Station, the transmitted sync preamble is contained within its Power Control Command (PCC) pulse, and it is also 48 chips in duration. The MS uses the received sync preamble in the same manner to synchronize its 32-Ary symbol decoder. The preamble sync pulses (PCPs) received by the Base Station from the Mobile Station are also used to determine which of the spatial diversity antennas to use for transmission and reception with that Mobile Station during the next time slot.

Since non-coherent detection is used by the BS and MS receivers, they do not have to be phase-locked. However, the transmit and receive local oscillator frequencies of the BS and MS are controlled to within +/- 11 parts per million (ppm) over the operating temperature range, so as not to significantly degrade receiver performance. The MS frequency stability is permitted to vary < +\- 10 ppm, and the BS stability requirement is an order of magnitude more stringent at +\- 1 ppm.

### 2.6.7 Mobile Access/Link Setup

### 2.6.7.1 Polling Loop Description

A polling loop, is comprised of 32 Time Division Duplexed (TDD) slots as shown in Figure 2-3. Each time slot is divided into two parts, a BS to MS transmit interval and a MS to BS interval and is structured as sixty four Time Division Multiple Access (TDMA) time slots. Duplexing is accomplished by Time Division Duplexing each TDMA time slot pair. The Slots are not numbered and there is no index associated with the polling loop. Slot synchronization is achieved solely by timing. The first part of a TDD slot is the Base Station (BS) to Mobile Station (MS) transmit frame and the second part of a TDD slot is the MS to BS transmit frame. The BS initiates all transaction between the BS and MS. A General Poll frame is how a MS acquires a connection to a BS. Any time slot that is not seized By a MS contains a General Poll command in the BS to MS part. To acquire a slot, the MS responds to the General Poll Response with a General Poll Response. The BS, upon receiving the General Poll Response, sends a Specific Poll Response. See Figure 2-3. Following signaling data exchanges, the BS and MS begin Bearer Traffic Exchange.

### 2.6.7.1.1 Polling Loop Design - Omnipoint Version 2T.X

A 20 msec loop time is utilized in the Omnipoint Version 2T.X system for a total of 64 8 Kbps time slots simplex, or in a standard voice mode 32 8 Kbps full duplex users per base station RF channel. Figure 2-3 illustrates the loop design.

*SEE FIGURE 2-3*

The Omnipoint system supports two types of polls that can be used for communications between the base station and the handsets within a cell. These comprise the following:

**General polls** - general polls are used by the base station to allow any handset to communicate with a base station for the purpose of seizing an available air slot or to provide information about the base prior to beginning the handoff process.

**Specific polls** - specific polls are used by the base station to solicit a response from a specific handset. This type of poll is used by the base station for finding and/or starting communication with a specific handset.

Polls are used by the base station for establishing and maintaining communications with all of the handsets that are within its cell coverage area.

### 2.6.7.2 General Poll

The General Poll is a command sent from the BS on any currently unoccupied slot. At BS power-up, all 32 BS transmit slots contain a General Poll. The General Poll is an invitation for any MS to seize the time slot. From a BS software point of view the information in the transmit frame header that defines a General Poll is a bit that signifies that this is a poll type frame, a bit that signifies that the BS is the originator of this frame, command bits that signify that this is a General Poll, and a base ID in the data portion of the frame. When a MS wishes to seize a timeslot, it receives a General Poll in an available time slot and responds, in the MS to BS part of the time slot, with a General Poll Response. From the BS software point of view the information in the General Poll Response header is a bit signifying that this is a poll type frame, no transmission error bit set, and the MS ID (PID) in the data portion of the frame. Upon receiving the General Poll Response, the BS transmits a Specific Poll to the MS. Should more than one MS respond to a General Poll in a particular time slot, the collision and subsequent no response from the BS will cause the involved MS's to back-off for a calculated time interval before attempting to seize a time slot via a General Poll and General Response. The back-off algorithm uses the MS ID and therefore each MS will back-off for a different length of time.

### 2.6.7.3 Specific Poll

The Specific Poll is a command sent from the BS to the MS in response to a General Poll Response from a particular MS. See Figure 2-3. The General Poll Response contains the MS's PID. From a BS software point of view the information in the transmit frame header that defines a Specific Poll is a bit that signifies that the BS is the originator of this frame, command bits that signify that this is a Specific Poll, and the MS PID in the data portion of the frame. This PID is issued as a part of the Specific Poll command so that only the originating MS will receive the Specific Poll. Upon receiving a Specific Poll, a MS will respond with a Specific Poll Response in the MS to BS transmit interval of the time slot. From the BS software point of view the information in the Specific Poll Response header is a bit signifying that this is a poll type frame, no transmission error bit set, and the MS ID (PID) in the data portion of the frame matching the PID sent out in the Specific Poll. When the BS receives the Specific Poll Response, it goes through a signaling traffic exchange with the MS, leading directly to Bearer Traffic Exchange.

### 2.6.7.1.2

Channel acquisition occurs whenever a handset needs to access a base slot or requires resynchronization with a base slot. During channel acquisition the handset begins to search for an available base station in its general vicinity by listening for a common signaling poll on any time slot from any possible frequency. Once a base is located with sufficient signal strength and adequate load available, the handset instantaneously seizes an air slot in response to the base station's general poll and the handset provides the base with ID and user information. The base station then transmits a specific poll for that handset to commence communications. At this point, that time slot is removed from being in common signaling mode and the handset and base station are ready to go into traffic mode and begin communications on that time slot. Collisions, during time slot acquisitions, are resolved by an 802.3-like backoff procedure.

The **traffic mode** in the Omnipoint system occurs after a base station and handset have established a transmission path with the appropriate allocation of air slot resources for the service being supported.

In the traffic mode, two basic types of messages can be supported. These include:

**Normal or bearer traffic** - bearer traffic consists of the actual information that is being carried by the wireless link, either a voice link or some other form of digital information. Omnipoint supports a bearer channel of 128 bits per frame in each direction (256 bits per frame full duplex).

**Control traffic** - control traffic provides for link specific data messaging or call control information.

In extremely rare instances, two users on the same time slot in different cells but on the same frequency may encounter propagation characteristics in which the spatial and code separation are insufficient to prevent bit errors and thus the users begin to experience degradation of their radio links. In these cases, the Omnipoint system performs a **Time Slot Interchange (TSI)** wherein one or both of the conflicting handsets are assigned different time slots within its base station to eliminate the collisions between the two users. This is the time domain equivalent of dynamic channel allocation and the system either assigns a vacant time slot to the handset or switches the handset's time slot with that of another user in the same cell which is geographically removed from the interference. The effect is the removal of interference to the users originally experiencing interference due to poor location specific C/I ratios.

### 2.6.7.4 Bearer Traffic Exchange

Once the MS has seized a time slot and been validated (D-channel data), the exchange between the MS and BS leads to Bearer Traffic Exchange (B-channel data). Bearer Traffic can be voice, error-controlled data, or non-error controlled (raw) data. From the BS software point of view the information in the Bearer Traffic header is the absence of a bit signifying that this is poll type frame, no transmission error bit set, and no bit signifying signaling data. Each TDD slot can be configured with the majority of the slot time given to the BS to MS direction, the majority of the slot time given to the MS to BS direction, or symmetric distribution giving fifty percent of the time to both BS and the MS. Typically voice traffic utilizes the bearer channel symmetrically as either end of the link may send voice traffic. In a data exchange, typically more data is sent in one direction and less in the other. For instance, if fax data were being sent to a MS, a higher data rate would be advantageous in the BS to MS direction. In this case the majority of the TDD slot time is given to the MS to BS link. A particular BS to MS and/or MS to BS may also be assigned multiple slots within a single polling loop. This can dramatically increase the bearer channel data every second or every fourth polling loop, the data rate is cut significantly. This technique is useful for instrument telemetry data, fax and video control back channel, etc.

### 2.7 Power Control Method

Although the Omnipoint method of Time Division Multiple Access (TDMA) does not require the strict control of transmitter RF power output necessary to resolve the "Near-Far" problem experienced by CDMA PCS systems, PCS2000 does utilize a proprietary method of controlling transmitted RF power level. This is done to reduce Mobile Station battery consumption and to minimize interference to other cells, which may be operating on the same or adjacent RF channels. By maintaining MS transmitter power at the lowest value required for sufficient MS-to-BS link quality, interference with nearby OFS users is also minimized.

### 2.7.1 Control of Base Station Power Output

Since the Base Station can communicate with up to 64 Mobile Stations within its cell, each of whose distance from the BS can vary from near zero up to the radius of the cell, it may not be practical to control the BS transmitter power to maintain near-constant received power level at each MS during each time slot. This could require a large change (>40 dB) in BS transmit power during each time slot (625 μs) of the TDMA frame. Omnipoint provides BS power control, averaged over a longer time interval, and is investigating the various alternatives to utilize BS power control on a slot-by-slot basis to minimize cell-to-cell and cell-to-OFS interference.

### 2.7.2 Control of Mobile Station Power Output

To permit RF channel reuse in nearby PCS cells, reduce interference with OFS users, and conserve battery power in the handheld units, Omnipoint provides adaptive power control of the Mobile Station transmitters within each PCS cell using a proprietary Power Control Pulse (PCP). In Version 2T.X, the PCP is transmitted by the MS in its assigned TDMA time slot just before the BS transmits to the MS in its associated TDD time slot. This PCP provides the BS with a measurement of the MS-BS path transmission loss and link quality, and serves as the basis for a Power Control Command (PCC) transmitted from the BS to the MS. The PCC causes the MS to change its output power in minimum steps of 3 dB, until the quality of the PCP received by the BS is above an acceptable threshold. This simple method of controlling MS transmitted power minimizes potential intercell interference, and also interference with nearby OFS user receivers.

In some TDMA systems, the latency of the polling loop signals prevent the use of closed loop power control. However, with Omnipoint's Version 2T.X DD/TDMA design approach, the elapse time for transmission of the PCP, the response by the MS to the PCC from the BS, and the next MS bearer transmission burst is less than 500 us--less than 2.5% of the frame time. Because of its fast response time, Omnipoint's Power Control algorithm acts faster than the signal changes due to small scale multipath fading and shadowing, and helps to mitigate any performance degradation caused by these effects.

*The BS can also use the PCP information to measure the propagation time to each MS within its cell. This provides an estimate of the range from the BS to each MS. For 911 support, if the PCS service operator invests in the necessary software, a handset could provide PCP signals to multiple BSs for a rough location estimate in emergency situations.*

**2.8 Digitized Voice and Data Signals**

**2.8.1 Digitized Voice Signal Structure**

**2.8.1.1 Speech Coding Algorithms**

<u>Overview</u>

The speech coder specified herein supports the Omnipoint PCS system, providing switchable rate (8 Kbps/ 16 Kbps/24 Kbps 32 Kbps/40 Kbps/64 Kbps) speech compression to allow selectable channel capacity or voice quality. The speech coder will execute on a DSP chip or equivalent device. In the initial implementation, the algorithm will execute on a 24-bit fixed-point DSP.

In the initial implementation, the system diagram in Figure 2-4 applies to both ends of the Omnipoint over-air channel. In this case both the Mobile Station (MS) and the Base Station (BS) will utilize the same DSP algorithms and interfaces. In subsequent implementations, the BS and MS architectures will change from that shown in Figures 2-4. References to future implementation requirements are made throughout this specification and the speech coder design should be flexible enough to support these future implementation options.

**Reference Documents**

CCITT G.711       Pulse Code Modulation (PCM) of Voice Frequencies.

CCITT G.726       General Aspects of Digital Transmission Systems; Terminal Equipment's - 40, 32, 24, 16 Kbits/s Adaptive Differential Pulse Code Modulation (ADPCM).

EIA/IS-19         Recommended Minimum Standards for 800-MHz Cellular Subscriber Units, Paragraph 10 - DTMF Signaling.

**Functional Description**

**Compression Modes**

The speech coder shall have four compression modes selectable via host command.

1) Personal Communication system CELP (PCS CELP) - 8 Kbps

2) ADPCM (CCITT G.726) - 32 Kbps, 24 Kbps, and 16 Kbps

3) ADPCM (CCITT G.726) - 40 Kbps

4) μLaw PCM (CCITT G.711) - 64 Kbps (pass through)

The speech decoder will receive formatted and synchronized data frames from the Spread Spectrum Modem chip and will generate 64 Kbps PCM voice data to the CODEC using either the PCS CELP algorithm, one of the ADPCM (G.726) algorithms or the PCM pass through algorithm. The speech encoder will receive 64 Kbps PCM data from the CODEC and compress this PCM signaling using the algorithm selected by the host controller (64 Kbps PCM, 32/24/16 Kbps or 40 Kbps ADPCM, or PCS CELP). The same compression mode will be used for both encode and decode operations. Data passed to and received from the speech coder will be synchronized with timing signals provided from the Spread Spectrum Modem and will conform to the framing structures defined in this specification. External control inputs will be provided to instruct the speech coder to implement muting or soft decay (interpolation) of the voice output during periods of degraded channel conditions with unacceptably high error rates (i.e. during blockage or hand-off conditions). Status outputs will be provided indicating speech coder performance and FEC error count (if required).

**Additional Capabilities**

Additional capabilities in the speech coder include the following. These capabilities are listed in desired priority of implementation.

a) Interpolate and Mute Functions to provide graceful audio degradation in the presence of errors.

b) Error correction coding (if required) to support reliable voice communication across the communication link when operated in PCS CELP mode.

c) Near-end echo cancellation. A short path echo canceler will be incorporaced in all compression modes to minimize the effect of near end echoes.

d) DTMF tone generation and detection.

e) Programmable level setting for the receive, transmit and sidetone loop voice paths under host control.

f) Provide reasonable reproduction of Music-on-Hold.

g) Voice activity detection/ Comfort noise generation.

h) Echo suppressor disable tone detection (for fax and data modems).

i) Voice encryption/decryption.

**Note: These additional capabilities may be required in BS speech coders, MS speech coders or both.**

In the initial implementation, the PCS CELP algorithm uses only 7.2 Kbps of the available 8 Kbps bandwidth. The remaining 16 bits per frame are reserved for future uses. These bits are currently reserved for:

1) Voice/Pitch Enhancement.

2) Forward Error Correction (FEC).

3) In-band signaling/DTMF.

4) In-band Voice Activity Detect (VAD).

5) Music on Hold.

**Interpolate Function**

The speech coder, when operating in any of its compression modes, shall provide an interpolate function to soften the effect of errors. An INTERPOLATE control register bit will indicate to the speech coder that the previous frame of voice data was received in error by the Spread Spectrum Modem. The speech coder will output its predicted voice pattern to the CODEC instead of the data received from the modem. The speech coder shall be capable of receiving up to 4 consecutive bad frames (i.e. INTERPOLATE bit set) and will output an increasingly attenuated version of its predicted voice pattern for each consecutive error. When the number of consecutive bad frames exceeds a threshold of 4, the speech coder shall mute its output to the CODEC. The reception of a single good frame, indicated by the INTERPOLATE bit cleared in the control register, shall immediately reset the speech coder out of interpolate mode (including mute conditions created by the interpolate function) and the good frame of voice will be decoded and sent to the CODEC. Decoded data only will be affected by this mode. Encoded data will continue to be sent uninterrupted to the modem side of the DSP.

**Mute Function**

The speech coder, when operating in any of its compression modes, shall provide a mute function to generate silence when voice data is not being transferred by the Spread Spectrum Modem. A MUTE control register bit shall force the speech coder to output silence to the CODEC instead of the data received from the modem. The reception of a single voice frame, indicated by the MUTE bit cleared in the control register, shall immediately reset the speech coder out of mute mode and the frame of voice will be decoded and sent to the CODEC. Decoded data only will be affected by this mode. Encoded data will continue to be sent uninterrupted to the modem side of the DSP.

### Echo Cancellation

The details of echo cancellation operation will be presented in future documentation.

### DTMF Tone Generation and Detection

The speech coder shall provide the capability to generate and detect up to 31 possible tones including the 12 DTMF signals as defined in EIA/IS-19. Other candidates for tones to be generated include a 1 KHz test tone; dialtone, busy and ringback tones. A lower level DTMF signal will be sent as a sidetone via the CODEC interface. The DTMF signal will need to be coded and transmitted in-band via the modem interface. The generator will be under host control.

### Programmable Level Control

Figure 2-5 shows a rough block diagram of voice paths through the speech coder and indicates those points where programmable level control is required. The sidetone path loops PCM data from the CODEC back to the CODEC. The transmit path consists of PCM data which is encoded and output to the Spread Spectrum Modem. The receive path consists of encoded data from the Spread Spectrum Modem which is decoded and output as PCM data to the CODEC. The receive level control will also control the level of DTMF tones sent to the CODEC. Appropriate level settings will be input to the speech coder from the modem or host microcontroller via the control registers.

### Voice Activity Detection/Noise Comfort Generation

The detail of VAD and comfort noise generation will be provided in subsequent submissions.

### Echo Suppressor Disable Tone Detection

The details of echo suppressor disable tone detection will be provided in subsequent submissions.

### Voice Encryption Decryption

The details of voice encryption/decryption will be provided in subsequent submissions.

### Interface Requirements

### Modem Interface

### Physical Interface and Timing

The interface between the speech coder and the spread spectrum modem is based on synchronous bi-directional serial data transfer. The data transfer is synchronized by timing signals received from the modem. Compressed voice is clocked in and out at a rate of 8 Kbps, 16 Kbps, 24 Kbps, 32 Kbps, 40 Kbps or 64 Kbps, depending on the mode of operation (PCS CELP, 32/24/16 Kbps or 40 Kbps ADPCM, or PCM respectively). The DSP frame size shall be 20 msec to match the PCS superframe size of the Omnipoint system. The data rate is guaranteed over each 20 msec period (e.g. for PCS CELP, the DSP will receive and transmit 20 bytes of compressed voice every 20 msec, 32 Kbps ADPCM = 80 bytes, 40 Kbps = 100 bytes and PCM = 160 bytes). Within the 20 msec frame however, data will be transferred to and from the DSP in packets as it is received and sent by the modem. Each packet will consist of 20 bytes of voice (also called a speech frame) followed by 12 bytes (subject to change) of control/status information. The 12 bytes following the voice in the receive direction shall be control information from the modem. The 12 bytes following the voice in the transmit direction shall be status information from the DSP.

An additional SYNC signal will be sent by the modem to the speech coder to indicate that the modem is in sync, to indicate the first valid data bit of a new frame and to reset the speech coder's buffer pointers to the beginning of its buffer.

The interface between the speech coder and the Spread Spectrum Modem includes the following signals:

TXD -       Serial Transmit Data output, clocked by the rising edge of the CLK signal.

RXD -       Serial Receive Data input, sampled by the falling edge of the CLK signal.

CLK -       A single clock input signal to be used both for the receive and transit data. The clock shall be gated on and off by the modem as required to send the 20 + 12 byte packets of compressed voice and control/status. The clock rate shall be 2.0 MHZ (nominal). In the initial implementation, the clock rate shall be 2.048 MHz. Changes in this clock rate shall not affect DSP algorithm operation. An internal interrupt shall be generated after each byte of data (8 CLK transitions) which will cause the DSP to read the byte of data just received and load the transmit shift register with the next byte to be transmitted.

SYNC -      An input signal received from the modem to indicate that the modem is synchronized. The SYNC signal also indicates the beginning of a new frame of data. SYNC shall be an active high pulse which is one period of CLK in duration. When the modem is synchronized and is transferring voice data, the rate of SYNC shall be 50 Hz (every 20 msec). SYNC shall be connected to an external edge sensitive interrupt of the DSP. A negative transition on SYNC will cause the speech coder to reset its buffer pointers to the beginning of its buffers.

**Note: In the initial implementation, the modem interface shall utilize the serial interface just described. In subsequent implementations, the encoded voice and control/status information may be sent and received by a host microcontroller via a parallel host interface port. In either case, the compressed voice as well as control/status information will be sent over a single interface**.

**Protocol and Data Definition**

Each 20 msec frame will be made up of one, four, five or eight packets (20 bytes of compressed voice and 12 bytes of control/status) depending on the compression mode selected. Where applicable, the control function (i.e. Mute and Interpolate) shall be applied to the previous 20 bytes of compressed voice in the packet, rather than being applied for the entire 20 msec frame. Note that in the initial implementation 24 Kbps and 16 Kbps ADPCM are supported but optional for final implementation.

Six different data framing structures are to be supported by the speech coder; one for PCM pass through, four for ADPCM compression and one for PCS CELP. For PCM, the voice bit streams will be identical to those defined in the CCITT G.711 standard. For ADPCM the voice bit streams will be identical to those defined in the CCITT G.726 standard. For PCS CELP compression, the voice stream will include the CELP parameters with the significant bits protected by an error correction code (if required). The number of speech frames per PCS superframe is defined for each compression mode as follows.

a. PCS CELP

The PCS CELP frame shall be 160 bits and will convey 20 msec of speech. The frame size will correspond to the Spread Spectrum Modem's TDMA slot size 625 msec. Each PCS superframe will include 2 speech frames per link (one for transmit and one for receive if no VAD).

b. 32 Kbps ADPCM

Frame structure and data formatting shall be in accordance with the CCITT G.726 Specification. No error correction bits will be included in the frame. The ADPCM frame size shall be 125 $\mu$sec (8 KHz) and the overall number of bits in each frame shall be 4. The Spread Spectrum Modem's frame size (TDMA slot size) shall be 160 bits. Each PCS superframe (20 msec) will include 8 160 bit speech frames per link (4 for transmit and 4 for receive if no VAD ) .

c. 40 Kbps ADPCM

Frame structure and data formatting shall be in accordance with the CCITT G.726 Specification. No error correction bits will be included in the frame. The ADPCM frame size shall be 125 $\mu$sec (8 Khz) and the overall number of bits in each frame shall be 5. The Spread Spectrum Modem's frame size (TDMA slot size) shall be 160 bits. Each PCS superframe (20 msec) will include 10 160 bit speech frames per link (5 for transmit and 5 for receive if no VAD).

d. 64 Kbps PCM

Frame structure and data formatting shall be in accordance with the CCITT G.711 Specification. No error correction bits will be included in the frame. The PCM frame size shall be 125 µsec (8 KHz) and the overall number of bits in each frame shall be 8. The Spread Spectrum Modem's frame size (TDMA slot size) shall be 160 bits. Each PCS superframe (20 msec) will include 16 160 bit speech frames per link (8 for transmit and 8 for receive if no VAD). Note again that 16 Kbps and 24 Kbps ADPCM are supported but optional in the initial version.

**CODEC Interface**

**Physical Interface and Timing**

The speech coder connects to a standard PCM CODEC via a synchronous bi-directional serial interface. The data transfer is synchronized by timing signals received from the modem. The same clock and frame synchronization signals will be used for transmit and receive. The frame (word) rate shall be 8.0 KHz nominal, with 8 bits per word for an overall full-duplex data rate of 64 Kbps. The data to and from the CODEC will be µLaw encoded.

The CODEC interface will include the following signals and is shown in Figure 4. In the initial implementation, the CODEC interface will utilize the SSI port of the DSP.

STD -    Serial Transmit Data output, clocked by the rising edge of the SCLK signal.

SRD -    Serial Receive Data input, sampled by the falling edge of the SCLK signal.

SCLK -    A clock input used for both receive and transmit data. The clock rate shall be 2.0 MHz (nominal). In the initial implementation, the clock rate shall be 2.048 MHz. Changes in this clock rate shall not affect DSP algorithm operation. An internal interrupt shall be generated after each byte of data (8 SCLK transitions) which will cause the DSP to read the byte of data just received and load the transmit shift register with the next byte to be transmitted.

FS -    A frame synchronization pulse input, used for both receive and transmit data. FS shall be an active high pulse which is one period of SCLK in duration. The FS rate shall be 8.0 KHz (nominal). Eight bits of data shall be transferred after each FS.

The CODEC interface will be synchronized every 20 msec by the SYNC signal from the modem.

**Microcontroller Interface**

In the initial implementation, a microcontroller interface is not planned. However in subsequent implementations, a microcontroller interface may be utilized to load selected DSP algorithms (depending on the compression mode selected). A microcontroller interface may also be used as an alternate parallel interface for the serial Modem interface. The speech coder shall be able to transfer compressed voice and control/status information via a byte wide host interface in addition to the previously described serial interface. Only one of the interface options will be used at a given time.

**Physical Interface and Timing**

For the DSP implementation of the speech coder, the microcontroller interface shall utilize the byte-wide host interface port. Physical interface and timing details will be provided in subsequent submissions.

**Protocol and Data Definition**

The data definition for the modem interface via a parallel host port shall be the same as that described in Sections 3.1 Modem Interface and 3.4 Control/Status Definition. The compressed voice and control/status information will be stored in the same buffer locations as those used by the serial modem interface. For algorithm loading via the parallel microcontroller interface, see Section 3.5.

**Control/Status Definition Control/Status Register Locations**

Each speech frame of compressed voice across the modem interface is followed by 12 bytes of control or status information depending on the direction of data flow. The following tables indicate the relative locations of the control and status registers within each packet.

| Compressed Voice Interface (Modem to DSP, i.e. Rx Voice + Control) | | |
|---|---|---|
| Bytes 0-19 | Compressed Voice (20 bytes) | |
| Byte 20 | Mute/Interpolate Control Register | Control Register #1 |
| Byte 21 | Compression Mode Control Register | Control Register #2 |
| Byte 22 | Tone Detection Control Register | Control Register #3 |
| Byte 23 | Tone Generation Control Register | Control Register #4 |
| Byte 24 | Transmit/Sidetone Level Control Register | Control Register #5 |
| Byte 25 | Receive Level Control Register | Control Register #6 |
| Bytes 26-29 | Unused | Control Registers #7-10 |
| Byte 30 | Sync Word #1 | Control Register #11 |
| Byte 31 | Sync Word #2 | Control Register #12 |

| Compressed Voice Interface (DSP to Modem, i.e. Tx Voice + Status) | | |
|---|---|---|
| Bytes 0-19 | Compressed Voice (20 bytes) | |
| Byte 20 | Unused | Status Register #1 |
| Byte 21 | Compression Mode Status Register | Status Register #2 |
| Byte 22 | Tone Detection Status Register | Status Register #3 |
| Byte 23 | Tone Generation Status Register | Status Register #4 |
| Bytes 24 | Voice Detect/FEC Status Register | Status Register #5 |
| Bytes 25-29 | Unused | Status Registers #6-10 |
| Byte 30 | Sync Word #1 | Status Register #11 |
| Byte 31 | Sync Word #2 | Status Register #12 |

The following is a bit by bit definition of all the control and status bytes defined for the speech coder.

| Mute/Interpolate Control Register (#1) | | | | | | | |
|---|---|---|---|---|---|---|---|
| D7 | D6 | D5 | D4 | D3 | D2 | D1 | D0 |
| Unused | Unused | Unused | Unused | Unused | MIC-MUTE | MUTE | INTER POLATE |

MIC MUTE: Mute the output to the Spread Spectrum Modem starting with the next frame.

1 - Mute
0 - Normal Operation

Note: MIC-MUTE effects the encode operation only. Decoded data will continue to be sent uninterrupted to the CODEC.

MUTE: Mute the output to the CODEC for the preceding 20 bytes of voice.

1 - Mute
0 - Normal operation

INTERPOLATE: Indicates that the preceding 20 bytes of voice to the decoder was received in error by the Spread Spectrum Modem. The Interpolation algorithm should be applied to this voice.

1 - Interpolate for the preceding 20 bytes of voice
0 - Normal Operation

Note: All Control Register bits shall be cleared (0) following a reset.

| Compression Mode Control Register (#2) | | | | | | | |
|--------|--------|--------|--------|-----|-----|-------|-------|
| D7 | D6 | D5 | D4 | D3 | D2 | D1 | D0 |
| Unused | Unused | Unused | Unused | ECE | LPB | MODE1 | MODE0 |

ECE: Echo canceler enable bit

1 - Enable
0 - Disable

LPB: Digital loop back bit:

1 - Internally loopback modem interface (compressed voice) data

0 - Normal operation

MODE1,MODE0: Select data rate and speech compression type:

0,0 - PCS CELP
0,1 - 32 Kbps ADPCM
1,0 - 40 Kbps ADPCM
1,1 - Pass through 64K PCM

**Note: The speech coder always powers up in PCS CELP mode.**
Note: All Control Register bits shall be cleared (0) following a reset.
Note: 16 KBps and 24 Kbps ADPCM are supported but not implemented in the above mode selection.

| Tone Detection Control Register (#3) | | | | | | | |
|--------|--------|--------|--------|--------|--------|--------|--------|
| D7 | D6 | D5 | D4 | D3 | D2 | D1 | D0 |
| Unused | Unused | Unused | Unused | Unused | Unused | Unused | Unused |

DTMF Detection Control. Currently unused, reserved for future expansion.
**Note: All Control Register bits shall be cleared (0) following a reset.**

| Tone Generation Control Register (#4) | | | | | | | |
|--------|--------|--------|-------|-------|-------|-------|-------|
| D7 | D6 | D5 | D4 | D3 | D2 | D1 | D0 |
| Unused | Unused | Unused | DTMF4 | DTMF3 | DTMF2 | DTMF1 | DTMF0 |

DTMF4-0:   DTMF generation command. Generate the selected tone(s) starting with the next frame.

| D4 | D3 | D2 | D1 | D0 | CODE |
|----|----|----|----|----|------|
| 0 | 0 | 0 | 0 | 0 | NONE (normal operation) |
| 0 | 0 | 0 | 0 | 1 | 1 |
| 0 | 0 | 0 | 1 | 0 | 2 |
| 0 | 0 p986X | 0 | 1 | 1 | 3 |
| 0 | 0 | 1 | 0 | 0 | 4 |
| 0 | 0 | 1 | 0 | 1 | 5 |
| 0 | 0 | 1 | 1 | 0 | 6 |

(continued)

| D4 | D3 | D2 | D1 | D0 | CODE |
|----|----|----|----|----|------|
| 0 | 0 | 1 | 1 | 1 | 7 |
| 0 | 1 | 0 | 0 | 0 | 8 |
| 0 | 1 | 0 | 0 | 1 | 9 |
| 0 | 1 | 0 | 1 | 0 | * |
| 0 | 1 | 0 | 1 | 1 | 0 |
| 0 | 1 | 1 | 0 | 0 | # |
| 0 | 1 | 1 | 0 | 1 | A |
| 0 | 1 | 1 | 1 | 0 | B |
| 0 | 1 | 1 | 1 | 1 | C |
| 1 | 0 | 0 | 0 | 0 | D |
| 1 | 0 | 0 | 0 | 1 | Reserved |
| . | . | . | . | . | . |
| 1 | 1 | 1 | 1 | 1 | Reserved |

Note: All Control Register bits shall be cleared (0) following a reset.

| Transmit/Sidetone Level Control Register (#5) | | | | | | | |
|------|------|------|------|------|------|------|------|
| D7 | D6 | D5 | D4 | D3 | D2 | D1 | D0 |
| TX3 | TX2 | TX1 | TX0 | ST3 | ST2 | ST1 | ST0 |

TX3-0:   Transmit Level Control. Apply the gain setting to encoded data being sent to the Spread Spectrum Modem.

0000 = 0 dB
0001 = +1 dB
0010 = +2 dB
0011 = +3 dB
0100 = +4 dB
0101 = +5 dB
0110 = +6 dB
0111 = +7 dB
1000 = 1111 = undefined

ST3-0   Sidetone Level Control. Apply the attenuation setting to 64K PCM data being looped from CODEC input to CODEC output.

0000 = Infinite attenuation
0001 = -21.5 dB
0010 = -18.0 dB
0011 = -15.0 dB
0100 = -13.5 dB
0101 = -12.0 dB
0110 = -10.5 dB
0111 = -8.5 dB
1000 - 1111=undefined

Note: All Control Register bits shall be cleared (0)following a reset.

| Receive Level Control Register (#6) | | | | | | | |
|---|---|---|---|---|---|---|---|
| D7 | D6 | D5 | D4 | D3 | D2 | D1 | D0 |
| Unused | RX6 | RX5 | RX4 | RX3 | RX2 | RX1 | RX0 |

RX7-0: Receive Level Control. Apply the following gain setting to decoded data being sent to the CODEC.

| | Integral Bits | | Fractional Bits | | | | | Line ar Gain Fact or |
|---|---|---|---|---|---|---|---|---|
| | D6 | D5 | D4 | D3 | D2 | D1 | D0 | |
| | RX6 | RX5 | RX4 | RX3 | RX2 | RX1 | RX0 | |
| BINARY WEIGHT | $2^1$ | $2^0$ | $2^{-1}$ | $2^{-2}$ | $2^{-3}$ | $2^{-4}$ | $2^{-5}$ | |
| DECIMAL WEIGHT | 2 | 1 | .5 | .25 | .125 | 0625 | .03125 | |
| EXAMPLE1 | 0 | 0 | 0 | 0 | 0 | 0 | 0 | 0.0 |
| EXAMPLE2 | 0 | 0 | 1 | 0 | 0 | 0 | 0 | 0.5 |
| EXAMPLE3 | 0 | 1 | 0 | 0 | 0 | 0 | 0 | 1.0 |
| EXAMPLE4 | 1 | 1 | 1 | 1 | 1 | 1 | 1 | 3.96 875 |

Note: All Control register bits shall be cleared (0) following a reset.

| Sync Word #1 (Control/Status Register #11) | | | | | | | |
|---|---|---|---|---|---|---|---|
| D7 | D6 | D5 | D4 | D3 | D2 | D1 | D0 |
| 1 | 1 | 0 | 0 | 0 | 0 | 1 | 1 |

Synchronization Word #1. Synchronization Words are provided in both control and status data streams to allow for modem/speech coder synchronization in system implementations where an external SYNC interrupt is not available. A unique pattern will be assigned to the Sync Word registers which will be detected by the speech coder. The Sync Words and the external interrupt accomplish the same function. Sync Word #1 = C3 hex.

Note: All Control Register bits shall be cleared (0) following a reset.

| Sync Word #2 (Control/Status Register #12) | | | | | | | |
|---|---|---|---|---|---|---|---|
| D7 | D6 | D5 | D4 | D3 | D2 | D1 | D0 |
| 1 | 0 | 1 | 0 | 0 | 1 | 0 | 1 |

Synchronization Word #2. Synchronization Words are provided in both control and status data streams to allow for modem/speech coder synchronization in system implementations where an external SYNC interrupt is not available. A unique pattern will be assigned to the Sync Word registers which will be detected by the speech coder. The Sync Words and the external interrupt accomplish the same function. Sync Word #2 = A5 hex.

Note: All Control Register bits shall be cleared (0) following a reset.

| Compression Mode Status Register (#2) | | | | | | | |
|---|---|---|---|---|---|---|---|
| D7 | D6 | D5 | D4 | D3 | D2 | D1 | D0 |
| Unused | Unused | Unused | Unused | ECE | LPB | MODE1 | MODEO |

ECE: Status of current echo canceler enable bit:

1 - Enable
0 - Disable

LPB: Status of current digital loop back setting:

1 - Internally loopback modem interface (compressed voice) data
0 - Normal operation

MODE1, MODE0: Status of current data rate and speech compression type.:

0,0 - PCS CELP
0,1 - 31 Kbps ADPCM
1,0 - 40 Kbps ADPCM
1,1 - Pass through 64K PCM

**Note: The speech coder always powers up in PCS CELP mode.**
Note: All Status Register bits shall be cleared (0) following a reset.
Note: 16 Kbps and 24 Kbps ADPCM are supported but not implemented in the above modes.

| Tone Detection Status Register (#3) | | | | | | | |
|---|---|---|---|---|---|---|---|
| D7 | D6 | D5 | D4 | D3 | D2 | D1 | D0 |
| Unused | Unused | Unused | Unused | Unused | Unused | Unused | Unused |

DTMF Detection Status. Currently unused, reserved for future expansion.
Note: All Status Register bits shall be cleared (0) following a reset.

| Tone Generation Status Register (#4) | | | | | | | |
|---|---|---|---|---|---|---|---|
| D7 | D6 | D5 | D4 | D3 | D2 | D1 | D0 |
| Unused | Unused | Unused | DTMF4 | DTMF3 | DTMF2 | DTMF1 | DTMF0 |

DTMF4-0: DTMF generation status. Echoes the status of the tone generation command.

| Voice Detect/FEC Status Register (#5) | | | | | | | |
|---|---|---|---|---|---|---|---|
| D7 | D6 | D5 | D4 | D3 | D2 | D1 | D0 |
| Unused | Unused | Unused | Unused | Unused | Unused | FEC | VODET |

FEC: Forward error correction flag (if required):

1 - Error was corrected in previous frame
0 - No error was corrected in previous frame.

VODET: Voice Detection (future option):

1 - Voice detected in previous frame
0 - No voice detected in previous frame.

Note: All Status Register bits shall be cleared (0) following a reset.

## DSP Algorithm Loading

The DSP shall be capable of loading the speech coder algorithms from a byte-wide external EPROM or from a host microcontroller via a byte-wide host interface port. In either case, the speech coder software shall contain a bootloader function to load the appropriate algorithm(s) into fast internal and external RAM and execute them.
In the initial implementation, the DSP will be loaded from a byte wide EPROM connected to the DSP's external memory bus. This is referred to as stand-alone mode. In subsequent implementations, the DSP algorithms will be loaded by a host microcontroller via the byte wide host interface. To ease external RAM requirements, it is envisioned that only the selected compression mode algorithm and applicable additional capabilities will be loaded. The DSP will be reloaded via the host microcontroller each time a different compression mode is selected.

**Main Clock**

The speech coder device shall operate at a maximum nominal frequency of 40 MHz. This operating frequency shall be generated by the DSP from an external 50% duty cycle clock rate of 16 KHz using the multiplication capability of the built in PLL. The DSP shall have a maximum performance of 20 MIPS at this clock rate.

**Performance Requirements**

**PCS CELP Speech Coder**

a) Input sampling rate: 8.0 KHz(nominal)
b) Input frame length: 20 msec
c) Output frame size: 160 bits compressed voice + 96 bits control/status
d) Output frame rate: 50 frames/second
e) Speech quality:

very good quality @ BER < $10^{-5}$
good quality @ $10^{-5}$ <BER< $10^{-4}$
acceptable quality @ $10^{-4}$<BER<$10^{-3}$

f) End to end delay: max. 80 msec
g) Interpolation performance:

The interpolation parameters shall be set to roughly yield the following audio degradation levels:

1% Frame Errors - barely noticeable audio degradation
3% Frame Errors - some minor degradation but voice quality is still acceptable
11% Frame Errors - Speech coder generates full mute

**ADPCM Speech Coder**

ADPCM coding performance shall be in accordance with the CCITT G.726 Specification.
The maximum delay introduced by the algorithm implementation should be less than 2 milliseconds.

**Echo Canceler**

a) Canceler's echo path: max 5.5 msec.
b) ERLE: min. 30 dB

**DTMF Generation**

a) The nominal frequencies and the frequency stability shall be in accordance with the specified requirements in EIA/IS-19.

b) The DTMF signal level will be TBD.

c) The DTMF sidetone will be fed back at a level determined by the receive gain control setting.

d) The DTMF signal duration will be host controllable in units of a frame.

**DSP Bandwidth**

The speech coder algorithms shall utilize TBD of the available DSP bandwidth (approximately TBD MIPS).

**Software Characteristics**

**Control/Status Software Interface**

Data received over the compressed voice interface from the modem to the DSP contains compressed voice together with control information to the speech coder. Likewise, data transmitted from the DSP to the modem contains compressed voice together with status information from the speech coder.

Twelve bytes of control and status information are sent along with every 20 bytes of compressed voice information. For CELP, 20 bytes of compressed CELP data (corresponding to 20 msec of speech) are sent at "time0", followed by 12 bytes of control information that apply to the same 20 msec speech frame. At time t=20 msec, 32 more bytes are transmitted. A similar process occurs in the reverse direction, with the difference being the control information is replaced by status information. Thus for 8 Kbps CELP, these 32 byte packets are transmitted once very 20 msec. Note that for higher bit rate algorithms, they are transmitted more frequently. For 32 Kbps, there are 4 32 -byte packets every 20 msec. For 40 Kbps, there are 5 32-byte packets every 20 msec. For 64 Kbps, there are 8 32-byte packets every 20 msec. However the packet rate for higher bit rate algorithms is not guaranteed to be uniform (i.e. for 32 Kbps, the packet rate will not be 5 msec). These packets are transferred as required by the modem. (note: 16 Kbps and 24 Kbps ADPCM are supported but optional for implementation.

See Section 3.4 for control/status definition and relative locations of the control/status bytes within the frame.

**Speech Coder Buffering**

As described in previous sections, the uncompressed voice interface of the PCS CELP Speech Coder is via the Synchronous Serial Interface (SSI) of the DSP. In the initial implementation, the compressed voice interface is via the Serial Communications Interface (SCI) of the DSP. The PCS CELP speech coder software interfaces to both the uncompressed and compressed voice data streams by means of double buffers.

Figure 2-9 shows the Speech Coder buffer structure and associated signal flow in the direction of speech decompression. Compressed speech is written into the SCI buffers and operated upon by the compression algorithm in the internal Work Buffer. The decompressed speech output is written into the SSI Buffer. Uncompressed speech is then "spoken out" of the SSI Buffers. Speech compression has a similar set of buffers and is essentially the reverse of this process. Each of the three SSI Buffers is 160 bytes long, for a total buffer length of 480 bytes (only the 8 MSBs of each 24-bit word are used). Each of the SCI buffers shown correspond to 20 msec of real time (except for the work buffer), regardless of the buffer size or the compression algorithm in use. For example, for CELP synthesis, the SCI Buffers are each 20 bytes long, for a total buffer length of 40 bytes. SSI Buffers A, B, and C are initially filled with all zeroes. At time t=0, SCI Buffer A begins to fill with 20 bytes (160 bits) of CELP data, while SSI Buffer A is being "spoken". At time t=20 msec, SCI Buffer A is full of these 20 bytes and SSI Buffer A has "emptied". SCI Buffer A is then copied into the Work Buffer. At this time, decompression begins upon the Work Buffer contents, with the uncompressed data being placed into SSI Buffer C. Note that while SSI Buffer C is being filled, SSI Buffer B is being spoken and SCI Buffer B is being filled with new compressed voice. A similar process occurs in the reverse direction for speech compression.

Note that for PCM and ADPCM, the SCI buffer lengths still correspond to 20 msec of real time. However, for these algorithms, the Work Buffer length corresponds to a shorter period of time. For example, for 40 Kbps G.726 ADPCM, the Work Buffer length corresponds to 4 msec of real time. This is due to the fact that for each algorithm the compressed voice is "packetized" into 20 bytes of compressed voice and 12 bytes of control/status information.

Regardless of the compression algorithm used, the SCI double buffers must still be 20 msec each in length because of the over-air framing structure.

**2.8.1.2 Variable Rate Speech Coding**

VAD (Voice Activity Detection) control of the voice transport mechanism is specifically supported in the Omnipoint CAI. Utilizing the VAD algorithm in the vocoder the CAI provides bandwidth turn around services allowing (for example) the 8 kbps vocoder algorithm to operate over the CAI link at only 4 kbps, thus allowing the potential for doubling the maximum number of users per RF channel (e.g. up to sixty- four VAD 8 kbps users).

**2.8.2 Data Signal Structures**

**2.8.2.1 Variable Data Rates**

**Overview**

PCS2000 has been designed to serve as an efficient and flexible data conduit for a myriad of data, video, multi-media and broadcast applications. The design allows rates greater than or less than the basic 8 Kbps rate to be provided to the end user.

The over-the-air protocol provides 160 bearer bits per slot per 20 milliseconds to an MS. These 160 bearer bits are protected by a 16 bit FCW. See Figure 2-6. At the subscribers option ARQ error correction may be applied to the bearer data. A window size of two is used for the ARQ process. The number of retry attempts are setable by the service provider or subscriber.

The system provides for rates greater than the 8 Kbps basic rate. These higher rates, called "Super Rates", are achieved by allocating multiple slots to a single MS. Up to the full bandwidth of the BS, 32 full duplex slots or 256 Kbps (full duplex) in 8 Kbps steps, may be assigned to a single MS. See Figure 2-7.

The system also provides for data rates lower than the 8 Kbps basic rate. This is accomplished by skipping polling cycles. See Figure 2-8. Thus 4 Kbps, 2 Kbps, etc. can be provided. Up to 24 polling cycles may be skipped, at 320 bps per loop, providing a minimum data rate of 320 bps efficiently (i.e., without using rate adaptation). Intermediate rates or even lower rates may be obtained by using rate adaptation.

Asymmetric data channels are supported by the system. In this mode the greater portion of a slot can be devoted to either the BS to MS transmission or the MS to BS transmission. High speed transport can be provided in this mode; up to 512 Kbps sent half duplex in either direction, with acknowledgment and ARQ.

A specific sub-mode, "broadcast", exists in the asymmetric bandwidth case. Each broadcast sub channel is identified by a special broadcast identifier. Up to 255 broadcast channels may be identified. For these point-to-multipoint applications, broadcast frames are not acknowledged.

In addition to the above data channels, there always exists an out-of-band D channel in each time slot. User data may be sent over this channel without disturbing the normal bearer channels. The data rate of this channel is 400 bps. This channel can be used for any purpose including short messaging implementation.

**2.8.2.2 Message Acknowledgment**

The end user has the option of either activating ARQ error correction or leaving error correction disabled, for example, for video applications. The ARQ mechanism uses a data window of two frames. When a frame is determined to be corrupted, via the standard ISDN 16 bit FCW, the receiving unit signals the transmitter for a retransmission. The number of re-transmission attempts can be set by the PCS service operator or the subscriber.

The maximum uncorrected frame error rate of the system is $10^{-2}$ at threshold receiver sensitivity. After applying ARQ correction the frame error rate is:

$$10^{-2}/(2^{16}-1) \text{ which is } 1.53 \times 10^{-7}$$

undetected frame error rate.

For example, the latency of 8 Kbps data corrected by an n=2 ARQ is 80 ms, and the latency of 120 Kbps data corrected by an n=2 ARQ is, on the average, 5.4 ms.

In the uncorrected mode the user data block error rate is $10^{-2}$ at threshold receiver sensitivity. Data rate and integrity are maintained before and after handover. Since data may be lost during the handover, the system provides for the use of higher level protocols to correct the loss of frames.

A typical handover delay, including switch time, for an intra Base Station Controller handover is less than 10 ms. The maximum handover time, assuming that communication with the Terminal/new BS is error free, is approximately 40 ms.

**2.9 Mobile Handoff**

**2.9.1 Handoff Procedures**

Handoff is required whenever the received signal level at a MS falls below an acceptable level. The PCS2000 System utilizes a Mobile Station-controlled hand-off method, which operates as described in the following paragraphs.

While the MS is receiving bearer traffic from its originating BS, it measures the received signal quality of its link. This value, together with the current frame error rate, determines the link quality. If the quality drops below a first threshold ( the measurement threshold), the Mobile searches during the TDMA time slots it is not using, for other RF frequencies/PN code sets through all time slots of the originating BS and the Base Stations of adjacent cells (This information is downloaded from the originating BS). As the MS finds each new frequency/codeset, it measures the received signal quality. The MS reads a field carried in all BS frames which describes the current time slot utilization of the BS. The MS uses these two pieces of information to form a figure of merit for the new BS signals, including the originating BS, and then sorts the BSs by figure of merit. Note that this procedure allows the MS to measure the quality of other time slots in the originating BS. If these time slots have better quality than those of any BSs in adjacent cells, a Time Slot Interchange (TSI) hand-off is considered, which maintains the link to the originating Base Station.

When the link quality drops below a 2nd threshold level, the MS (during a no-bearer time slot) requests a hand-off from the BS with the highest figure of merit (which could be a TSI with the originating BS). The hand-off is requested by seizing a time slot, sending a hand-off message request, and waiting for an acknowledgment from the new Base Station. The hand-off signaling message contains a description of the circuit connecting the originating BS to the PSTN. This information was passed to the MS at call establishment time. If the new BS accepts the hand-off request (by acknowledging), then the new BS becomes the Terminal BS. Note that the MS maintains the bearer channel connection with the originating BS during this hand-off procedure.

### 2.9.1.1 <u>Intra-Cluster</u> Handoff

Next, the Terminal BS sends a NOTE (message) to its Base Station Controller (BSC), requesting that the original circuit be switched from the originating BS to the Terminal BS. If the BSC is common to both the originating and Terminal BSs, the hand-off is termed an <u>intra-cluster</u> event, and the BSC bridges the circuit from the originating BS to the Terminal BS. The BSC then sends a circuit-switch-complete NOTE to the originating BS, and also to the Terminating BS, commanding it to continue the hand-off process. If the BSC is not common to both Base Stations, the hand-off process continues with an <u>inter-cluster</u> hand-off procedure.

### 2.9.1.2 <u>Inter-Cluster</u> Handoff

For inter-cluster hand-offs, the BSC translates the hand-off NOTE into the signaling language of the PCSC host and requests an inter-cluster hand-off at the PCSC network level. In some network architectures, the host PCSC cannot accept a hand-off request from a terminating BSC; in which case an intermediate step is taken. The hand-off request is sent to the PCSC via an X.25 link to the BSC connected to the originating BS. The originating BSC then translates the request and relays it to the PCSC. The PCSC acknowledges the circuit switch to the BSC, and the BSC sends a circuit-switch-complete NOTE to the Terminal BS.

When the Terminal BS receives the circuit-switch-complete NOTE, it begins paging the MS with a specific poll, and the originating BS signals the MS to transfer to the Terminal BS. When the MS receives the signal to transfer to the Terminal MS, or if the link is lost during the hand-off process, the MS switches to the Terminal BS and searches for a Specific Poll. When it receives the Specific Poll, the MS completes the connection to the Terminal BS, and the hand-off is procedure is completed.

Should the link between the MS an originating or Terminating BS be completely broken at any time, the MS will search for the highest quality BS on its list of potential hand-offs, and attempt a hand-off without communication with its previous BS. This allows the MS to recover from situations in which the original link was broken before the normal hand-off procedure could be completed.

### 2.9.2.3 Handoff Time Delays

For intra-cluster hand-offs the total time delay for the hand-off procedure, including re-establishment of bearer channel traffic, is typically less than 10 milliseconds. The maximum time is approximately 40 ms. Since under normal circumstances the delay is less than one polling loop interval, bearer packets will continue to the MS with no interruption. Inter-cluster hand-off or Time Slot Interchange is partially dependent upon the delays inherent in the host PCSC, and are beyond the scope of this general system description. Over-the-air delays for the inter-cluster hand-off are the same as above; i.e. 10-40 ms. Break-before-make hand-offs typically take less than 250 ms.

### Future Enhancements

The Omnipoint system allows a PCS operator to add a number of applications beyond voice to the system without protocol modifications. Among these are:

1. Asymmetric links between the base and handset allowing for small bandwidth from the handset to the base and vice versa and a higher bandwidth in the opposite direction. This will provide for some data services that consist of a request by the handset and a large volume of information flowing back to the handset in response. The Omnipoint CAI provides the ability for this enhancement and it will not affect other users or earlier handset interoperability with base stations providing these types of services.

2. Codecs with sampling rates lower than 8 kbps will be supported through the methodology outlined earlier. At the present time, Omnipoint believes that 8 kbps is the best choice for an early PCS service introduction and is confident in the codecs chosen for service introduction.

3. Other enhancements as defined and implemented by Omnipoint or licensees of Omnipoint technology.

### 3. PCS2000 System Performance Requirements

### 3.1 PCS Cell Coverage Requirements

### 3.1.1 Low Base Station Antenna Heights

Figure 3-1 shows expected cell radii for a bit error rate (BER) of 10E-3, for both 90% and 99% probability of coverage based on the COST model of median propagation loss, assuming a Base Station height of 10 meters, building roof heights of 9 meters, and a MS antenna height of 1.5 meters. Large scale shadowing effects are assumed to be Log Normal with a standard deviation of 8 dB. MS EIRP is 300 milliwatts, BS receiver sensitivity is -100 dBm, and the BS antenna has an omnidirectional pattern with a vertical gain of approximately 7 dB. Hata-Okurmura models are not as accurate at the assumed BS antenna height of 10 meters, since they were originally developed for antenna heights of 30-200 meters. Comparing COST 231 predictions with Hata, COST 231 range predictions fall between Hata large city urban and large city suburban cases. Omnipoint's Air Interface architecture provides for extremely rapid hand-off between Base Stations, allowing for less overlap between cells. This fact is reflected in Figure 3-1 where 75% contours lead to 90% overall coverage, and 90% contours lead to 99% overall coverage.

There is significant evidence that at lower BS antenna heights, neither higher receiver sensitivity nor high gain antennas contribute significantly to increasing cell size, because of physical obstructions and rapid increase of propagation loss versus distance. At shorter ranges, signal strength falls off with a $1/R^2$ characteristic, while at longer ranges, signal strength falls off much more rapidly-as high as $1/R^7$ or $1/R^9$ for the lower BS antenna heights. For longer ranges, using higher gain antennas or lower receiver sensitivity, will do little to increase cell size. To provide greater coverage in such cell propagation environments, Base Stations must be placed closer together. This does not mean that directional antennas have no benefit in smaller cells; their directive is useful for purposes other than increasing cell size; e.g., for dividing a cell into sectors to accommodate higher user densities within certain urban regions.

### 3.1.2 High BS Antenna Heights

Figure 3-2 shows expected performance (using the COST 231 propagation model) for a BS antenna height of 50 meters. All other conditions are the same as in Figure 3-1. Note that once the BS antenna is elevated to this height, the range of coverage increases significantly.

### 3.1.3 Maximum Outdoor Base Station Spacing

Maximum BS spacing depends on the configuration of Base Station antenna used and the deployment area propagation characteristics. Table 3-1 shows maximum permissible path loss for configurations using 300 milliwatt MS peak transmit power and -100 dBm BS receiver sensitivity. Maximum cell radii predictions are based on a COST 231 propagation model, with Log Normal shadowing and 8 dB standard deviation.

Table 3-1

| Cell Radii for 90%/99% Urban Coverage Probability | | | |
|---|---|---|---|
| Base Station Antenna Gain (dBi) | Maximum Path Loss (dB) | Maximum Cell Radius (Miles) 10 Meter BS Height | Maximum Cell Radius (Miles) with 50 Meter BS |
| 3 | 132 | 0.305/0.227 | 1.289/0.96 |
| 9 | 138 | 0.438/0.326 | 1.854/1/381 |

Table 3-1   (continued)

| Cell Radii for 90%/99% Urban Coverage Probability | | | |
|---|---|---|---|
| Base Station Antenna Gain (dBi) | Maximum Path Loss (dB) | Maximum Cell Radius (Miles) 10 Meter BS Height | Maximum Cell Radius (Miles) with 50 Meter BS |
| 13 | 142 | 0.558/0.416 | 2.362/1.76 |
| 19 | 148 | 0.803/0.599 | 3.398/2.531 |
| 26 | 155 | 1.228/0.915 | 5.193/3.869 |

Table 3-2 shows maximum permissible path loss for configurations using the same assumptions as in Table 3-1, except MS peak EIRP is 1 Watt.

Table 3-2

| Cell Radii for 90%/99% Urban Coverage Probability | | | |
|---|---|---|---|
| Base Station Antenna Gain (dBi) | Maximum Path Loss (dB) | Max. Cell Radii (Mi) with 10 Meter BS Antenna Height | Max Cell Radii (Mi) with 50 Meter BS Antenna Height |
| 3 | 137.3 | 0.418/0.312 | 1.768/1.318 |
| 9 | 143.3 | 0.602/0.448 | 3.243/2.416 |
| 13 | 147.3 | 0.767/0.571 | 4.664/3.475 |
| 19 | 153.3 | 1.103/0.822 | 2.545/1.896 |
| 26 | 160.3 | 1.685/1.256 | 7.129/5.312 |

The information presented in Tables 3-1 and 3-2 can be used to calculate nominal cell sizes for suburban environments. Expected maximum cell radii calculated for the above tables assumes that multipath Rayleigh fading and ISI effects have been partially mitigated by use of antenna spatial diversity (L=4) at the Base Station, and the use of DSSS modulation and correlation and detection. The BS antenna spatial diversity, which utilizes the channel sounding capability of the PCP, provides spatial diversity gain for both the forward and reverse links. Cell radii can be further increased by using higher gain antennas at the Base Station. For example, if a 26 dBi BS antenna is used, cell radius could increase by 3 to 10 times, assuming propagation losses of $1/R^2$ or $1/R^4$, respectively.

To provide efficient service in low density rural areas, cell radii can be extended beyond 8 miles, by providing the increased guard times required for the longer round trip propagation delays encountered in the larger cells. Cells with 10 mile radii can be supported by reducing the number of time slots per frame from 32 to 25. Since such large cell radii will only be deployed in low population density areas, reduced cell capacity caused by the smaller number of time slots per frame is not an issue.

**3.2 Maximum Number of Simultaneous Users per Cell.**

In urban areas, when population density permits use of Omnidirectional BS antennas, the maximum number of simultaneous users per cell is limited by the number of user time slots per frame in the Omnipoint TDMA design approach, which is 32. However, for a 1% probability of call blocking, 32 users per RF channel can accommodate (0.68 x 32) Erlangs of traffic or 21.8 Erlangs per cell. If it is assumed that subscribers in typical urban areas use 0.03 Erlangs, on the average, the Omnipoint cell could accommodate 725 subscribers.

For high density population applications, the maximum number of simultaneous users per cell can be increased by sectorizing the cell; e.g., into 3 or 6 sectors. This is accomplished by using directional BS antennas to illuminate 120 degree or 60 degree sectors of the cell. Cell sectoring, for these two cases, can increase the number of simultaneous users per cell to 96 or 192, and increase the number of 0.03 Erlangs/user mobile subscribers to 2175 and 4350, respectively.

**4. Base Station Performance Requirements**

**4.1 Transmitter**

**4.1.1 Frequency Agility**

The Base Station RF system can operate at any frequency between 1850 and 1990 MHz in 625 kHz steps. That is, the frequency synthesizers can be programmed to receive and transmit on any one of 223 frequencies. This step size is not required in the licensed PCS spectrum for Omnipoint and the system steps in 5 MHz increments. Therefore, the first channel is normally centered at 1852.5 MHz, the next at 1857.5 MHz, etc. PCS2000 does not normally operate in the 1910 to 1920 MHz band because frequency band is reserved for asynchronous unlicensed devices. The system can operate in the isochronous band between 1920 and 1930 MHz. The first channel in this band is centered at 1920.625 MHz, and the channel spacing is 1.25 MHz across this band.

**4.1.2 Frequency Stability**

The transmitter frequency stability is controlled by the system master clock in the Base Station. The frequency reference is a crystal stabilized 10 MHz precision reference oscillator. This reference is stable to within 1 part in 0.01 ppm over all operating conditions. This reference can also be synchronized to the external digital network for precise timing with the telephone network.

**4.1.3 Synchronization with The Base Station Controller Network**

The main frequency reference for the Base Station can be frequency locked to the Base Station Controller Network. This synchronization is performed automatically by digital circuitry that derives a DC control voltage for the reference oscillator. This control voltage is fed to the DC frequency trim adjust to fine tune the reference oscillator. Normally, the digital phone network uses a very precise frequency standard to synchronize the entire network. This frequency accuracy is passed on to the RF Base Station in this fashion. The control range of the electronic frequency trim adjust is limited to less than +/- 10 ppm to ensure that the RF stability cannot exceed the FCC limits under any faulty network condition.

**4.1.4 Power Output (EIRP)**

**4.1.4.1 TDMA Power Pulse Waveshape**

A constant envelope waveform is generated by baseband pulse shaping the I and Q data inputs to a quadrature modulator. The particular pulse shape of these waveforms determines the spectral occupancy of the transmitter, as well as the intersymbol interference of the waveform. The transmitter can be operated in a fully saturated power output mode which allows the maximum power output available from the transmitter to be utilized for increased link margin. Unlike other modulated waveforms that have significant amplitude modulation, constant envelope waveforms may be compressed (limited in the amplitude sense), without the spectral re growth associated with these other waveforms.
This allows the use of amplifiers that are relatively less expensive. They do not require OBO (output back off), or extreme linearization techniques (such as feed forward or Cartesian feedback to the modulator) to obtain good spectral purity. Further, since they can be operated at saturation, the power consumption is also relatively less. Typical OBO values for non-constant envelope signals are in the 4 to 7 dB range. This reduction will affect the link budget of the system.

**4.1.4.2 Average Power Output**

The Average Power Output of the Base Station Transmitter is approximately 50% of the Peak Power Output. Peak Power Output is 2 Watts in the licensed frequency bands, and the duty cycle is approximately 50%. Therefore the maximum Average Power Output is approximately 1 Watt. With the Power Control adjusted to the minimum power output on each time slot of the Base Station Transmitter (power control is performed on a slot by slot basis). The average is then (2 W - 33dB)x(50%)=0.5mW. The actual Average Power Output will normally be between these two extremes, depending on the individual power settings of all 32 time slots.
For the unlicensed PCS band, the power output is limited to 112 mW for 1.25 MHz channels. This has the effect of reducing the average power output to approximately 56 mW for the unlicensed service.

### 4.1.5 Spurious RF Emissions

### 4.1.5.1 Conducted

Conducted emission complies with FCC Part 24.238 -Emission Limits for the licensed PCS bands, and FCC Part 15 Subpart D -Unlicensed Personal Communications Services Devices for the unlicensed services.

### 4.1.5.2 Radiated

Radiated emission complies with FCC Part 15 rules for incidental and intentional radiators. The radiated emission also complies with ANSI C95.1-1991.

### 4.1.5.3 Total Spurious Emission

All spurious out-of-band emission, including but not limited to that due to modulation spectral sidelobes, transmitter harmonics, transmitter switching, power control transients, or multiple co-sited transmitter intermodulation, will be equal to or less than:

$$(-43 + 10 \log P) \text{ dB}$$

where P is the in-band power of the modulated signal

### 4.2 Receiver

### 4.2.1 Frequency Agility

A common synthesized local oscillator is used for both transmit and receive. See section 4.1.1 for details.

### 4.2.2 Frequency Stability/Synchronization

The same master clock that is used for transmit is used for receive. See section 4.1.2 for details.

### 4.2.3 Sensitivity

The receive sensitivity is -102 dBm for $10^{-3}$.

### 4.2.4 Spurious RF Emission

RF emission from the Base Station receiver meet the FCC Part 15 incidental radiator rules.

### 4.3 Antenna Performance Specifications

Base Stations may be configured with either omnidirectional or high gain directional antennas (or a combination) depending on the specific RF coverage needs for each base site. In addition, to permit a single Base Station to cover a large sparsely populated area, a steerable phased array antenna may be used. (Ref. 2.3.2.3)

### 4.3.1 Omnidirectional Antennas

### 4.3.1.1 Gain:

Omnidirectional antennas will have a nominal gain of 5 to 10 dBi.

### 4.3.1.2 Vertical Beamwidth:

Omnidirectional antennas will have a nominal vertical beamwidth of 8 to 35 degrees.

### 4.3.1.3 Polarization:

Omnidirectional antennas will be vertically polarized.

### 4.3.2 Directional Antennas

### 4.3.2.1 Gain:

Directional antennas will have a nominal gain of 10 to 17 dBi.

### 4.3.2.2 Vertical Beamwidth:

Directional antennas will have a nominal vertical beamwidth of 7 to 35 degrees

### 4.3.2.3 Azimuthal Beamwidth:

Directional antennas will have a nominal azimuthal beamwidth of 15 to 120 degrees. A minimum front-to-back ratio of 20 dB is required.

### 4.3.2.4 Polarization:

Directional antennas may be either vertically or circularly polarized.

### 4.3.3 Phased Array Antennas

### 4.3.3.1 Gain:

Phased array antennas will have a nominal gain of 26 to 28 dBi.

### 4.3.3.2 Vertical Beamwidth:

Phased array antennas will have a nominal vertical beamwidth of 8 degrees.

### 4.3.3.3 Azimuthal Beamwidth:

Phased array antennas will have a nominal azimuthal beamwidth of 8 degrees. A minimum front-to-back ratio of 20 dB is required.

### 4.3.3.4 Polarization:

Phased array antennas will be circularly polarized.

### 4.3.4 Diversity for Mitigation of Multipath Effects

### 4.3.4.1 Spatial Diversity

The Base Station will use spatial antenna diversity with L = 2, 3, or 4 depending on the severity of the multipath conditions of each base site. The physical separation of the antennas will be at least 10 wavelengths.

### 4.3.4.2 Antenna Selection Algorithm

Several metrics are employed to determine the signal quality at each antenna. The results of these measurements are used to select the best antenna for transmission/reception for each TDMA time slot.

**5. Mobile Station Performance Requirements**

**5.1 Transmitter**

**5.1.1 Frequency Agility**

The Mobile Station can be set to operate on any frequency between 1850 and 1990 MHz in 625 kHz steps. That is, the frequency synthesizers can be programmed to receive and transmit on any one of 223 frequencies. Omnipoint does not require this step in the licensed PCS spectrum and the system steps in 5 MHz increments. Therefore, the first channel is normally centered at 1852.5 MHz, the next at 1857.5 MHz, etc. The system does not normally operate in the 1910 to 1920 MHz band. This frequency band is reserved for asynchronous unlicensed devices. The system can operate in the isochronous band between 1920 and 1930 MHz. The first channel in this band is centered at 1920.625 MHz, and the channel spacing is 1.25 MHz across this band.

**5.1.2 Frequency Stability**

The initial Mobile Station clock stability is accurate to within +/- 10 ppm from -30 C to +60 C.

**5.1.3 Synchronization with Base Station**

The Mobile Station clock is automatically fine tuned to the Base Station once the mobile receiver receives the Base Station signal. This provides adequate frequency stability and network wide synchronization to the Mobile Station.

**5.1.4 Power Output (EIRP)**

The mobile station transmitter has a maximum power output of 600 mW into an elevated feed dipole. The resulting EIRP is 1 Watt.

**5.1.4.1 TDMA Power Waveform vs. Time**

The transmitter has a controlled on-off switching characteristic to eliminate unwanted spectral spreading transients.

**5.1.4.2 Handset Average Power Output**

The Peak Handset Output Power is 600 mW. The Handset Average Power Output is determined by the number of time slots aggregated to deliver the desired data rate. Each time slot delivers an 8 kbps data rate, so a 32 kbps user needs 4 time slots and therefore has 4 times the average power output of an 8 kbps user. The duty cycle of a single slot (an 8 kbps user) is approximately 1/64 and the resulting average power output is approximately 9.4 mW. Therefore, the average power output of a 32 kbps user is 37.6 mW. Power control can further reduce the average power output as directed by the Base Station.

**5.1.4.3 Transmit Power Control by Base Station**

Transmit Power Control is directed by the Base Station in 3 dB steps over a total range of 33 dB. This is performed by a four bit control of 3 dB, 6 dB, and two 12 dB switched RF attenuators. PCP, the Power Control Pulse is transmitted by the MS just before the time that the BS is expected to transmit to the MS. The PCP thus provides a power measurement of the mobile channel to the BS and is the basis for the power control command to be sent to the MS. A multi-receiver BS can also make an antenna selection for transmit based on the quality of the PCP signal arriving at the BS. In TDMA systems the latency of the signals around the polling loop generally inhibit the use of power control. That is, the length of time around the polling loop is too long to allow the last transmission to be very useful to estimate the channel losses and impairments. In most fixed station applications, the antenna locations , patterns, and power transmitted by the fixed station may be adjusted for minimal interference to other fixed stations. However, the nature of cellular-like mobile stations is such that they can conflict with other mobile stations at intersecting cell boundaries. This creates the need for some power control in the mobile stations. For example, a handset operating at the boundary of its BS coverage needs to transmit its full power to stay in contact. However, a handset operating in the same time slot, relatively close to its own BS, does not need to transmit full power to have good contact. The BS can measure the channel with the PCP and tell the MS to adjust its power if needed. The BS can also use the PCP to measure the time delay from a MS and estimate its distance from the BS. Further, if the BS knows the power setting of the MS, it can also adjust its own power as well.

## 5.1.5 Spurious RF Emission

### 5.1.5.1 Conducted

Conducted emission complies with FCC Part 24.238 -Emission Limits licensed PCS bands, and FCC Part 15 Subpart D - Unlicensed Personal Communications Services Devices for the unlicensed services.

### 5.1.5.2 Radiated

Radiated emission complies with FCC Part 15 rules for incidental and intentional radiators. The radiated emissions also comply with ANSI C95.1-1991.

### 5.1.5.3 Total Spurious Emission

All spurious out-of-band emission, including but not limited to that due to modulation spectral sidelobes, transmitter harmonics, transmitter switching, power control transients, or multiple co-sited transmitter intermodulation, will be equal to or less than:

$$(-43 + 10 \log P) \text{ dB}$$

where P is the in-band power of the modulated signal

### 5.2 Receiver

### 5.2.1 Frequency Agility

A common synthesized local oscillator is used for both transmit and receive. See section 5.1.1.

### 5.2.2 Frequency Stability/Synchronization

The same master clock that is used for transmit is used for receive. See section 5.1.2 Frequency Stability

### 5.2.3 Sensitivity

The receive sensitivity is -100 dBm for $10^{-3}$ BER

### 5.2.4 Spurious RF Emission

RF emission from the Mobile Station Receiver meets the FCC Part 15 Incidental Radiator rules.

### 5.3 Antenna Performance Specifications

### 5.3.1 Mobile Handset Antenna

### 5.3.1.1 Gain:

The mobile handset antenna will have a nominal gain of 2 dBi.

### 5.3.1.2 Beamwidth:

The mobile handset antenna will have a nominal vertical beamwidth of 70 degrees, perpendicular to the antenna axis.

### 5.3.1.3 Azimuthal Beamwidth:

The mobile handset antenna is omnidirectional.

### 5.3.1.4 Polarization:

The mobile handset antenna is polarized along the major axis of the handset, MS.

### 5.3.2 Mobile Vehicular Antenna

### 5.3.2.1 Gain:

The mobile vehicular antenna will have a nominal gain of 5 dBi.

### 5.3.2.2 Vertical Beamwidth:

The mobile vehicular antenna will have a nominal vertical beamwidth of 35 degrees.

### 5.3.2.3 Azimuthal Beamwidth:

The mobile vehicular antenna is omnidirectional.

### 5.3.2.4 Polarization:

The mobile vehicular antenna is vertically polarized.

### PCS2000

### Sec. 6.1 Layer 1 RF Characteristics

### 6.1 RF Characteristics

This section describes the RF characteristics of the basic Omnipoint PCS system. For certain applications, values of some system RF parameters will change.

### 6.1.1 Transmit

This section describes the RF characteristics of the transmitters for both the Base Station (BS) and the Mobile Station (MS).

### 6.1.1.1 Modulation Method

Omnipoint uses a form of continuous phase modulation (CPM) which provides the desirable characteristics of a constant RF envelope and minimal sidelobes. The constant envelope characteristic of CPM permits efficient non-linear RF power amplification in the transmitter power amplifier of the MS handset (as well as the BS), without regrowth of the spectral sidelobes associated with most forms of digital phase modulation.

### 6.1.1.2 Transmit Spectrum/Pulse Shaping

After CPM RF modulation, the RF signal is bandpass filtered to further reduce the out of band spurious emissions. The in-band amplitude and phase versus frequency characteristics of the RF bandpass filters must be carefully controlled. Otherwise the filters can distort the CPM signal, causing it to lose its constant envelope characteristic, thus causing sidelobe regrowth after nonlinear power amplification. The attack and decay times of the transmitted RF signal are controlled during the turn ON and turn OFF transient periods to prevent splatter into adjacent RF bands.

### 6.1.1.3 Transmit Power Levels

Although the FCC permits up to 2 Watts EIRP for the MS, the nominal peak power output for the Omnipoint MS is 600 milliwatts into a dipole antenna, or 1 Watt EIRP. With Omnipoint's Version 2T.X TDD/TDMA design approach, the average MS power output in the 8 Kbps mode is only 9.36 milliwatts, permitting longer durations between battery recharges. With this low value of MS transmit power, large PCS cell sizes can be accommodated because high gain directional antennas can be economically incorporated in Omnipoint's Base Station design. Note that with Omnipoint's TDMA radio system designs, only a single steering mechanism is required to address all users in one cell or cell sector, thus significantly reducing system complexity and cost. Contrast this capability with other systems which require as many steering mechanisms as there are potential users within each cell.

The FCC PCS Report and Order allowed up to 100 Watts peak EIRP for PCS Base Stations for each RF channel utilized by the BS. Therefore, maximum permissible average EIRP per channel in Version 2T.X is 50 Watts. The nominal peak power output of a standard Omnipoint base station is 2 Watts. However, for larger cell applications and for certain propagation environments, the BS utilizes a directional antenna with a nominal antenna gain of 17 dBi. This provides a peak EIRP of 100 Watts, meeting the FCC requirement. By utilizing a steerable directional antenna, each user link within the cell takes advantage of the gain of the directional antenna at the BS, for the reverse link as well as the forward link in Version 2T.X.

Many petitioners in the Reconsideration process requested that the FCC raise the power limit to 1000W which allows Omnipoint's system to use up to 26 dBi gain antennas. Because Omnipoint's system design utilizes a direct sequence spread spectrum form of modulation for all MS and BS transmissions, the RF power density is much lower than for narrowband PCS systems, causing less interference with OFS users sharing the same RF spectrum.

## 6.1.2 Receive

This section describes the general characteristics of Omnipoint's Mobile Station and Base Station RF receiver functions.

### 6.1.2.1 Receiver Selectivity

With a nominal 5 Mcps spread spectrum pn code overlay, the required receiver front end (RF) bandwidth is 5 MHz for Version 2T.X. This bandwidth is maintained through down conversion to an intermediate frequency (IF) until despreading occurs and processing of the information content of the received signal begins, at which time the receiving channel bandwidth is reduced to that required for the digital information signal. By providing the minimum RF, IF, and baseband signal bandwidths required, the receiver is optimized for front end thermal noise, as well as potential adjacent channel interferers. Receiver bandwidths must be wide enough to accommodate expected variations caused by transmitter and receiver local oscillator variations over time and temperature, as well as Doppler shifts. The same selectivity considerations apply to both the MS and the BS receiver designs.

### 6.2.2.2 Receiver Dynamic Range

Because of variable RF path lengths within the PCS cell and because of fading channel propagation and shadowing effects, received signal levels at both the MS and BS sites can vary over a very wide dynamic range. To prevent the stronger of received signals from overloading the front end, RF front ends are designed to handle a large dynamic range. Selection of RF amplifiers with low noise figures and good linearity at maximum expected signal levels minimize signal distortion effects which can reduce spread spectrum processing gain, and cause intermodulation distortion.

### 6.1.2.3 Signal Quality Measurement of the Physical Interface

To reduce the required interference dynamic range rejection of the BS receivers, Omnipoint utilizes an adaptive power control algorithm. Implementation of this power control feature requires measurement of the quality of the signals received from each MS. In Version 2T.X this is done by having the BS measure the received RF power as well as the signal to noise/interference ratio during a proprietary Power Control Pulse (PCP) transmitted by each MS during its assigned TDMA time slot. With Omnipoint's design, the MS transmits a PCP, the BS makes a measurement of received signal quality and transmits a command to the MS to increase or decrease its transmitted power level and the MS responds, all within 500 us-- a fraction of a time slot duration. Since the BS transmits sequentially to all MSs within its cell in adjacent TDMA time slots, each BS-to-MS link may vary in path loss. Control of BS transmitter power is possible on a slot by slot basis. Each MS measures received BS signal quality from its own cell, and uses this information to determine when to measure signal quality from adjacent cells and, further, when to request handover to an adjacent cell when the received signal quality from its present BS falls below a preset threshold level.

### 6.1.3 General Characteristics

This section discusses certain characteristics of the PCS RF channel which are common to both the Base Station and Mobile handsets.

### 6.1.3.1 Air Interface Data and Symbol Rate

Omnipoint's TDMA design approach permits up to 512 Kbps of bearer channel information simplex or 256 Kbps of bearer channel information in non-VAD full duplex mode. The instantaneous burst data rate is higher to accommodate overheads and guard time (see Packet and Frame Structure).

The symbol rate is significantly lower than the data rate and is proprietary to Omnipoint.

### 6.1.3.2 RF Stability Requirements.

For the Base Stations and the MS, Omnipoint provides a guaranteed transmitter carrier frequency stability equal to or less than +\- 10ppm over the operating temperature range. Base station operating frequency may be synchronized to external sources for the more precise timing potentially required for interface to digital networks, external clocks and frequency standards. Mobile units may also acquire synchronization from the Base Station for similar precise frequency control.

### 6.1.3.3 Intermodulation

Intermodulation distortion must be considered for co-located Base Stations operating on multiple RF channels. Omnipoint has designed the transmitter RF power output stage and antenna coupling to minimize this effect.

### 6.1.3.4 Channelization

Nominal RF channel spacing for the Omnipoint Version 2T.X CDMA/TDMA/FDMA system, utilizing a 5 Mcps spread spectrum modulation, is 5 MHz. For applications that do not require as large a spread bandwidth, lower chip rates with closer channel spacings can be provided.

### 6.1.3.5 Spurious RF Emissions

All spurious out-of-band emissions including but not limited to those due to modulation spectral sidelobes, transmitter harmonics, transmitted switching, power control transients, or multiple co-sited transmitter intermodulation shall be equal to or less than (- 43 dB + 10 log P) dB.

### 6.1.3.6 Multiple Access Method

Omnipoint uses a unique combination of CDMA, TDMA, and FDMA for multiple user access to the PCS network. Within a cell, time division multiple access (TDMA) is employed and time division duplexing (TDD) or frequency division duplexing (FDD) can be used, allowing up to 64 simultaneous 8 Kbps bearer channels in simplex mode or 32 simultaneous, 8 Kbps full duplex mobile users, while adjacent cells are set to different frequency channels (FDMA) under a minimal N = 3 architecture. Cells beyond immediately adjacent cells use a variety of separation techniques, including code (CDMA), power control, directional antennas and time slot interchange (TSI) for additional inter-cell isolation. By utilizing a TDMA approach within a cell , and not relying solely on CDMA for separating multiple MS signals at the Base Station, self interference at the BS receiver is greatly reduced, permitting greater area coverage for a given MS transmitter power output level.

Further, as a cell becomes loaded near capacity, cell sizes remain constant and do not shrink as may be the case with other CDMA-only architectures. In the Omnipoint System CDMA is used to maintain low symbol rates while providing very high data rates and to achieve better C\I ratios and frequency reuse. Without the use of these spread spectrum techniques, high data rates are difficult to reliably maintain in fully mobile communications channels.

### 6.1.3.7 Duplex method

Time Division Duplexing (TDD) or Frequency Division Duplexing (FDD) can be utilized to provide two-way access to each MS-to-BS PCS communications link. In Version 2T.X, each time slot within the TDMA frame is divided into equal transmit portions for the MS and the BS, with appropriate guard times. When the BS is transmits, the designated MS receives, and vice versa.

### 6.1.3.8 Multiple Access Dependency

Omnipoint's Version 2T.X TDMA structure is based on a 20 millisecond polling loop for MS access to the Base Station. The 20 ms TDMA frame supports 64 8 Kbps simplex time slots or 32 paired 8 Kbps full duplex time slots each of 625µs duration. There are provisions for each MS to aggregate multiple time slots to afford a user more bandwidth for higher data rates as required. Asymmetric data rates can be supported on a frame by frame basis, permitting Voice Activity Detection (VAD), high speed data transport, and data broadcasting by the BS.

### 6.1.3.9 Power Control Method

Although the Omnipoint method of Time Division Multiple Access (TDMA) does not require the strict control of transmitter RF power output necessary to resolve the "Near-Far" problem experienced by CDMA PCS systems, the Omnipoint system does utilize a proprietary method of controlling transmitted RF power levels. This is done to reduce battery consumption and to minimize interference in nearby or distant cells which may be operating on the same or adjacent RF channels as well as nearby OFS users.

### 6.1.3.9.1 Control of Base Station Power Output

Since the Base Station (BS) can communicate with up to 64 Mobile Stations (MS) within its cell, each of whose distance from the BS can vary from near zero up to the radius of the cell, it may not be desirable to control the BS transmitter power to maintain near-constant received power level at each MS. This could require very large changes (>40 dB) of BS transmit power during each time slot (625 µs) of the TDMA frame. Omnipoint provides BS power control and is investigating the various alternatives to utilize BS power control on a slot-by-slot basis as well as cell-to-cell and cell-to-OFS microwave user.

### 6.1.3.9.2 Control of Mobile Station Power Output

To permit RF channel reuse in nearby PCS cells, to reduce interference with OFS users, and to conserve battery power in the handheld units, Omnipoint provides adaptive power control of the Mobile Station transmissions within each PCS cell.
A proprietary Power Control Pulse (PCP) system has been designed. In Version 2T.X, the PCP is transmitted by the MS in its assigned TDMA time slot just before the BS transmits to that MS in its associated TDD time slot. This MS PCP provides the BS with a measurement of the MS-BS path transmission loss, which serves as the basis for a Power Control Command (PCC) transmitted from the MS to the Base Station. The PCC causes the MS to change its output power in minimum steps of 3 dB, dependent on the quality of the PCP received by the BS.
In some TDMA systems, the latency of the polling loop signals prevent the use of closed loop power control. However, with Omnipoint's Version 2T.X TDD/TDMA design approach, the elapsed time for transmission of the PCP, the response by the MS, and the next MS bearer transmission burst, is less than 500 us--less than 2.5% of the frame time. Because of its fast response time, Omnipoint's Power Control algorithm can respond faster than the rate of change of small scale multipath fading effects and propagation shadowing effects.
The BS can also use the PCP information to measure the propagation time to each MS within its cell. This provides an estimate of the range from the BS to each MS. For 911 support, if the PCS service operator invests in the necessary software, a handset could provide PCP signals to multiple BSs for rough location estimation in emergency situations.

| Acronyms | |
|---|---|
| **1.2.1 Acronyms** | |
| A/D | Analog to Digital |
| AC | Authentication Center |
| AC | Automatic Callback |
| ACD | Automatic Call Distributor |
| ACK | Acknowledge(normally the receipt of a packet of information) |
| ACSE | Association Control Service Element |

(continued)

| Acronyms | |
|---|---|
| **1.2.1 Acronyms** | |
| AE | Application Entity |
| ALT | Automatic Link Transfer |
| AMA | Automatic Message Accounting |
| ANI | Automatic Number Identification |
| ANSI | American National Standards Institute |
| APDU | Application Protocol Data Unit |
| API | Application Protocol Interface |
| AR | Automatic Recall |
| ARC | Automatic Reverse Charging |
| ARQ | Automatic Re-send reQuest |
| ASE | Application Service Element |
| ASP | Application Service Part |
| BCD | Binary Coded Decimal |
| BER | Bit Error Rate |
| BRI | Basic Rate Interface |
| CAMA | Centralized Automated Message Accounting |
| CAVE | Cellular Authentication and Voice Encryption |
| CCAF | Call Control Agent Function |
| CCF | Connection (Call) Control Function |
| CCITT | International Telegraph and Telephone Consultative Committee [now ITU-T] |
| CCIR | Consultative Committee for International Radio [now ITU-RS] |
| CDMA | Code Division Multiple Access |
| CNI | Calling Number Identification |
| CPN | Calling Party Number |
| CPS | Calling Party Sub-address |
| BS | Base Station |
| CCITT | International Telegraph and Telephone Consultative Committee |
| CCS7 | Common Channel Signalling #7 |
| CGSA | Cellular Geographical Service Area |
| CHNO | Channel Number |
| CND | Calling Number Display |
| CNDB | Calling Number Display Blocking |
| CPSQM | Continous Phase Shift Quadrature Modulation |
| CSS | Cellular Subscriber Station |
| CSSINACT | CSSInactive INVOKE |
| CSSIT | CSS Inactive Timer |
| CT | Cordless Telephony |
| CTT | Clear Trunk Timer |
| CUG | Closed User Group |
| DACW | Distinctive Alerting/Call Waiting |
| DCE | Data Circuit-Terminating Equipment |
| DID | Direct Inward Dial |
| DMAC | Digital Mobile Attenuation Code |
| DMH | Data Message Handler |
| DN | Directory Number |

(continued)

| Acronyms | |
|---|---|
| **1.2.1 Acronyms** | |
| DPC | Destination Point Code |
| DSP | Digital Signal Processor |
| DSSS | Direct Sequence Spread Spectrum |
| DTE | Data Terminating Equipment |
| DTMF | Dual Tone Multi Frequency |
| DVCC | Digital Verification Color Code |
| DXE | Data Terminating or Data Circuit-Terminating Equipment |
| ECSA | Exchange Carrier Standards Association |
| EEPROM | Electronically Erasable and Programmable Read Only Memory |
| EIA | Electronic Industries Association |
| EIR | Equipment Identity Register |
| ESN | Electronic Serial Number |
| FACCH | Fast Access Control Channel |
| FAX | Facsimile |
| FC | Feature Code |
| FEATREQ | RemoteFeatureControlRequest INVOKE |
| FDD | Frequency Division Duplexing |
| FDM | Frequency Division Multiplexing |
| FDMA | Frequency Division Multiple Access |
| FEC | Forward Error Correction |
| FIFO | First In, First Out |
| FPLMTS | Future Public Land Mobile Telecommunication Systems |
| FSK | Frequency Shift Keying |
| FU | Functional Unit |
| GTT | Global Title Translation |
| HLR | Home Location Register |
| HLR/AC | Home Location Register/Authentication Center |
| HOT | Handoff Order Timer |
| HTTRT | Handoff To Third Result Timer |
| HTTT | Handoff To Third Timer |
| IA | Incoming Access |
| IBS | Intelligent Base Station |
| ICB | Incoming Call Barred |
| ID | Identifier |
| IEEE | International Association of Electrical and Electronic Engineers |
| IF | Intermediate Frequency |
| IN | Intelligent Network |
| INAP | Intelligent Network Application Protocol |
| IS | Interim Standard |
| ISDN | Integrated Services Digital Network |
| ISO | International Standards Organization |
| ISUP | ISDN User Part |
| ITI | Information Transfer Interface |
| ITU | International Telecommunications Union |

(continued)

| Acronyms | |
|---|---|
| **1.2.1 Acronyms** | |
| ITU-R | ITU-Radiocommunication Sector (formerly CCIR) |
| ITU-T | ITU-Telecommunication Standardization Sector (formerly CCITT) |
| IW | Interworking |
| IWF | Interworking Functions |
| LAPB | Layer Application Protocol "B" |
| LAPD | Link Access Protocol "D" primarily used in the ISDN "D" channel |
| LAPM | Link Access Protocol Modem (see V.42) |
| LATA | Local Access and Transport Area |
| LEC | Local Exchange |
| LMMRT | Location Measurement Maximum Response Timer |
| LOCREQ | LocationRequest INVOKE |
| LRT | Location Request Timer |
| MA | Mobile Application |
| MAHO | Mobile Assisted Hand-off |
| MAP | Mobile Application Part |
| MAT | Mobile Arrival Timer |
| MDHO | Mobile Directed Hand-off |
| MF | Multi-frequency |
| MHOT | Mobile Handover Order Timer |
| MHS | Message Handling Systems |
| MIN | Mobile Identification Number |
| MNP | Microcom Network Protocol |
| MNP 10 | Microcom Network Protocol Class 10 |
| MOS | Mean Opinion Score |
| MS | Mobile Station |
| MSA | Mobile Service Area |
| MSC | Mobile Switching Center |
| MSC-G (IS-41.1-B) | Mobile Switching Center - Gateway |
| MSC-H | Mobile Switching Center - Home |
| MSC-V | Mobile Switching Center - Visited |
| MSCG (?) | Mobile Switching Center Gateway |
| MTP | Message Transfer Part |
| MTSO | Mobile Telephone Switching Office |
| NAK | No acknowledgement (usually of the receipt of a packet of information) |
| NAM | Number Assignment Module |
| NANP | North American Numbering Plan |
| NOC | Network Operations Center |
| NPA | Numbering Plan Area (Area Code) |
| NSAP | Network Service Access Point |
| NXX | Office Code |
| OA | Outgoing Access |
| OAM&P | Operations, Administration, Maintenance and Provisioning |
| OCB | Outgoing Call Barred |
| OPC | Originating Point Code |

(continued)

| Acronyms | |
|---|---|
| **1.2.1 Acronyms** | |
| OPDU | Operation Protocol Data Unit |
| OSI | Open Systems Interconnection |
| PABX | Private Automatic Branch Exchange |
| PACA | Priority Access and Channel Assignment |
| PAD | Packet Assembly Disassembly |
| PBX | Private Branch Exchange |
| PC (IS-41.1-B) | Point Code |
| PC (?) | Protocol Conversion |
| PCM | Pulse Coded Modulation |
| PCS | Personal Communications Services |
| PCSC | PCS Switching Center |
| PDN | Public Data Network |
| PDU | Protocol Data Unit |
| PI | Presentation Indication |
| PID | Personal Terminal Identifier |
| PIN | Personal Identification Number |
| PLCS | Personal Communications Location Service |
| PMC | Personal Mobility Controller |
| PMD | Personal Mobility Data-store |
| PMM | Personal Mobility Management |
| PPDU | Presentation Protocol Data Unit |
| PPTN | Public Packet Telephone Network |
| PRI | Primary Rate Interface |
| PROFDIR | ServiceProfileDirective INVOKE |
| PROFREQ | ServiceProfileRequest INVOKE |
| PSP | PCS Service Provider |
| PSPDN | Public Switched Packet Data Network |
| PSTN | Public Switched Telephone Network |
| QAM | Quadrature Amplitude Modulation |
| QDT | Qualification Directive Timer |
| QOS | Quality of Service |
| QPSK | Quaduature Phase Shift Keying |
| QRT | Qualification Request Timer |
| QUALDIR | QualificationDirective INVOKE |
| QUALREQ | QualificationRequest INVOKE |
| RA | Rate Adaptation |
| RAND | Random Number |
| RASC | Radio Access System Controller |
| RCID | Radio Channel Identifier |
| RCT | Registration Cancellation Timer |
| RDRT | Redirection Request Timer |
| REDREQ | RedirectionRequest INVOKE |
| REGCANC | RegistrationCancellation INVOKE |
| REGNOT | RegistrationNotification INVOKE |
| RF | Radio Frequency |
| RFCT | Remote Feature Control Timer |
| RN | Redirecting Number |
| RNI | Redirecting Number Identifier |

(continued)

| Acronyms | |
|---|---|
| **1.2.1 Acronyms** | |
| RNT | Registration Notification Timer |
| RO | Remote Operation |
| ROUTREQ | RoutingRequest INVOKE |
| RP | Radio Port |
| RPC | Radio Port Controller |
| RPCU | Radio Port Control Unit |
| RPI | Radio Port Intermediary |
| RPT | Radio Personal Terminal |
| RRT | Routing Request Timer |
| RSSI | Received Signal Strength Indication |
| RSSI | Received Signal Strength Indicator |
| SACCH | Slow Access Control Channel |
| SAT | Supervisory Audio Tone |
| SBI | Shortened Burst Indicator |
| SCA | Selective Call Acceptance |
| SCAI | Switch-to-Computer Applications Interface |
| SCC | SAT Color Code |
| SCCP | Signalling Connection Control Part |
| SCEF | Service Creation Environment Function |
| SCF | Selective Call Forwarding |
| SCF | Service Control Function |
| SCM | Station Class Mark |
| SCP | Service Control Point |
| SCR | Selective Call Rejection |
| SI | Screening Indicator |
| SDF | Service Data Function |
| SDLC | Synchronous Data Link Protocol |
| SI | Screening Indicator |
| SID | System ID |
| SLE | Screening List Editing |
| SLF | Screening List Features |
| SMAF | Service Management Access (Agent) Function |
| SMDI | Simplified Message Desk Interface |
| SMF | Service Management Function |
| SPDT | Service Profile Directive Timer |
| SPDU | Session Protocol Data Unit |
| SPRT | Service Profile Request Timer |
| SRF | Specialized Resource Function |
| SS7 | Signalling System Number 7 |
| SSN | Subsystem Number |
| ST | Signaling Tone |
| STP | Signal Transfer Point |
| SWID | Switch Identification |
| SWNO | Switch Number |
| TA | Terminal Adapter |
| TBCD | Telephony Binary Coded Decimal |
| TC | Transaction Capabilities |
| TCAP | Transaction Capabilities Application Part |

(continued)

| Acronyms | |
|---|---|
| **1.2.1 Acronyms** | |
| TDD | Time Division Duplexing |
| TDM | Time Division Multiplexing |
| TDMA | Time Division Multiple Access |
| TE | Terminal Equipment |
| THTTT | Tandem Handoff To Third Timer |
| TID | Terminal Identifier |
| TR | Technical Report |
| TLDN | Temporary Local Directory Number |
| TLDNAT | Temporary Local Directory Number Association Timer |
| TMC | Terminal Mobility Controller |
| TMD | Terminal Mobility Data-store |
| TMM | Terminal Mobility Management |
| TMN | Telecommunication Management Network |
| TPDU | Transport Protocol Data Unit |
| TRANUMREQ | TransferToNumberRequest INVOKE |
| TSAP | Transport Service Access Point |
| TSC | Technical Sub-Committee |
| TSR | Time Slot and Rate Indicator |
| TTNRT | Transfer To Number Request Timer |
| UCH | User Channel or Voice Channel |
| UDT | Unitdata Message |
| UDTS | Unitdata Service Message |
| UNRELDIR | UnreliableRoamerDataDirective INVOKE |
| UPN | User Provided Number |
| UPT | Universal Personal Telecommunication |
| UPT# | Universal Personal Telecommunication Number |
| URDDT | Unreliable Roamer Data Directive Timer |
| VCH | Voice Channel |
| UTC | Coordinated Universal Time |
| VBD | Voice Band Data |
| VC | Voice Channel |
| VLR | Visitor Location Register |
| VMAC | Voice Mobile Attenuation Code |
| VMS | Voice Message System |
| WAMS | Wireless Access Mobility Services |
| XXXX | Station Number (in context of NPA-NXX-XXXX) |

## Definitions

1.2.2 Definition

**A-key**                 A secret, 64-bit pattern stored in the mobile
                          station. It is used to generate/update the
                          mobile station's Shared Secret Data. The A-
                          key is used in the mobile station
                          authentication process.

**Abbreviated Alert**     The abbreviated alert order is used
                          to remind the user that previously selected
                          alternative routing features are still
                          active.

**Access Denial Call Treatment** A tone, announcement, or
                          call redirection applied as appropriate.

**ACCOLC$_p$**            A four-bit number used to identify which
                          overload class field controls access
                          attempts.

**Accounting Management** - set of functions which enables the
                          measurement of the use of the network service
                          so that the charge for such use can be
                          determined.

**Acoustic Echo Cancellation** -

**Activation** -

**Advice Of Charging** -  Information which may be provided
                          to a user regarding the cost of a call

**Alerting Area** - a territory in which a wireless terminal is registered for alerting.

Note : The alerting area may or may not be identical to the terminal registration area.

**Alerting Identifier** – a unique value across an alerting area assigned to a terminal at registration.

**Analog Access Channel** - An analog control channel used by a mobile station to   access a system to obtain service.

**Analog Color Code**    An analog signal (see Supervisory Audio Tone) transmitted by a Base Station on an analog voice channel and used to detect capture of a mobile station by an interfering Base Station or the capture of a Base Station by an interfering mobile station.

**Analog Control Channel** - A channel used for the transmission of digital control    informa- tion from a Base Station to a mobile station or from   a mobile station to a Base Station.

**Analog Paging Channel** – A forward analog control channel that is used to page   mobile stations and send orders.

**Analog Voice Channel -**  A channel on which a voice conversation occurs and on which brief digital messages may be sent from a Base Station to a mobile station or from a mobile station to a  Base Station.

**Anchor -**  the element which originally was serving the radio personal terminal or radio termination (RPT/RT) when the RPT/RT requested or was offered a call from the network.  The anchor element maintains bearer and/or control channels to the RPT/RT via serving elements.

**Anchor PCSC**  The Personal Communications Switching Center (PCSC) which controls the Base Station (BS), that is the first to assign a traffic channel to a call on origination or termination.  For the duration of this call, this PCSC will be the anchor (fixed) point in the event that the Mobile Station (MS) should be handed off to other PCSCs.

**AUTH**  A 1-bit field in the System Parameter Overhead Message. When set to 1, it signifies that the system supports the authentication procedures.

**Authentication**  A procedure used by Base Stations to validate a mobile station's identity at system access.

**Authentication Response (AUTHR)** - An 18-bit output of the authentication algorithm. It is used to validate mobile station registrations, originations and terminations.

**Authorization Code** -

**Authorization** -

**Automatic Callback** -

**Automatic Personal Deregistration** - the process by which a user's location registration is automatically canceled without any explicit action from the user.

**Automatic Personal Registration** - the process by which a user's location registration is automatically updated without any explicit action from the user.

**Automatic Recall** -

**Auxiliary Services** -   represent a variety of services such as voice mail, paging, etc.  which may not be provided by the PSC.

**Base Station**  A station in the Domestic Public Cellular Radio Telecommunications Service, other than a mobile station, used for radio communications with mobile stations.

**Base Station Authentication Response (AUTHBS)** - An 18-bit pattern generated by the authentication algorithm. AUTHBS is used to confirm the validity of Base Station orders to update the Shared Secret Data.

**Base Station Random Variable (RANDBS)** - A 32-bit random number generated by the mobile station for use in authenticating Base Station orders to update the Shared Secret Data.

**Basic Telecommunication Service** – A complete set of capabilities that satisfies a specific telecommunication requirement, and which can be provided without the need of any additional service.

**BCH Code**          Bose-Chaudhuri-Hocquenghem Code

**Bearer Channels** –

**Bearer Service** –          A type of telecommunication service that provides the capability for the transmission of signals between user-network interfaces.

**Bearer Services**          Telecommunications services that provide the user with the capabilities, needed to transmit appropriate signals between certain access points (user-network interfaces).

**BER**          Bit Error Rate - Equals (# of received bit errors)/(Total # of transmitted bits).

**BIS$_s$**          Identifies whether a mobile station must check for an idle-to-busy transition on a reverse analog control channel when accessing a system.

**Busy-Idle Bits**          The portion of the data stream transmitted by a Base Station on a forward analog control channel that is used to indicate the current busy-idle status of the corresponding reverse analog control channel.

**Call Acceptance** -    the mechanism which allows a user to be alerted on one terminal and to choose to answer the call on any terminal, not necessarily the one through which alerting took place.

**Call Delivery Method** - Method by which a call is delivered to a subscriber in PCSC-V.

**Call Delivery**    The process by which calls directed to the cellular subscriber are delivered to the subscriber while roaming in a visited system.

**Call Disconnect**    The process of requesting the release of a connection between two or more network addresses.

**Call Forwarding Busy** –

**Call Forwarding No Answer** –

**Call Forwarding On Mobile Subscriber Busy** –

**Call Forwarding On Mobile Subscriber Not Registered** –

**Call Forwarding On No Paging Response** –

**Call Forwarding On Radio Congestion** –

**Call Forwarding Unconditional** –

**Call Hold** –

**Call Management** - Destination Identification - the process by which the network identifies a wireless terminal or a wireline access location to which a call can be routed (eventually to the user) subsequent to determining that a called address is a UPT number.

**Call Management** - Routing To Destination
Terminal(S)/User(S) - the process by which
the network sets up the connection from the
calling party to the PCS user(s) via a
wireless terminal or a wireline access
location.

**Call Progress Tones** -

**Call Release** The process of relinquishing the facilities
and circuits used for a call.

**Call Termination** The process of connecting a subscriber
to an incoming call.

**Call Trace** -

**Call Transfer** -

**Call Waiting** -

**Call** - An instance of a basic telecommunication service.

**Calling Number Identification Presentation** -

**Calling Number Identification Restriction** -

**Calling Number Identification** -

**Calling Party Number** -

**Candidate PCSC** This term is used during the Handoff
measurement request by the current serving
PCSC to reference the PCSC that is being
requested to provide its best CELL ID and
SIGNAL QUALITY values.

**CCLIST$_a$** The list of analog control channels to be
scanned by a mobile station processing the
Directed-Retry Task (see 2.6.3.14).

**CDMA** - Code Division Multiple Access; a radio access
technique.

**Cell Site**      The physical location of a cell's radio equipment and supporting systems. This term is also used to refer to the equipment located at the cell site.

**PCS Carrier**    A licensee of the responsible government agency (in the U.S. a licensee of the Federal Communications Commission) authorized to provide Personal Communications Services.

**CELP**           Code Excited Linear Predictive Coding. These techniques use codebooks to vector quantize the excitation (residual) signal of a Linear Predictive Codec (LPC).

**Channel Quality Measurement (CQM)** - A digital message in two parts in which the results of mobile channel quality measurements are sent to a Base Station over the FACCH or the SACCH.

**Charging Indicator** –

**Chipping** – A wideband modulating signal's amplitude that changes continually between two states, high and low, arbitrarily called +1 and -1, respectively. The sequence of highs and lows is pseudo-random; that is, at equally spaced intervals, control logic decides whether the wideband modulating signal should be +1 or -1. The logic chip alternates the amplitudes so that they seem to be random--over a long enough period , the numbers of +1's and -1's are about equal--and they follow a pattern the receiver can recognize. The speed of alternation is called the "chip rate" because direct- sequence spread spectrum chops up, or "chips", bits

**Clearinghouse**    A service used for the exchange and management of information.

**Closed User Group (CUG)** –

**CMAX$_s$**    The maximum number of channels to be scanned by a mobile station when accessing a system.

**Code Administration Task Force** - A group of cellular industry representatives which will be responsible for coordination of the code assignments in accordance with the provisions of this IS-53, under the auspices of the Engineering Department of the E.I.A.

**Codec**    The combination of an encoder and decoder in series (encoder/decoder).

**Coded Digital Verification Color Code (CDVCC)** - A 12-bit data field containing the 8-bit DVCC and 4 protection bits, sent in each time slot to and from mobile stations and Base Stations. It is used to indicate that the correct rather than co-channel data is being decoded.

**Coder**    Same as "encoder".

**Communication** - The instance of an application of a telecommunication service.

**Conference Calling** –

**Confidentiality** - a property by which information relating to an entity or party is not made available or disclosed to unauthorized individuals, entities or processes.

**Configuration Management** - provides functions to exercise control over, identify, collect data from, and provide data (i.e., provisioning data, service logic, etc.) to NEs.

**Connected Number Identification Presentation** –

**Connected Number Identification Restriction** –

**Connection Control** - provides the allocation, de-allocation, and cross- connection of bearer channels and management of associated resources and/or facilities.

**Continuous Transmission** - A mode of operation in which Discontinuous Transmission is not permitted.

**Control Mobile Attenuation Code (CMAC)** - A 3-bit field in the Control-Filler Message that specifies the maximum authorized power level for a mobile transmitting on a reverse control channel.

**Coordinated Universal Time** –

**COUNT$_{s-p}$**   A modulo-64 count held in the mobile station. COUNT$_{s-p}$ is maintained during power off.

**CPA$_s$**   Identifies whether the access functions are combined with the paging functions on the same set of analog control channels.

**Cryptography** [7498-2] – the discipline which embodies principles, means and methods for the transformation of data in order to hide its information content, prevent its undetected modification and/or prevent its unauthorized use.

**CUG Only Facilities** –

**CUG with Both Incoming and Outgoing Access** –

**CUG with Incoming Access** –

**CUG with  Outgoing Access** –

**Customer Originated Call Trace** –

**Cyclic Redundancy Check (CRC)** - A process in which a desired sequence of bits is encoded in a prescribed manner to enable detection and correction of bit errors. In this Standard, certain critical bit sequences are encoded using specified polynomials and procedures which use CRC-16 (CCITT) and BCH code structures.

**Data Communications**    The digital transmission of information (other than voice).

**Data Message Handler (DMH)**   A configuration of equipment designed to automatically exchange non-signalling data messages between systems.

**dB SPL**    Sound Pressure Level in deciBels with respect to 0.002 dynes/cm$^2$, 20 $\log_{10}$(Pressure / 0.002 dynes/cm$^2$). dBPa is preferred.

**dBA**    A-weighted sound pressure level expressed in dB obtained by the use of a metering characteristic and the weighting 'A' specified in ANSI S1.4-1983, and the addendum ANSI S1.4a-1985.

**dBmO**    Power relative to 1 milliWatt. CCITT Recommendation G.711 specifies a theoretical load capacity with a full scale sine wave to be +3.17 dBmO for $\mu$-law PCM coding. In this standard, +3.17 dBmO is also defined to be the level of a full amplitude sine wave in the 16 bit 2's complement notation used for the data files.

**dBPa**    Sound level with respect to 1 Pascal, 20 $\log_{10}$(Pressure / 1 Pa).

**DCC₈**          A DCC value stored in a mobile station's temporary memory.

**Deactivation** –

**Decoder**       Generally, a device for the translation of a signal from a digital representation into an analog format. See also "transcoder". For the purposes of this standard, a device compatible with IS-54 §2.2.2.2.4.

**Dedicated Control Channels**  A channel used for the transmission of digital control information from either a Base Station or a mobile station.

**Digit Delimiter**   The Digit Delimiter is the character '#', which is commonly known as the "pound", "sharp", or "number" key.

**Digit Sequence**    Some features may require that a Feature Code String include additional information which is the object of the feature - for example, Termination Addresses in Call Forwarding, Credit Card Charge information, Passwords, etc. Such additional information is referred to as a Digit Sequence. Digit Sequences are different from Modifier Digits, in that Modifier Digits are used to provide definition of options within a feature, while Digit Sequences are the object of the Feature's operation.

**Digital Color Code (DCC)** - A digital signal transmitted by a Base Station on a forward analog control channel that is used to detect capture of a Base Station by an interfering mobile station.

**Digital Data Service (including facsimile)** - Digital Data Service implies that non-modulated data is inserted directly into the baseband time slots and thus is sent at the channel bit rate. If the channel bit rate is faster than the data rate, the placing of some type of information in the extra time slots is called rate adaptation. The standards for rate adaptation include V.110 which is a form of bit stuffing but where the stuffed bits carry Forward Error Correction information, V.120 which is byte stuffing, and X.31 which is flag stuffing.

**Digital Mobile Attenuation Code (DMAC)** A 4-bit field commanding the initial mobile power level when assigning a mobile station to a digital traffic channel.

**Digital Verification Color Code (DVCC)** A digital 8-bit code that is sent by the Base Station to the mobile station and is used for the generation of the CDVCC.

**Digits** Digits consist of 0, 1, 2, 3, 4, 5, 6, 7, 8, and 9.

Direct Sequence Spread Spectrum - Direct-sequence transmission spreads the spectrum by modulating the original baseband signal directly with a very wide baseband digital signal. The wideband modulating signal's amplitude changes continually between two states, high and low, arbitrarily called +1 and -1, respectively. The sequence of highs and lows is pseudo-random; that is , at equally spaced intervals, control logic decides whether the wideband modulating signal should be +1 or -1. The logic chip alternates the amplitudes so that they seem to be random--over a long enough period , the numbers of +1's and -1's are about equal--and they follow a pattern the receiver can recognize. The speed of alternation is called the "chip rate" because direct-sequence spread spectrum chops up, or "chips", bits.

**Discontinuous Transmission (DTX)** A mode of operation in which a mobile-station transmitter autonomously switches between two transmitter power levels while the mobile station is in the conversation state on an analog voice channel or a digital traffic channel.

**Distinctive Alerting/Call Waiting** –

**Do Not Disturb Features** –

**$DTX_s$** Identifies in what way the mobile station is permitted to use the discontinuous transmission mode on the analog voice channel.

**Duplex Method** – Explains how two-way transmission is achieved. Frequency Division Duplexing (FDD) means that the transmit and receive directions use different frequencies while TDD means that both transmit and receive directions use the same frequency, but they take turns in transmitting. This does mean that information has to be transmitted at least twice as fast as "normal" and then slowed back down at the receiving end.

**DVCC$_r$** A DVCC value received by a mobile station over the forward digital traffic channel.

**DVCC$_s$** A DVCC value stored in a mobile station's temporary memory.

**Dynamic Range** – The normal attenuation in both directions of transmission between the Base Station and the Mobile Stations in a cell with a 20-30 mile radius means that both receivers must be capable of working over a wide range of received signal strengths. When in terrain with physical obstacles such as buildings or mountains, "shadowing" can further attenuate the signal. These problems can be overcome today with fast-reacting automatic gain control (AGC) circuitry which can be carried into the digital transmission arena. The digital cellular components now being introduced for mobile transceivers have an operating range of over 80 dB of received signal strength.

**Echo Cancellation** –

**Emergency Services** - any RPT/RT should be allowed to make an emergency (e.g., 911) call. Emergency calls should have priority over all other calls to ensure service.

**Encipherment** - the cryptographic transformation of data (see cryptography) to produce cipher text.

**Encoder** Generally, a device for the coding of a signal into a digital representation. For the purpose of this standard, a device compatible with IS-54 §2.1.3.3.2.

**Encryption [7498-2]** - see encipherment.

$E_s$ The stored value of the E field sent on the forward analog control channel. $E_s$ identifies whether a home mobile station must send only $MIN1_p$ or both $MIN1_p$ and $MIN2_p$ when accessing the system.

$EX_p$ Identifies whether home mobile stations must send $MIN1_p$ or both $MIN1_p$ and $MIN2_p$ when accessing the system. $EX_p$ differs from $E_s$ in that the information is stored in the mobile station's security and identification memory.

**Extended Protocol** An optional expansion of the signaling messages between the Base Station and mobile station to allow for the addition of new system features and operational capabilities.

**Extension Phone Service** -

**External Networks** - represent other voice, digital data, packet data, and broadband data networks.

**Fast Associated Control Channel (FACCH)** A blank-and-burst channel used for signaling message exchange between the Base Station and the mobile station.

**Fault Management** -      set of functions which enables the detection, isolation, and correction of abnormal operation of the telecommunications network and its environment.

**FDMA** –      Frequency Division Multiple Access; a radio access technique.

**Feature Code String**    Feature Code Strings consist of the subscriber entered information (including an introducing '*' or '**', numeric Digits, and the Digit Delimiter '#') which is sent to the Serving Carrier's system to invoke or cancel a feature.

**Feature Code String** – Feature Code Strings consist of the subscriber entered information (including an introducing '*' or '**', numeric Digits, and the Digit Delimiter '#') which is sent to the Serving Carrier's system to invoke or cancel a feature.

**Feature Codes**    Feature Codes are digit sequences entered by the subscriber to invoke special functions or non-standard modes of operation within the Cellular network.

**Feature Deregistration** –

**Feature Dialing Procedures** –

**Feature Registration** –

**FIRSTCHA$_s$**  The number of the first analog control channel used for accessing a system.

**FIRSTCHD$_s$**  The number for the first channel used as a dedicated control channel.

**FIRSTCHP$_{p-pri}$**  The number of the first paging channel used as a primary paging channel in the mobile station's "home" system.

**FIRSTCHP$_{p-sec}$**  The number of the first paging channel used as a secondary paging channel in the mobile station's "home" system.

**FIRSTCHP$_s$**  The number of the first analog control channel used for paging mobile stations.

**Flash Request**  A signal sent on a voice channel from a mobile station to a land station indicating that a user desires to invoke special processing. This is usually done by the user depressing the "SEND" key.

**Flash Request**  An indication sent on an analog voice channel from a mobile station to a Base Station indicating that a user desires to invoke special processing.

**Flash Request** –  A signal sent on a voice channel from a mobile station to a land station indicating that a user desires to invoke special processing. This is usually done by the user depressing the "SEND" key.

**Flash with Information**  A message sent over the digital traffic channel in either direction to indicate that special processing is required.

**Forward Analog Control Channel (FOCC)** - An analog control channel used from a Base Station to a mobile station.

**Forward Analog Voice Channel (FVC)** - An analog voice channel used from a Base Station to a mobile station.

**Forward Digital Traffic Channel (FDTC)** - A digital channel from a Base Station to a mobile station used to transport user information and signaling. There are two separate control channels associated with the FDTC: the Fast Associated Control Channel (FACCH) and the Slow Associated Control Channel (SACCH).

**Forward Error Correction** - the use of redundancy bits to locate and correct transmission channel errors.

**Framing** -

**Frequency Hopping Spread Spectrum** -

**Geostationary (Geosynchronous) Orbit** - A geosynchronous orbit is one where the satellite appears to remain above a fixed spot on earth.  On a plane passing through the equator, this occurs when the orbit is circular 22,300 statute miles above the earth

**Group Identification**  A subset of the most significant bits of the system identification (SID) that is used to identify a group of cellular systems.

**Group Identification** – A subset of the most significant bits of the system identification (SID) that is used to identify a group of cellular systems.

**Handoff** The act of transferring a mobile station from one channel to another.

**Home Carrier / Home PCSC** – The PCS Carrier from which mobile subscribers normally obtain service, and from which their permanent Mobile Identification Number is obtained.

**Home Location Register (HLR)** - The location register to which a user identity is assigned for record purposes such as subscriber information.

**Home Mobile Station** A mobile station that operates in the cellular system from which service is subscribed.

**Home System** The system which is transmitting a SID which is recognized by the mobile station as the "Home" SID.

**Home System** The system which is transmitting the SID which is recognized by the PSS as the "Home" SID.

**Home System** – The database where a subscriber/user service profile, accounting information, etc., are permanently located.

**In-Progress Call Trace** –

**Incoming Call Screening** –

**Incoming Calls Barred Within CUG** –

**Information Transfer Interface (Iti)** - establishment of a communication (signaling) path and any required bearer path between the RPT/RT and the radio port. For example, in TDMA and FDMA, time slots and frequencies are identified, and in CDMA, sequence codes are identified.

**Interrogation** -

**Intersystem Handoff** -

**Interworking Functions** - mechanisms which mask the differences in physical, link, and network technologies into consistent network and user services.

**Invocation** -

**IRS**    Intermediate Reference System. See CCITT Recommendation P.48[13].

**Key Feedback Tone** -

**Last Number Redial** -

**LASTCHA$_s$**   The number of the last analog control channel used for accessing a system.

**LASTCHD$_s$**   The number for the last channel used as a dedicated control channel.

**LASTCHP$_s$**   The number of the last analog control channel used for paging mobile stations.

**LOCAID$_s$**   The received location area identity.

**LOCAID$_{s-p}$**   Identifies the current location area.

---

[13] CCITT, The International Telegraph and Telephone Consultative Committee, *Blue Book*, Vol. V, Telephone Transmission Quality, IXth Plenary Assembly, Melbourne, 14-25 November, 1988, Rec. P.48, p.81ff.

**Location Registration (LREG)**     A 1-bit field used to indicate the location area ID registration status.

**$LREG_s$**     The stored value of the LREG field received in the most recent Location Area Global Action Message.

**$LT_s$**     Identifies whether the next access attempt is required to be the last try.

**$MAXBUSY_{s1}$**     The maximum number of busy occurrences allowed on a reverse analog control channel.

**$MAXSZTR_{s1}$**     The maximum number of seizure attempts allowed on a reverse analog control channel.

**Mean Output Power**     is defined as the calorimetric power measured during the active part of transmission.

**Message**     There are 2 types of messages sent between Base Stations and mobile stations: order messages and acknowledgement messages. An order message commands or requests the recipient to take some action. In some cases, the recipient acknowledges an order message by returning an acknowledgement message. In other cases, no acknowledgement message is returned. If a message has "Ack" as part of its name, it is an Ack Message; otherwise, it is an Order Message. The following are examples of valid order-message names: Send Burst DTMF, Send Burst DTMF Order, Send Burst DTMF Order Message, and Send Burst DTMF Message. The following are examples of valid acknowledgement-message names: Send Burst DTMF Ack, Send Burst DTMF Ack Message, Measurement Order Ack, and Measurement Order

Ack Message.

**MIN1$_p$** The 24-bit number that corresponds to the 7-digit directory telephone number assigned to a mobile station.

**MIN2$_p$** The 10-bit number that corresponds to the 3-digit area code assigned to a mobile station.

**MNRU** Modulated Noise Reference Unit. A procedure to add speech correlated noise to a speech signal in order to produce distortions that are subjectively similar to that produced by logarithmically companded PCM systems. The amount of noise is expressed as a Signal to Noise Ratio value in dB, and is usually referred to as dBQ. See CCITT Recommendation P.81[14].

**Mobile Assisted Handoff (MAHO)** - A process where a mobile in digital mode, under direction from a Base Station, measures signal quality of specified RF channels. These measurements are forwarded to the Base Station upon request to assist in the Handoff process.

**Mobile Directed Handoff (MDHO)** -

**Mobile Identification Number (MIN)** - The 34-bit number that is a digital representation of the 10-digit directory telephone number assigned to a mobile station.

---

[14] CCITT, The International Telegraph and Telephone Consultative Committee, *Blue Book*, Vol. V, Telephone Transmission Quality, IXth Plenary Assembly, Melbourne, 14-25 November, 1988, Rec. P.81, p.198ff.

**Mobile Identification Number (MIN)** – The 34-bit number that is a digital representation of the 10-digit directory telephone number assigned to a mobile station.

**Mobile Protocol Capability Indicator (MPCI)** - A 2-bit field used to indicate the mobile station's capabilities.

**Mobile Station**    A station in the Domestic Public Cellular Radio Telecommunications Service intended to be used while in motion or during halts at unspecified points. It is assumed that mobile stations include portable units (e.g., hand-held personal units) and units installed in vehicles.

**Mobile Station Class**    Mobile station classes are defined in Table 2.1.2-1.

**Modem-Modulated Data (including facsimile)** –

**Modifier Digits**    The specific implementation of some features may accept or require additional information relative to the feature's operation - for example, the number of rings, or the time delay, associated with Call Forwarding-No Answer. In such cases, this information may be represented by inclusion of one, two, or three additional digits, known as Modifier Digits, in the construction of the Feature Code String.  When only one Modifier Digit is used, the Digit '0' is a special case, and is treated as provided in paragraph 11.2.3. Modifier Digits do not include those digits which are Digit Sequences.

**MOS**        Mean Opinion Score. The result of a

subjective test based on an absolute category rating (ACR), where listeners associate a quality adjective with the speech samples that they are listening to. These subjective ratings are transferred to a numerical scale, and the arithmetic mean is the resulting MOS number.

**Multi-Level Precedence and Preemption** –

**Multi-path Fading** – Fluctuation in the resultant received radio signal level and phase due to the arrival of the same transmitted signal via different paths with different amplitude and phase relationships. Multipath fading could result in the received signal level falling below the receiver threshold or in distortion of the phase information.

**Multiple Access Techniques** - Multiple Access methodologies are of basically two types depending on how the frequency is to be shared: 1.) Multiple-channels-per-carrier where multiple simultaneous user channels are multiplexed together within a given bandwidth (Frequency Division Multiplexing [FDM]) or bit-rate (Time Division Multiplexing [TDM] or Code Division Multiplexing [CDM]) and 2.) Single-channel-per-carrier methods where multiple users are sequentially given the entire bandwidth (or bit-rate) via a pre-arranged structure which is often referred to as "access protocol". Single-channel-per-carrier techniques are more often seen in LAN or satellite applications than in voice and voice-grade data applications even though the originating alerting techniques before a channel is assigned in the circuit-switched environment require some type of access protocol.

1.) Simultaneous Shared Transmission Media (Multiple Channels-per-Carrier) Access Protocol

**Frequency Division Multiple Access (FDMA)** - refers to a methodology where the bandwidth allocated to the service or provider is Frequency Division Multiplexed and De-multiplexed into several smaller bandwidth channels and the control circuitry assigns one of these channels when there is demand.

**Time Division Multiple Access (TDMA)** occurs when the FDM derived channels mentioned above (or another given bandwidth) is further multiplexed using time as a parameter

and the control circuitry assigns a time and frequency defined channel to a specific user to meet the demand.

**Code Division Multiple Access (CDMA)** occurs when a pseudo-random (PR) or other orthogonal code is used as a multiplexing parameter and the control circuitry assigns a specific code to a specific user to meet the demand. The spreading code, a varying sequence of + and - 1's spreads the signal via amplitude or phase modulation. This varying sequence of + and - 1's is known as direct-sequence spread spectrum and is sometimes also known as Spread Spectrum Multiple Access (SSMA). There can also be frequency hopping CDMA.

2.) Sequentially Shared Transmission Media (Single-Channel-per-Carrier) Access Protocol

Since the prototype services for comparison are all multiple channels per carrier services (the Wireless LAN portion of PCS is assumed to be the responsibility of IEEE 802.11), only the two most prevalent types of uplink and downlink signaling channel access protocol are outlined.

**Aloha / Slotted Aloha** The Aloha protocol is such a scheme that has impact in both satellite communications as well as in local area networking and also works well when a mobile unit wishes to originate and request a channel assignment. Aloha is essentially a random, statistical method for assigning the bandwidth of a single channel. All transmitting locations use a packet protocol with all packets being the same size and thus any packet occupies the bandwidth for the same amount of time as any other packet. A station can transmit only one packet at a time, but can transmit any time it wishes. If two stations transmit at the same time, their packets collide and both packets are destroyed by mutual interference. When the receiving station fails to acknowledge a packet, the sending station acts as it does with any ARQ (Automatic Repeat reQuest) protocol in re-sending the packet. To insure that re-transmitted packets don't again collide, each transmitter wait a randomly assigned interval before re-transmitting. Improvements to the simple Aloha protocol have been made including early collision detection; restricting transmission to only certain time slots (slotted Aloha); assignment of priorities to give high volume traffic stations more time; allowing some high volume stations to transmit with more power so that in a collision situation the high-power packet "wins"; etc. Aloha was the precursor of Carrier Sense Multiple Access / Collision Detection which has been standardized as IEEE 802.3 (ISO 8802/3) and

is commonly known as Ethernet. The other LAN access protocol standards are IEEE 802.4 (ISO 8802/4) Token Bus, IEEE 802.5 (ISO 8802/5) Token Ring, IEEE 802.7 (ISO 8802/7) Slotted Ring.

**Packet Reservation Multiple Access (PRMA)**- is an extended version of Aloha for packet transmission. If the packets in the beginning of the train can secure the channel, a slot is reserved for the subsequent packets. PRMA works well in a non-real-time environment and the queuing time is usually acceptable for downlink alerting.

$NBUSY_{sv}$ The number of times a mobile station attempts to seize a reverse analog control channel and finds the reverse control channel busy.

**Network Facility** – the connection between the Radio Port Controller and the PCS Switching Center.

**Network Reference Model**- The functional entities and the associated interface reference points that may logically comprise a PCS network.

**Normal Charging** –

**North American Numbering Plan** – The numbering plan for the North American public switched telephone network.

$N_s$ The number of analog paging channels that a mobile station must scan.

$NSZTR_{sv}$ The number of times a mobile station attempts to seize a reverse analog control channel and fails.

**Numeric Information** Numeric information is used to describe the operation of the mobile station. The following subscripts are used to clarify the use of the numeric information:

- "p" to indicate a value set in a mobile station's permanent security and identification memory, and

- "r" to indicate a value received by a mobile station over a forward analog control channel,

- "s" to indicate a value stored in a mobile station's temporary memory,

- "s-p" to indicate a value stored in a mobile station's semi-permanent security and identification memory.

- "sl" to indicate the stored limits on values that vary,

- "sv" to indicate a stored value that varies as a mobile station processes various tasks,

NXTREG$_{s-p}$     Identifies when a mobile station must make its next registration to a system.

**Operations, Administration, Maintenance, Provisioning (OAM&P) Systems** - monitor, test, administer, and manage traffic and billing information for personal communications services and systems.

**Order**          See definition for Message.

**Originating PCSC**   The PCSC (usually the PSS's home PCSC) which receives a call to be delivered to a PSS.

**Origination Call Trace** -

**Outgoing Call Barring** -

**Outgoing Call Trace** -

**Outgoing Calls Barred Within CUG** -

**Overload Control (OLC)** - A means to restrict reverse control channel accesses by mobiles. Mobiles are assigned one (or more) of sixteen control levels. Access is selectively restricted by a Base Station setting one or more OLC bits in the Overload Control Global Action Message.

**Paging**          The act of seeking a mobile station when an incoming call has been placed to it.

**PCI$_s$**          The stored value of the PCI field in the System Parameter Overhead Message.

**PCSC-G:**          A "gateway" PCSC is for further study.

**PCSC:**          The primary switching & control point used by the PCS network to control access to the PSTN.

**PCSC-H:**          The "home" PCSC of a PSS which is broadcasting the SID that is recorded in the PSS's Security and Identification memory and which also is the "owner" of the directory number from which the PSS's MIN (refer to EIA/TIA-553) is derived.

**PCSC-V**          A "visited" PCSC in whose service area a roamer is operating.

**PDREG$_s$**    The stored value of the PDREG field received in the most recent Location Area Global Action Message.

**Performance Management** - provides functions to evaluate and report on the behavior of telecommunications equipment and the effectiveness of the network or network element (NE).

**Personal Communications Access Hunting** –

**Personal Communications Location Service** –

**Personal Communications Switching Center (PCSC)**   supports access independent call/service control and connection control (switching) functions and is responsible for interconnection of access and network systems to support end-to-end services.   The PCSC represents a collection of one or more network elements.

Note: The term "center" does not imply a physical location.

**Personal Communications Terminal Locator** –

**Personal Deregistration** - the process by which end users cancel a previous registration to a terminal.

**Personal Identification Number (PIN)**   A secret number managed by the system operator for each subscriber. The PIN is intended primarily for use in authenticating the subscriber (a number used in the verification of a user's claimed identity).

**Personal Mobility Controller** - provides the control logic for user authentication, service request validation, location management, alerting, user access to service profile, privacy, access registration, and call management.

**Personal Mobility Data-Store** - maintains data associated with users.

**Personal Subscriber Station (PSS)** - A generic term used to refer to equipment such as mobile stations, mobile terminals, portables, and fixed personal subscriber stations.

**Physical Layer Control** - A digital-mode-base-station control message to initiate or change certain mobile parameters such as traffic channel power, time alignment, and whether discontinuous transmission (DTX) is permitted.

**PL$_s$** The mobile station RF power level.

**Position Determination** - the capability of determining geographic coordinates/location based on measurements received from a wireless device.

**Power Down Registration (PDREG)** - A 1-bit field used to indicate the power down registration status.

**Power Up Registration (PUREG)** - A 1-bit field used to indicate the power up registration status.

**Precedence** -

**Preemption** -

**Preferential Closed User Group** -

**Primary Paging Channels** - A forward analog control channel that is used to page mobile stations and send orders, and is supported by both EIA-553 and IS-54 compatible mobiles.

**Priority Access and Channel Assignment** –

**Privacy And Authentication Management** - functions to ensure the validity of both maintenance information and telecommunications network traffic key management, intrusion surveillance, and fraud control.

**Privacy Mode (PM)** A one-bit parameter used to refer to the voice privacy status: '0' = "off", '1' = "on".

**Privacy** – the provision of protection of user information intended to prevent access to such information by unauthorized parties.

Clarification: This definition pertains specifically to air interface aspects as discussed in the draft proposed technical report "Privacy and Authentication Objectives for Wireless Access to Personal Communications".

**Protocol Capability Indicator (PCI)** - A 1-bit field in the first word of the System Parameter Overhead Message that when set to one indicates the Base Station is capable of digital operation.

**PUREG$_s$** The stored value of the PUREG field received in the most recent Location Area Global Action Message.

**PUREG$_{s-p}$** The semi-permanent value of PUREG$_s$.

**Quality of Service** –

**Radio Access System Controller** - supports the wireless mobility management and wireless access call control functions. It serves one or more subtending radio port controllers and may be associated with one or more PCS switching centers.

**Radio Channel (Link)** – the specific bearer/signaling connection established between the terminal and the Radio Port Intermediary via the Radio Port. The nature of the radio channel is dependent on the radio technology.

**Radio Channel Identifier** - a code managed by a radio port intermediary that distinguishes a radio connection between a RPT/RT and a radio port intermediary.

**Radio Channel Privacy** – a treatment applied to signaling or user data which is intended to prevent an unauthorized detector of the data from extracting information.

Note: See also encryption.

**Radio Control Channel Management** - network providing system information to terminals for the purpose of terminal location registration and call set-up.

**Radio Facility** – the bearer/signaling connection between the Radio Port Intermediary and the Radio Port Controller.

**Radio Interface** – The common boundary between the mobile station and the network, defined by functional characteristics, common radio (physical) interconnection characteristics, signal characteristics, and other characteristics, as appropriate.

Note – An interface is used to specify once the interconnection between the two sides of it.  The specification includes the type, quantity and function of the interconnecting means and the type, form and sequencing order of the signals to be interchanged by those means.

**Radio Personal Terminal** - a light-weight, pocket-size portable radio terminal providing the capability for the user to be either stationary or in motion while accessing and using telecommunication services.

**Radio Port** - supports transmission of signals over the air interface.

**Radio Port Controller** - provides an interface between one or more subtending radio port intermediaries and a PCS switching center, and supports air interface independent radio frequency transmission and reception functions.

**Radio Port Intermediary** - provides an interface between one or more subtending radio ports and the radio port controller, and supports air interface dependent radio frequency transmission and reception functions.

**Radio Termination** - interfaces terminal equipment to the radio access interface.

**Random Variable (RAND)** - A 32-bit random number issued periodically by the Base Station in two, 16-bit pieces: RAND1_A and RAND1_B. The mobile station stores and uses the most recent version of RAND in the authentication process.

**Random Variable Confirmation (RANDC)** - A 8-bit number used to confirm the last RAND received by the mobile station.

RAND$_s$           The stored value of RAND.

RCF$_s$            Identifies whether the mobile station must read a Control-Filler Message before accessing a system on a reverse analog control channel.

**Redirecting Number Identification** –

**Redirecting Number** –

**REGID$_s$**          The stored value of the last registration number (REGID$_r$) received on a forward analog control channel.

**REGINCR$_s$**        Identifies increments between registrations by a mobile station.

**Registration**   The procedure by which a PSS becomes listed as being present in the service area of an PCSC.

**Registration**   The steps by which a mobile station identifies itself to a Base Station as being active in the system at the time the message is sent to the Base Station.

**Release Request**   A message sent from a mobile station to a Base Station indicating that the user desires to disconnect the call.

**Reorder Tone** –

**Repeat Dialing** –

**Reverse Analog Control Channel (RECC)** - The analog control channel used from a mobile station to a Base Station.

**Reverse Analog Voice Channel (RVC)** - The analog voice channel used from a mobile station to a Base Station.

**Reverse Charging** –

**Reverse Digital Traffic Channel (RDTC)** - A digital channel from a mobile station to a Base Station used to transport user information and signaling. There are two separate control channels associated with the RDTC: the Fast Associated Control Channel (FACCH) and the Slow Associated Control Channel (SACCH.)

**Roamer**          A mobile station that operates in a cellular system other than the one from which service is subscribed.

**Roamer Service Profile**  The specific set of features, capabilities and/or operating restrictions, other than financial accountability, associated with the subscriber.

**Roamer Validation**  That aspect of roamer service qualification dealing with financial accountability. Also, the general procedure by which a roamer's financial accountability is established.

**Roamer** –       A mobile station that operates in a system other than the one from which service is subscribed.

**Roaming** –

**ROLR**          Receive Objective Loudness Rating. The receive audio sensitivity is the ratio of the input signal to a reference encoder to the acoustic output of the receiver expressed as a Receive Objective Loudness Rating (ROLR).

**ROLR(PN-2745)**          Receive Objective Loudness Rating, a measure of receive audio sensitivity. ROLR is a frequency-weighted ratio of the line voltage input signal to a reference encoder to the acoustic output of the receiver expressed as a Receive Objective Loudness Rating (ROLR). IEEE 269 defines the measurement of sensitivity and IEEE 661 defines the calculation of objective loudness rating.

**Routing Address Or Routing Number** - a(n) address (number) used by the network to direct a call.

$R_s$          Indicates whether registration is enabled or not.

**Scan of Channels**          The procedure by which a mobile station examines the signal strength of each forward analog control channel.

$SCC_s$          A digital number that is stored and used to identify which SAT frequency a mobile station should be receiving.

$SDCC1_s$          The SDCC value stored in a mobile station's temporary memory.

$SDCC2_s$          The SDCC value stored in a mobile station's temporary memory.

**Secondary Control Channels** - A supplementary set of analog control channels developed specifically for IS-54 compatible mobile stations. Such channels are used for the transmission of digital control information from either the base or mobile stations.

**Secondary Paging Channels** - In addition to the primary paging channels, a supplementary set of analog control channels developed specifically for IS-54 compatible mobile stations. Such channels are used to page mobile stations and send orders.

**Security audit trail** [7498-2] - data collected and potentially used to facilitate a security audit.

**Security audit** [7498-2] - an independent review and examination of system records and activities in order to test for adequacy of system controls, to ensure compliance with established policy and operational procedures, to detect breaches in security, and to recommend any changes in control, policy and procedures.

**Seizure Precursor** The initial digital sequence transmitted by a mobile station to a Base Station on a reverse analog control channel.

**Selective Call Acceptance** -

**Selective Call Forwarding** -

**Selective Call Rejection** -

**Service Access** - the ability for the network to provide access to features to users and accept service requests by users specifying the type of bearer or supplementary service that the users want to receive from the PCS network.

**Service Feature Mediation And Compatibility** - the process of correlating the capabilities of network elements with the service profiles of users and terminals and the terminal's capabilities for purposes of negotiating to deliver service features and avoiding service interactions that lead to unexpected results.

**Service Qualification**  The service capabilities, features and privileges to which a PSS is entitled. Also, the general procedure by which such service capabilities, features, and privileges become established in an PCSC.

**Service Validation (Terminal)** - the process by which the network authorizes the delivery of requested capabilities after determining the terminal's entitlement based on review of its service profile and/or account status.

**Service Validation (User)** - the process by which the network determines whether a user is allowed to receive service based on review of its service profile and/or account status.

**Serving Carrier / Serving PCSC**  The PCS Carrier on whose RF facilities the Mobile Subscriber is obtaining service.

**Serving PCSC**  The PCSC which currently has the PSS obtaining service at one of its cell sites within its coverage area.

**Session key** – an encryption key which provides <u>privacy</u> during a call and may be changed dynamically by the system.

**Shared Secret Data (SSD)** - A 128-bit pattern stored in the mobile station (in semi-permanent memory) and known by the Base Station. SSD is a concatenation of two 64-bit subsets: SSD-A, which is used to support the authentication procedures, and SSD-B, which serves as one of the inputs to the voice privacy mask generation process. Shared Secret Data is maintained during power off.

**Shared Secret Data Random Variable (RANDSSD)** - A 56-bit random number generated by the mobile station's home system. RANDSSD is used in conjunction with the mobile station's A-key and ESN to generate its Shared Secret Data.

**Sidetone** –

**SID$_p$**  The home system identification stored in the mobile station's permanent security and identification memory.

**SID$_r$**  The system identification received on a forward analog control channel.

**SID$_s$**  The stored system identification.

**SID$_{s-p}$**  Identifies the system of current (last successful) registration.

**Signaling Tone**  A 10-kHz tone transmitted by a mobile station on an analog voice channel to: 1) confirm orders, 2) signal flash requests, and 3) signal release requests.

**Signalling**: The information exchanged between the mobile station and the network, or within the network, for the purposes of service provision (e.g. connection establishment).

**Slow Associated Control Channel (SACCH)** - is a continuous channel used for signaling message exchange between the Base Station and the mobile station. A fixed number of bits are allocated to the SACCH in each TDMA slot.

**SNR**      Signal to Noise Ratio. The ratio of power of a signal and the power of a noise or error signal that has been added to it. The SNR is often expressed in deciBels (dB), calculated as $10 \log_{10}(\text{SNR})$.

**SNR – Signal to Noise Ratio**. The ratio of power of a signal and the power of a noise or error signal that has been added to it. The SNR is often expressed in decibels (dB), calculated as $10 \log_{10}(\text{SNR})$. The signal to noise ratio in decibels for a time segment, *i*. A segment size of 5 mS is used, which corresponds to 40 samples at an 8 kHz sampling rate (see§2.1.1 of IS-54).

**$\text{SNR}_i$ (PN-2745)**      The signal to noise ratio in deciBels for a time segment, i. A segment size of 5 ms is used, which corresponds to 40 samples at an 8 kHz sampling rate (see§2.1.1).

**SNRSEG**      Segmental signal to noise ratio. The weighted average over all time segments of $\text{SNR}_i$. (see §2.1.1).

**Speed Calling** –

**Spread Spectrum** – Spread spectrum refers to a variety of techniques for converting the information normally carried in a narrow band telecommunications channel to that suitable for transmission over a much wider band of radio (or higher) frequencies. At the receiver the information carried in the broad range of frequencies is converted back to the original narrow band frequency or the information carried therein.

The two main spread-spectrum techniques are direct-sequence spreading, based on directly modulating a data stream with a higher rate code sequence for spectrum expansion; and frequency-hopping spreading, based on hopping the data stream in the frequency domain as a function of a code sequence for spectrum expansion. Both techniques spread the transmitted power over a wide frequency band so that the average power per unit bandwidth (Watts per Hertz) is very small. At the receiver the signal is compressed into its original narrow band while leaving the power of any interfering signals scattered over the wide transmission band. The key to success in this operation is that the signal meant for any given user is "tagged" with a direct-sequence or frequency-hopping pattern that only that user's receiver recognizes.

$S_s$      Identifies whether the mobile station must send its serial number when accessing a system.

**Status Information**    The following status information is used in this section to describe mobile station operation:

- First Idle ID Status. A status variable used by the mobile station in association with its processing of the Idle task.

- First Location Area ID Status. A status variable used by the mobile station in association with its processing of received Location Area ID messages.

- First Registration ID Status. A status variable used by the mobile station in association with its processing of received Registration ID messages.

- Local Control Status. Indicates whether a mobile station must respond to local control messages.

- Location Registration ID Status. A status variable used by the mobile station in association with its processing of power up registrations and location-based registrations.

- Roam Status. Indicates whether a mobile station is in its home system.

- Serving-System Status. Indicates whether a mobile station is tuned to channels associated with System

A or System B.

- Termination Status. Indicates whether a mobile station must terminate the call when it is on an analog voice channel.

**Subscriber Review And Modification Of User Profile** - the ability for a subscriber, acting on behalf of a user of their service subscription, to be able to access the network to check or update their users' service profile(s) through mechanized access using uniform procedures and codes.

**Supervisory Audio Tone (SAT)** - One of three tones in the 6-kHz region that are transmitted by a Base Station and transponded by a mobile station.

**Supplementary Digital Color Code (SDCC1, SDCC2)** - Additional bits assigned to increase the number of color codes from four to sixty four, transmitted on the forward analog control channel.

**Supplementary Service** - A service that modifies or supplements a basic service.

Note: A supplementary service cannot be offered to a user as a stand-alone service. It must be offered with or in association with a basic telecommunication service.

**Switch Identification (SWID)** A parameter which is the concatenation of SID with SWNO.

**Switch Number (SWNO)** A number uniquely identifying a particular switch within a group of switches associated with a common SID.

**Symbol** In the = DQPSK modulation scheme specified, each symbol carries 2 bits of information.

**Synchronization (of session key)** – agreement between receiver and transmitter on a common reference point in a session key.

**System Identification (SID)** A digital identification associated with a cellular system; each system is assigned a unique number.

**Target PCSC** The PCSC which was selected from the candidate list as having the cell site with the best signal quality value for the PSS during the location request function.

**TDMA –** Time Division Multiple Access; a radio access technique.

**Telecommunication Service –** A set of capabilities that satisfy a telecommunication requirement.

**Teleservice –** A type of telecommunication service that provides the complete capability, including terminal equipment functions, for communication between users according to established protocols.

**Teleservices** — Telecommunication services that provide the user with necessary capabilities including terminal equipment functions, to communicate with any other user's terminal equipment.

**Terminal Alerting** - the process of obtaining the attention of a terminal by the network to deliver a call or other message.

Note:  This is referred to as "paging" in some other systems.

**Terminal Capability Verification** - the process by which the network, if possible, verifies whether the terminal, identified by the terminal ID, can support the requested service.

**Terminal Deregistration** - the process by which a wireless terminal's previous location registration is canceled.

**Terminal Elements** – terminal equipment, radio terminations, terminal adapters, data circuit-terminating equipment, and radio personal terminals.

**Terminal Equipment** – supports services for personal communications users via wireless or wireline access.

**Terminal Group Identifier**– identifies the service group of which the terminal is a member.

**Terminal Identifier Recognition** - the network capability to determine that information entered by calling parties or received from other networks is a terminal identifier.

**Terminal Mobility Controller** - provides the control logic for terminal authentication, location management, alerting, and routing to RPT/RTs.

**Terminal Mobility Data-Store** - maintains data associated with terminals.

**Termination Address** One or more digits, as determined by the Serving Carrier's system, which identify one (and only one) Terminating Subscriber. This could include Speed Call Codes (when supported by the Serving Carrier), other Mobile Telephone Numbers, or any valid World Telephone Number.

**Termination Call Trace** -

**Three-way Calling** -

$T_{max}$ The maximum undistorted sinusoidal level that can be transmitted through the interfaces between the VSELP codec and PCM based network. This is taken to be a reference level of +3.16 dBm0 (see IS-55 §2.2.4.1 and §3.3.2.2.1)

**TOLR (PN-2745)** Transmit Objective Loudness Rating, a measure of transmit audio sensitivity. TOLR is a frequency-weighted ratio of the acoustic input signal at the transmitter to the line voltage output of the reference decoder expressed as a Transmit Objective Loudness Rating (TOLR). IEEE 269 defines the measurement of sensitivity and IEEE 661 defines the calculation of objective loudness rating.

**TOLR** Transmit Objective Loudness Rating. The transmit audio sensitivity is the ratio of the acoustic input signal to the transmitter to the acoustic output of the reference decoder expressed as a Transmit Objective Loudness Rating (TOLR).

**TOLR** – Transmit Objective Loudness Rating, a measure of transmit audio sensitivity. TOLR is a frequency-weighted ratio of the acoustic input signal at the transmitter to the line voltage output of the reference decoder expressed as a Transmit Objective Loudness Rating (TOLR). IEEE 269 defines the measurement of sensitivity and IEEE 661 defines the calculation of objective loudness rating.

Traffic Channel     That portion of the digital information transmitted between the Base Station and the mobile station, or between the mobile station and the Base Station, that is dedicated to the transport of user and signaling information as depicted in the figure below.

```
                    +-------------+
                    |  Traffic    |
                    |  Channel    |
                    +-------------+
                           |
        +------------------+------------------+
        |                  |                  |
 +-------------+    +-------------+    +-------------+
 | User *      |    | FACCH *     |    | SACCH       |
 | Information |    |             |    |             |
 +-------------+    +-------------+    +-------------+
```

* FACCH and user information cannot be sent simultaneously.

Traffic:     The information generated by the subscriber that is transported on the network (i.e. user voice or data).

Transcoder     A device that transforms signals from one type of digital representation to another.

Transcoder - A device that transforms signals from one type of digital representation to another.

Trellis Coding - (Viterbi Algorithm) Trellis coding adds a calculated fifth bit to each QAM four-bit sequence. This extra bit when correlated with previously received data sequence helps the receiving modem to identify the phase and amplitude of the newly-arrived carrier more accurately. The modems using QAM include V.22 bis, V.29, V.32, and V.32 bis.

**Uniform Service Feature Delivery** - the capability to provide access to subscribed network-based features and services (e.g., call waiting, call forwarding, three-way calling, abbreviated dialing, other ISDN services and supplementary services, etc.) in a uniform manner based on terminal capabilities.

**Unique Challenge Authentication Response (AUTHU)** - An 18-bit pattern generated by the authentication algorithm. AUTHU is used to support the Unique Challenge-Response procedure.

**Unique Challenge-Response Procedure** - An exchange of information between a mobile station and a Base Station for the purpose of confirming the mobile station's identity. The procedure is initiated by the Base Station and is characterized by the use of a challenge-specific random number (i.e., RANDU) instead of the random variable broadcast globally (RAND).

**Unique Random Variable (RANDU)** - A 24-bit random number generated by the Base Station in support of the Unique Challenge-Response procedure.

**User Alerting** - the process of obtaining the attention of an end user by the network to deliver a call or other message.

**User Identifier Recognition** - the network capability to determine that information entered by calling parties or received from other networks is a user identifier (UPT number).

**User Privacy** - protection of information about users from uninvited and possibly illegal access.

**User Profile** - includes the service profile and contains all the data associated with the user, e.g., incoming call handling information, selection of service provider/service area coverage, service subscriptions, service parameters, etc.

**User Review And Modification Of User's Profile** - the ability for a user to be able to access the network to check or update their service profile through mechanized access using uniform procedures and codes.

**User-to-user Signaling** -

**Visited System:** From the PSS's perspective, a system which is transmitting a SID which is not recognized by the PSS as the "Home" SID.

**Visited System:** - From the MS's perspective, a system which is transmitting a SID which is not recognized by the MS as the "Home" SID.

**Visitor Location Register (VLR)** - The location register other than the HLR used by an PCSC to retrieve information for, for instance, handling of calls to or from a visiting subscriber.

**Visitor Location Register (VLR)** - The database where the necessary information about a visiting user is copied from the user's HLR and temporarily stored for the purposes of providing personal communication services.

**Vocoding (voice encoding)** -

**Voice Activated Features** -

**Voice Mobile Attenuation Code (VMAC)** - A 3-bit field in the Extended Address Word commanding the initial mobile power level when assigning a mobile station to an analog voice or traffic channel.

**Voice Privacy**          The process by which user voice transmitted over a digital traffic channel is afforded a modest degree of cryptographic protection against eavesdropping in the mobile station - Base Station segment of the connection.

**VSELP**          Vector Sum Excited Linear Predictive coding. A form of CELP that specially structures the codebooks in order to reduce complexity.

**Wait-for-Overhead Message (WFOM)** - A 1-bit field in the Control-Filler Message that when set to one causes the mobile to wait for an overhead message before transmitting on a reverse control channel.

**WER (PN-2745)**          Word Error Rate - Equals (# of incorrect received words)/(Total # of transmitted words). Incorrect words are defined as having a Cyclic Redundancy Code (CRC) check which fails.

**WER**          Word Error Rate - Equals (# of incorrect received words)/(Total # of transmitted words). Incorrect words are defined as having a CRC check which fails.

**WFOM$_a$**          Identifies whether a mobile station must wait for an Overhead Message Train before accessing a system on a reverse analog control channel.

## World Numbering Plan –

## World Zone 1 –

**RF Link Protocol Architecture**

**D5. RF Link Layer, Version 2T.X**

**D5.1. Loop Format**

### D5.1.1. Loop Format Normal

Each normal polling loop is formed of sixty four Time Division Multiple Access time slots which are paired into thirty two TDMA frames where duplexing is accomplished by providing TDD within each TDMA frame (Version 2.T.X). The slots are not numbered. For the purpose of all documentation on Version 2T.X the word "slot" will refer to the above pair. Numbers are shown in table XXX for reference only. Proper slot synchronization is performed by timing.

| Information Element |
| --- |
| Slot 1 |
| Slot 2 |
| Slot 3 |
| Slot 4 |
| Slot 5 |
| Slot 6 |
| Slot 7 |
| Slot 8 |
| Slot 9 |
| Slot 10 |
| Slot 11 |
| Slot 12 |
| Slot 13 |
| Slot 14 |

| Slot 15 |
| Slot 16 |
| Slot 17 |
| Slot 18 |
| Slot 19 |
| Slot 20 |
| Slot 21 |
| Slot 22 |
| Slot 23 |
| Slot 24 |
| Slot 25 |
| Slot 26 |
| Slot 27 |
| Slot 28 |
| Slot 29 |
| Slot 30 |
| Slot 31 |
| Slot 32 |

### D5.1.2. Loop Format Extended for 10 Mile Range

An extended range polling loop is formed of 25 Time Division Multiple Access (TDMA) time slots when duplexing is accomplished by providing Time Division Duplexing (TDD) within each TDMA slot in Version 2T.X. The slots are not numbered. Numbers are shown in table XXX for reference only. There is no index associated with the polling loop. Proper slot synchronization is performed solely by timing.

| Information Element |
| Slot 1 |
| Slot 2 |
| Slot 3 |
| . |
| . |
| . |
| Slot 24 |
| Slot 25 |

**D5.2. Slot Format**

**D5.2.1. Composite Slot Frame**

Each slot frame is composed of six elements and contains the complete transaction between a Base and a Mobile Station.

| Information Element | Reference | Length in Bits |
|---|---|---|
| PCP | 6.1.2.20 | To be provided in subsequent documents. |
| Guard Time 1 | 6.1.2.12 | To be provided in subsequent documents. |
| Base Frame | 5.2.1.1 | To be provided in subsequent documents. |
| Mobile Station Frame | 5.2.1.2 | To be provided in subsequent documents. |
| Guard Time 2 | 6.1.2.13 | To be provided in subsequent documents. |

**D5.2.1. Base Frame**

**D5.2.1.1.1. Base Frame Types**

There are two major types of frames transmitted from the Base to the MS, Base Poll Frames and Base Traffic Frames.

**D5.2.1.1.1.1. Base Poll Frame**

Base Poll Frames are used to allow MS's to seize slots.

**D5.2.1.1.1.1.1. General**

The General Base Poll frame is an invitation to any MS to attempt to seize a slot. This poll indicates a free slot.

| Information Element | Reference | Length in Bits |
|---|---|---|
| Head | 6.1.2.14 | 16 |
| Spare | 6.1.2.25 | 8 |
| Spare | 6.1.2.25 | 8 |
| Slot Quality | | 8 |
| Base ID | 6.1.2.3 | 32 |
| Service Provider | 6.1.2.23 | 16 |
| Zone | 6.1.2.27 | 16 |
| Facility | 6.1.2.10 | 32 |
| Spare | 6.1.2.25 | 48 |
| FCW | 6.1.2.11 | 16 |

**D5.2.1.1.1.1.2. Specific**

The Specific Base Poll is an invitation for only the MS identified by the PID Information Element to seize the current slot.

| Information Element | Reference | Length in Bits |
|---|---|---|
| Head | 6.1.2.14 | 16 |
| Correlative ID | 6.1.2.7 | 8 |

EP 1 347 584 A2

(continued)

| Information Element | Reference | Length in Bits |
|---|---|---|
| Result | 6.1.2.22 | 8 |
| Slot Quality | | 8 |
| PID | 6.1.2.21 | 40 |
| Map Type | 6.1.2.16 | 8 |
| Map | 6.1.2.15 | 32 |
| Spare | 6.1.2.25 | 64 |
| FCW | 6.1.2.11 | 16 |

### D5.2.1.1.1.2. Base Traffic Frame

There are two basic types of Base Traffic Frame, Bearer traffic and Signaling traffic. Each type of Base Traffic Frame exists in three varieties, high bandwidth, low bandwidth and symmetric bandwidth. Bearer Traffic also exists in the broadcast variety.

### D5.2.1.1.1.2.1. High Bandwidth Bearer

High Bearer Traffic Frames are used to transport user traffic from the Base to the mobile station. There are two types of bearer traffic FCW or error controlled traffic and RAW or not error controlled traffic.

### D5.2.1.1.1.2.1.1. FCW

FCW or Frame Check Word traffic is error controlled. Errors detected by the FCW will be corrected by re transmission. FCW frames may be temporally distorted.

| Information Element | Reference | Length in Bits |
|---|---|---|
| Head | 6.1.2.14 | 16 |
| D Channel | 6.1.2.8 | 8 |
| B Channel | 6.1.2.2 | To be provided in subsequent documents. |
| FCW | 6.1.2.11 | 16 |

### D5.2.1.1.1.2.1.2. RAW

RAW frames are transported without any error correction. Error correction is the responsibility of the PCS service operator application.

| Information Element | Reference | Length in Bits |
|---|---|---|
| Head | 6.1.2.14 | 16 |
| D Channel | 6.1.2.8 | 8 |
| B Channel | 6.1.2.2 | To be provided in subsequent documents. |

### D5.2.1.1.1.2.2. High Bandwidth Signaling

High bandwidth Signaling Traffic frames are used to carry high speed system signaling from the Base to the MS. These frames contain a FCW. Error control and retry are dependent upon the signaling sequence taking place at the time.

| Information Element | Reference | Length in Bits |
|---|---|---|
| Head | 6.1.2.14 | 16 |
| Correlative ID | 6.1.2.7 | 8 |
| Signaling Message | 6.1.1 | To be provided in subsequent documents. |
| FCW | 6.1.2.11 | 16 |

**D5.2.1.1.1.2.3. Low Bandwidth Bearer**

Low bandwidth Bearer Traffic Frames are used to transport a small amount of user traffic from the Base to the mobile station. There are two types of bearer traffic FCW or error controlled traffic and RAW or not error controlled traffic.

**D5.2.1.1.1.2.3.1. FCW**

FCW or Frame Check Word traffic is error controlled. Errors detected by the FCW will be corrected by re transmission. FCW frames may be temporally distorted.

| Information Element | Reference | Length in Bits |
|---|---|---|
| Head | 6.1.2.14 | 16 |
| D Channel | 6.1.2.8 | 8 |
| B Channel | 6.1.2.2 | To be provided in subsequent documents. |
| FCW | 6.1.2.11 | 16 |

**D5.2.1.1.1.2.3.2. RAW**

RAW frames are transported without any error correction. Error correction is the responsibility of the user.

| Information Element | Reference | Length in Bits |
|---|---|---|
| Head | 6.1.2.14 | 16 |
| D Channel | 6.1.2.8 | 8 |
| B Channel | 6.1.2.2 | To be provided in subsequent documents. |

**D5.2.1.1.1.2.4. Low Bandwidth Signaling**

Low bandwidth Signaling Traffic frames are used to carry small amounts of system signaling from the Base to the MS. These frames contain a FCW. Error control and retry are dependent upon the signaling sequence taking place at the time.

| Information Element | Reference | Length in Bits |
|---|---|---|
| Head | 6.1.2.14 | 16 |
| Correlative ID | 6.1.2.7 | 8 |
| Signaling Message | 6.1.1 | To be provided in subsequent documents. |
| FCW | 6.1.2.11 | 16 |

**D5.2.1.1.1.2.5. Symmetric Bandwidth Bearer**

Symmetric bandwidth Bearer Traffic Frames are used to transport normal user traffic from the Base to the mobile station. There are two types of bearer traffic FCW or error controlled traffic and RAW or not error controlled traffic.

**D5.2.1.1.1.2.5.1. FCW**

FCW or Frame Check Word traffic is error controlled. Errors detected by the FCW will be corrected by re transmission. FCW frames may be temporally distorted.

| Information Element | Reference | Length in Bits |
|---|---|---|
| Head | 6.1.2.14 | 16 |
| D Channel | 6.1.2.8 | 8 |
| B Channel | 6.1.2.2 | 160 |
| FCW | 6.1.2.11 | 16 |

**D5.2.1.1.1.2.5.2. RAW**

RAW frames are transported without any error correction. Error correction is the responsibility of the user.

| Information Element | Reference | Length in Bits |
|---|---|---|
| Head | 6.1.2.14 | 16 |
| D Channel | 6.1.2.8 | 8 |
| B Channel | 6.1.2.2 | 176 |

**D5.2.1.1.1.2.6. Symmetric Bandwidth Signaling**

Symmetric Signaling Traffic frames are used to carry normal system signaling from the Base to the MS. These frames contain a FCW. Error control and retry are dependent upon the signaling sequence taking place at the time.

| Information Element | Reference | Length in Bits |
|---|---|---|
| Head | 6.1.2.14 | 16 |
| Correlative ID | 6.1.2.7 | 8 |
| Signaling Message | 6.1.1 | 160 |
| FCW | 6.1.2.11 | 16 |

**D5.2.1.1.1.2.7. Broadcast Bearer**

Bearer Traffic Frames are used to transport user traffic from the Base to multiple mobile stations. There is only one type of broadcast bearer traffic that is RAW traffic. Forward error control on this traffic is the responsibility of the application.

**D5.2.1.1.1.2.7.1. RAW**

RAW frames are transported without any error correction. Error correction is the responsibility of the PCS service operator application.

| Information Element | Reference | Length in Bits |
|---|---|---|
| Head | 6.1.2.14 | 16 |
| Broadcast ID | 6.1.2.4 | 8 |
| B Channel | 6.1.2.2 | 176 |

**D5.2.1.2. Mobile Station Frame**

**D5.2.1.2.1 Mobile Station Frame Types**

There are two major types of frames transmitted from the MS to the Base, MS Poll Response Frames and MS Traffic Frames.

**D5.2.1.2.1.1. Mobile Station Poll Frame**

Mobile Station poll frames are sent by a MS to the Base in response to a Base Poll Frame as part of the slot seizing sequence.

**D5. 2. 1. 2. 1. 1. 1. General Response**

The General MS Poll Frame response is used by the MS to attempt to acquire a free slot.

| Information Element | Reference | Length in Bits |
|---|---|---|
| Head | 6.1.2.14 | 16 |
| Spare | 6.1.2.25 | 8 |
| Spare | 6.1.2.25 | 8 |
| PID | 6.1.2.21 | 40 |
| Service Provider | 6.1.2.23 | 16 |
| Spare | 6.1.2.25 | 96 |
| FCW | 6.1.2.11 | 16 |

**D5.2.1.2.1.2. Mobile Station Traffic Frame**

There are two types of MS Traffic Frame, Bearer traffic and Signaling traffic. Each of these type exists in three varieties, high bandwidth, low bandwidth and symmetric bandwidth.

**D5.2.1.2.1.2.1. High Bandwidth Bearer**

High Bandwidth Bearer Traffic Frames are used to transport high speed user traffic from the MS to the Base. There are two types of Bearer traffic, FCW or error controlled traffic and RAW or error uncontrolled traffic.

**D5.2.1.2.1.2.1.1. FCW**

FCW or Frame Check Word traffic is error controlled. Errors detected by the FCW will be corrected by re transmission. FCW frames may be temporally distorted.

| Information Element | Reference | Length in Bits |
|---|---|---|
| Head | 6.1.2.14 | 16 |
| D Channel | 6.1.2.8 | 8 |
| B Channel | 6.1.2.2 | To be provided in subsequent documents. |
| FCW | 6.1.2.11 | 16 |

**5.2.1.2.1.2.1.2. RAW**

RAW frames are transported without any error control. Error correction is the responsibility of the user.

| Information Element | Reference | Length in Bits |
|---|---|---|
| Head | 6.1.2.14 | 16 |
| D Channel | 6.1.2.8 | 8 |
| B Channel | 6.1.2.2 | To be provided in subsequent documents. |

### D5.2.1.2.1.3. High Bandwidth Signaling

High Speed Signaling Traffic frames are used to carry high speed system signaling from the MS to the Base. These frames contain a FCW. Error control and retry are dependent upon the signaling sequence taking place at the time.

| Information Element | Reference | Length in Bits |
|---|---|---|
| Head | 6.1.2.14 | 16 |
| Correlative ID | 6.1.2.7 | 8 |
| Signaling Message | 6.1.1 | To be provided in subsequent documents. |
| FCW | 6.1.2.11 | 16 |

### D5.2.1.2.1.3.1. Low Bandwidth Bearer

Low Speed Bearer Traffic Frames are used to transport low speed user traffic from the MS to the Base. There are two types of Bearer traffic, FCW or error controlled traffic and RAW or error uncontrolled traffic.

### D5.2.1.2.1.3.1.1. FCW

FCW or Frame Check Word traffic is error controlled. Errors detected by the FCW will be corrected by re transmission. FCW frames may be temporally distorted.

| Information Element | Reference | Length in Bits |
|---|---|---|
| Head | 6.1.2.14 | 16 |
| D Channel | 6.1.2.8 | 8 |
| B Channel | 6.1.2.2 | To be provided in subsequent documents. |
| FCW | 6.1.2.11 | 16 |

### D5.2.1.2.1.3.1.2. RAW

RAW frames are transported without any error control. Error correction is the responsibility of the user.

| Information Element | Reference | Length in Bits |
|---|---|---|
| Head | 6.1.2.14 | 16 |
| D Channel | 6.1.2.8 | 8 |
| B Channel | 6.1.2.2 | To be provided in subsequent documents. |

### D5.2.1.2.1.4. Low Bandwidth Signaling

Signaling Traffic frames are used to carry system signaling from the MS to the Base. These frames contain a FCW. Error control and retry are dependent upon the signaling sequence taking place at the time.

| Information Element | Reference | Length in Bits |
|---|---|---|
| Head | 6.1.2.14 | 16 |
| Correlative ID | 6.1.2.7 | 8 |
| Signaling Message | 6.1.1 | To be provided in subsequent documents. |
| FCW | 6.1.2.11 | 16 |

**D5.2.1.2.1.4.1. Symmetric Bandwidth Bearer**

Symmetric Bandwidth Bearer Traffic Frames are used to transport normal user traffic from the MS to the Base. There are two types of Bearer traffic, FCW or error controlled traffic and RAW or error uncontrolled traffic.

**D5.2.1.2.1.4.1.1. FCW**

FCW or Frame Check Word traffic is error controlled. Errors detected by the FCW will be corrected by re transmission. FCW frames may be temporally distorted.

| Information Element | Reference | Length in Bits |
|---|---|---|
| Head | 6.1.2.14 | 16 |
| D Channel | 6.1.2.8 | 8 |
| B Channel | 6.1.2.2 | 160 |
| FCW | 6.1.2.11 | 16 |

**D5.2.2.1.2.1.4.1.2. RAW**

RAW frames are transported without any error control. Error correction is the responsibility of the PCS service operator application

| Information Element | Reference | Length in Bits |
|---|---|---|
| Head | 6.1.2.14 | 16 |
| D Channel | 6.1.2.8 | 8 |
| B Channel | 6.1.2.2 | 176 |

**D5.2.1.2.1.5. Symmetric Bandwidth Signaling**

Symmetric Bandwidth Signaling Traffic frames are used to carry normal system signaling from the MS to the Base. These frames contain a FCW. Error control and retry are dependent upon the signaling sequence taking place at the time.

| Information Element | Reference | Length in Bits |
|---|---|---|
| Head | 6.1.2.14 | 16 |
| Correlative ID | 6.1.2.7 | 8 |
| Signaling Message | 6.1.1 | 160 |
| FCW | 6.1.2.11 | 16 |

**D5.3. Slot Seizing**

A MS wishing to communicate with a Base must seize at least one slot on that Base. This is accomplished by responding to a Base General Poll with a MS General Poll Response. The General Poll Response contains the unique PID of the MS. If the Base receives the General Poll Response for this MS the Base will respond at a later time with a Specific Poll which contains the PID of this MS.

If the MS sees such a specific poll then the MS may continue in the traffic mode.

If the MS does not see a Specific Poll containing its PID then the MS has not seized the slot and must wait a semirandom time based upon the MS PID and then try again in a manner similar to the backoff procedure of ANSI/ IEEE 802.3.

If an MS is waiting for a page from a specific Base then the MS waits for a Specific Poll from the Base. When the Base is ready to assign a slot to the MS and initiate communications with the MS the Base will issue a Specific Poll frame containing the PID of the MS.

## D5.4. Multiple Associated Signaling Frames per Loop

Normal slot synchronization is accomplished by timing. Both the Base and MS know which slots have been assigned for communication. The base sends its frames to the MS in the first half of the slot. The MS synchronizes on the Base transmission to transmit its response. The timing of the MS is sufficiently accurate that the MS can determine which Base transmission is destined for it even after having missed Base transmissions for up to one second.

During the signaling phase of a communication it is desirable that more than a single slot per loop be used for polling and signaling traffic. To accommodate this the Base assigns a temporary address, the Correlative ID, to the MS on the first Specific Poll. This Correlative ID is then carried in further signaling traffic from the Base to the MS. The MS searches for this ID in all traffic. The MS can then respond to any signaling traffic frame containing this Correlative ID. Unused Correlative ID's are maintained in a pool by the Base. When communication has ended between the Base and MS the Correlative ID is returned for reuse.

Any available slot may be used by the Base to continue signaling communications with the MS. The last slot used by the Base for signaling traffic will become the first slot for normal traffic use. If the Base returns to signaling traffic at a later time then the Correlative ID will still be effective and the Base may use any available slot for the control traffic.

## D5.5. Asymmetric Channels

Traffic flow between the Base and MS may be either symmetric or asymmetric. The flow is controlled by the Base acting upon the Bandwidth Request bit in the MS to Base traffic head. The normal flow is symmetric with equal traffic bandwidth being assigned in each direction. The Bandwidth Grant bits in the head of the Base to MS traffic frame establish the actual bandwidth to be used in the specific slot.

The Base assigns slot bandwidth using the following algorithm:

1. If only the Base requires additional bandwidth then the Base is granted the additional bandwidth for the next slot.
2. If only the MS requires additional bandwidth then the MS is granted the additional bandwidth for the next slot.
3. If both Base and MS or if neither request additional bandwidth then symmetric bandwidth is granted for the next slot.

## D5.6. Broadcast Channels

The asymmetry of the channel may be taken to its logical extreme by granting the entire bandwidth of a slot to the Base to produce a broadcast channel. The nature of this channel is indicated by the Bandwidth Grant bits in the traffic frame head. Multiple simultaneous Broadcast Channels can be supported. During broadcast the space normally used for the D Channel is used as a broadcast identifier. Since this occurs in the same position as the Correlative Identifier the difference in usage is signaled by the Bandwidth Grant bits.

## D5.7. Super Frame

Multiple slots in the polling loop may be negotiated for and assigned to an individual MS. The negotiation may take place at any time via signaling traffic. The assigned slots if available are communicated by the Base to the MS via the Map Type and Map Information Elements. Slot synchronization is maintained by timing for each assigned slot.

The Automatic Link Transfer procedure accounts for the multiplicity of slots assigned to the transferring MS. A Base must have the appropriate number of slots available to become a candidate as a terminal Base. The slots need not be available in the same positions as those in the originating Base.

**D5.8. Sub Frame**

A MS need not be granted a slot in every polling loop. Slot may be granted in loops separated by an integral number of intermediate loops. The maximum limit on the separation of slots allocated to a single MS is .5 seconds.

**Session/Network Protocol Architecture**

**E6.1. Signaling Traffic**

**E6.1.1. Signaling Message Format**

**E6.1.1.1. Hold Message Format**

**E6.1.1.1.1. HLD Base to MS**

Hold packets can be transmitted by either Base or the MS. They are always part of a larger signaling traffic exchange.

| Information Element | Reference | Length in Bits |
|---|---|---|
| Message Type | 6.1.2.17 | 8 |
| Spare | 6.1.2.25 | 152 |

**E6.1.1.1 HLD MS to Base**

The MS will send an HLD signaling message to the Base on one of two occasions:

1. when the MS requires more time to process data and return a result to the Base.
2. in response to an HLD message from the Base

| Information Element | Reference | Length in Bits |
|---|---|---|
| Message Type | 6.1.2.17 | 8 |
| Spare | 6.1.2.25 | 152 |

**E6.1.1.2. Synchronize Message Format**

Synchronize messages can be transmitted by either the Base or the MS. They are always part of recovery from an error in a signaling transaction. They are sent by whichever side discovered the error.

**E6.1.1.2.1. SYN Base to MS**

The Base will send an SYN message on one of two occasions:

1. when the Base encounters an error in the current signaling transaction.
2. in response to a CT message from the MS, if and only if the Base is the initiator of the transaction.

| Information Element | Reference | Length in Bits |
|---|---|---|
| Message Type | 6.1.2.17 | 8 |
| Spare | 6.1.2.25 | 152 |

**E6.1.1.2.2. SYN MS to Base**

The MS will send an SYN message on one of two occasions:

1. when the MS encounters an error in the current signaling transaction.

2. in response to a CT message from the Base, if and only if the MS is the initiator of the transaction.

| Information Element | Reference | Length in Bits |
|---|---|---|
| Message Type | 6.1.2.17 | 8 |
| Spare | 6.1.2.25 | 152 |

### E6.1.1.3. Acknowledge Message Format

Acknowledge messages can be transmitted by either the Base or the MS. They are always the last element of a larger signaling exchange. Note that not every exchange ends with an ACK message.

### E6.1.1.3.1. ACK Base to MS

| Information Element | Reference | Length in Bits |
|---|---|---|
| Message Type | 6.1.2.17 | 8 |
| Spare | 6.1.2.25 | 152 |

### E6.1.1.3.2. ACK MS to Base

| Information Element | Reference | Length in Bits |
|---|---|---|
| Message Type | 6.1.2.17 | 8 |
| Spare | 6.1.2.25 | 152 |

### E6.1.1.4. Authentication Message Format

Authentication consists of a query message from the Base to the MS followed by a response from the MS to the Base some time later.

### E. 6.1.1.5 Registration Message Format

### E6.1.1.4.1. AUT Base to MS

This message is sent to the MS from the Base whenever the Base wishes to start an authentication sequence. This message supplies a 64 bit number that is to be encrypted by the MS using the unique secret MS traffic key.

| Information Element | Reference | Length in Bits |
|---|---|---|
| Message Type | 6.1.2.17 | 8 |
| Authenticat ion Test Number | 6.1.2.1 | 64 |
| Spare | 6.1.2.25 | 88 |

### E.6.1.1.4.2. AUR MS to Base

This message is the MS response to an authentication request. It contains the result of encrypting the test number supplied by the authenticate message using the secret unique MS traffic key.

| Information Element | Reference | Length in Bits |
|---|---|---|
| Message Type | 6.1.2.17 | 8 |
| Encrypted Test Number | 6.1.2.9 | 64 |
| Spare | 6.1.2.25 | 88 |

### E6.1.1.5. Registration Message Format

### E6.1.1.5.1. RRQ MS to Base

A registration request is sent from a MS to a Base on an initial and a periodic basis. Upon the initial request the Base enters the registration process. If the Base does not receive a periodic registration request from a MS which is currently registered with that Base then the Base will initiate a de-registration procedure.

| Information Element | Reference | Length in Bits |
|---|---|---|
| Message Type | 6.1.2.17 | 8 |
| PID | 6.1.2.21 | 40 |
| UPT# | 6.1.2.26 | 40 |
| Spare | 6.1.2.25 | 72 |

### E6.1.1.5.2. RCP Base to MS

Upon initial or periodic registration completion the Base responds to the MS with a registration complete message.

| Information Element | Reference | Length in Bits |
|---|---|---|
| Message Type | 6.1.2.17 | 8 |
| Result | 6.1.2.22 | 8 |
| Spare | 6.2.2.25 | 144 |

### E6.1.1.6. De-registration Message Format

### E6.1.1.6.1. DRG MS to Base

The MS sends a de-registration message to the Base when the MS wishes to de-register itself from the Base. If the MS does not send this message de-registration will automatically occur a fixed time-out period from the last time the MS sent a registration request to the Base.

| Information Element | Reference | Length in Bits |
|---|---|---|
| Message Type | 6.1.2.17 | 8 |
| PID | 6.1.2.21 | 40 |
| Spare | 6.1.2.25 | 112 |

### E6.1.1.7. Call Origination Message Format

When a MS wishes to place an outward bound call it issues an originate message and waits for a connect response.

### E6.1.1.7.1. ORG MS to Base

The MS sends the call originate message to the Base to request the placement of an outgoing call.

| Information Element | Reference | Length in Bits |
|---|---|---|
| Message Type | 6.1.2.17 | 8 |
| Called Number | 6.1.2.5 | 80 |
| Service Request | 6.1.2.24 | 16 |
| Spare | 6.1.2.25 | 56 |

### E6.1.1.7.2. CNC Base to MS

The connect message is sent from the Base to the MS when a call, either incoming or outgoing, is completed or an outgoing call from the MS is rejected.

| Information Element | Reference | Length in Bits |
|---|---|---|
| Message Type | 6.1.2.17 | 8 |
| Connection Number | 6.1.2.6 | 40 |
| Map Type | 6.1.2.16 | 8 |
| Map | 6.1.2.15 | 32 |
| Result | 6.1.2.22 | 8 |
| Spare | 6.1.2.25 | 64 |

### E6.1.1.8. Hand-off Message Format

### E6.1.1.8.1. NHR MS to Terminal Base

The new hand-off request message is sent from the MS to the terminal base to initiate the hand-off procedure.

| Information Element | Reference | Length in Bits |
|---|---|---|
| Message Type | 6.1.2.17 | 8 |
| Old Connection # | 6.1.2.19 | 40 |
| Spare | 6.1.2.25 | 112 |

### E6.1.1.8.2. NHA Base to MS

The new hand-off acknowledge message is sent from the terminal Base to the MS to acknowledge the receipt of a new hand-off request message.

| Information Element | Reference | Length in Bits |
|---|---|---|
| Message Type | 6.1.2.17 | 8 |
| New Connection # | 6.1.2.18 | 40 |
| Spare | 6.1.2.25 | 112 |

### E6.1.1.8.3. CSC Originating Base to MS

This message is sent from the originating Base to the MS to signal that the network connection is available at the terminal Base.

| Information Element | Reference | Length in Bits |
|---|---|---|
| Message Type | 6.1.2.17 | 8 |

(continued)

| Information Element | Reference | Length in Bits |
|---|---|---|
| Spare | 6.1.2.25 | 152 |

**E6.1.1.9. Call Termination Message Format**

**E6.1.1.9.1. ANS MS to Base**

This message is sent from the MS to the Base when the subscriber answers the incoming call.

| Information Element | Reference | Length in Bits |
|---|---|---|
| Message Type | 6.1.2.17 | 8 |
| Spare | 6.1.2.25 | 152 |

**E6.1.1.10. Call Release Message Format**

**E6.1.1.10.1. DRI Base to MS**

The Base sends the drop incoming call message to the MS when the network drops the call in progress.

| Information Element | Reference | Length in Bits |
|---|---|---|
| Message Type | 6.1.2. 17 | 8 |
| Spare | 6.1.2. 25 | 152 |

**E6.1.2. Information Elements**

**E6.1.2.1. Authentication Test Number**

The authentication test number consists of 64 bits to be encrypted by the MS. The low order bit of the 64 bit number occupies Bit 1 Octet 1 while the high order bit of the 64 bit number occupies Bit 8 of Octet 8.

Bits                              Octets

| 8 | 7 | 6 | 5 | 4 | 3 | 2 | 1 | |
|---|---|---|---|---|---|---|---|---|
| 64 bit number to be encrypted by the MS | | | | | | | | 1 |
| . | | | | | | | | 2 |
| . | | | | | | | | 3 |
| . | | | | | | | | 4 |
| | | | | | | | | 5 |
| | | | | | | | | 6 |
| | | | | | | | | 7 |
| | | | | | | | | 8 |

### E6.1.2.2. B Channel

### E6.1.2.2.1. High Bandwidth Error Controlled Bearer Data

High Bandwidth Error Controlled Bearer Data issues will be reviewed in detail in subsequent submissions.

### E6.1.2.2.2. High Bandwidth Raw Bearer Data

High Bandwidth Raw Bearer Data issues will be reviewed in detail in subsequent submissions.

### E6.1.2.2.3. Low Bandwidth Error Controlled Bearer Data

Low Bandwidth Error Controlled Bearer Data issues will be reviewed in detail in subsequent submissions.

### E6.1.2.2.4. Low Bandwidth Raw Bearer Data

Low Bandwidth Raw Bearer Data issues will be reviewed in detail in subsequent submissions.

### E6.1.2.2.5. Symmetric Bandwidth Error Controlled Bearer Data

The Symmetric Bandwidth Error Controlled Bearer Data Element consists of 160 bits of user data. The low order bit of the 160 bit number resides in Bit 1 Octet 1 while the high order bit of the 160 bit number resides in Bit 8 of Octet 8. Data transmitted via this mode may suffer temporal distortion but will be correctly delivered with no undetected lost or duplicated packets to the limits of the FCW algorithm.

```
                        Bits                    Octets


        8   7   6   5   4   3   2   1      .
      +-------------------------------+
      |      160 bits of bearer data  |    1
      |                               |
      +-------------------------------+
      |                               |    2
      |                               |
      +-------------------------------+
      |                .              |
      |                .              |
      |                .              |
      +-------------------------------+
      |                               |    20
      |                               |
      +-------------------------------+
```

### E6.1.2.2.6. Symmetric Bandwidth Raw Bearer Data

The Symmetric Bandwidth Raw Bearer Data Element consists of 176 bits of user data. The low order bit of the 176 bit number resides in Bit 1 Octet 1 while the high order bit of the 176 bit number resides in Bit 8 of Octet 22.

```
                        Bits                    Octets


        8   7   6   5   4   3   2   1
      ---------------------------------

      +-------------------------------+
      |      176 bits of bearer data  |    1
      |                               |
      +-------------------------------+
      |                               |    2
      |                               |
      +-------------------------------+
      |                .              |
      |                .              |
      |                .              |
      +-------------------------------+
      |                               |    22
      |                               |
      +-------------------------------+
```

### E6.1.2.3. Base ID

The Base identifier uniquely identifies the specific Base Station. The low order bit of the 32 bit number is located in Bit 1 Octet 1 the high order bit of the 32 bit number is located in Bit 8 of Octet 2.

```
                    Bits                      Octets

        8    7    6    5    4    3    2    1

        ┌───────────────────────────────────────┐
        │  32 bits of unique Base identification │     1
        │                                         │
        ├───────────────────────────────────────┤
        │                                         │     2
        ├───────────────────────────────────────┤
        │                                         │     3
        ├───────────────────────────────────────┤
        │                                         │     4
        └───────────────────────────────────────┘
```

### E6.1.2.4. Broadcast ID

The broadcast ID Information Element is used to identify specific broadcast data streams. The ID is assigned to the specific broadcast stream on a connection basis. It is the responsibility of the broadcast application to provide periodic application broadcast heading information. The broadcast ID is assigned at the start of a connection and released to the broadcast ID pool at the termination of the connection.

```
                    Bits                      Octets

        8    7    6    5    4    3    2    1

        ┌───────────────────────────────────────┐
        │        8 bits of  Broadcast  ID        │     1
        │                                         │
        └───────────────────────────────────────┘
```

### E6.1.2.5. Called Number

[0784]   The called number consists of 80 bits of called party number. This 80 bit number consists of 20 IA5 characters.

```
                    Bits                      Octets

          8   7   6   5   4   3   2   1
        ┌───────────────────────────────┐
        │      80bits of Called Number   │    1
        │    (IA5 characters - see Note) │
        ├───────────────────────────────┤
        │                               │    2
        ├───────────────────────────────┤
        │                .              │
        │                .              │
        │                .              │
        ├───────────────────────────────┤
        │                               │   10
        └───────────────────────────────┘
```

Note --The number digits appear in multiple octet 4's in the same order in which they would be entered, that is, the number digit which would be entered first would be located in the first octet, bits 4-8.

### E6.1.2.6. Connection Number

[0785]   The connection number specifies the specific network connection which was allocated to carrying the bearer channel of this MS from the Base Station to the network. All bytes of this Data Element may not be significant. Unused nybbles and bytes must be filled with "F" hex.

```
                    Bits                      Octets

          8   7   6   5   4   3   2   1
        ┌───────────────────────────────┐
        │      40bits of Called Number   │    1
        │    (IA5 characters - see Note) │
        ├───────────────────────────────┤
        │                               │    2
        ├───────────────────────────────┤
        │                .              │
        │                .              │
        │                .              │
        ├───────────────────────────────┤
        │                               │    5
        └───────────────────────────────┘
```

Note --The number digits appear in multiple octet 4's in the same order in which they would be entered, that is, the number digit which would be entered first would be located in the first octet, bits 4-8.

### E6.1.2.7. Correlative ID

The correlative Data Element is used to temporarily identify a group of frames as being destined to a specific MS. The ID is assigned for the duration of the connection and is released for reuse by another MS at the termination of a connection. The specific value of "FF" is reserved for broadcast use. The correlation ID for a specific MS may be changed during a connection.

```
                    Bits                    Octets

        8   7   6   5   4   3   2   1
       ┌───────────────────────────────┐
       │    8 bits of correlative ID    │    1
       │                               │
       └───────────────────────────────┘
```

### E6.1.2.8. D Channel

The D channel Data Element transmits the out of band application channel in a byte serial manner. The protocol used on this channel is described in document TBD. The data is transmitted with the low order bit of the D channel information in Bit 1 of the Octet.

```
                    Bits                    Octets

        8   7   6   5   4   3   2   1
       ┌───────────────────────────────┐
       │     8 bits D Channel data      │    1
       │                               │
       └───────────────────────────────┘
```

### E6.1.2.9. Encrypted Test Number

[0788]   The encrypted test number consists of 64 bits which have been encrypted by the MS. The low order bit of the 64 bit number occupies Bit 1 Octet 1 while the high order bit of the 64 bit number occupies Bit 8 of Octet 8.

```
                    Bits                    Octets

        8   7   6   5   4   3   2   1
       ┌───────────────────────────────┐
       │ 64 bit number that has been encrypted │  1
       │            by the MS           │
       ├───────────────────────────────┤
       │                 .              │    2
       │                               │
       └───────────────────────────────┘
```

| | 3 |
|---|---|
| . | 4 |
| | 5 |
| | 6 |
| | 7 |
| | 8 |

### E6.1.2.10. Facility

The facility Data Element describes the services being offered by the Base Station. The internal format of this element is TBD.

```
                        Bits                        Octets

          8    7    6    5    4    3    2    1
        ┌──────────────────────────────────┐
        │   32 bits of service description  │      1
        ├──────────────────────────────────┤
        │                                  │      2
        ├──────────────────────────────────┤
        │                                  │      3
        ├──────────────────────────────────┤
        │                                  │      4
        └──────────────────────────────────┘
```

### E6.1.2.11. FCS

The frame check sequence Data Element will be a 16 bit sequence. It will be the ones complement of the sum (modulo 2) of:

a) The remainder of $x^k(x^{15}+x^{14}+x^{13}+x^{12}+x^{11}+x^{10}+x^9+x^8+x^7+x^6+x^5+x^4+x^3+x2+x^1+1)$ divided (modulo 2) by the generator polynomial $x^{16}+x^{12}+x^5+1$, where k is the number of bits in the frame not including the FCS.
b) The remainder of the division (modulo 2) by the generator polynomial x16+x12+x5+1 of the product of x16 by the content of the frame existing from and including the first bit of the frame to but not including the first bit of the FCS.

```
                        Bits                        Octets

          8    7    6    5    4    3    2    1
        ┌──────────────────────────────────┐
        │          16 bits of FCS           │      1
        ├──────────────────────────────────┤
        │                                  │      4
        └──────────────────────────────────┘
```

**E6.1.2.12. Guard Time 1**

Guard Time issues will be reviewed in detail in subsequent submissions.

**E6.1.2.13. Guard Time 2**

Guard Time issues will be reviewed in detail in subsequent submissions.

**E6.1.2.14. Head**

**E6.1.2.14. Head**

**E6.1.2.14.1. Base Polling Frame Head**

The head Data Element describes the major format of the rest of the frame.

```
                Bits                        Octets

    ┌─────┬─────┬─────┬─────┬─────┬─────────────┐
    │ B/H │  E  │ G/S │ P/N │ SA  │     PWR     │   1
    ├─────┴─────┼─────┴─────┼─────┴─────────────┤
    │   Spare   │    CU     │    Head FCW       │   2
    └───────────┴───────────┴───────────────────┘
```

| B/H | | This bit indicates the originator of the frame. |
|-----|---|---|
| | 0 | The frame has been sent by the MS |
| | 1 | The frame has been sent by the Base |
| E | | The extension bit allows the protocol to be extended at a later date. |
| | 0 | This frame is in unextended protocol |
| | 1 | This frame is in an extended protocol |
| G/S | | If the P/N bit is 1 then this bit indicates that the frame is either a general or a specific poll. |
| | 0 | The frame is a specific poll |
| | 1 | The frame is a general poll |
| P/N | | This bit indicates whether the frame is a poll frame or a normal traffic frame. |
| | 0 | This frame is a normal traffic frame |
| | 1 | This frame is a polling frame |
| SA | | Serial address bit |

| PWR | 567 | Adjust MS power |
|-----|-----|-----|
| | 000 | no change |
| | 001 | -3 db |
| | 010 | -6 db |
| | 011 | -9 db |

(continued)

| | | |
|---|---|---|
| | 100 | +3 db |
| | 101 | +6 db |
| | 110 | +12 db |
| | 111 | +21 db |

| Spare | | Currently unused. Reserved for future use |
|---|---|---|
| CU | | This pair of bits indicate the slot utilization of this Base. |
| | $\underline{6\ 7}$ | |
| | 0 0 | The Base is "very empty" |
| | 0 1 | The Base is "empty" |
| | 1 0 | The Base is "nearly full" |
| | 1 1 | The Base is "full" |

| Spare | | Currently unused. Reserved for future use |
|---|---|---|
| Head Check Field | HCKF | Cyclic Redundancy Check calculated over the 12 preceding bits. Generating polynomial TBD. |

### E6.1.2.14.1.1. Base General Poll Head

This Data Element when seen as the head of a frame indicates that the frame is a Base issued general poll. A general poll is issued by the Base as a request for any MS to respond with a general poll response if it wishes to seize a slot.

```
                          Bits                        Octets

         0     1     2     3     4     5     6     7
      +-----+-----+-----+-----+-----+-----------------+
      |  1  |  0  |  1  |  1  |  -  |      - - -       |    1
      +-----------------------+-----------------------+
      |         - - - -       |        - - - -        |    2
      +-----------------------+-----------------------+
```

### E6.1.2.14.1.2. Base Specific Poll Head

The specific poll head indicates that this frame is a Base issued specific poll. A specific poll requests a specific MS to respond. The slot in which the specific poll is issued has already been allocated to the MS and thus the MS has seized the slot.

Bits                                              Octets

```
     0   1   2   3   4   5   6   7
   +---+---+---+---+---+-----------+
   | 1 | 0 | 0 | 1 | - |    ---    |    1
   +---+---+---+---+---+-----------+
   |     - - - -     |    - - - -  |    2
   +-----------------+-------------+
```

#### E6.1.2.14.2. Base Traffic Frame Head

Bits                                         `          Octets

```
     0   1   2   3   4   5   6   7
   +-----+---+---+---+----+----------+
   | B/H | E |C/N|P/N| SA |   PWR    |   1
   +-----+---+---+---+----+----------+
   | BW Grant |   CU   |  Head FCW   |   2
   +----------+--------+-------------+
```

| B/H | | This bit indicates the originator of the frame. |
|-----|-----|-----|
| | 0 | The frame has been sent by the MS |
| | 1 | The frame has been sent by the Base |
| E | | The extension bit allows the protocol to be extended at a later date. |
| | 0 | This frame is in unextended protocol |
| | 1 | This frame is in an extended protocol |
| C/N | | If the P/N bit is 0 then this bit indicates that the frame is normal or signaling traffic. |
| | 0 | The frame is a normal traffic. |
| | 1 | The frame is signaling traffic. The packet will be error checked by the FCW. |
| P/N | | This bit indicates whether the frame is a poll frame or a normal traffic frame. |
| | 0 | This frame is a normal traffic frame |
| | 1 | This frame is a polling frame |
| SA | | Serial address bit |
| PWR | <u>567</u> | Adjust MS power |
| | 000 | no change |
| | 001 | -3 db |
| | 010 | -6 db |
| | 011 | -9 db |

(continued)

| | | | |
|---|---|---|---|
| | | 100 | +3 db |
| | | 101 | +6 db |
| | | 110 | +12 db |
| | | 111 | +21 db |
| | BW Grant | <u>0</u> 1 | The BW grant field grants asymmetric bandwidth to the Base and Mobile Station. The grant is absolute and applies to the current slot. |
| | | 0 0 | Symmetric bandwidth grant. Each direction has been granted one half the bandwidth. |
| | | 0 1 | The maximum bandwidth has been granted to the MS the minimum has been granted to the Base. |
| | | 1 0 | The maximum bandwidth has been granted to the Base and the minimum to the MS. |
| | | 1 1 | Broadcast mode the entire slot is granted to the Base. There is no MS frame. |
| | CU | | This pair of bits indicate the slot utilization of this Base. |
| | | <u>6 7</u> | |
| | | 0 0 | The Base is "very empty" |
| | | 0 1 | The Base is "empty" |
| | | 1 0 | The Base is "nearly full" |
| | | 1 1 | The Base is "full" |
| | Head Check Field | HCKF | Cyclic Redundancy Check calculated over the 12 preceding bits. Generating polynomial TBD. |

### E6.1.2.14.2.1. Base Normal Traffic Head

This Data Element when seen as the head of a frame indicates that the frame is a Base issued normal traffic frame. The FCW of this frame is computed. Whether it is checked or not depends upon running in either the error controlled or the raw bearer mode.

```
              Bits                        Octets

   0    1    2    3    4    5    6    7
 ┌────┬────┬────┬────┬────┬─────────────┐
 │ 1  │ 0  │ 0  │ 0  │ -  │     ---     │    1
 ├────┴────┼────┴────┼────┴─────────────┤
 │   --    │   --    │      ----        │    2
 └─────────┴─────────┴──────────────────┘
```

### E6.1.2.14.2.2. Base Signal Traffic Head

This Data Element when seen as the head of a frame indicates that the frame is a Base issued signaling frame. The FCW of this frame is computed and this is checked against the FCW contained in the frame.

```
                        Bits                      Octets

        0    1    2    3    4    5    6    7
      ┌────┬────┬────┬────┬────┬──────────────┐
      │ 1  │ 0  │ 1  │ 0  │ ~  │     - - -     │   1
      ├────────┼────────┼──────────────────────┤
      │   - -  │   - -  │       - - - -         │   2
      └────────┴────────┴──────────────────────┘
```

### E6.1.2.14.3. Mobile Station Polling Frame Head

```
                        Bits                      Octets

        0    1    2    3    4    5    6    7
      ┌────┬────┬────┬────┬────┬────┬──────────┐
      │B/H │ E  │G/S │P/N │ SA │ BW │  Spare   │   1
      │    │    │    │    │    │REQ │          │
      ├──────────────────┼──────────────────────┤
      │      Spare       │        FCW           │   2
      └──────────────────┴──────────────────────┘
```

| B/H | | This bit indicates the originator of the frame. |
| --- | --- | --- |
| | 0 | The frame has been sent by the MS |
| | 1 | The frame has been sent by the Base |
| E | | The extension bit allows the protocol to be extended at a later date. |
| | 0 | This frame is in unextended protocol |
| | 1 | This frame is in an extended protocol |
| G/S | | If the P/N bit is 1 then this bit indicates that the frame is either a general or a specific poll. |
| | 0 | The frame is a specific poll |
| | 1 | The frame is a general poll |
| P/N | | This bit indicates whether the frame is a poll frame or a normal traffic frame. |
| | 0 | This frame is a normal traffic frame |
| | 1 | This frame is a polling frame |
| SA | | This bit contains the next bit of the serial ID of the MS. This ID is the PID send serially a single bit at a time. It is repeated continuously as a check against inadvertent channel capture by a MS of a different ID. |

(continued)

| | | |
|---|---|---|
| BW REQ | | The bit indicates the bandwidth requested by the MS for the next slot assigned to the MS. |
| | 0 | Minimum bandwidth is requested for the next slot. |
| | 1 | Maximum bandwidth is requested for the next slot |
| Spare | | Currently unused. Reserved for future use |
| Head Check Field | HCKF | Cyclic Redundancy Check calculated over the 12 preceding bits. Generating polynomial TBD. |

### E6.1.2.14.3.1. Mobile Station General Poll Response Head

This Data Element when seen as the head of a frame indicates that the frame is a MS issued response to a general poll. It is a request to seize a slot.

```
                         Bits                    Octets

       0    1    2    3    4    5    6    7
    ┌────┬────┬────┬────┬────┬────┬───────┐
    │ 0  │ 0  │ 1  │ 1  │ -  │ -  │  --   │     1
    ├───────────────────┼───────────────────┤
    │      - - - -      │     - - - -       │     2
    └───────────────────┴───────────────────┘
```

### E6.1.2.14.3.2. Mobile Station Specific Poll Response Head

This Data Element when seen as the head of a frame indicates that the frame is a MS issued response to a specific poll.

```
                         Bits                    Octets

       0    1    2    3    4    5    6    7
    ┌────┬────┬────┬────┬────┬────┬───────┐
    │ 0  │ 0  │ 0  │ 1  │ -  │ -  │  --   │     1
    ├───────────────────┼───────────────────┤
    │      - - - -      │     - - - -       │     2
    └───────────────────┴───────────────────┘
```

**E6.1.2.14.4. Mobile Station Traffic Frame Head**

```
                           Bits                        Octets


           0    1    2    3    4    5    6    7
         ┌────┬────┬────┬────┬────┬────┬─────────┐
         │B/H │ E  │S/N │P/N │ SA │ BW │  Spare  │   1
         │    │    │    │    │    │REQ │         │
         ├────┴────┴────┴────┼────┴────┴─────────┤
         │      Spare        │        FCW        │   2
         └───────────────────┴───────────────────┘
```

| B/H | | This bit indicates the originator of the frame. |
|---|---|---|
| | 0 | The frame has been sent by the MS |
| | 1 | The frame has been sent by the MS |
| E | | The extension bit allows the protocol to be extended at a later date. |
| | 0 | This frame is in unextended protocol |
| | 1 | This frame is in an extended protocol |
| S/N | | If the S/N bit is 1 then this is a signaling traffic frame. |
| | 0 | The frame is normal traffic |
| | 1 | The frame is signaling traffic |
| P/N | | This bit indicates whether the frame is a poll frame or a normal traffic frame. |
| | 0 | This frame is a normal traffic frame |
| | 1 | This frame is a polling frame |
| SA | | This bit contains the next bit of the serial ID of the MS. This ID is the PID send serially a single bit at a time. It is repeated continuously as a check against inadvertent channel capture by a MS of a different ID. |
| BW REQ | | The bit indicates the bandwidth requested by the MS for the next slot assigned to the MS. |
| | 0 | Minimum bandwidth is requested for the next slot. |
| | 1 | Maximum. bandwidth is requested for the next slot |
| Spare | | Currently unused. Reserved for future use |

(continued)

| Head Check Field | HCKF | Cyclic Redundancy Check calculated over the 12 preceding bits. Generating polynomial TBD. |
|---|---|---|

**E6.1.2.14.4.1. Mobile Station Normal Traffic Head**

The mobile station normal traffic head Data Element indicates that this frame is a normal traffic response to the base. The frame check field of this frame will be calculated by the Base. It will be checked if the MS is in the error controlled bearer mode.

```
                   Bits                    Octets

        0   1   2   3   4   5   6   7
      ┌───┬───┬───┬───┬───┬───┬──────┐
      │ 0 │ 0 │ 0 │ 0 │ - │ - │  --  │    1
      ├───┴───┴───┴───┼───┴───┴──────┤
      │     - - - -   │     - - - -  │    2
      └───────────────┴──────────────┘
```

**E6.1.2.14.4.2. Mobile Station Signaling Traffic Head**

This Data Element when seen as the head of a frame indicates that the frame is a MS issued signaling frame. The FCW of this frame is computed and this is checked against the FCW contained in the frame.

```
                   Bits                    Octets

        0   1   2   3   4   5   6   7
      ┌───┬───┬───┬───┬───┬───┬──────┐
      │ 0 │ 0 │ 1 │ 0 │ - │ - │  --  │    1
      ├───┴───┴───┴───┼───┴───┴──────┤
      │     - - - -   │     - - - -  │    2
      └───────────────┴──────────────┘
```

**E6.1.2.15. Map**

Map Data issues will be reviewed in detail in subsequent submissions.

**E6.1.2.16. Map Type**

The Map Type Data Element identifies the type of map to follow.

```
                   Bits                    Octets

        8   7   6   5   4   3   2   1
      ┌───────────────────────────────┐
      │        8 bits of map type      │    1
      │                                │
      └───────────────────────────────┘
```

| Map Type | Bits 1-8 | Type |
|----------|----------|------|
|          | 00       | unused |
|          | 01       | Super Frame |
|          | 02       | Sub Frame |
|          | 03-FF    | unused |

### E6.1.2.17. Message Type

The message type Data Element defines the format of the rest of the frame. It also acts as an operation code to the destination unit either Base or MS.

```
                         Bits                        Octets

        8    7    6    5    4    3    2    1
      ┌─────────────────────────────────────────┐
      │            8 bits of message type        │      1
      │                                          │
      └─────────────────────────────────────────┘
```

| Message Type | Bits 1-8 | Type |
|--------------|----------|------|
|              | 01       | HLD - Hold |
|              | 02       | ACK - Acknowledge |
|              | 04       | SYN - Synchronize |
|              | 10       | AUT - Authorization Request |
|              | 11       | AUR - Authorization Response |
|              | 18       | ANS - Answer Incoming Call |
|              | 19       | DRI - Drop Incoming Connection |
|              | 20       | RRQ - Registration Request |
|              | 23       | RCP - Registration Complete |
|              | 28       | DRG - De-registration Request |
|              | 30       | ORG - Originate Call |
|              | 38       | CNC - Call Connected |
|              | 40       | NHR - New Base Hand-off Request |
|              | 43       | NHA - New Base Hand-off Acknowledge |
|              | 48       | CSC - Circuit Switch Complete |
|              | 50       | BAM - Base Assist Message |

### E6.1.2.18. New Connection Number

[0808]   The new connection number specifies the specific network connection which has been allocated to carrying the bearer channel of this MS from the new terminating Base Station in a hand-off sequence to the network. All bytes of this Data Element may not be significant. Unused nybbles and bytes must be filled with "F" hex.

|  | Bits |  |  |  |  |  |  |  | Octets |
|---|---|---|---|---|---|---|---|---|---|
| 8 | 7 | 6 | 5 | 4 | 3 | 2 | 1 |  |  |

|  |  |
|---|---|
| 40bits of Connection Number<br>(IA5 characters - see Note) | 1 |
|  | 2 |
| .<br>.<br>. |  |
|  | 5 |

Note --The number digits appear in multiple octet 4's in the same order in which they would be entered, that is, the number digit which would be entered first would be located in the first octet 4.

### E6.1.2.19. Old Connection Number

[0809]  The old connection number specifies the specific network connection which was allocated to carrying the bearer channel of this MS from the old originating Base Station a hand-off sequence to the network. All bytes of this Data Element may not be significant. Unused nybbles and bytes must be filled with "F" hex.

|  | Bits |  |  |  |  |  |  |  | Octets |
|---|---|---|---|---|---|---|---|---|---|
| 8 | 7 | 6 | 5 | 4 | 3 | 2 | 1 |  |  |

|  |  |
|---|---|
| 40bits of Connection Number<br>(IA5 characters - see Note) | 1 |
|  | 2 |
| .<br>.<br>. |  |
|  | 5 |

Note --The number digits appear in multiple octet 4's in the same order in which they would be entered, that is, the number digit which would be entered first would be located in the first octet 4.

### E6.1.2.20. PCP

The PCP, Power Control Pulse, is a short sequence used to allow the Base to find the appropriate diversity element to use in transmitting to the MS and to access the power level of the MS for further adjustment. TBD.

**E6.1.2.21. PID**

This Information Element is the personal identification number assigned to this MS. It absolutely and uniquely identifies the MS. This number is 40 bits long. The low order bit of the 40 bit number resides in Bit 1 of Octet 1 while the high order bit of the 40 bit number resides in Bit 8 of Octet 5.

```
                 Bits                        Octets

     8    7    6    5    4    3    2    1
    ┌─────────────────────────────────────┐
    │    40bits of unique MS identification│      1
    │              number                 │
    ├─────────────────────────────────────┤
    │                                     │      2
    ├─────────────────────────────────────┤
    │                 .                   │
    │                 .                   │
    │                 .                   │
    ├─────────────────────────────────────┤
    │                                     │      5
    └─────────────────────────────────────┘
```

**E6.1.2.22. Result**

The interpretation of the result Information Element is dependent upon the type of message in which it is found. Generally it may be interpreted as the result of the execution of the previous signaling traffic for this MS.

```
                 Bits                        Octets

     8    7    6    5    4    3    2    1
    ┌─────────────────────────────────────┐
    │               Result                │      1
    └─────────────────────────────────────┘
```

RCP

Message

| Result | Bits 1-8 | Interpretation |
|--------|----------|----------------|
|        | 00       | This MS is now registered to this Base unit. |
|        | 01       | This Base unit will not accept this MS for registration. |

CNC

Message

| Result | Bits 1-8 | Interpretation |
|--------|----------|----------------|
|        | 00       | The requested call has been connected. |
|        | 01       | Unable to complete the requested call. |

#### E6.1.2.23. Service Provider

This 16 bit Information Element when present in a Base to MS signaling message identifies the PCS service provider that operates the Base Station. When present in a MS to Base signaling message it specifies the identification of the PCS service provider that the MS wishes to use. The low order bit of this 16 bit element resides in Bit 1 of Octet 1 while the high order bit of this 16 bit element resides in Bit 8 of Octet 2.

```
                     Bits                        Octets

        8    7    6    5    4    3    2    1
      +------------------------------------------+
      |    16 bits of unique Service Provider    |   1
      |          Identification number           |
      |                                          |
      +------------------------------------------+   2
      |                                          |
      +------------------------------------------+
```

#### E6.1.2.24. Service Request

This 16 bit Information Element specifies the type of service being requested by the MS.

```
                   Bits                          Octets

        8    7    6    5    4    3    2    1
      +------------------------------------------+
      |      16 bits of MS Service Request       |   1
      |             Description                  |
      |                                          |
      +------------------------------------------+   2
      |                                          |
      +------------------------------------------+
```

#### E6.1.2.25. Spare

The Spare Information Element represents unused space. All spare space must be evenly divisible into Octets. All unused space is reserved for future use.

#### E6.1.2.26. UPT#

This 40 bit Information Element is the Universal Personal Telecommunications number that has been granted to the subscriber operating the MS. This 40 bit number consists of 10 IA5 characters.

```
                    Bits                    Octets

        8    7    6    5    4    3    2    1
     ┌──────────────────────────────────────┐
     │       40bits of Universal Personal    │   1
     │       Telecommunications Number       │
     │       (IA5 characters - see Note)     │
     │                                       │
     ├───────────────────────────────────────┤
     │                                       │   2
     └───────────────────────────────────────┘


     ┌──────────────────────────────────────┐
     │                   .                   │
     │                                       │
     │                   .                   │
     │                                       │
     │                   .                   │
     ├───────────────────────────────────────┤
     │                                       │   5
     └───────────────────────────────────────┘
```

Note --The number digits appear in multiple octet 4's in the same order in which they would be entered, that is, the number digit which would be entered first would be located in the first octet 4.

### E6.1.2.27. Zone

This 16 bit Information Element identifies the paging zone of the specific Base Station. If a MS moves from a Base Station in one zone to another Base Station in the same zone immediate registration is not required.

```
                    Bits                    Octets

        8    7    6    5    4    3    2    1
     ┌──────────────────────────────────────┐
     │     16 bits of Zone Identification    │   1
     │                                       │
     ├───────────────────────────────────────┤
     │                                       │   2
     └───────────────────────────────────────┘
```

**E6.2. Bearer Traffic**

**E6.2. Voice**

E6.2.1.1. 32 KBPS

32 kbps Bearer Traffic issues will be reviewed in detail in subsequent submissions.

E6.2.1.2. 8 KBPS

8 kbps Bearer Traffic issues will be reviewed in detail in subsequent submissions.

E6.2.1.3. 4 KBPS

4 kbps Bearer Traffic issues will be reviewed in detail in subsequent submissions.

**E6.2.2. Data**

Data Bearer Traffic issues will be reviewed in detail in subsequent submissions.

**E6.3. Multiple Mode Traffic**

A single MS may have multiple connections established through the Base Station to the network via multiple slots. One slot may, for example, be assigned to audio traffic while other slots are devoted to data traffic

Alternative Embodiments

While preferred embodiments are disclosed herein, many variations are possible which remain within the concept and scope of the invention, and these variations would become clear to one of ordinary skill in the art after perusal of the specification, drawings and claims herein.

For example, information which is transmitted from transmitter to receiver is referred to herein as "data", but it would be clear to those of ordinary skill in the art, after perusal of this application, that these data could comprise data, voice (encoded digitally or otherwise) error-correcting codes, control information, or other signals, and that this would be within the scope and spirit of the invention.

Moreover, while the specification has been described with reference to TDMA multiplexing of air channels, it would be clear to those of ordinary skill in the art, after perusal of this application, that air channels may be multiplexed by other means, including FDMA (frequency division multiplexing), by assigning air channels to differing frequency bands, CDMA (code division multiplexing), by assigning air channels to differing spread-spectrum spreading codes, other multiplexing techniques, or combinations of these multiplexing techniques, and that this would be within the scope and spirit of the invention.

**Claims**

1. A time division multiple access communication system, comprising

   a plurality of major time frames,
   in each of said major time frames, a plurality of minor times frames, and
   in a first minor time frame, a base transmission interval during which a base station transmits in a spread spectrum format a base-to-user message; **characterised in that** said base-to-user message comprises both a data message intended for a user station and a control message intended for said user station, said control message comprising an ISDN communication.

2. The time division multiple access communication system of claim 1 further comprising a user transmission interval in said first minor time frame during which said user station transmits in said spread spectrum format a user-to-base message comprising both a second data message intended for said base station and a second control message intended for said base station, said second control message comprising a responsive ISDN communication.

3. The time division multiple access communication system of claim 1 wherein said data message is longer than said control message.

4. The time division multiple access communication system of claim 1 wherein said base transmission interval is preceded by a control pulse preamble transmitted from said user station to said base station.

5. The time division multiple access communication system of claim 1 wherein said control message comprises a paging message.

6. The time division multiple access communication system of claim 1 wherein said ISDN communication comprises a network message converted into a local format.

7. The time division multiple access communication system of claim 1 further comprising a base station controller coupled to said base station, said base station controller coupled to a network.

8. A method for time division duplex communication comprising the steps of

transmitting over a designated frequency, during each of a plurality of minor time frames in a major time frame, a plurality of spread spectrum data messages from a base station, each spread spectrum data message directed to a single one of a plurality of user stations;
receiving, during a first minor time frame, a first spread spectrum data message at a first user station;
transmitting over said designated frequency, during each of said minor time frames, a plurality of spread spectrum control messages from said base station, each spread spectrum control message directed to a single one of said user stations;
receiving, during said first minor time frame, a first spread spectrum control message at first user station;
transmitting over said designated frequency, during said first minor time frame, a spread spectrum user data message from said first user station to said base station;
receiving, during said first minor time frame, said spread spectrum user data message at said base station;
transmitting over said designated frequency, during said first minor time frame, a spread spectrum user control message from said first user station to said base station;
receiving, during said first minor time frame, said spread spectrum user control message at said base station;
**characterised in that**:
said first spread spectrum control message comprises a first ISDN communication; and
said spread spectrum user control message comprises a second ISDN communication.

9. The method of claim 8 further comprising the steps of:

transmitting over said designated frequency, prior to said first spread spectrum data message, a control pulse preamble from said user station to said base station; and
receiving, prior to said first data message, said control pulse preamble at said base station.

10. The method of claim 8 wherein said first ISDN communication comprises network message converted into a local format.

11. The method of claim 8 wherein said second ISDN communication comprises a local format message to be translated by a base station controller into a network message format and communicated to a network.

12. The method of claim 8 wherein said local format message comprises a handoff request from said first user station.

13. The method of claim 8 wherein said first spread spectrum control message comprises a paging message.

FIG. 1

CAP or LEC-Owned
AIN-Based
PCS Networks

In-Building Business PCS

GSM Network-Based
PCS Networks

FIG. 1-1

EP 1 347 584 A2

FIG. 1-2

FIG. 1-3

Bellcore C
Interface

To IXC

To Other
Switches

To Other
Network
Switches,
SCPs, HLRs

LEC or
CAP
Based
Switch

RPCU
(BSC)

BS

BS

BS

BS

BS

IBS

IBS

IBS

HLR/VLR

SCP

SECURITY

OAM&P Link

PCS System Console

FIG. 1-4

EP 1 347 584 A2

FIG. 1-5

CATV Head End

Fiber Node

Coax Cable

BSC

BS
BS
BS
BS

To PCSC
or PSTN

PRI or T1 Lines
Bundled BRIs
CATV
Fiber
Microwave

LADA Lines
Fractional T1
ISDN BRIs
CATV
Fiber
Private Facilities
Digital Radio

BSC

BS
BS
BS
BS

FIG. 1-6

FIG. 1-7

Handoff occurs when:
A) Receive signal quality index (RSSI) falls below threshold, or
B) Signal is lost completely ("door slam"), or
C) Handset detects high base traffic load

Originating base

BS

BSC

BS

New base

Handset Handoff Functions
A) Monitors traffic loading on base
B) Maintains traffic on originating base during handoff if possible
C) Scans for new base station(s)
D) Acquires new base station frequency, code and time slot
E) Sends handoff request with circuit ID
F) Receives handoff ACK
G) Receives switch complete message
H) Enters traffic mode on new base

Base Station Controller
A) Send handoff ACK to new base
B) Send switch complete message to both bases
C) Update cache VLR

Base Station
A) Register handset
B) Send handoff request to BSC
C) Forward handoff ACK
D) Enter traffic mode on new base

FIG. 1-8

EP 1 347 584 A2

Loop 3 - 20Msec
Base Station
Enters Traffic Mode

Loop 2 - 20Msec
Base Station Assigns
Time Slot #4, Handset
Enters Traffic Mode

Loop 1 - 20Msec
Handset Requests
Time Slot #4

| 3 | Handset Traffic | Base Traffic | 5 |
| | | 3 | |

| 3 | Base Specific Poll | Handset Traffic | 5 |

| 3 | Base General Poll | Handset General Response | 5 |

| 1 | 2 | 3 | 4 | Channels 5 to 31 (nominal) | 32 |

20 Msec Frame

FIG. 1-9

194

201 { 203 | 203 | 203 | 203 | 203 | 203 | · · · |

215

205

202 {

213  214  204  206  207

ORIGIN 210

USER
NICKNAME 212

204
or
206 {

207  HEADER   CRC   208   D FIELD   209   B FIELD   CRC 211
              211

FIG. 2

FIG. 2-1

20 Msec Frame

| 1 | 2 | 3 | 4 | Channels 5 to 31 (nominal) | 32 |

625 μsec Frame
(32 channel configuration)

| PCP | | Base Transmits | | Handset Transmits | |

268.8 μsec Frame

| Information Packet |

TDD Guard Times

PCP = Power Control Pulse

FIG. 2-2

FIG. 2-3

HS GENERAL RESPONSE
BASE SPECIFIC POLL
HS TRAFFIC
BASE TRAFFIC
HS TRAFFIC
BASE GENERAL POLL
Polling Loop
START

FIG. 2-4

CODEC
DSP SPEECH CODER
MICROCONTROLLER
SS MODEM ASIC
RF/IF
t

FIG. 2-5

"D" Channel                                    Bearer CRC

| 16 | 8 | 160 Bits | 16 |

Header
(w/CRC)                    Bearer Channel

Packet Types:

Polling Packets --

General Poll identifies available air slot
Specific Poll requestes response from a specific handset

Traffic Packets --

Normally carry 160 bits of bearer traffic or
Can be identified as Control packets in Header

## FIG. 2-6

HS1

20
MSEC
LOOP

HS1

## FIG. 2-7

FIG. 2-8

FIG. 2-9

FIG. 3

EP 1 347 584 A2

FIG. 3-1

50% CONTOUR

75% CONTOUR

90% CONTOUR

90% OVERALL COVERAGE

99% OVERALL COVERAGE

HANDSET TRANSMITS 300mW PEAK INTO 0dBd ANTENNA
BASESTATION SENSITIVITY IS 100dBm

CONTOUR RADIUS (miles)

BASESTATION ANTENNA GAIN (dBd)

EP 1 347 584 A2

FIG. 3-2

EP 1 347 584 A2

Figure 4

EP 1 347 584 A2